Europäisches Patentamt

**European Patent Office**

Office européen des brevets

(19)

(11) **EP 1 240 731 B1**

(12) **EUROPEAN PATENT SPECIFICATION**

(45) Date of publication and mention
of the grant of the patent:
**05.04.2006 Bulletin 2006/14**

(21) Application number: **00986926.4**

(22) Date of filing: **22.12.2000**

(51) Int Cl.:
***H04B 7/08*** (2006.01)

(86) International application number:
**PCT/CA2000/001524**

(87) International publication number:
**WO 2001/048944 (05.07.2001 Gazette 2001/27)**

(54) **INTERFERENCE SUPPRESSION IN CDMA SYSTEMS**

STÖRSIGNALUNTERDRÜCKUNG IN CDMA-SYSTEMEN

LIMINATION D'INTERFERENCE DANS DES SYSTEMES CDMA

(84) Designated Contracting States:
**DE FR GB IT**

(30) Priority: **23.12.1999 CA 2293097**
**12.09.2000 CA 2318658**
**30.10.2000 US 243727 P**

(43) Date of publication of application:
**18.09.2002 Bulletin 2002/38**

(73) Proprietor: **Institut National de la Recherche
Scientifique
Sainte-Foy, Quebec G1V 4C7 (CA)**

(72) Inventors:
• **AFFES, Sofiène
Montreal, Quebec H2X 3P7 (CA)**
• **HANSEN, Henrik
DK-2200 Kobenhavn (DK)**

• **MERMELSTEIN, Paul
Côte Saint-Luc, Quebec H4W 1G5 (CA)**

(74) Representative: **Lerner, François
5, rue Jules Lefèbvre
75009 Paris (FR)**

(56) References cited:
**GB-A- 2 314 241          US-A- 6 006 110**

• **AFFES S ET AL: "PERFORMANCE OF A CDMA
BEAMFORMING ARRAY-RECEIVER IN
SPATIALLY-CORRELATED RAYLEIGH-FADING
MULTIPATH" HOUSTON, TX, MAY 16 - 20,
1999,NEW YORK, NY: IEEE,US, vol. CONF. 49, 16
May 1999 (1999-05-16), pages 249-253,
XP000899234 ISBN: 0-7803-5566-0 cited in the
application**

**Description**

TECHNICAL FIELD:

The invention relates to Code-Division Multiple Access (CDMA) communications systems, which may be terrestrial or satellite systems, and in particular to interference suppression in CDMA communications systems.

BACKGROUND ART:

Code-Division Multiple Access communications systems are well known. For a general discussion of such systems, the reader is directed to a paper entitled "Multiuser Detection for CDMA Systems" by Duel-Hallen, Holtzman and Zvonar, *IEEE Personal Communications,* pp. 46-58, April 1995.

In CDMA systems, the signals from different users all use the same bandwidth, so each user's signal constitutes noise or interference for the other users. On the uplink (transmissions from the mobiles) the interference is mainly that from other transmitting mobiles. Power control attempts to maintain the received powers at values that balance the interference observed by the various mobiles, but, in many cases, cannot deal satisfactorily with excessive interference. Where mobiles with different transmission rates are supported within the same cells, the high-rate mobiles manifest strong interference to the low-rate mobiles. On the downlink (transmission towards the mobiles) transmissions from base-stations of other cells as well as strong interference from the same base-station to other mobiles may result in strong interference to the intended signal. Downlink power control may be imprecise or absent altogether. In all these so called near-far problem cases, the transmission quality can be improved, or the transmitted power reduced, by reducing the interference. In turn, for the same transmission quality, the number of calls supported within the cell may be increased, resulting in improved spectrum utilization.

Power control is presently used to minimize the near-far problem, but with limited success. It requires a large number of power control updates, typically 800 times per second, to reduce the power mismatch between the lower-rate and higher-rate users. It is desirable to reduce the number of communications involved in such power control systems, since they constitute overhe ad and reduce overall transmission efficiencies. Nevertheless, it is expected that future CDMA applications will require even tighter power control with twice the number of updates, yet the near-far problem will not be completely eliminated. It is preferable to improve the interference suppression without increasing the number of transmissions by the power control system.

Multiuser detectors achieve interference suppression to provide potential benefits to CDMA systems such as improvement in capacity and reduced precision requirements for power control. However, none of these detectors is cost-effective to build with significant enough performance advantage over present day systems. For example, the complexity of the optimal maximum likelihood sequence detector (MLSD) is exponential in the number of interfering signals to be cancelled, which makes its implementation excessively complex. Alternative suboptimal detectors fall into two groups: linear and subtractive. The linear detectors include decorrelators, as disclosed by K.S. Schneider, "Optimum detection of code division multiplexed signals", *IEEE Trans. on Aerospace and Electronic Systems,* vol. 15, pp. 181-185, January 1979 and R. Kohno, M. Hatori, and H. Imai, "Cancellation techniques of co-channel interference in asynchronous spread spectrum multiple access systems", *Electronics and Communications in Japan,* vol. 66-A, no. 5, pp. 20-29, 1983. A disadvantage of such decorrelators is that they cause noise enhancement.

Z. Xie, R.T. Short, and C.K. Rushforth, "A family of suboptimum detectors for coherent multiuser communications", *IEEE Journal on Selected Areas in Communications,* vol. 8, no. 4, pp. 683-690, May 1990, disclosed the minimum mean square error linear (MMSE) detector, but such detectors are sensitive to channel and power estimation errors. In both cases, the processing burden still appears to present implementation difficulties.

Subtractive interference cancellation detectors take the form of successive interference cancellers (SIC), as disclosed by R. Kohno *et al.,* "Combination of an adaptive array antenna and a canceller of interference for direct-sequence spread-spectrum multiple-access system", *IEEE Journal on Selected Areas in Communications,* vol. 8, no. 4, pp. 675-682, May 1990, and parallel interference cancellers (PIC) as disclosed by M.K. Varanasi and B. Aazhang, "Multistage detection in asynchronous code-division multiple-access communications", *IEEE Trans. on Communications,* vol. 38, no. 4, pp. 509-519, April 1990, and R. Kohno *et al.,* "Combination of an adaptive array antenna and a canceller of interference for direct-sequence spread-spectrum multiple-access system", *IEEE Journal on Selected Areas in Communications,* vol. 8, no. 4, pp. 675-682, May 1990. Both SIC detectors and PIC detectors require multi-stage processing and the interference cancellation achieved is limited by the amount of delay or complexity tolerated. These detectors are also very sensitive to channel, power and data estimation errors.

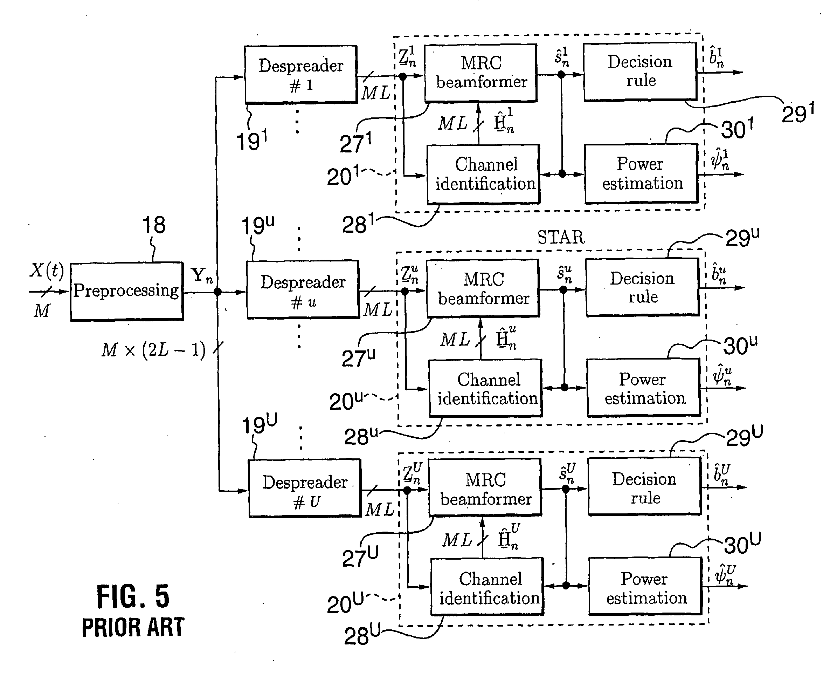

One particular subtractive technique was disclosed by Shimon Moshavi in a paper entitled "Multi-User Detection for DS-CDMA Communications", *IEEE Communications Magazine,* pp. 124-136, October 1996. Figure 5 of Moshavi's paper shows a subtractive interference cancellation (SIC) scheme in which the signal for a particular user is extracted in the usual way using a matched filter and then spread again using the same spreading code for that particular user, *i.e.,* the spreading code used to encode the signal at the remote transmitter. The spread-again signal then is subtracted from the signal received from the antenna and the resulting signal is applied to the next user's despreader. This process is repeated for each successive despreader. Moshavi discloses a parallel version that uses similar principles.

A disadvantage of this approach is its sensitivity to the data and power estimates, *i.e.,* their accuracy and the sign of the data. A wrong decision will result in the interference component being added rather than subtracted, which will have totally the wrong effect.

For more information about these techniques, the reader is directed to a paper by P. Patel and J. Holtzman entitled "Analysis of a Simple Successive Interference Cancellation Scheme in a DS/CDMA System", *IEEE Journal on Selected Areas in Communications,* Vol. 12, No. 5, pp. 796-807, June 1994.

In a paper entitled "A New Receiver Structure for Asynchronous CDMA: STAR - The Spatio-Temporal Array-Receiver", *IEEE Transaction on Selected Areas in Communications,* Vol. 16, No. 8, October 1998, S. Affes and P. Mermelstein (two of the present inventors), disclosed a technique for improving reception despite near/far effects and multi-user interference. In contrast to known systems in which the spread-again signal is supplied to the input of the despreader of the channel to be corrected, Affes' and Mermelstein's proposed system treated all of the users' signals together and processed them as a combined noise signal. If the components of the received signal from the different users were uncorrelated and all had equal power, or substantially equal power, this process would be optimal. In practice, however, there will be significant differences between the power levels at which the different users' signals are received at the base station antenna. The same applies to the downlink. For example, a data user may generate much more power than a voice user simply because of the more dense information content of the data signal. Also, imperfect power control will result in power differences, *i.e.,* channel variations may result in received powers different from their intended values, despite the best effort of the power-control process to equalize them.

DISCLOSURE OF INVENTION:

The present invention addresses the need for improved interference suppression without the number of transmissions by the power control system being increased, and, to this end, provides a receiver for a CDMA communications system which employs interference subspace rejection to obtain a substantially null response to interference components from selected user stations. Preferably, the receiver also provides a substantially unity response for a propagation channel via which a corresponding user's "desired" signal was received.

According to one aspect of the invention, there is provided a receiver suitable for a base station of a CDMA communications system comprising at least one base station (11) having a transmitter and a said receiver and a multiplicity (U) of user stations ($10^1,...,10^U$) including a plurality (U') of user stations served by said at least one base station, each user station having a transmitter and a receiver for communicating with said at least one base station via a corresponding one of a plurality of channels ($14^1,...,14^U$), the base station receiver for receiving a signal (X(t)) comprising components corresponding to spread signals transmitted by the transmitters of the plurality of user stations, each of said spread signals comprising a series of symbols spread using a spreading code unique to the corresponding user station, said base station receiver comprising:

a plurality (U') of receiver modules ($20^1,...,20^{NI},20^d$) each for deriving from successive frames of the received signal (X(t)) estimates of said series of symbols of a corresponding one of the user stations,
preprocessing means (18) for deriving from the received signal (X(t)) a series of observation matrices ($Y_n$) each for use by each of the receiver modules (20) in a said frame to derive an estimate of a symbol of a respective one of said series of symbols, and

means (19,44;44/1,44/2) for deriving from each observation matrix a plurality of observation vectors ($\underline{Y}_n$; $\underline{Y}_{n-1}$;

$\underline{Z}_n^1 \cdots \underline{Z}_n^{NI}$; $\underline{Z}_n^d$) and applying each of the observation vectors to a respective one of the plurality of receiver modules ($20^1,...,20^{NI},20^d$); each receiver module comprising;

channel identification means (28) for deriving from one of the observation vectors a channel vector estimate

$(\hat{\underline{H}}_n^1,...,\hat{\underline{H}}_n^{NI};\hat{\underline{Y}}_{0,n}^d;\hat{\underline{Y}}_{0,n-1}^i)$ based upon parameter estimates of the channel between the base station receiver and the corresponding user station transmitter;
beamformer means ($27^1,...,27^{NI},27^d$; $47^d$) having coefficient tuning means (50) for producing a set of weighting coefficients in dependence upon the channel vector estimate, and combining means (51,52) for using the weighting coefficients to weight respective ones of the elements of a respective one of the observation vectors and combining the weighted elements to provide a signal component estimate $(\hat{s}_n^1, ..., \hat{s}_n^U);$ and

symbol estimating means ($29^1,... ,29^U$, $30^1,...,30^U$) for deriving from the signal component estimate an estimate $(\hat{b}_n^1, ..., \hat{b}_n^U)$ of a symbol $(b_n^1, ..., b_n^U)$ transmitted by a corresponding one of the user stations ($10^1,...,10^U$),

wherein said receiver further comprises means (42,43) responsive to symbol estimates $(\hat{b}_n^1, ..., \hat{b}_n^{NI}; g^1, g^2, g^3; g^{l+1,n})$ and to channel estimates $(\mathcal{H}_n^1 ... \mathcal{H}_n^{NI}; \mathcal{H}_{n-1}^i)$ comprising at least said channel vector estimates $(\hat{\underline{H}}_n^1, ..., \hat{\underline{H}}_n^{NI})$ for channels ($14^1,...,14^{NI}$) of a first group (I) of said plurality of user stations ($10^1,...,10^{NI}$) to provide at least one constraint matrix ($\hat{C}_n$) representing interference subspace of components of the received signal corresponding to said predetermined group, and in each of one or more receiver modules ($20A^d$) of a second group (D) of said plurality of receiver modules, the coefficient tuning means ($50A^d$) produces said set of weighting coefficients in dependence upon both the constraint matrix ($\hat{C}_n$) and the channel vector estimates $(\hat{\underline{H}}_n^d)$ so as to tune said one or more receiver modules ($20A^d$) each towards a substantially null response to that portion of the received signal (X(t)) corresponding to said interference subspace.

Embodiments of the invention may employ one of several alternative modes of implementing interference subspace rejection (ISR), *i.e.* characterizing the interference and building the constraint matrix. In a first embodiment, using a first mode conveniently designated ISR-TR, each receiver module in the first group generates its re-spread signal taking into account the amplitude and sign of the symbol and the channel characteristics. The re-spread signals from all of the receiver modules of the first group are summed to produce a total realization which is supplied to all of the receiver modules in the second group.

Where each receiver module of the second set uses decision feedback, it further comprises delay means for delaying each frame/block of the observation vector before its application to the beamformer.

Whereas, in ISR-TR embodiments, just one null constraint is dedicated to the sum, in a second embodiment, which uses a second mode conveniently designated ISR-R, estimated realisations of all the interferers are used, and a null constraint is dedicated to each interference vector. In this second embodiment, in each receiver module of the first set, the symbols spread by the spreader comprise estimated realisations of the symbols of the output signal. Also, the constraint waveforms are not summed before forming the constraint matrix. Thus, the receiver module estimates separately the contribution to the interference from each unwanted (interfering) user and cancels it by a dedicated null-constraint in the multi-source spatio-temporal beamformer. In most cases, estimation of the interference requires estimates of the past, present and future data symbols transmitted from the interferers, in which case the receiver requires a maximum delay of one symbol and one processing cycle for the lower-rate or low-power users and, at most a single null constraint per interferer.

In a third embodiment of the invention which uses a third mode conveniently designated ISR-D, *i.e.* the observation vector/matrix is decomposed over sub-channels/fingers of propagation path and the beamformer nulls interference in each of the sub-channels, one at a time. In most cases, the maximum number of constraints per interferer is equal to the number of sub-channels, *i.e.* the number of antenna elements $M$ multiplied by the number of paths $P$.

In a fourth embodiment using a fourth mode conveniently designated ISR-H because it implements null-responses in beamforming using hypothetical realisations of the interference, without any delay, each receiver module of the first group further comprises means for supplying to the spreader possible values of the instant symbols of the output signal and the spreader supplies a corresponding plurality of re-spread signals to each of the receiver modules of the second group. In each receiver module of the second group, the despreader despreads the plurality of re-spread signals and supplies corresponding despread vectors to the beamformer. This embodiment suppresses any sensitivity to data estimation errors and, in most cases, requires a maximum of 3 null constraints per interferer.

In a fifth embodiment using a fifth mode conveniently designated ISR-RH because it uses the past and present interference symbol estimates, in each receiver module of the first group, the spreader spreads the symbols of the output signal itself and, in each receiver module of the second group, the beamformer then implements null-responses over reduced possibilities/hypotheses of the interference realization. Conveniently, application of the output of the first despreader to the beamformer will take into account the time required for estimation of the interferer's symbol. In most cases, the beamformer will provide a maximum of 2 null constraints per interferer.

In any of the foregoing embodiments of the invention, the channel identification unit may generate the set of channel vector estimates in dependence upon the extracted despread data vectors and the user signal component estimate.

For each of the above-identified modes, the receiver modules may employ either of two procedures. On the one hand, the receiver module may apply the post-correlation observation vector to the channel identification unit but supply the observation matrix itself directly to the beamformer, *i.e.* without despreading it. The constraint matrix then would be supplied to the beamformer without despreading.

Alternatively, each receiver module could supply the post-correlation observation vector to both the channel identification unit and the beamformer. In this case, the receiver module would also despread the constraint matrix before applying it to the beamformer.

Where the reception antenna comprises a plurality of antenna elements, the beamformer unit may comprise a spatio-temporal processor, such as a filter which has coefficients tuned by the estimated interference signals.

The receiver modules may comprise a first set that are capable of contributing a constraint waveform to the constraint matrix and a second set that have a beamformer capable of using the constraint matrix to tune the specified null response and unity response. In preferred embodiments, at least some of the plurality of receiver modules are members of both the first set and the second set, *i.e.* they each have means for contributing a constraint waveform and a beamformer capable of using the constraint matrix.

In practice, the receiver modules assigned to the stronger user signals will usually contribute a constraint waveform and the beamformer units of the receiver modules assigned to other user signals will be capable of using it.

The receiver module may comprise an MRC beamformer and an ISR beamformer and be adapted to operate in multi-stage, i.e., for each symbol period of frame, it will carry out a plurality of iterations. In the first iteration, the constraints set generator will receive the "past" and "future" estimates from the MRC beamformer and the "past" symbol estimate, i.e., from the previous frame, and process them to produce a new symbol estimate for the first iteration. In subsequent iterations of the current symbol period or frame, the constraints-set generator will use the "future" estimate from the MRC beamformer, the previous estimate from the ISR beamformer and the symbol estimate generated in the previous iteration. The cycle will repeat until the total number of iterations have been performed, whereupon the output from the receiver module is the desired estimated symbol for the current frame which then is used in the similar iterations of the next frame.

The ISR receiver module comprising both an MRC beamformer and an ISR beamformer may comprise means $\{101Q^d\}$ for extracting from the ISR beamformer ($47Q^d$) an interference-reduced observation vector and reshaping the latter to produce an interference-reduced observation matrix for despreading by the despreader. The channel identification unit then uses the despread interference-reduced observation vector to form interference-reduced channel vector estimates and supplies them to the residual MRC beamformer for use in adapting the coefficients thereof.

The ISR beamformer may process blocks or frames of the observation vector that are extended by concatenating a current set of data with one or more previous frames or blocks of data.

The different receiver modules may use different sizes of frame.

In order to receive signals from a user transmitting multicode signals, the ISR receiver module may comprise a plurality of ISR beamformers and despreaders, each for operating upon a corresponding one of the multiple codes. The channel identification unit then will produce a channel vector estimate common to all of the multicodes, spread that channel vector estimate with each of the different multicodes and supply the resulting plurality of spread channel vector estimates to respective ones of the plurality of ISR beamformers.

The channel identification unit of the multicode ISR receiver module may receive its post-correlation observation vector from a despreader ($19^{d,\delta}$) which uses a compound code comprising each of the multicodes weighted by the corresponding symbol estimate from a respective one of a corresponding plurality of decision-rule units. The despreader will use the compound code to despread the observation matrix and supply the corresponding compound post-correlation observation vector to the channel identification unit. The channel identification unit will use that vector to produce the channel vector estimate and spread it using the different ones of the multicodes to produce the spread channel vector estimates.

The ISR receiver module may comprise a despreader $19S^{d,1}$, ..., $19S^{d,F_d}$ using a plurality of codes which comprise segments of a main code specified for that user. Each segment corresponds to a symbol, and to a symbol duration in a large block of data, the number of segments being determined by the data rate, i.e., number of symbols within a block, of that user. Each receiver module may have a different number of segments assigned thereto according to the data rate of the corresponding user.

Embodiments of the invention may be adapted for use in a user/mobile station capable of receiving user-bound signals transmitted by a plurality of base stations each to a corresponding plurality of users, the receiver then comprising a selection of receiver modules each corresponding to a different base station and configured to extract a preselected number of said user-bound signals. Where the particular user/mobile station is included in the preselected number, the receiver module may comprise a similar structure to the above-mentioned multicode receiver, the plurality of despreaders being adapted to despread the observation matrix using respective ones of a set of codes determined as follows: (1) a pre-selected number *NB* of base stations from which the mobile receives signals and which have been selected for cancellation - represented by index ν' which, ranges from 1 to *NB;* (2) a preselected number (1 to *NI*) of interferers per base station preselected for cancellation; (3) the data rates of the selected interferers.

Thus, according to a second aspect of the invention, there is provided a user station receiver for a CDMA communications system comprising a plurality (NB) of base stations (11) and a multiplicity (U) of user stations ($10^1$,..., $10^U$), at least a plurality (U') of the user stations being in a cell associated with one of said base stations and served thereby, said one base station having a plurality of transmitter modules for spreading user signals for transmission to the plurality (U') of user stations, respectively, and a receiver for receiving spread user signals transmitted by the plurality (U') of user stations, the user stations each having a receiver for receiving the corresponding spread user signal transmitted by the base station, said plurality (U') of user stations each having a unique spreading code assigned thereto for use by the user station and the corresponding one of the base station transmitter modules to spread the user signals of that user for transmission,

the spread user signals transmitted from the base station transmitter modules to a particular one of the plurality (U') of user stations propagating via a plurality of channels ($14^1$,...,$14^U'$), respectively,

the receiver of a particular one of said plurality (U') of user stations receiving a signal (X(t)) comprising components corresponding to spread user signals for said particular user station and spread user signals transmitted by other transmitter modules of said plurality (NB) of base stations for other users, each of said spread user signals comprising a series of symbols spread using the spreading code associated with the corresponding one of the user stations, said user station receiver comprising:

a plurality (NB) of receiver modules ($20^{v'}$) each for deriving from successive frames of the received signal (X(t)) estimates of sets of said series of symbols from a corresponding one of the base stations,

preprocessing means (18) for deriving from the received signal (X(t)) a series of observation matrices ($Y_n$) each for use by each of the receiver modules ($20^{v'}$) in a said frame to derive estimates of sets of said symbols, and

means (19,44) for deriving from each observation matrix a plurality of sets of observation vectors

$$(\underline{Y}_n^{v',1,1}, \ldots, \underline{Y}_n^{v',NI,F_{NI}}; \underline{Z}_n^{v',1,1}, \ldots, \underline{Z}_n^{v',NI,F_{NI}})$$

and applying each of the sets of observation vectors to a respective one of the plurality of receiver modules ($20^{v'}$);

each receiver modules comprising;

channel identification means ($28T^{v'}$) for deriving from the respective one of the sets of observation vectors a set of spread channel vector estimates $(\hat{\underline{Y}}_{0,n}^{v',1,1}, \ldots, \hat{\underline{Y}}_{0,n}^{v',NI,F_{NI}})$ based upon parameter estimates of the channel between the corresponding one of the base stations and said user station;

beamformer means ($47T^{v',1,1}$,..., $47T^{v'NI,F_{NI}}$) having coefficient tuning means for producing sets of weighting coefficients in dependence upon the sets of channel vector estimates, respectively, and combining means for using each of the sets of weighting coefficients to weight respective ones of the elements of a respective one of the observation vectors and combining the weighted elements to provide a corresponding set of signal component estimates $(\hat{s}_n^{v',1,1}, \ldots, \hat{s}_n^{v',NI,F_{NI}})$ and

symbol estimating means ($29T^{v'1,1}$,...,$29T^{v',NI,F_{NI}}$) for deriving from the set of signal component estimates a set of estimates $(\hat{b}_n^{v',1,1}, \ldots, \hat{b}_n^{v',NI,F_{NI}})$ of symbols spread by the corresponding one of the transmitter modules and transmitted by the base station;

said user station receiver further comprising means (42,43) responsive to said symbol estimates

$(\hat{b}_n^{v',1,1}, \ldots, \hat{b}_n^{v',NI,F_{NI}}; g_n^1, g_n^2, g_n^3)$ and channel estimates $(\mathcal{H}_n^{v'})$ from each of said plurality (NB) of receiver modules, said channel estimates comprising at least channel vector estimates $(\hat{\underline{H}}_n^{v'})$ for channels ($14^{v'}$) between the user station receiver and said base stations, for providing at least one constraint matrix ($\hat{C}_n$) representing interference subspace of components of the received signal corresponding to said spread signals, and in each of said receiver modules ($20^{v'}$), the coefficient tuning means produces said sets of weighting coefficients in dependence upon both the constraint matrix ($\hat{C}_n$) and the channel vector estimates so as to tune said receiver module ($20^{v'}$) towards a substantially null response to that portion of the received signal (X(t)) corresponding to said interference subspace.

Where the signal destined for the particular user/mobile station is not one of the preselected number of signals from the corresponding base station, the receiver may further comprise an ISR receiver module which has means for updating the ISR beamformer coefficients using the channel vector estimates from at least some of the receiver modules that have generated such channel vector estimates for the preselected signals for the same base station.

Where the rates of the different users are not known to the instant mobile station, the codes may comprise a fixed number of segments $N_m$ which is predetermined as a maximum data rate to be received. Any slower rates will effectively be oversampled for processing at the higher rate.

The complexity of the multicode embodiments may be reduced by reducing the number of codes that are used by the despreaders. In particular, the bank of despreaders may use a set of codes that represent summation of the codes of the different *NI* interferers, to form a compound code which reduces the total number of codes being used in the despreaders.

According to another aspect of the invention, there is provided a STAR receiver comprising an MRC beamformer which operates upon an observation vector which has not been despread.

Of course, that does not preclude having all channels feed their interference components to all other channels.

Receivers embodying the present invention can operate in a multiple-input, multiple-output (MIMO) system, i.e. with multiple transmit antennas and multiple receive antennas.

The foregoing and other objects, features, aspects and advantages of the present invention will become more apparent from the following detailed description, in conjunction with the accompanying drawings, of preferred embodiments of the invention.

BRIEF DESCRIPTION OF THE DRAWINGS:

Figure 1 is a schematic diagram illustrating a portion of a CDMA communications system comprising a plurality of user stations, typically mobile, and a base station having a reception antenna comprising an array of antenna elements, and illustrating multipath communication between one of the user stations and the array of antennas;
Figure 2 is a simplified schematic diagram representing a model of the part of the system illustrated in Figure 1;
Figure 3 is a detail block diagram of a spreader portion of one of the user stations;
Figures 4(a) and 4(b) illustrate the relationship between channel characteristics, power control and signal power;
Figure 5 is a simplified block schematic diagram of a base station receiver according to the prior art;
Figure 6 is a detail block diagram of a preprocessing unit of the receiver;
Figure 7 is a detail block diagram of a despreader of the receiver;
Figure 8 illustrates several sets of users in a CDMA system ranked according to data rate;
Figure 9 is a detail block diagram showing several modules of a receiver embodying the present invention, including one having a beamformer operating on data that has not been despread;
Figure 10 is a detail schematic diagram showing a common matrix generator and one of a plurality of beamformers coupled in common thereto;
Figure 11 is a block diagram corresponding to Figure 9 but including a module having a beamformer operating upon data which has first been despread;
Figure 12 is a schematic diagram of a user-specific matrix generator and an associated beamformer of one of the receiver modules of Figure 11;
Figure 13 is a detail block schematic diagram of a receiver using total realisation of the interference to be cancelled (ISR-TR) and without despreading of the data processed by the beamformer;
Figure 14 illustrates a respreader of one of the receiver modules of Figure 13;
Figure 15 is a detail block schematic diagram of a receiver using individual realisations of the interference (ISR-R) and without despreading of the data processed by the beamformer;
Figure 16 is a simplified block diagram of a receiver which decomposes each realisation of the interference over diversity paths (ISR-D) and without despreading of the data processed by the beamformer;
Figure 17 is a simplified schematic block diagram of a receiver employing interference subspace rejection based upon hypothetical values of the symbols (ISR-H) and without despreading of the data processed by the beamformer;
Figure 18 illustrates all possible triplets for the hypothetical values;
Figure 19 illustrates bit sequences for generating the hypothetical values;
Figure 20 is a simplified schematic block diagram of a receiver employing interference subspace rejection based upon both hypothetical values of the symbols and realisations (ISR-RH) and without despreading of the data processed by the beamformer;

Figure 21 is a simplified schematic block diagram of a receiver similar to the ISR-TR receiver shown in Figure 13 but in which the beamformer operates upon the data that has first been despread;

Figure 22 is a simplified schematic block diagram of a receiver similar to the ISR-R receiver shown in Figure 15 but in which the beamformer operates upon data that has first been despread;

Figure 23 is a simplified schematic block diagram of a receiver similar to the ISR-D receiver shown in Figure 16 but in which the beamformer operates upon data that has first been despread;

Figure 24 is a simplified schematic block diagram of a receiver similar to the ISR-H receiver shown in Figure 18 but in which the beamformer operates upon data that has first been despread;

Figure 25 illustrates bit sequences generated in the receiver of Figure 24;

Figure 26 is a simplified schematic block diagram of a receiver similar to the ISR-RH receiver shown in Figure 20 but in which the beamformer operates upon data that has first been despread;

Figure 27 illustrates an alternative STAR module which may be used in the receiver of Figure 5 or in place of some of the receiver modules in the receivers of Figures 13-17, 20-24 and 26;

Figure 28 illustrates a receiver module which both contributes to the constraint matrix and uses the constraint matrix to cancel interference (JOINT-ISR);

Figure 29 illustrates a multi-stage ISR receiver module;

Figure 30 illustrates successive implementation of ISR;

Figure 31 illustrates a receiver module which uses ISR to enhance channel identification;

Figure 32 illustrates extension of the frame size to reduce noise enhancement and facilitate asynchronous operation and processing of high data rates;

Figure 33 illustrates implementation of ISR with mixed spreading factors;

Figure 34 illustrates an uplink ISR receiver module for a user employing multicode signals;

Figure 35 illustrates a modification of the receiver module of Figure 34;

Figure 36 illustrates how multirate can be modelled as multicode;

Figure 37 illustrates frame size determination for multirate signals;

Figure 38 illustrates grouping of multirate signals to correspond to a specific user's symbol rate;

Figure 39 illustrates an "uplink" multirate ISR receiver module for a base station;

Figure 40 illustrates one of a plurality of "downlink" multirate receiver modules for a user station operating as a "virtual base station";

Figure 41 illustrates a "downlink" multirate receiver module of the user station of Figure 41 for extracting signals for that user station;

Figure 42 illustrates a multicode alternative to the receiver module of Figure 40;

Figure 43 illustrates a second alternative to the receiver module of Figure 40;

Figure 44 illustrates an ISR receiver module using pilot symbols;

Figure 45 illustrates in more detail an ambiguity estimator of the receiver module of Figure 44;

Figure 46 illustrates an alternative ISR receiver module using pilot channels;

Figure 47 illustrates an alternative ISR receiver module employing symbol decoding at an intermediate stage;

Figure 48 illustrates modelling of the downlink as an uplink; and

Figure 49 illustrates a transmitter having multiple antennas with which receivers embodying the invention can operate.

BEST MODE(S) FOR CARRYING OUT THE INVENTION:

In the following description, identical or similar items in the different Figures have the same reference numerals, in some cases with a suffix.

The description refers to several published articles. For convenience, the articles are cited in full in a numbered list at the end of the description and cited by that number in the description itself. The reader is directed to these articles for reference.

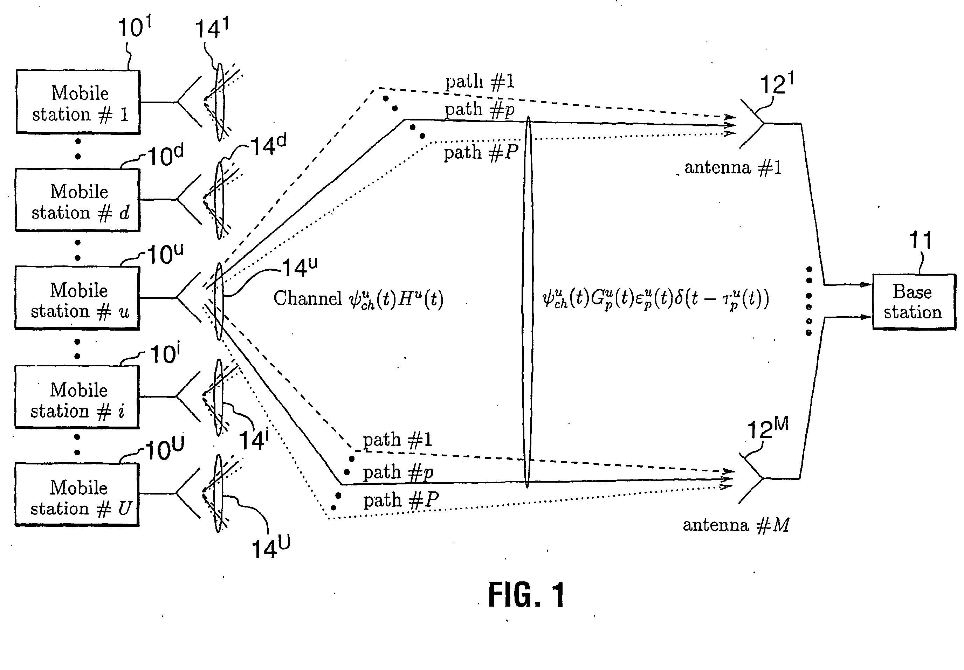

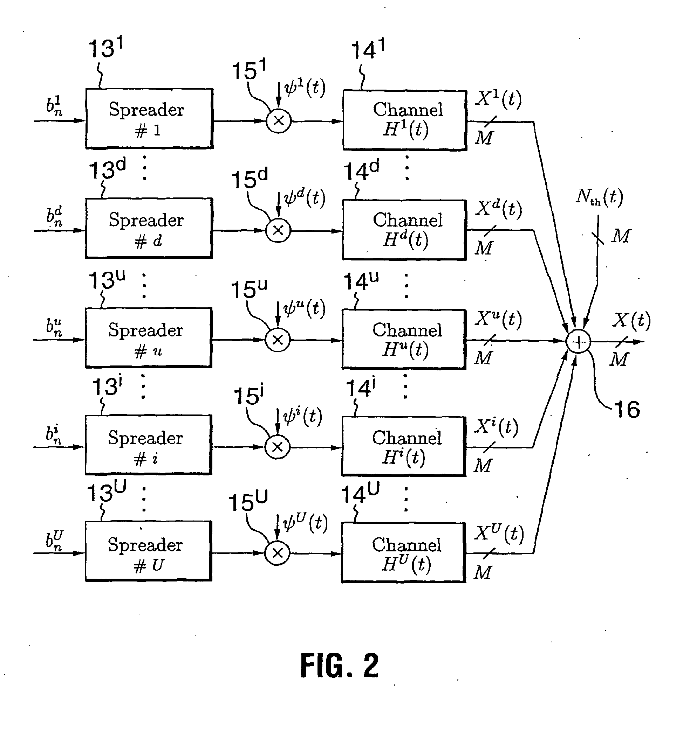

Figures 1 and 2 illustrate the uplink of a typical asynchronous cellular CDMA system wherein a plurality of mobile stations $10^1...10^U$ communicate with a base-station 11 equipped with a receiving antenna comprising an array of several antenna elements $12^1...12^M$. For clarity of depiction, and to facilitate the following detailed description, Figures 1 and 2 illustrate only five of a large number $(U)$ of mobile stations and corresponding propagation channels of the typical CDMA system, one for each of a corresponding plurality of users. It will be appreciated that the mobile stations $10^1...10^U$ will each comprise other circuitry for processing the user input signals, but, for clarity of depiction, only the spreaders are shown in Figure 2. The other circuitry will be known to those skilled in the art and need not be described here. Referring to Figure 2, the mobile stations $10^1...10^U$ comprise spreaders $13^1...13^U$, respectively, which spread a plurality of digital signals $b_n^1 ... b_n^U$ of a corresponding plurality of users, respectively, all to the same bandwidth, using spreading codes $C^1(t) ... C^U(t)$, respectively. The mobile stations $10^t ... 10^U$ transmit the resulting user signals to the base station 11 via channels $14^1... 14^U$, respectively, using a suitable modulation scheme, such as differential binary phase shift keying (DBPSK). Each of the mobile stations $10^1... 10^U$ receives commands from the base station 11 which monitors the total received power, *i.e.* the product of transmitted power and that user's code and attenuation for the associated channel and uses the information to apply power control to the corresponding signals to compensate for the attenuation of the channel. This is represented in Figure 2 by multipliers $15^1... 15^u$ which multiply the spread signals by adjustment factors $\psi^1(t)... \psi^u(t)$, respectively. The array of $M$ omni-directional antenna elements $12^1...12^M$ at the base station 11 each receive all of the spread signals in common. The channels $14^1... 14^U$ have different response characteristics $H^1(t) ... H^U(t)$, respectively, as illustrated in more detail in Figure 1, for only one of the channels, designated channel $14^u$. Hence, channel $14^u$ represents communication via as many as $P$ paths between the single antenna of the associated mobile station $10^U$ and each of the base station antenna elements $12^1...12^M$. The other channels are similarly multipath.

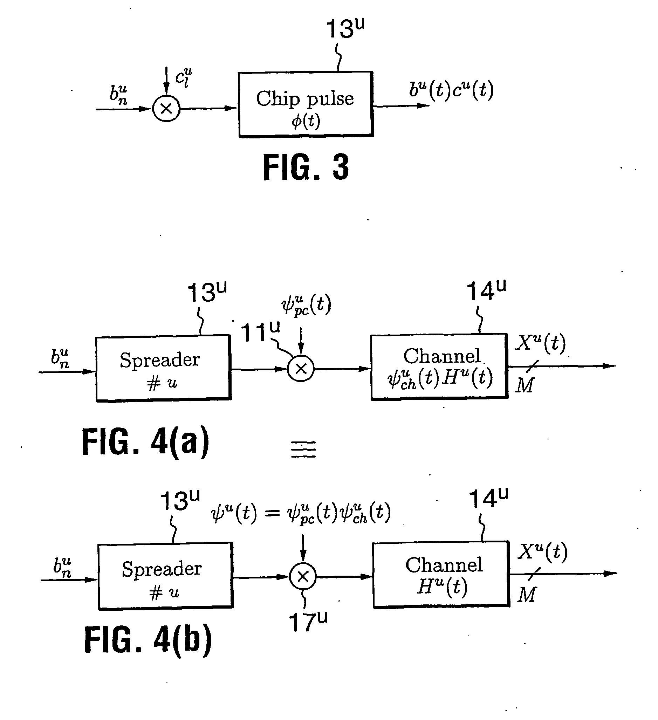

As before, it is presumed that the base station knows the spreading codes of all of the mobile stations with which it communicates. The mobile stations will have similar configurations so only one will be described. Thus, the mobile station $10^u$ first differentially encodes its user's binary phase shift keyed (BPSK) bit sequence at the rate $1/T$, where $T$ is the bit duration, using circuitry (not shown) that is well-known to persons skilled in this art. As illustrated in Figure 3, its spreader $13^u$ then spreads the resulting differential binary phase shift keyed (DBPSK) sequence $\boldsymbol{b}_{\boldsymbol{n}}^{\boldsymbol{u}}$ (or

$b^u(t)$ in the continuous time domain as represented in Figure 3) by a periodic personal code sequence $\boldsymbol{c}_{\boldsymbol{l}}^{\boldsymbol{u}}$ (or $c^u(t)$ in the continuous time domain) at a rate $1/T_c$, where $T_c$ is the chip pulse duration. The processing gain is given by $L=T/T_c$. For convenience, it is assumed that short codes are used, with the period of $c^u(t)$ equal to the bit duration $T$, though the system could employ long codes, as will be discussed later, with other applications and assumptions. Over one period T, the spreading code can be written as:

$$c^{u}(t) \;=\; \sum_{l=0}^{\bar{L}-1} \; \overline{c_{l}^{u}} \phi(t-lT_{c}), \qquad\qquad\qquad (1)$$

where $c_{l}^{u} \;=\; \pm 1$ for $l = 0, ..., L - 1$, is a random sequence of length $L$ and $\phi(t)$ is the chip pulse as illustrated in Figure 3. Also, with a multipath fading environment with $P$ resolvable paths, the delay spread $\Delta\tau$ is small compared to the bit duration *(i.e.* $\Delta\tau \ll T)$.

As illustrated in Figures 4(a) and 4(b), following signal weighting by the power control factor $\psi_{pc}^{u}(t)^2,$ the spread signal is transmitted to the base station 11 via channel $14^u$. Figure 4(a) shows the "real" situation where the channel characteristics comprise a normalized value $H^u(T)$ and a normalization factor $\psi_{ch}^{u}(T)$ which relates to the "amplitude" or attenuation of the channel, *i.e.* its square would be proportional to the power divided by the transmitted power. In Figure 4(a), power control is represented by a multiplier $17^u$, and the subscript "$pc$". Figure 4(b) shows that, for convenience, the channel characteristics can be represented (theoretically) by the normalized value $H^u(t)$ and the normalization factor $\psi_{ch}^{u}(t)$ included in a single power factor $\Psi^u(t)$ which is equal to $\psi_{pc}^{u}(t)\psi_{ch}^{u}(t).$ $\psi_{pc}^{u}(t)$ is the factor by which the transmitted signal is amplified or attenuated to compensate for channel power gain in $\psi_{ch}^{u}(t)$ and to maintain the received power $(\psi^u(t))^2$ at the required level.

In such a CDMA system, the signal of each of the mobile stations $10^1... 10^U$ constitutes interference for the signals of the other mobile stations. For various reasons, some of the mobile stations will generate more interference than others. The components of one of these "strongly interfering" user stations and its associated channel are identified in Figures 1 and 2 by the index "i". The components of one of the other "low-power" user stations and its associated channel also are illustrated, and identified by the index "d". The significance of this grouping of "interfering" and "low-power" user stations will be explained later.

At the base station 11, the spread data vector signals $X^1(t)...X^U(t)$ from the base station antenna elements $12^1...12^M$, respectively, are received simultaneously, as indicated by the adder 16 (Figure 2), and the resulting observation vector $X(t)$ is supplied to the receiver (see Figure 5). The sum of the spread data vectors (signals) $X^1(t) ... X^U(t)$ will be subject to thermal noise. This is illustrated by the addition of a noise signal component $N_{th}(t)$ by adder 16. The noise signal $N_{th}(t)$ comprises a vector, elements of which correspond to the noise received by the different antenna elements.

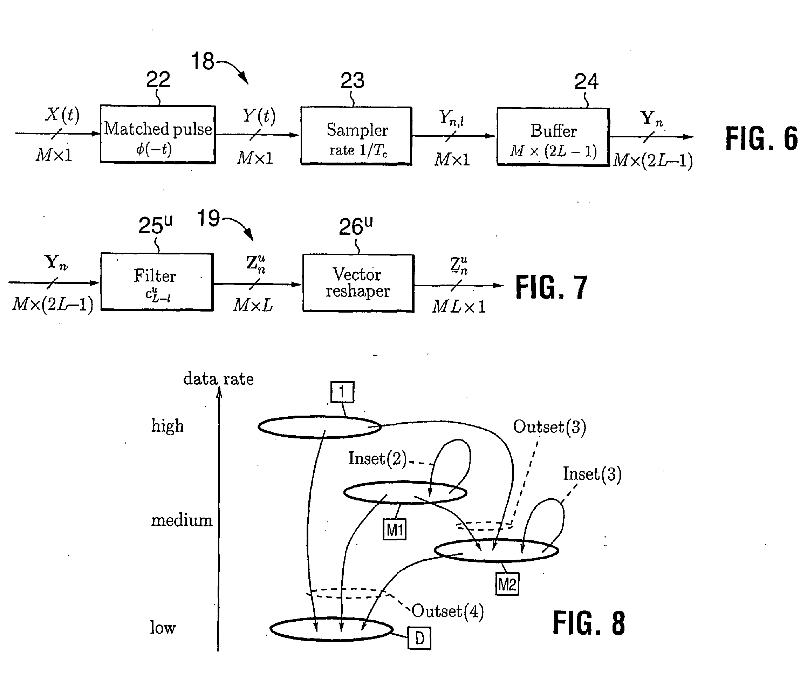

Figure 5 illustrates a spatio-temporal array receiver (STAR) for receiving the signal $X(t)$ at the base station 11. Such a receiver was described generally by two of the present inventors in reference [13]. The receiver comprises means, namely a preprocessing unit 18 and a plurality of despreaders $19^1$... $19^U$, for deriving observation vectors from the observation matrix, and a plurality of spatio-temporal receiver (STAR) modules $20^I$... $20^U$, each having its input connected to the output of a respective one of the despreaders $19^1$... $19^U$. As shown in Figure 6, the preprocessing unit 18 comprises a matched filter 22, a sampler 23 and a buffer 24. Matched filter 22 convolves the antenna array signal vector $X(t)$, which is an $M \times 1$ vector, with a matched pulse $\phi(T_c\text{-}t)$ to produce the matched filtered signal vector $Y(t)$ which then is sampled by sampler 23 at the chip rate $1/T_c$, element by element. The sampler 23 supplies the resulting $M \times 1$ vectors $Y_{n,1}$, at the chip rate, to buffer 24 which buffers them to produce an observation matrix $Y_n$ of dimension $M \times (2L\text{-}1)$. It should be noted that, although the present inventors' Canadian patent application No. 2,293,097 and United States Provisional application No. 60/171,604 had a duplicate of this preprocessing unit 18 in each of the despreaders $19^1$...$19^U$, it is preferable to avoid such duplication and use a single preprocessor 18 to preprocess the received antenna array signal vector $X(t)$.

The despreaders $19^1$...$19^U$ each have the same structure, so only one will be described in detail with reference to Figure 7 which illustrates despreader $19^u$. Thus, despreader $19^u$ comprises a filter $25^u$ and a vector reshaper $26^u$.

The observation matrix $Y_n$ is filtered by filter $21^u$ using the pseudo-random number sequence $c_{L-l}^u$ corresponding to that used in the spreader $13^u$ of the transmitter, *i. e.* $c_l^u$, to produce the postcorrelation observation matrix $Z_n^u$ for user $u$. Vector reshaper $26^u$ concatenates the columns of the $M \times L$ matrix $Z_n^u$ to form a post-correlation observation vector $\underline{Z}_n^u$ of dimension $ML \times 1$. It should be noted that the vector reshaper $26^u$ need not be a distinct physical element but is depicted as such to represent a mathematical function. In practice, the function will likely be determined merely by allocation of resources, such as memory.

) Referring again to Figure 5, the post-correlation observation vectors $\underline{Z}_n^1...\underline{Z}_n^U$ from despreaders $19^1$... $19^U$ are processed by the STAR modules $20^1$...$20^U$, respectively, to produce symbol estimates $b_n^1...b_n^U$ corresponding to the transmitted symbols $b_n^1...b_n^U$ (see Figure 2) and power estimates $(\psi_n^I)^2...(\psi_n^U)^2$ which are supplied to subsequent stages (not shown) of the receiver for processing in known manner.

The STAR modules $20^1$...$20^U$ each comprise the same elements, so the construction and operation of only one of them, STAR module $20^u$, will now be described.

The STAR module $20^u$ comprises a beamformer $27^u$, a channel identification unit $28^u$, a decision rule unit $29^u$ and a power estimation unit $30^u$. The channel identification unit $28^u$ is connected to the input and output, respectively, of the beamformer $27^u$ to receive the post-correlation observation vector $\underline{Z}_n^u$ and the signal component estimate $\hat{s}_n^u$, respectively. The channel identification unit $28^u$ replicates, for each frame $M \times$ L the characteristics $H^u(t)$, in space and time, of the associated user's transmission channel $14^u$. More specifically, it uses the post-correlation observation vector $\underline{Z}_n^u$ and signal component estimate $\hat{s}_n^u$ to derive a set of parameter estimates $\underline{\hat{H}}_n^u$, which it uses to update the weighting coefficients $\underline{W}_n^u$ of the beamformer $27^u$ in succeeding symbol periods. The symbol period corresponds to the data frame of $M \times L$ elements.

The beamformer $27^u$ comprises a spatio-temporal maximum ratio combining (MRC) filter which filters the space-time vector $\underline{Z}_n^u$ to produce the despread signal component estimate $\hat{s}_n^u$, which it supplies to both the decision rule unit $29^u$ and the power estimation unit $30^u$. The decision-rule unit $29^u$ outputs a binary symbol $\hat{b}_n^u$ according to the sign of the signal component estimate $\hat{s}_n^u$. The binary output signal constitutes the output of the decision rule unit 30$^u$ and is an estimate of the corresponding user signal $b_n^u$ spread by spreader 13$^u$ of the corresponding user station 10$^u$ (Figures 1 and 2).

The signal component estimate $\hat{s}_n^u$ is processed in subsequent parts of the receiver. For example, it may be differentially decoded and, possibly, deinterleaved and then data decoded--if the corresponding inverse operations were done before transmission.

The power estimation unit 30$^u$ uses the raw signal component estimate $\hat{s}_n^u$ to derive an estimate $(\psi_n^u)^2$ of the power in that user's signal component $\hat{s}_n^u$ of the antenna array signal vector $X(t)$ and supplies the power estimate $(\psi_n^u)^2$ to the subsequent stages (not shown) of the receiver for derivation of power level adjustment signals in known manner.

The receiver shown in Figure 5 will perform satisfactorily if there are no strong interferers, *i.e.*, if it can be assumed that all users transmit with the same modulation and at the same rate, and that the base-station knows all the spreading codes of the terminals with which it is communicating. On that basis, operation of the receiver will be described with reference to the user channel identified by index *u*.

At time *t*, the antenna array signal vector $X(t)$ received by the elements 12$^1$ ...12$^M$ of the antenna array of the one particular cell shown in Figures 1 and 2 can be written as follows:

$$X(t) \ = \ \sum_{u=1}^{U} \ X^u(t) + N^{th}(t) \qquad\qquad (2)$$

where *U* is the total number of mobile stations whose signals are received at the base-station 11 from inside or outside the cell, $X^{11}(t)$ is the received signal vector from the mobile station 10$^u$, *i. e.* , of index *u*, and $N^{th}(t)$ is the thermal noise received at the *M* antenna elements. The contribution $X^u(t)$ of the *u*-th mobile station 10$^u$ to the antenna-array signal vector $X(t)$ is given by:

$$\begin{aligned} X^u(t) &= \psi^u(t) H^u(t) \otimes c^u(t) b^u(t) \\ &= \psi^u(t) \sum_{p=1}^{P} G_p^u(t) \, \varepsilon_p^u(t) \, c^u(t - \tau_p^u(t)) \, b^u(t - \tau_p^u(t)) \end{aligned} \qquad (2a)$$

where $H^u(t)$ is the channel response vector of the channel 14$^u$ between the u-th mobile station 10$^u$ and the array of antenna elements and $\otimes$ denotes time-convolution. In the right-hand term of the above equation, the propagation time-delays $\tau_p^u(t) \in [0,T]$ along the *P* paths, $p = 1 ,..., P$, (see Figure 1), are chip-asynchronous, $G_p^u(t)$ are the propagation vectors and $\varepsilon_p^u(t)^2$ are the power fractions along each path *(i.e.,* $\sum_{p=1}^{P} \varepsilon_p^u(t)^2 = 1)$ of the total power $\psi^u(t)^2$ received from the *u*-th mobile station 10$^u$. The received power is affected by path-loss, Rayleigh fading and shadowing. It is assumed that $G_p^u(t)$ , $\varepsilon_p^u(t)^2$ and $\psi^u(t)^2$ vary slowly and are constant over the bit duration *T*.

In the preprocessing unit 18 (see Figure 6), the antenna array signal vector $X(t)$ is filtered with the matched pulse to provide the matched-filtering signal vector $Y_n(t)$ for frame *n* as follows:

$$Y_n(t) = \frac{1}{T_c} \int_{D_\phi} X(aT/2 + nT + t + t') \, \phi(t') dt' \qquad (3)$$

where $D_\phi$ denotes the temporal support of $\phi(t)$ and $a \in \{0,1\}$ stands for a possible time-shift by $T/2$ to avoid, if necessary, the frame edges lying in the middle of the delay spread (see reference [13]). For the sake of simplicity, it is assumed in the following that $a = 0$. Note that for a rectangular pulse $D_\phi$ is $[0,T_c]$. In practice, it is the temporal support of a truncated square-root raised- cosine.

It should be noted that the above description is baseband, without loss of generality. Both the carrier frequency modulation and demodulation steps can be embedded in the chip pulse-shaping and matched-filtering operations of Equations (1) and (3), respectively.

Thus, after sampling at the chip rate $1/T_c$ and framing over $2L - 1$ chip samples at the bit rate to form a frame, the preprocessing unit 18 derives the $M \times (2L -1)$ matched-filtering observation matrix:

$$Y_n = \left[ Y_{n,0}, Y_{n,1}, \cdots, Y_{n,2L-2} \right], \tag{4}$$

where $Y_{n,l} = Y_n(lT_c)$.

In the despreader $19^u$ (see Figure 7), the post-correlation vector for frame number $n$ for user number $u$ is obtained as:

$$Z_{n,l}^u = \frac{1}{L} \sum_{k=0}^{L-1} Y_{n,l+k}\, c_k^u. \tag{5}$$

Framing this vector over $L$ chip samples at the bit rate forms the post-correlation observation matrix:

$$Z_n^u = \left[ Z_{n,0}^u, Z_{n,1}^u, \cdots, Z_{n,L-1}^u \right]. \tag{6}$$

The post-correlation data model (PCM) (see reference [13]) details the structure of this matrix as follows:

$$Z_n^u = H_n^u s_n^u + N_{PCM,n}^u, \tag{7}$$

where $Z_n^u$ is the spatio-temporal observation matrix, $H_n^u$ is the spatio-temporal propagation matrix, $s_n^u = b_n^u \psi_n^u$ is the signal component and $N_{PCM,n}^u$ is the spatio-temporal noise matrix. Equation 7 provides an instantaneous mixture model at the bit rate where the signal subspace is one-dimensional in the $M \times L$ matrix space. For convenience, the vector reshaper $26^u$ of despreader $19^u$ transforms the matrices $Z_n^u$, $H_n^u$ and $N_{PCM,n}^u$ into $(M \times L)$-dimensional vectors $\underline{Z}_n^u$, $\underline{H}_n^u$ and $\underline{Z}_{PCM,n}^u$ respectively, by concatenating their columns into one spatio-temporal column vector to yield the following narrowband form of the PCM model (see reference [13]):

$$\underline{Z}_n^u = \underline{H}_n^u s_n^u + \underline{N}_{PCM,n}^u \tag{8}$$

To avoid the ambiguity due to a multiplicative factor between $\underline{H}_n^u$ and $s_n^u$, the norm of $\underline{H}_n^u$ is fixed to $\sqrt{M}$.

The PCM model significantly reduces inter-symbol interference. It represents an instantaneous mixture model of a narrowband source in a one-dimensional signal subspace and enables exploitation of low complexity narrowband processing methods after despreading. Processing after despreading exploits the processing gain to reduce the interference and to ease its cancellation in subsequent steps by facilitating estimation of channel parameters.

As discussed in reference [13], the spatio-temporal array-receiver (STAR) can be used to detect each user separately at the base-station 11. In addition to exploiting the processing gain to reduce interference, the STAR allows accurate synchronization and tracking of the multipath delays and components and shows inherent robustness to interference. The STAR also allows coherent combining of the data. This receiver is found to provide fast and accurate time-varying multipath acquisition and tracking. Moreover, it significantly improves call capacity by spatio-temporal maximum ratio combining (MRC) in a coherent detection scheme implemented without a pilot signal. For the sake of clarity, the steps of STAR that are relevant to the implementation of the present invention will be reviewed briefly below, with reference to receiver module $20^u$ of Figure 5.

As shown in Figure 5, the despreader $19^u$ supplies the post-correlation observation vector $\underline{Z}_n^u$, to both the channel identification unit $28^u$ and the MRC beamformer $27^u$ of STAR module $20^u$. Using spatio-temporal matched filtering $(\underline{W}_n^u = \underline{\hat{H}}_n^u/M)$ (*i.e.* spatio-temporal maximum ratio combining, $\underline{W}_n^{u\,H}\underline{\hat{H}}_n^u = 1$), the STAR module $20^u$ provides estimates of signal component $s_n^u$, its DBPSK bit sequence $b_n^u$ and its total received power $(\psi_n^u)^2$ as follows:

$$\hat{s}_n^u = Real\left\{\underline{W}_n^{u\,H}\underline{Z}_n^u\right\} = Real\left\{\frac{\underline{\hat{H}}_n^{u\,H}\underline{Z}_n^u}{M}\right\}, \qquad (9)$$

$$b_n^u = Sign\left\{\hat{s}_n^u\right\}, \qquad (10)$$

$$(\psi_n^u)^2 = (1-\alpha)(\psi_{n-1}^u)^2 + \alpha\,|\hat{s}_n^u|^2, \qquad (11)$$

where $\alpha$ is a smoothing factor. It should be noted that with ad hoc modifications, differential modulation and quasi-coherent differential decoding still apply with DMPSK. Orthogonal modulation can even be detected coherently by STAR without a pilot (references [17] and [18]). Using the post-correlation observation vector $\underline{Z}_n^u$ and the new signal component estimate $\hat{s}_n^u$ from the beamformer $27^u$, the channel identification unit $28^u$ provides an estimate $\underline{\hat{H}}_n^u$ of the channel $14^u$ for user station $10^u$. The channel identification unit $28^u$ updates the channel vector estimate $\underline{\hat{H}}_n^u$ by means of a decision feedback identification (DFI) scheme whereby the signal component estimate $\hat{s}_n^u$ is fed back as a reference signal in the following eigen-subspace tracking procedure:

$$\underline{\tilde{H}}_{n+1}^u = \underline{\hat{H}}_n^u + \mu\left(\underline{Z}_n^u - \underline{\hat{H}}_n^u\hat{s}_n^u\right)\hat{s}_n^u, \qquad (12)$$

where $\mu$ is an adaptation step-size. Alternatively, the product $\psi_n^u\,\hat{b}_n^u$ could be fed back instead of the signal component estimate $\hat{s}_n^u$. It should be noted that, if the modulation is complex, the second occurrence of signal component estimate

$\hat{S}_n^u$ should be replaced by its conjugate $(\hat{S}_n^u)^*$ This DFI scheme allows a 3 dB coherent detection gain in noise reduction by recovering the channel phase offsets within a sign ambiguity without a pilot. Note that a reduced-power pilot can be used to avoid differential coding and decoding (reference [21]). The procedure that further enhances the channel vector estimate $\hat{\underline{H}}_{n+1}^u$ to obtain $\hat{\underline{H}}_{n+1}^u$ from the knowledge of its spatio-temporal structure (*i.e.* manifold) allows a fast and accurate estimation of the multipath time-delays $\hat{\tau}_{1,n}^u, ..., \hat{\tau}_{P,n}^u$ in both the acquisition and the tracking modes (both versions of this procedure can be found in reference [13]). This improved estimation accuracy achieves robustness to channel estimation errors, and reduces sensitivity to timing errors, when STAR is used in multiuser operation.

For further information about STAR, the reader is directed to the articles by Affes and Mermelstein identified as references [13] and [17] to [21].

If, as was assumed in reference [13], the spatio-temporal noise vector $\underline{N}_{PCM,n}^u$ is spatially uncorrelated, power control on the uplink is generally able to equalize the received signal powers. However, the assumption that noise is uncorrelated becomes untenable on the downlink due to path-loss and shadowing and when the power of particular users (*e.g.*, "priority links", acquisition, higher-order modulations or higher data-rates in mixed-rate traffic) is increased intentionally. Within a particular cell, there may be users having many different "strengths", perhaps because of different data rates. Figure 8 illustrates, as an example, a cell in which there are four different sets of users arranged hierarchically according to data rate. The first set I comprises users which have relatively high data rates, the second set M1 and third set M2 both comprise users which have intermediate data rates, and the fourth set D comprises users which have relatively low data rates. In practice, the receivers of the high data rate users of set I will not need to cancel any "outset" interference from the users in sets M1, M2 and D, but their transmissions will contribute to interference for the receiver modules in those sets. Intermediate data rate users in sets M1 and M2 will need to cancel "outset" interference from the high data rate users of the set I but not from the users in set D. They will themselves be contributors of "outset" interference to the users in set D. The receivers of users in set D must cancel "outset" interference from sets I, M1 and M2.

It is also possible for a receiver of a user within a particular set to cancel "inset" interference from one or more users within the same set; and itself be a contributor to such "inset" interference. Embodiments of the invention applicable to these "outset" and "inset" situations will be described hereinafter. In the description, where a particular user's signal is treated as interference and cancelled, it will be deemed to be a "contributor" and, where a particular user's receiver module receives information to enable it to cancel another user's interference, it will be deemed to be a "recipient". To simplify the description of the preferred embodiments described herein, it will be assumed that all users employ the same modulation at the same rate. For the purpose of developing the theory of operation, initially it will be assumed that, among the mobile stations in the cell, there will be a first set I of "strong" contributor users, one of which is identified in Figures 1 and 2 by index "i", whose received signal powers are relatively high and hence likely to cause more interference, and a second set D of "low-power" recipient users, one of which is identified in Figures 1 and 2 by index "d", whose received signal powers are relatively low and whose reception may be degraded by interference from the signals from the strong users. In order to receive the low-power users adequately, it usually is desirable to substantially eliminate the interference produced by the high-power users. For simplicity, most of the preferred embodiments of the invention will be described on the basis that the high-power users can be received adequately without interference suppression. It should be appreciated, however, that the "strong" user stations could interfere with each other, in which case one could also apply to any interfering mobile the coloured noise model below and the near-far resistant solution proposed for the low-power user, as will be described later.

Assuming the presence of *NI* interfering users assigned the indices *i = 1 to NI,* then the spatio-temporal observation vector of any interfering user ($u = i \in \{1,...,NI\}$) is given from Equation 8 by:

$$\underline{Z}_n^i = \underline{H}_n^i s_n^i + \underline{N}_{PCM,n}^i, \qquad (13)$$

where $\underline{N}_{PCM,n}^i$ can still be assumed to be an uncorrelated white noise vector if the processing gain of this user is not very low. On the other hand, from the point of view of any low-power user *(u = d ∉ {1,...,NI})*, the spatio-temporal observation vector is:

$$\underline{Z}_n^d \;=\; \underline{H}_n^d s_n^d \;+\; \underline{I}_{PCM,n}^d \;+\; \underline{N}_{PCM,n}^d \;=\; \underline{H}_n^d s_n^d \;+\; \sum_{i=1}^{NI} \underline{I}_{PCM,n}^{d,i} \;+\; \underline{N}_{PCM,n}^d, \tag{14}$$

where, in addition to the uncorrelated white noise vector $\underline{N}_{PCM,n}^d$, there is included a total interference vector $\underline{I}_{PCM,n}^d$ which sums a random coloured spatio-temporal interference vector from each interfering mobile denoted by $\underline{I}_{PCM,n}^{d,i}$ for $i = 1, ..., NI$. At frame number n, the realization of the vector $\underline{I}_{PCM,n}^{d,i}$ results from matched-pulse filtering, chip-rate sampling, despreading with $c_l^d$, bit-rate framing, and matrix/vector reshaping of the received signal vector $X^i(t)$ from the $i$-th interfering mobile using Equations (3) to (6).

The receiver shown in Figure 5 would receive the signals from all of the user stations independently of each other. It should be noted that there is no cross-connection between the receiver modules $20^1$,...,$20^U$, specifically between their STAR modules $20^l$...$20^u$...$20^U$, for suppression of interference from the signals of mobile stations which constitute strong interferers. While the matched beamformer of Equation (9) is optimal in uncorrelated white noise, it is suboptimal when receiving the low-power users due to spatial-temporal correlation of the interference terms. To allow the accommodation of additional users in the presence of much stronger interfering mobiles in the target cell, in embodiments of the present invention the receiver of Figure 5 is upgraded to obtain much stronger near-far resistance, specifically by adapting the beamformer of Equation (9) to reject the interference contributions from the interfering strong users.

In the general case, the total interference $\underline{I}_{PCM,n}^d$ experienced by a user $d$ in set D is an unknown random vector which lies at any moment in an interference subspace spanned by a matrix, say $C_{PCM,n}^d$ (i.e., $\underline{I}_{PCM,n}^d \in Vec\{C_{PCM,n}^d\}$) with dimension depending on the number of interference parameters (*i.e.*, power, data, multipath components and delays) assumed unknown or estimated *a priori*. As will become apparent from the following descriptions of preferred embodiments, in practice, the matrix $C_{PCM,n}^d$, which will be referred to as the "constraint matrix", can be derived and estimated in different ways. To achieve near-far resistance, the beamformer must conform to the following theoretical constraints:

$$\left\{ \begin{array}{l} \underline{W}_n^{d^H} \underline{H}_n^d = 1, \\[2mm] \underline{W}_n^{d^H} C_{PCM,n}^d = 0, \end{array} \right. \;\;\Rightarrow\;\; \left\{ \begin{array}{l} \underline{W}_n^{d^H} \underline{H}_n^d = 1, \\[2mm] \underline{W}_n^{d^H} I_{PCM,n}^d = 0. \end{array} \right. \tag{15}$$

The first constraint provides a substantially distortionless response to the low-power user while the second instantaneously rejects the interference subspace and thereby substantially cancels the total interference. This modification of the beamforming step of STAR will be referred to as interference subspace rejection (ISR).

With an estimate of the constraint matrix $\hat{C}_{PCM,n}^d$ available (as described later), the ISR combiner (*i.e.*, the constrained spatio-temporal beamformer) $\cdot \underline{W}_n^d$ after despreading is obtained by:

$$Q_{PCM,n}^d \;=\; \left( \hat{C}_{PCM,n}^{d^H} \hat{C}_{PCM,n}^d \right)^{-1}, \tag{16}$$

$$\Pi_{PCM,n} = I_{M*L} - \hat{C}^d_{PCM,n} Q^d_{PCM,n} \hat{C}^{d^H}_{PCM,n}, \tag{17}$$

$$\underline{W}^d_n = \frac{\Pi^d_{PCM,n} \hat{\underline{H}}^d_n}{\hat{\underline{H}}^{d^H}_n \Pi^d_{PCM,n} \hat{\underline{H}}^d_n}, \tag{18}$$

where $I_{M*L}$ denotes a $M*L \times M*L$ identity matrix. First, the projector $\Pi_{PCM,n}$ orthogonal to the constraint matrix $\hat{C}_{PCM,n}$ is formed. It should be noted from Equations (16) and (17) that the inverse matrix $Q^d_{PCM,n}$ is not the direct inverse of constraint matrix $C^d_{PCM,n}$ but part of the pseudo-inverse of $C^d_{PCM,n}$. For convenience, however, it will be referred to as the inverse matrix hereafter. Second, the estimate of the low-power response vector $\hat{\underline{Y}}^d_n$ is projected and normalized.

Whereas, using the above constraints, the ISR beamformer may process the low-power user's data vector after it has been despread, it is possible, and preferable, to process the data vector without first despreading it. In either case, however, the data vector will still be despread for use by the channel identification unit. Although it is computationally more advantageous to do so without despreading, embodiments of both alternatives will be described. First, however, the spread data model of Equation (2) will be reformulated and developed and then used to derive various modes that implement ISR combining of the data, without despreading, suitable for different complementary situations.

### Data Model Without Despreading

The observation matrix $Y_n$ of Equation (4) which provides the post-correlation matrix $Z_n$ of Equation (7) by despreading and framing at the bit rate, can be expressed as:

$$Y_n = \sum_{u=1}^{U} Y^u_n + N^{pth}_n, \tag{19}$$

where each user u contributes its user-observation matrix $Y^u_n$, obtained by Equations (3) and (4) with X($t$) replaced by $X^u(t)$ in Equation (3), and where the preprocessed thermal noise contributes:

$$N^{pth}_n = \left[ N^{pth}(nT), N^{pth}(nT + T_c), ..., N^{pth}(nT + (2L - 2)T_c) \right]. \tag{20}$$

Using the fact that any bit-triplet $\left[ b^u_{n-1}, b^u_n, b^u_{n+1} \right]$ * contributing to channel convolution (see Equation (2a) in $Y^u_n$ can be composed as:

$$\left[ b^u_{n-1}, b^u_n, b^u_{n+1} \right] = b^u_{n-1}[1, 0, 0] + b^u_n[0, 1, 0] + b^u_{n+1}[0, 0, 1], \tag{21}$$

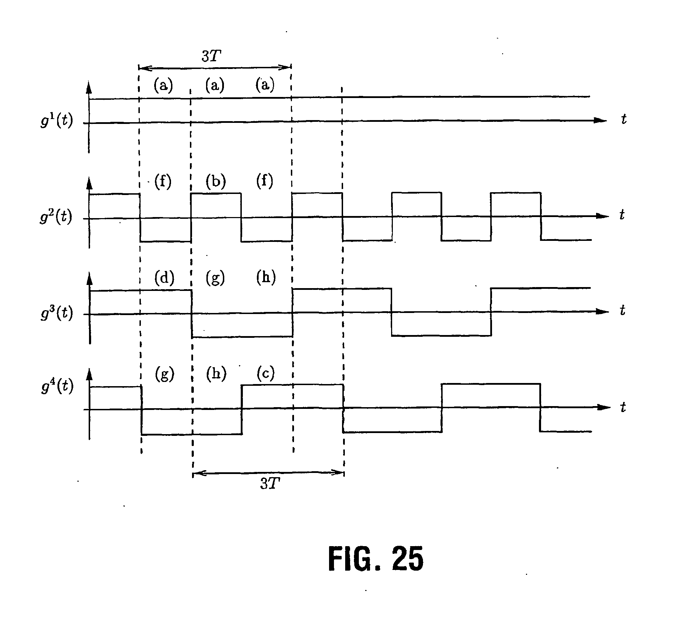

the sequence $b^u(t)$ can be locally approximated over the $n$-th block by means of the canonic generating sequences $g^1(t)$, $g^2(t)$ and $g^3(t)$ in Figure 25 as:

$$b^u(t) = b_n^u g^{l_{0,n}}(t) + b_{n-1}^u g^{l_{-1,n}}(t) + b_{n+1}^u g^{l_{+1,n}}(t), \qquad (22)$$

where the indices $l_{0,n}$, $l_{-1,n}$, $l_{+1,n} \in \{1, 2, 3\}$ are permuted at each block so that the corresponding canonic generating sequences locally coincide with *[0, 1, 0]*, *[1, 0, 0]* and *[0, 0, 1]*, respectively. Assuming slow time-variations of $\psi(t)$ and *H(t)* compared to the symbol duration:

$$Y_n^u = s_n^u Y_{0,n}^u + s_{n-1}^u Y_{-1,n}^u + s_{n+1}^u Y_{+1,n}^u, \qquad (23)$$

where the canonic user-observation matrices $Y_{k,n}^u$ are obtained by Equations (3) and (4) with *X(t)* in Equation (3) replaced, respectively for *k = -1, 0, +1*, by:

$$X_k^u(t) = H^u(t) \otimes g^{l_{k,n}}(t) c^u(t). \qquad (24)$$

Good approximations of $Y_{-1,ng}$ and $Y_{+1,n_n}$ can be actually obtained at each iteration by L simple backward/forward shifts of the columns of $Y_{0,n}^u$ with zero column inputs.

It should be noted that the canonic generating sequences allow more accurate reconstruction (*e.g.*, overlap-add) of time-varying channels. Also, the resulting decomposition in Equation (23) holds for long PN codes.

It should be noted that this decomposition also holds for any complex-valued symbol-triplet

$\left[ b_{n-1}^u, \; b_n^u, \; b_{n+1}^u \right]$. With *ad hoc* modifications, therefore, the ISR approach according to this invention applies to any complex modulation (*e.g.,* MPSK, MQAM, even analog). This new signal decomposition is used to derive the different implementations of ISR which will be described later.

With respect to the low-power user assigned the index *d* and the *NI* strong interfering mobiles assigned the indices *i = 1, ..., NI,* the observation vector obtained by reshaping the observation matrix, before despreading, can now be rewritten as:

$$\underline{Y}_n = \underline{Y}_{0,n}^d s_n^d + \underline{I}_{ISI,n}^d + \underline{I}_n + \underline{N}_n, \qquad (25)$$

where the first canonic observation vector $\underline{Y}_{0,n}^d$ appears as the "channel" vector of the low-power user *d*. The total interference vector before despreading:

$$\underline{I}_n = \sum_{i=1}^{NI} \underline{Y}_n^i = \sum_{i=1}^{NI} \left\{ s_n^i \underline{Y}_{0,n}^i + s_{n-1}^i \underline{Y}_{-1,n}^i + s_{n+1}^i \underline{Y}_{+1,n}^i \right\} = \sum_{i=1}^{NI} \left\{ s_n^i \underline{Y}_{0,n}^i + \underline{I}_{ISI,n}^i \right\}, \qquad (26)$$

is the sum of the interfering signal vectors $\underline{Y}_n^i$ and:

$$\underline{I}_{ISI,n}^u = s_{n-1}^u \underline{Y}_{-1,n}^u + s_{n+1}^u \underline{Y}_{+1,n}^u, \qquad (27)$$

is the intersymbol interference (ISI) vector of user $u$. In large processing gain situations, the self ISI vector $\underline{I}^d_{ISI,n}$ can be combined with the uncorrelated spatio-temporal noise *vector* $\underline{N}_n$, leading to the following data vector model before despreading:

$$\underline{Y}_n = \underline{Y}^d_{0,n} s^d_n + \underline{I}_n + \underline{N}_n. \tag{28}$$

Despreading the observation vector in the above equation with the spreading sequence of the low-power user $d$ provides the data vector model after despreading in Equation (14). It is possible to derive a finer decomposition of the data model to allow implementation of one or more of the ISR modes over diversities.

*Finer Decomposition of the Data Model Over Diversities*

Thus, Equation (2a) can be further decomposed over the $N_f = MP$ diversity branches or fingers in such a way that the observation signal contribution $X^{u,f}(t)$ received by the $m$-th antenna along the $p$-th path for $f = (p - 1)M + m = 1,..., N_f$ can be separated as follows:

$$X^u(t) = \sum_{f=1}^{N_f} X^{u,f}(t). \tag{29}$$

The observation signal contribution from the $f$-th finger is defined as:

$$\begin{aligned} X^{u,f}(t) &= \psi^u(t)H^{u,f}(t) \otimes c^u(t)b^u(t) \\ &= \psi^u(t)G^{u,f}_p(t)\varepsilon^u_p(t)b^u(t - \tau^u_p(t))c^u(t - \tau^u_p(t)), \end{aligned} \tag{30}$$

where the propagation vector from the $f$-th finger is:

$$G^{u,f}_p(t) = \gamma^u_f(t)\underline{R}_m. \tag{31}$$

In the above equation, the scalar $\gamma^u_f(t)$ is the channel coefficient over the $f$-th finger and $\underline{R}_m = [0, ... , 0,1,0, ... , 0]^T$ is a $M \times 1$ vector with null components except for the $m$-th one. With the above definitions, one can easily check the following decompositions of the channel and the propagation vectors:

$$H^u(t) = \sum_{f=1}^{N_f} H^{u,f}(t), \tag{32}$$

$$G^u_p(t) = \sum_{m=1}^{M} G^{u,(p-1)M+m}_p(t). \tag{33}$$

Accordingly, after preprocessing, the matched-filtering observation matrix can be decomposed as follows:

$$Y_n = \sum_{u=1}^{U} Y_n^u + N_n^{pth} = \sum_{u=1}^{U} \sum_{f=1}^{N_f} \psi_n^u \zeta_{f,n}^u Y_n^{u,f} + N_n^{pth}, \tag{34}$$

where each user u contributes its user-observation matrices $Y_n^{u,f}$ from fingers $f = 1,...,N_f$, obtained by Equations (3) and (4) with X(*t*) replaced by $X^{u,f}(t)$ in Equation (3). Note that the complex channel coefficient $\zeta_f^u(nT) = \gamma_f^u(nT)\varepsilon_p^u(nT)$ is separated from the matrix[1] $Y_n^{u,f}$ which contains a purely-delayed replica of the spread-data without attenuation or phase offset from finger *f*. This matrix, which is obtained by Equations (3) and (4) with *X(t)* in Equation (3) replaced by:

$$X^{u,f}(t) = \underline{R}_m \delta(t - \tau_p(t)) \otimes b^u(t) c^u(t), \tag{35}$$

can be further decomposed over the canonic generating sequences as follows:

$$Y_n^{u,f} = b_n^u Y_{0,n}^{u,f} + b_{n-1}^u Y_{-1,n}^{u,f} + b_{n+1}^u Y_{+1,n}^{u,f}, \tag{36}$$

where the canonic user-observation matrices $Y_{k,n}^{u,f}$ from finger *f* are obtained by Equations (3) and (4) with X(*t*) in Equation (3) replaced, respectively for *k = -1, 0, +1*, by:

$$X_k^{u,f}(t) = \underline{R}_m \delta(t - \tau_p(t)) \otimes g^{k,u}(t) c^u(t), \tag{37}$$

where $\delta(t)$ denotes the Dirac impulse. Therefore one obtains:

$$Y_n = \sum_{u=1}^{U} \sum_{f=1}^{N_f} \sum_{k=-1}^{+1} s_{n+k}^u \zeta_{f,n}^u Y_{k,n}^{u,f} + N_n^{pth}. \tag{38}$$

A coarser decomposition over fingers of the total interference vector before despreading defined in Equation (26) gives:

$$\underline{I}_n = \sum_{i=1}^{NI} \underline{Y}_n^i = \sum_{i=1}^{NI} \sum_{f=1}^{N_f} \psi_n^i \zeta_{f,n}^i \underline{Y}_n^{i,f}. \tag{39}$$

After despreading with the spreading sequence of the low-power user *d*, it gives:

$$\underline{I}_{PCM,n}^d = \sum_{i=1}^{NI} \underline{I}_{PCM,n}^{d,i} = = \sum_{i=1}^{NI} \sum_{f=1}^{N_f} \psi_n^i \zeta_{f,n}^i \underline{I}_{PCM,n}^{d,i,f}. \tag{40}$$

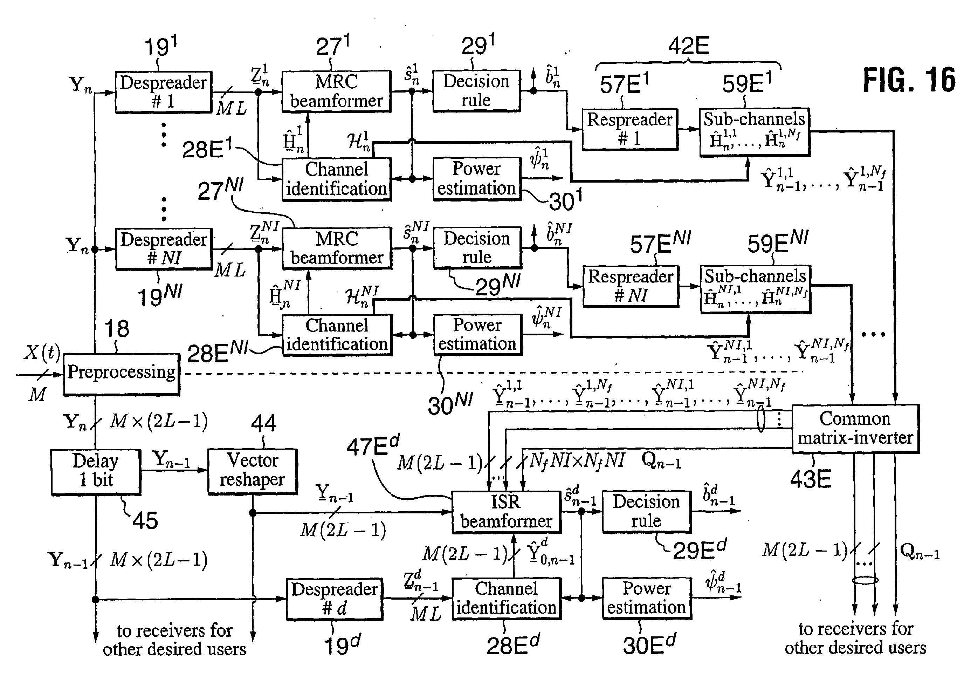

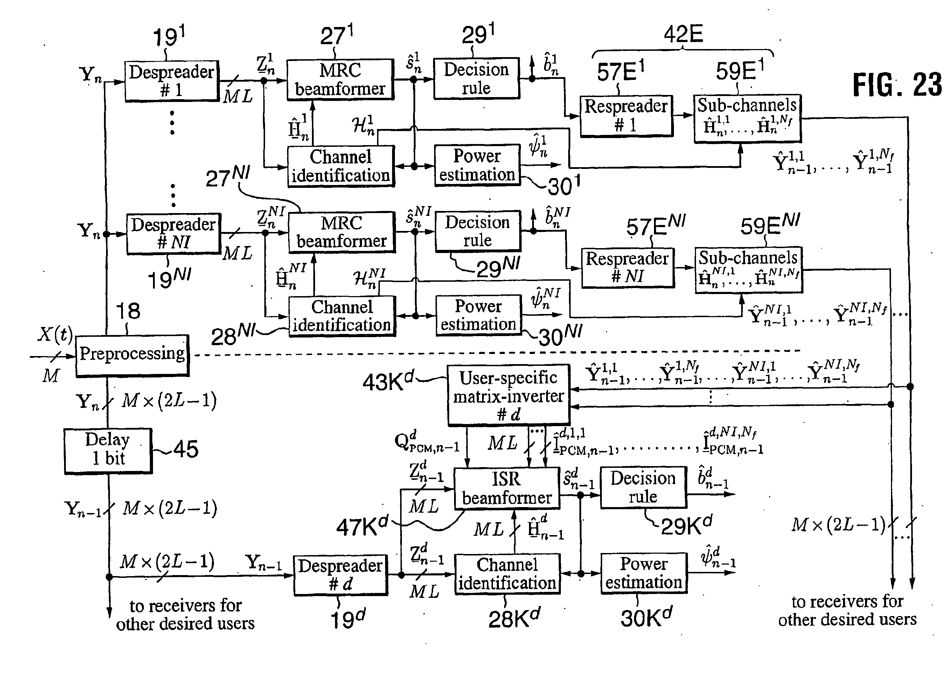

Embodiments of the invention which use the above decompositions of interference, denoted as ISR-D implementations before and after despreading, will be described later with reference to Figures 16 and 23.

*ISR Combining Before Despreading*

As described hereinbefore, the combining step of STAR is implemented without despreading by replacing Equation (9) for the low-power user with:

$$\hat{s}_n^d = Real\left\{\underline{W}_n^{d^H}\underline{Y}_n\right\},\qquad(41)$$

where the spatio-temporal beamformer $\underline{W}_n^d$ now implements ISR without despreading to reject $I_n$ by complying with the following constraints (see Equation (15)):

$$\begin{cases}\underline{W}_n^{d^H}\underline{Y}_{0,n}^d = 1,\\ \underline{W}_n^{d^H}C_n = 0,\end{cases}\Rightarrow\begin{cases}\underline{W}_n^{d^H}\underline{Y}_{0,n}^d = 1,\\ \underline{W}_n^{d^H}\underline{I}_n = 0,\end{cases}\qquad(42)$$

and $C_n$ is the constraint matrix without despreading that spans the interference subspace of the total interference vector $I_n$ (i.e., $I_n \in Vec\{C_n\}$).

The constraint matrix without despreading, $C_n$, is common to all low-power users. Thus, it characterizes the interference subspace regardless of the low-power user. In contrast, each constraint matrix after despreading $C_{PCM,n}^d$ in Equation (15) is obtained by despreading $C_n$ with the spreading sequence of the corresponding low-power user. Therefore ISR combining before despreading, although equivalent to beamforming after despreading, is computationally much more advantageous.

In contrast to the "after despreading" case described earlier, when the data vector is not despread before processing by the ISR combiner (*i.e.*, the constrained spatio-temporal beamformer) $\underline{W}_n^d$ the estimate of the constraint matrix $\hat{C}_n$ is obtained by:

$$Q_n = \left(\hat{C}_n^H\hat{C}_n\right)^{-1},\qquad(43)$$

$$\Pi_n = I_{M\cdot(2L-1)} - \hat{C}_nQ_n\hat{C}_n^H,\qquad(44)$$

$$\underline{W}_n^d = \frac{\Pi_n\,\hat{Y}_{0,n}^d}{\hat{Y}_{0,n}^{d^H}\Pi_n\,\hat{Y}_{0,n}^d},\qquad(45)$$

where $I_{M*(2L-1)}$ denotes a $M*(2L-1) \times M*(2L-1)$ identity matrix. As before, it can be seen from Equations (43) and (44) that the inverse matrix $Q_n$ is not the direct inverse of constraint matrix $\hat{C}_n$ but part of the pseudo-inverse of $\hat{C}_n$. It should also be noted that the above operations are actually implemented in a much simpler way that exploits redundant or straightforward computations in the data projection and the normalization. As before, the projector $\Pi_n$ orthogonal to the constraint matrix $\hat{C}_n$ is formed once for all low-power users. This would have not been possible with ISR after despreading. Second, the estimate of the low-power response vector $\underline{\hat{Y}}^d_{0,n}$ is projected and normalized. The estimate $\underline{\hat{Y}}^d_{0,n}$ is reconstructed by reshaping the following matrix:

$$\hat{Y}^d_{0,n} = \hat{H}^d_n \otimes g^{l_{0,n}}_n c^d_l, \tag{46}$$

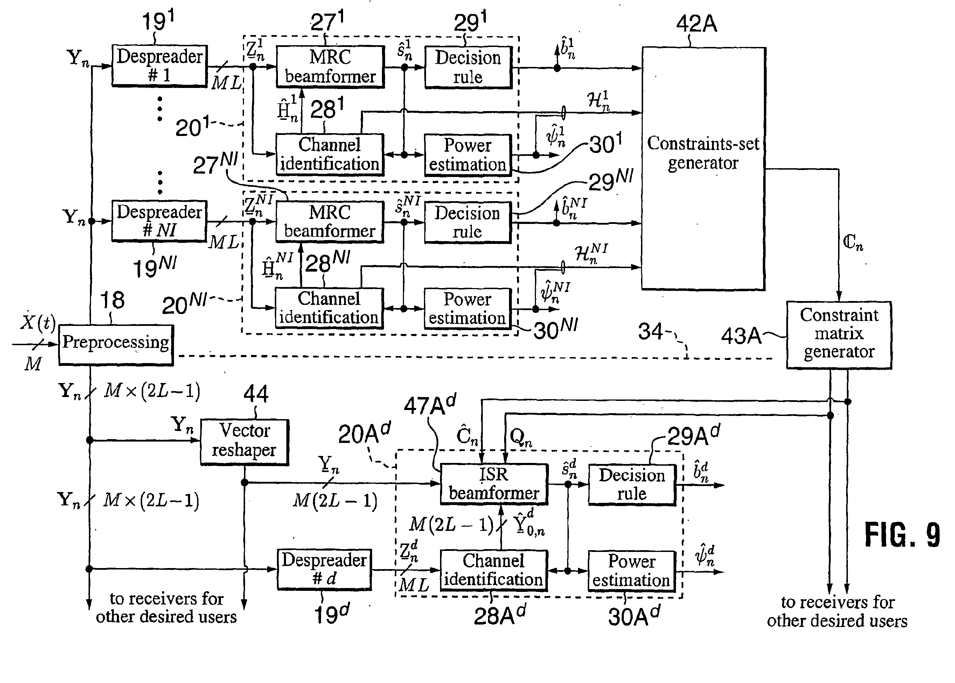

the fast convolution with the channel matrix estimate being implemented row-wise with the spread sequence. The symbol $\otimes$ denotes overlap - add over the past, current and future blocks of the spread sequence to be convolved with a finite-size channel-matrix; hence $g^{l_{0,n}}_n$ is introduced in Equation 46 to isolate the net contribution from the current sequence block. The channel vector estimate $\underline{\hat{H}}^d_n$, i.e. $\hat{H}^d_n$, is provided by STAR as explained earlier and includes the total contribution of the shaping pulse $\phi(t)$ matched with itself [13]. If the channel time-variations are slow, the channel coefficients can be assumed constant over several symbol durations [20], thereby reducing the number of computationally expensive despreading operations required (see Figure 9).

It should be noted that, although these ISR modes have formulations that are analogous whether ISR is implemented with or without first despreading the data vector, ISR combining of the data without it first being despread reduces complexity significantly.

Receivers which implement these different ISR modes will now be described, using the same reference numerals for components which are identical or closely similar to those of the receiver of Figure 5, with a suffix indicating a difference. A generic ISR receiver which does so without despreading of the data will be described first, followed by one which does so after despreading of the data. Thereafter, specific implementations of different ISR modes will be described.

Thus, Figure 9 illustrates a receiver according to a first embodiment of the invention which comprises a first set I of "strong user" receiver modules $20^1...20^{NI}$ which are similar to those in the receiver of Figure 5, and, separated by a broken line 34, a second set D of "low-power" user receiver modules which differ from the receiver modules of set I but are identical to each other so, for convenience, only one, STAR module $20A^d$ having a modified beamformer $47A^d$, is shown. The outputs of the decision rule units $29^1,...,29^{NI}$ and of the channel identification units $28^1,...,28^{NI}$ from the set I modules are shown coupled to a constraints-set generator 42A which processes the corresponding symbol estimates and channel vector estimates to produce a set of $N_c$ constraints $\mathbb{C}_n = \{\mathbb{C}^1_n,...,\mathbb{C}^{N_c}_n\}$. The constraints-set generator 42A may, however, use hypothetical symbol values instead, or a combination of symbol estimates and hypothetical values, as will be described later. Each individual constraint lies in the same observation space as the observation matrix $Y_n$ from preprocessor 18. The constraints-set generator 42A supplies the set of constraints $\mathbb{C}_n$ to a constraint matrix generator 43A which uses them to form a constraint matrix $\hat{C}_n$ and an inverse matrix $Q_n$ which supplies it to the beamformer $47^d$ and each of the corresponding beamformers in the other receiver modules of set D. The actual content of the set of constraints $\mathbb{C}_n$ and the constraint matrix $\hat{C}_n$ will depend upon the particular ISR mode being implemented, as will be described later.

The observation vector deriving means in the receiver of Figure 9 also comprises a vector reshaper 44 which reshapes the observation matrix $Y_n$ from the preprocessing unit 18 to form an observation vector $\underline{Y}_n$ having dimension $M(2L-1)$ and supplies it to the beamformer $47A^d$ and to each of the other beamformers in the other receiver modules in set D.

The STAR module $40A^d$ comprises a channel identification unit $28A^d$, a decision rule unit $27A^d$ and a power estimation unit $30A^d$ which are similar to those of the STAR modules $20^1...20^U$ described hereinbefore. The STAR module $20A^d$ is associated with a despreader $19^d$ which also is part of the observation vector deriving means. The despreader $19^d$ despreads the observation matrix $Y_n$ using the spreading code for user $d$ and supplies the resulting post-correlation observation vector $\underline{Z}_n$ to the channel identification unit $28A^d$ only. The decision rule unit $27A^d$ and power estimation unit $30A^d$ produce output symbol estimates $\hat{b}^d_n$ and power estimates $(\hat{\psi}^d_n)^2$, respectively. The ISR beamformer 47A$^d$ of STAR module 20A$^d$ produces corresponding signal component estimates $\hat{s}_n^d$ but differs from the MRC beamformers $27^I...27^{NI}$ because it operates upon the observation vector $\underline{Y}_n$, which has not been despread. In a manner similar to that described with respect to Figure 5, the channel identification unit 28A$^d$ receives the post-correlation observation vector $\underline{Z}_n^d$ and the signal component estimate $\hat{s}_n^d$ and uses them to derive the spread channel vector estimates $\hat{\underline{Y}}_{0,n}^d$, which it uses to update the weighting coefficients $\underline{W}_n^d$ of the beamformer 47A$^d$ in succeeding symbol periods. The symbol period corresponds to the spread data frame of $M(2L-1)$ elements. The coefficients of the ISR beamformer 47A$^d$ also are updated in response to the constraint matrix $\hat{C}_n$ and its inverse $Q_n$, as will be described later. As shown in Figure 9, the same matrices $\hat{C}_n$ and $Q_n$ are supplied to all of the receiver modules in set D, specifically to their beamformers.

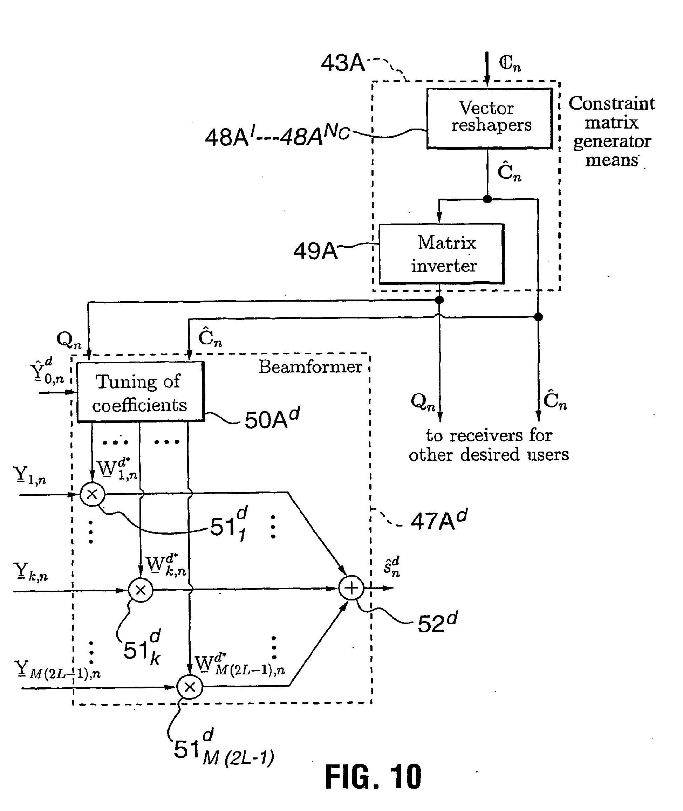

As shown in Figure 10, the constraint matrix generator means 43A comprises a bank of vector reshapers 48$A^1$, ,..., 48$A^{N_c}$ and a matrix inverter 49A. Each of the vector reshapers 48$A^1$, ..., 48$A^{N_c}$ reshapes the corresponding one of the set of constraints-set matrices $\underline{\mathbb{C}}_n^1,...,\underline{\mathbb{C}}_n^{N_c}$ to form one column of the constraint matrix $\hat{C}_n$, which is processed by matrix inverter 49A to form inverse matrix $Q_n$. For simplicity of description, it is implicitly assumed that each of the columns of $\hat{C}_n$ is normalized to unity when collecting it from the set of constraints $\mathbb{C}_n$.

As also illustrated in Figure 10, beamformer 47A$^d$ can be considered to comprise a coefficient tuning unit 50A$^d$ and a set of $M(2L-1)$ multipliers $51_1^d...51_{M(2L-1)}^d$. The coefficient tuning unit 50A$^d$ uses the constraint matrix $\hat{C}_n$, the inverse matrix $Q_n$ and the channel vector estimates $\hat{\underline{Y}}_{0,n}^d$ to adjust weighting coefficients $\underline{W}_{1,n}^{d*}...\underline{W}_{M(2L-1),n}^{d*}$ according to Equation (45) *supra*. The multipliers $51_1^d...51_{M(2L-1)}^d$ use the coefficients to weight the individual elements $\underline{Y}_{1,n}...\underline{Y}_{M(2L-1),n}$, respectively, of the observation vector $\underline{Y}_n$. The weighted elements are summed by an adder 52$^d$ to form the raw filtered symbol estimate $\hat{s}_n^d$ for output from the beamformer 47A$^d$.

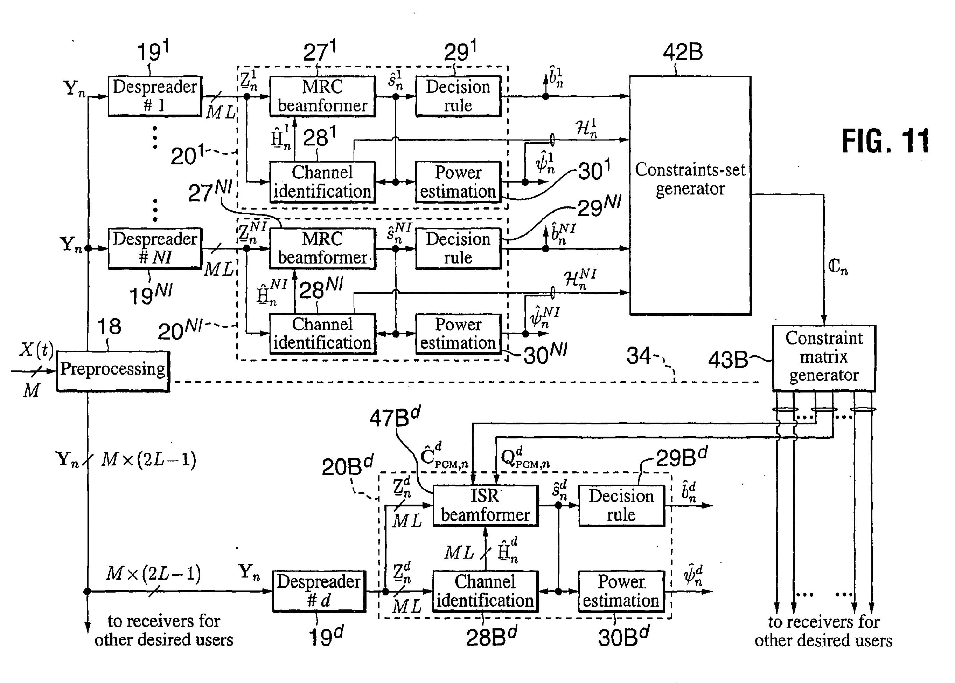

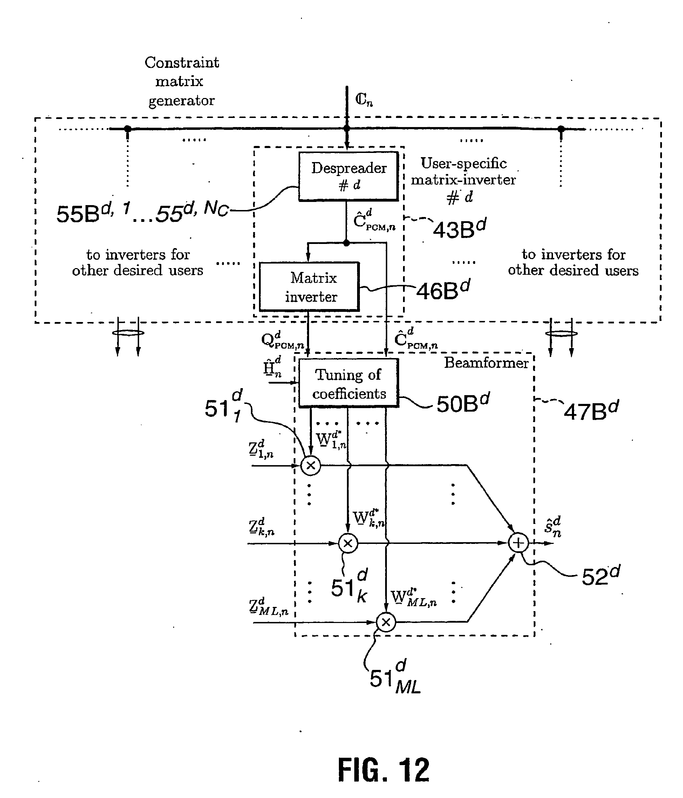

An alternative configuration of receiver in which the low-power STAR modules of set D implement ISR beamforming *after* despreading of the observation matrix $Y_n$ from preprocessor 18 will now be described with reference to Figures 11 and 12, which correspond to Figures 9 and 10. The receiver shown in Figure 11 is similar to that shown in Figure 9 in that it comprises a preprocessing unit 18 which supplies the observation matrix $Y_n$ to the set I receiver modules $20^1,...,20^{NI}$, a constraints-set generator 42B and a constraint matrix generator means 43B. It does not, however, include the vector reshaper 44 of Figure 9 and each of the low-power user STAR modules in set D has a modified beamformer. Thus, modified beamformer 47B$^d$ operates upon the post-correlation observation vector $\underline{Z}_n^d$ from the output of the despreader 19$^d$ which is supplied to both the channel identification unit 28B$^d$ and the beamformer 47B$^d$. The channel identification unit 28B$^d$ generates channel vector estimates $\hat{\underline{H}}_n^d$ and supplies them to the beamformer 47B$^d$ which updates its coefficients in dependence upon both them and a user-specific constraint matrix $\hat{C}_{PCM,n}^d$ and user-specific inverse matrix $Q_{PCM,n}^d$. It should be noted that the constraint matrix generator means 43B supplies user-specific constraint and inverse matrices to the other receiver modules in set D.

Referring now to Figure 12, the common constraint matrix generator means 43B comprises a bank of user-specific constraint matrix generators, one for each of the receiver modules of set D, and each using a respective one of the spreading codes of the users of set D. Since the only difference between the user-specific constraint matrix generators is that they use different spreading codes, only user-specific constraint matrix 43B$^d$ is shown in Figure 12, with the associated beamformer 47A$^d$. Thus, user-specific constraint matrix generator 43B$^d$ comprises a bank of despreaders 55$B^{d,1}$, ..., 55$B^{d,N_c}$ and a matrix inverter 46B$^d$. The despreaders 55$B^{d,1}$, ..., 55$B^{d,N_c}$ despread respective ones of the $N_c$

matrices in the set of constraints $\mathcal{C}_n$ to form one column of the individual constraint matrix $\hat{C}_{PCM,n}^d$ implicitly normalized to unity. The matrix inverter 46B$^d$ processes individual constraint matrix $\hat{C}_{PCM,n}^d$ to form inverse matrix $Q_{PCM,n}^d$. The user-specific constraint matrix generator 43B$^d$ supplies the constraint matrix $\hat{C}_{PCM,n}^d$ and inverse matrix $Q_{PCM,n}^d$ to the coefficient tuning unit 50B$^d$ of beamformer 47B$^d$. As shown in Figure 12, the beamformer 47B$^d$ has $ML$ multipliers $51_1^d...51_{ML}^d$ which multiply weighting coefficients $\underline{W}_{1,n}^{d\bullet}...\underline{W}_{ML,n}^{d\bullet}$ by elements $\underline{Z}_{1,n}^d...\underline{Z}_{ML,n}^d$ of the post-correlation observation vector $\underline{Z}_n^d$. As before, adder 52$^d$ sums the weighted elements to form the signal component estimate $\hat{s}_n^d$. The beamformer coefficients are timed according to Equation (18).

Either of these alternative approaches, *i.e.* with and without despreading of the data vector supplied to the beamformer, may be used with each of several different ways of implementing the ISR beamforming, i.e. ISR modes. It should be noted that all cases use a constraint matrix which tunes the ISR beamformer to unity response to the desired channel and null response to the interference sub-space. In each case, however, the actual composition of the constraint matrix will differ.

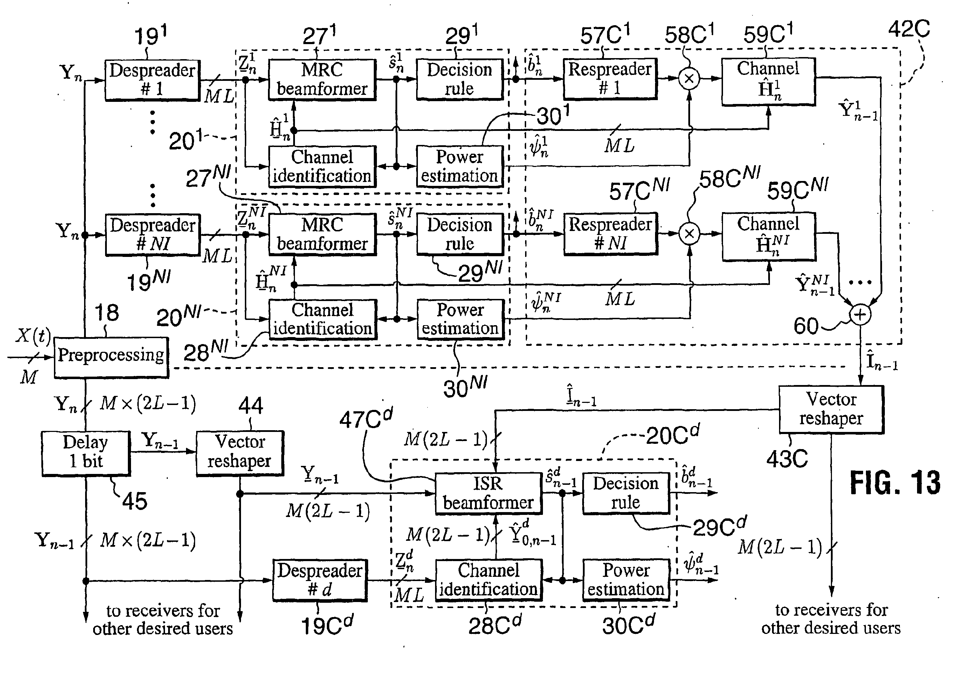

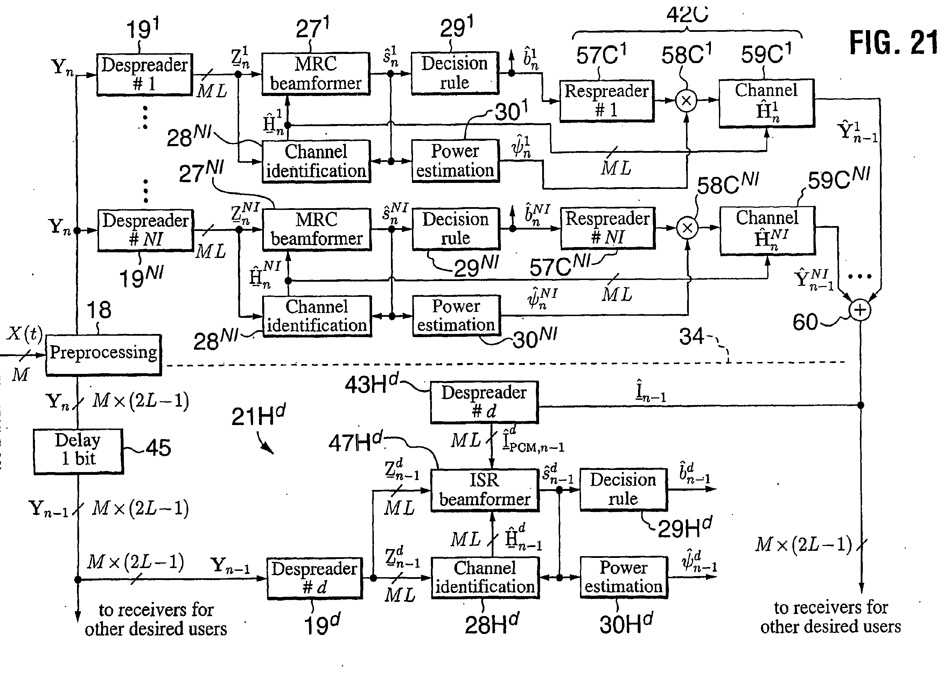

Specific embodiments of the invention implementing the different ISR modes without despreading of the data will now be described with reference to Figure 13 to 20, following which embodiments implementing the same ISR modes after despreading will be described with reference to Figures 21 to 26.

### *Interference Subspace Rejection over Total Realisation (ISR-TR)*

The receiver unit shown in Figure 13 is similar to that shown in Figure 9 in that it comprises a set I of receiver modules 20$^1$,... ,20$^{NI}$ for processing signals of *NI* strongly interfering mobile stations and a set D of receiver modules for signals of other, "low-power", users. The receiver modules of set D are identical so only receiver module 21C$^d$, for channel *d*, is shown in Figure 13. As in the receiver of Figure 9, the observation matrix $Y_n$ from preprocessor 18 is supplied directly to each of the despreaders 19$^1$...19$^{NI}$ of the set *I* receiver modules. Before application to each of the receiver modules of set *D*, however, it is delayed by one symbol period by a delay element 45 and reshaped by vector reshaper 44. The resulting observation vector $\underline{Y}_{n-1}$ is supplied to the beamformer 47C$^d$ and to each of the other beamformers in the set D receiver modules (not shown). STAR receiver module 20C$^d$ is associated with despreader 19d and, in addition to beamformer 47C$^d$, comprises channel identification unit 28C$^d$, decision rule unit 29C$^d$ and power estimation unit 30C$^d$ which are similar to those shown in Figure 9. The set of channel estimates $\mathcal{H}_n^1,...,\mathcal{H}_n^{NI},$ which are supplied to the constraints-set generator 42C comprise the channel vector estimates $\underline{\hat{H}}_n^1,...,\underline{\hat{H}}_n^{NI}$ and the power estimates $\psi_n^1,...,\psi_n^{NI},$ respectively.

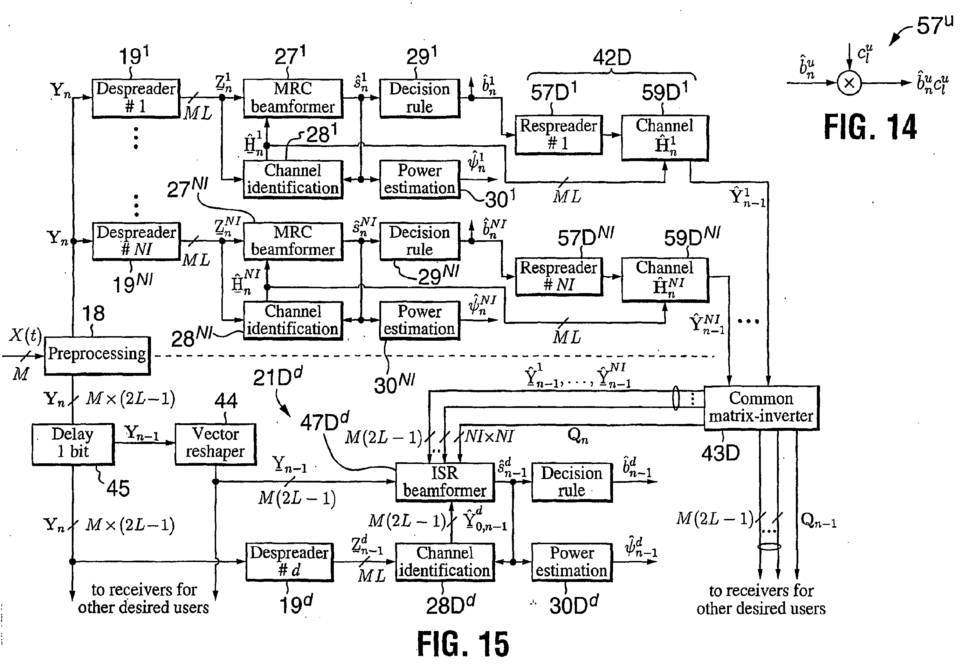

The constraints-set generator 42C comprises a bank of respreaders 57C$^1$...57C$^{NI}$ each having its output connected to the input of a respective one of a corresponding bank of channel replication units 59C$^1$...59C$^{NI}$ by a corresponding one of a bank of multipliers 58C$^1$...58C$^{NI}$. The respreaders 57C$^1$...57C$^{NI}$ are similar so only one, respreader 57C$^u$, is illustrated in Figure 14. Respreader 57C$^u$ is similar to the corresponding spreader 13$^u$ (Figure 3) in that it spreads the symbol $\hat{b}_n^u$ from the corresponding decision rule unit 29C$^u$ using a periodic personal code sequence $c_l^u$ at a rate $1/T_c$, where $T_c$ is the chip pulse duration. It differs, however, in that it does not include a shaping-pulse filter. The effects of filtering both at transmission with the shaping-pulse (see Figures 2 and 3) and at reception with the matched shaping-pulse (see Figures 5 and 6) are included baseband in the channel vector estimate $\underline{\hat{H}}_n^u$ or $\hat{H}_n^u$, as disclosed in reference [13].

Referring again to Figure 13 and, as an example, receiver module 20C$^1$, replication of the propagation characteristics of channel 14$^1$ is accomplished by digital filtering in the discrete time domain, *i.e.* by convolution at the chip rate of the channel vector estimate $\hat{\underline{H}}_n^1$ with the respread data $b_n^1 c_l^1$. This filtering operation immediately provides decomposed estimates of the signal contribution of user station $10^1$ to the observation matrix $Y_n$. Thus, respreader $57C^1$ respreads the symbol $b_n^1$ from decision rule unit $29C^1$, multiplier $58C^1$ scales it by the total amplitude estimate $\psi_n^1$ and channel replication filter $59C^1$ filters the resulting respread symbol using the channel vector estimate $\hat{\underline{H}}_n^1$ from channel identification unit $28C^1$. The symbol estimates from the other STAR modules in set I are processed in a similar manner.

It should be noted that the respreaders $57C^1...57C^{NI}$, multipliers $58C^1...58C^{NI}$ and channel replication filters $59C^1...59C^{NI}$ correspond to the elements $13^1$, $15^1$ and $14^1$ in the interfering user channel of Figure 2. The coefficients of the channel replication filter units $59C^1...59C^{NI}$ are updated in successive symbol periods by the channel identification units $28C^1...28C^{NI}$ using the same coefficients $\hat{H}_n^1 ... \hat{H}_n^{NI}$, corresponding to the transmission channels $14^1... 14^{NI}$, respectively, used to update their respective MRC beamformers $27C^1...27C^{NI}$. It will be appreciated that the re-spread signals $\hat{\underline{Y}}_{n-1}^1 ... \hat{\underline{Y}}_{n-1}^{NI}$ from the channel replication filter units $59C^1...59C^{NI}$, respectively, include information derived from both the sign and the amplitude of each symbol, and channel characteristics information, and so are the equivalents of the set I strong interferer's spread signals as received by the base station antenna elements $12^1...12^M$.

The constraint-set generator 42C also comprises an adder 60 coupled to the outputs of the channel replication units $59C^1...59C^{NI}$. The adder 60 sums the estimates $\hat{\underline{Y}}_{n-1}^1 ... \hat{\underline{Y}}_{n-1}^{NI}$ of the individual contributions from the different interferers to form the estimate $\hat{I}_{n-1}$ of the total interference from the $NI$ interferers in the received observation matrix $Y_n$. The sum can be called total realization *(TR)* of the interference. In this embodiment, the constraint matrix generator simply comprises a single vector reshaper 43C which reshapes the total realization matrix $\hat{I}_{n-1}$ to form the vector $\underline{\hat{I}}_{n-1}$ which, in this embodiment, constitutes the constraint matrix $C_n$. It should be noted that, because the constraint matrix really is a vector, the inverse matrix $Q_n$ reduces to a scalar and, assuming implicit normalization, is equal to 1. Hence, no matrix inverter is needed.

The reshaped vector $\underline{\hat{I}}_{n-1}$ is supplied to the ISR beamformer $47C^d$ of receiver module $20C^d$ and to the beamformers of the other receiver modules in set D. The beamformer $47C^d$ uses the reshaped vector $\underline{\hat{I}}_{n-1}$ and the channel vector estimates $\hat{\underline{Y}}_{0,n-1}^d$ to update its coefficients, according to Equation (45), for weighting of the elements of observation vector $\underline{Y}_{n-1}$.

The beamformer $47C^d$ adjusts its coefficients so that, over a period of time, it will nullify the corresponding interference components in the observation vector $\underline{Y}_{n-1}$ from the vector reshaper 44 and, at the same time, tune for a unity response to the spread channel vector estimate so as to extract the raw signal component estimate $\hat{s}_{n-1}^d$ substantially without distortion.

ISR-TR constitutes the simplest way to characterize the interference subspace, yet the most difficult to achieve accurately; namely by a complete estimation of the instantaneous realization of the total interference vector $\hat{I}_n$ in a deterministic-like approach. The constraint matrix is therefore defined by a single null-constraint (i.e., $N_c = 1$) as:

$$\hat{C}_n = \left[ \frac{\underline{\hat{I}}_n}{\left\| \underline{\hat{I}}_n \right\|} \right] = \left[ \frac{\sum_{i=1}^{NI} \underline{\hat{Y}}_n^i}{\left\| \sum_{i=1}^{NI} \underline{\hat{Y}}_n^i \right\|} \right] \qquad (47)$$

where each estimate $\underline{\hat{Y}}_n^i$ is reconstructed by reshaping the following matrix:

$$\hat{Y}_n^i \;=\; \hat{\psi}_n^i \, \hat{H}_n^i \;\otimes\; \hat{b}_n^i c_l^i \;. \tag{48}$$

For each interfering user assigned the index $i = l, \ldots, NI$, this mode uses estimates of its received power $(\hat{\psi}_n^i)^2$ and its channel $\underline{\hat{H}}_n^i$, both assumed constant over the adjacent symbols and made available by STAR. This mode also requires a bit-triplet estimate $\left[\hat{b}_{n-1}^i, \hat{b}_n^i, \hat{b}_{n+1}^i\right]$ of each interfering user (see Equation (23)). To obtain estimates of the signs of the interferer bits for both the current and next iterations *(i.e.,* $\hat{b}_n^i$ *and* $\hat{b}_{n+1}^i$), the ISR-TR mode requires that the processing of all the low-power users be further delayed by one bit duration and one processing cycle *(pc),* respectively. The one-bit delay is provided by the delay 45 in Figure 13.

In the ISR-TR mode and in the alternative ISR modes to be described hereafter, the interference (due to the strongest users) is first estimated, then eliminated. It should be noted that, although this scheme bears some similarity to prior interference cancellation methods which estimate then subtract the interference, the subtraction makes these prior techniques sensitive to estimation errors. ISR on the other hand rejects interference by beamforming which is robust to estimation errors over the power of the interferers. As one example, ISR-TR would still implement a perfect null-constraint if the power estimates were all biased by an identical multiplicative factor while interference cancellers would subtract the wrong amount of interference. The next mode renders ISR even more robust to power estimation errors.

The receiver illustrated in Figure 13 may be modified to reduce the information used to generate the interfering signal estimates $\hat{Y}_{n-1}^1 \ldots \hat{Y}_{n-1}^{NI}$, specifically by omitting the amplitude of the user signal estimates, and adapting the ISR beamformer 47C$^d$ to provide more *(NI)* null constraints. Such a modified receiver will now be described with reference to Figure 15.

### Interference Susbspace Rejection over Realisations (ISR-R)

In the receiver of Figure 15, the receiver modules in set **I** are identical to those of Figure 13. Receiver module 20D$^d$ has the same set of components as that shown in Figure 13 but its beamformer 47D$^d$ differs because the constraint matrix differs. The constraints-set generator 42D differs from that shown in Figure 13 in that it omits the multipliers 58C$^1$...58C$^{NI}$ and the adder 60. The outputs from the power estimation units 30$^1$...30$^{NI}$ are not used to scale the re-spread signals from the respreaders 57C$^1$...57C$^{NI}$, respectively. Hence, in the receiver of Figure 15, the signals $\hat{b}_n^1 \ldots \hat{b}_n^{NI}$ from the STAR modules 20$^1$...20$^{NI}$, respectively, are re-spread and then filtered by channel replication filter units 59C$^1$... 59C$^{NI}$, respectively, to produce user specific observation matrices $\hat{Y}_{n-1}^1 \ldots \hat{Y}_{n-1}^{NI}$, respectively, as the constraints-set $\mathbb{C}_n$. In contrast to the receiver of Figure 13, however, these respread matrices are not summed but rather are processed individually by the constraint matrix generator 43D, which comprises a bank of vector reshapers 48$D^1$ ... 48$D^{NI}$ and a matrix inverter 49D (not shown but similar to those in Figure 10). The resulting constraint matrix $\hat{C}_n$, comprising the column vectors $\underline{\hat{Y}}_{n-1}^1, \ldots, \underline{\hat{Y}}_{n-1}^{NI}$ is supplied, together with the corresponding inverse matrix $Q_n$, to each of the receiver modules in set D. Again, only receiver module 20D$^d$ is shown, and corresponds to that in the embodiment of Figure 13. Each of the vectors $\underline{\hat{Y}}_{n-1}^1 \ldots \underline{\hat{Y}}_{n-1}^{NI}$, represents an estimate of the interference caused by the corresponding one of the strong interference signals from set I and has the same dimension as the reshaped observation vector $\underline{Y}_{n-1}$

In this ISR-R mode, the interference subspace is characterized by normalized estimates of the interference vectors $\underline{\hat{Y}}_n^i$. Consequently, it spans their individual realizations with all possible values of the total received powers $(\psi_n^i)^2$. The constraint matrix is defined by *NI* null-constraints (i.e., $N_c = NI$) as:

$$\hat{C}_n = \left[ \frac{\hat{\underline{Y}}_n^1}{\left\| \hat{\underline{Y}}_n^1 \right\|}, \dots, \frac{\hat{\underline{Y}}_n^{NI}}{\left\| \hat{\underline{Y}}_n^{NI} \right\|} \right], \tag{49}$$

where each estimate $\hat{\underline{Y}}_n^i$ is reconstructed by reshaping the following matrix:

$$\hat{Y}_n^i = \hat{H}_n^i \otimes \hat{b}_n^i c_l^i. \tag{50}$$

It should be noted that, in the reconstruction of $\hat{Y}_n^i$, the total amplitude of the $i$-th interferer $\psi_n^i$ (see Figure 15) has been omitted intentionally; hence the higher robustness expected to near-far situations as well as the enlarged margin for power control relaxation.

*Interference Subspace Rejection over Diversity (ISR-D)*

The ISR-D receiver shown in Figure 16 is predicated upon the fact that the signal from a particular user will be received by each antenna element via a plurality of sub-paths. Applying the concepts and terminology of so-called RAKE receivers, each sub-path is termed a "finger". In the embodiments of Figures 9, 11, 13 and 15, the channel identification units estimate the parameters for each finger as an intermediate step to estimating the parameters of the whole channel. In the ISR-D receiver shown in Figure 16, the channel identification units $28E^1...28E^{NI}$ supply the whole channel vector estimates $\hat{\underline{H}}_n^1 ... \hat{\underline{H}}_n^{NI}$ respectively, to the beamformers $27^1...27^{NI}$, respectively, as before. In addition, they supply the sets of channel estimates $\mathcal{H}_n^1 ... \mathcal{H}_n^{NI}$ comprising a sub-channel vector estimate for each individual sub-channel or finger, to the constraints-set generator 42E. The set of channel estimates $\mathcal{H}_n^i$ comprises the sub-channel vector estimates $\hat{H}_n^{i,1}, ... , \hat{H}_n^{j,N_f}$. The constraints-set generator 42E is similar to that shown in Figure 15 in that it comprises a bank of respreaders $57^1...57^{NI}$ but differs in that the channel replication units $59D^1...59D^{NI}$ are replaced by sub-channel replication units $59E^1...59E^{NI}$, respectively. The sub-channel replication units $59E'...59E^{NI}$ convolve the respread symbols with the sub-channel vector estimates $\hat{H}_n^{1,1} ... \hat{H}_n^{1,N_f}; ... ;\hat{H}_n^{NI,1}, ... ,\hat{H}_n^{NI,N_f}$ respectively, to produce normalized estimates $\hat{Y}_{n-1}^{1,1} ... \hat{Y}_{n-1}^{1,N_f}; ... ;\hat{Y}_{n-1}^{NI,1}, ... ,\hat{Y}_{n-1}^{NI,N_f}$ of the sub-channel-specific observation matrices decomposed over fingers. Hence, the matrices span the space of their realizations with all possible values of the total received powers $(\psi_n^i)^2$ and complex channel coefficients $\zeta_{f,n}^j$. The estimates are supplied to a constraint matrix generator 43E which generally is as shown in Figure 10 and produces the constraint matrix accordingly.

The constraint matrix $\hat{C}_n$ is simply defined by $N_f NI$ null-constraints (i.e., $N_c = N_f \times NI = M \times P \times NI$) as:

$$\hat{C}_n = \left[ \frac{\hat{\underline{Y}}_n^{1,1}}{\left\| \hat{\underline{Y}}_n^{1,1} \right\|}, \dots, \frac{\hat{\underline{Y}}_n^{1,N_f}}{\left\| \hat{\underline{Y}}_n^{1,N_f} \right\|}, \dots, \frac{\hat{\underline{Y}}_n^{NI,1}}{\left\| \hat{\underline{Y}}_n^{NI,1} \right\|}, \dots, \frac{\hat{\underline{Y}}_n^{NI,N_f}}{\left\| \hat{\underline{Y}}_n^{NI,N_f} \right\|} \right], \tag{51}$$

Each estimate $\hat{\underline{Y}}_n^{i,f}$ is reconstructed by reshaping the following matrix:

$$\hat{Y}_n^{i,f} = \hat{H}_n^{i,f} \otimes \hat{b}_n^i c_l^i. \qquad (52)$$

It should be noted that, in the reconstruction of $\hat{Y}_n^{i,f}$, the total amplitude of the $i$-th interferer $\hat{\psi}_n^i$ as well as the channel coefficients $\zeta_{f,n}^i$ (see Figure 1) are intentionally omitted; hence the relative robustness of ISR-D to power mismatch, like ISR-R. Unlike other modes, it additionally gains robustness to channel identification errors and remains sensitive only to the estimated channel parameters remaining, namely the multipath time-delays, and to symbol estimation errors.

It should be noted that, in the receivers of Figures 13, 15 and 16, estimation errors of the interference bit signs may introduce differences between the estimated constraints and the theoretical ones. Hence, although ISR-D, ISR-R and ISR-TR modes are satisfactory in most situations, it is possible that the realisation could be erroneous, which would affect the validity of the interference cancellation. Additionally, estimation of the signs of the interference bits for reconstruction in the ISR-D mode, as in the ISR-R and ISR-TR modes, requires that the processing of all of the low-power users be further delayed by one bit duration, i.e., by delay 45, and one processing cycle (pc). To avoid these drawbacks, alternative ISR approaches to implementation of the constraints of Equation (42) are envisaged and will now be described, beginning with ISR-H which avoids processing delays and is completely robust to data estimation errors.

*Interference Subspace Rejection over Hypotheses (ISR-H)*

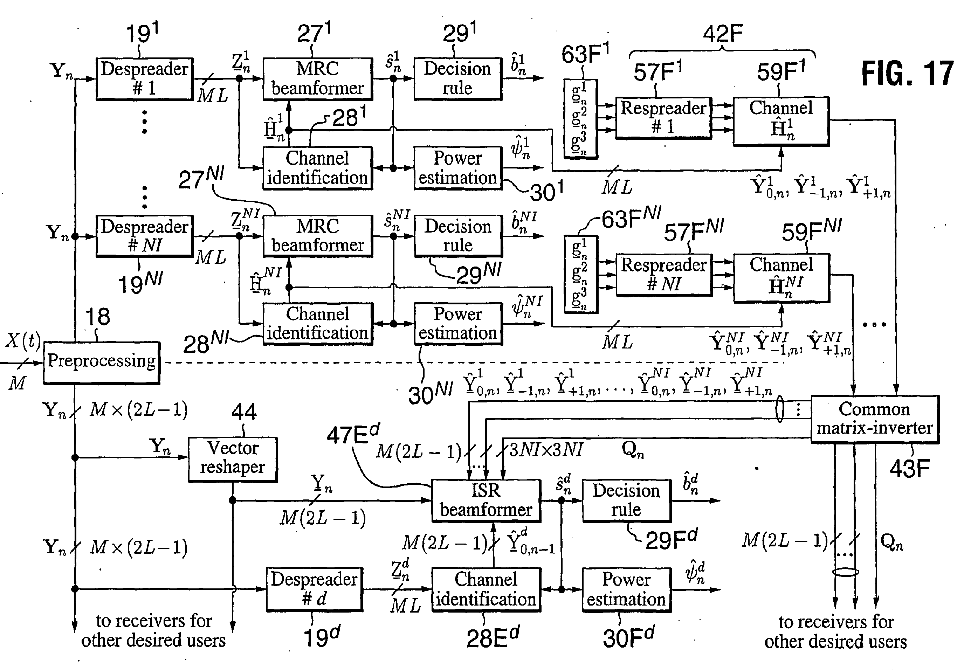

It is possible to use a set of signals which represent all possible or hypothetical values for the data of the interfering signal. Each of the interfering signals constitutes a vector in a particular domain. It is possible to predict all possible occurrences for the vectors and process all of them in the ISR beamformer and, therefore, virtually guarantee that the real or actual vector will have been nullified. As mentioned, the strong interferers are relatively few, so it is possible, in a practical system, to determine all of the likely positions of the interference vector and compensate or nullify all of them. Such an alternative embodiment, termed Interference Subspace Rejection over Hypotheses (ISR-H) because it uses all possibilities for the realisations, is illustrated in Figure 17.

The components of the "interferer" receiver modules of set I, namely the despreaders $19^1...19^{NI}$ and STAR modules $20^1...20^{NI}$, are basically the same as those in the receiver of Figure 15 and so have the same reference numbers. In the embodiment of Figure 17, however, the constraints-set generator 42F differs because the symbol estimates $\hat{b}_n^1 ... \hat{b}_n^{NI}$ from the outputs of the decision rule units $29^I...29^{NI}$ are not supplied to the respreaders $57F^I...57F^{NI}$, respectively, but are merely outputted to other circuitry in the receiver (not shown).

Instead, bit sequence generators $63F^1...63F^{NI}$ each generate the three possibilities $g_n^1, g_n^2, g_n^3$, which cover all possible estimated values of the previous, current and next bits of the estimated data sequences $\hat{b}_n^1...\hat{b}_n^{NI}$, including the realisation itself (as explained later), and supply them to the respreaders $57F^1...57F^{NI}$, respectively, which each spread each set of three values again by the corresponding one of the spreading codes. The resulting re-spread estimates are filtered by the channel replication filters $59F^1...59F^{NI}$, respectively, to produce, as the constraint set, the matrix estimates $\hat{Y}_{0,n}^1, \hat{Y}_{-1,n}^1, \hat{Y}_{+1,n}^1; ... ; \hat{Y}_{0,n}^{NI}, \hat{Y}_{-1,n}^{NI}, \hat{Y}_{+1,n}^{NI}.$ The bit sequence generators could, of course, be replaced by storage units.

The constraint matrix generator 43F is generally as shown in Figure 10 and processes the set of estimate matrices to form the column vectors $\hat{\underline{Y}}_{0,n}^1, \hat{\underline{Y}}_{-1,n}^1, \hat{\underline{Y}}_{+1,n}^1; ... ; \hat{\underline{Y}}_{0,n}^{NI}, \hat{\underline{Y}}_{-1,n}^{NI}, \hat{\underline{Y}}_{+1,n}^{NI}$ of constraint matrix $\hat{C}_n$, which it supplies with corresponding inverse matrix $Q_n$, in common to the beamformer $47F^d$ and the beamformers of the other set D receiver modules.

Receiver module $20F^d$ comprises similar components to those of the receiver module $20E^d$ shown in Figure 16. It should be noted, however, that, because the "next" bit is being hypothesized, it need not be known, so the delay 45 is omitted.

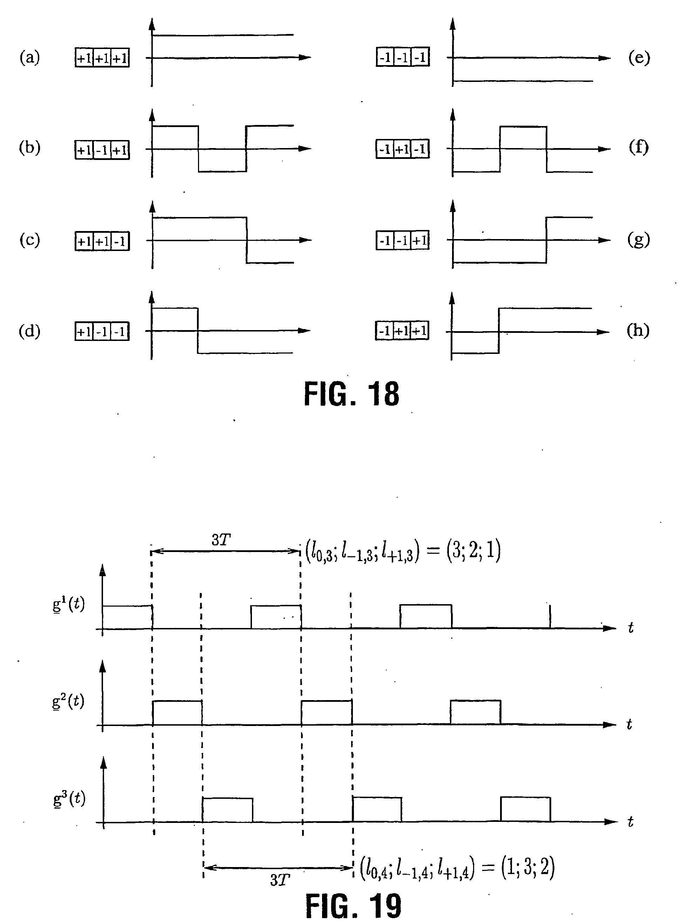

As mentioned above, the two bits adjacent to the processed bit of the $i$-th interferer contribute in each bit frame to the corresponding interference vector (symbol) to be rejected. As shown in Figure 18, enumeration of all possible sequences of the processed and adjacent bits gives $2^3 = 8$ triplets, each of three bits. Only one of these triplets could occur at any one time at each bit iteration as one possible realization that generates the user-specific observation matrix $\hat{Y}_n^i$. These eight triplets can be identified within a sign ambiguity with one of the four triplets identified as *(a)... (d)* in the left-hand part of Figure 18, since the four triplets *(e)...(h)* are their opposites.

It should be appreciated that the bit sequence generators $63^1...63^{NI}$ (Figure 17) each supply only three values, $g_n^1, g_n^2, g_n^3$ because the dimension of the generated signal subspace is 3. It should be noted that frames of duration *3T,* taken from these sequences at any bit rate instant, reproduce the eight possible realisations of the bit triplets of Figure 18. Therefore, at any bit iteration, the bit sequence $b_n^i$ of the interfering mobile station can be locally identified as the summation of the generating sequences $g_n^k$, $k = 1,..., 3$ weighted by the bit signs $b_{n-1}^i, b_n^i$ and $b_{n+1}^i$.

Replacing the estimate $\hat{b}_n^i$ in Equation (50) by $g_n^k$, $k = 1,..., 3$, , yields canonic observation matrices that span all possible realisations of the received signal vector from the *i*-th interfering mobile within a sign ambiguity.

In the ISR-H embodiment of Figure 17, the interference subspace is characterized by normalized estimates of the canonic interference vectors $\underline{\hat{Y}}_{k,n}^i$. Accordingly, it spans their individual realizations with all possible values of the total received powers $(\psi_n^1)^2$ and bit triplets $\left[ b_{n-1}^i, b_n^i, b_{n+1}^i \right]$. The constraint matrix is defined by *3NI* null-constraints (i.e., $N_c = 3NI$) as:

$$\hat{C}_n = \left[ \frac{\underline{\hat{Y}}_{0,n}^1}{\left\| \underline{\hat{Y}}_{0,n}^1 \right\|}, \frac{\underline{\hat{Y}}_{-1,n}^1}{\left\| \underline{\hat{Y}}_{-1,n}^1 \right\|}, \frac{\underline{\hat{Y}}_{+1,n}^1}{\left\| \underline{\hat{Y}}_{+1,n}^1 \right\|}, ..., \frac{\underline{\hat{Y}}_{0,n}^{NI}}{\left\| \underline{\hat{Y}}_{0,n}^{NI} \right\|}, \frac{\underline{\hat{Y}}_{-1,n}^{NI}}{\left\| \underline{\hat{Y}}_{-1,n}^{NI} \right\|}, \frac{\underline{\hat{Y}}_{+1,n}^{NI}}{\left\| \underline{\hat{Y}}_{+1,n}^{NI} \right\|} \right], \qquad (53)$$

where each estimate $\underline{\hat{Y}}_{k,n}^i$ is reconstructed, respectively, for k = -1, 0, +1 by reshaping the following matrix:

$$\hat{Y}_{k,n}^i = \hat{H}_n^i \otimes g_n^{l} c_l^i. \qquad (54)$$

It should also be noted that, in the reconstruction above, only the channel vector estimates (assumed stationary over the adjacent symbols) are needed for complete interference rejection regardless of any *2D* modulation employed (see Figure 19); hence the extreme robustness expected to power control and bit/symbol errors of interferers. The ISR-H combiner coefficients are symbol-independent and can be computed less frequently when the channel time-variations are slow.

Merging of the D mode with the H mode along the decomposition of Equation (38) yields ISR-HD (hypothesized diversities) with a very close form to the decorrelator. This ISR-HD mode requires a relatively huge number of constraints *(i.e., 3N_fNI).* Consequently, the ISR-HD mode is not considered to be practical at this time.

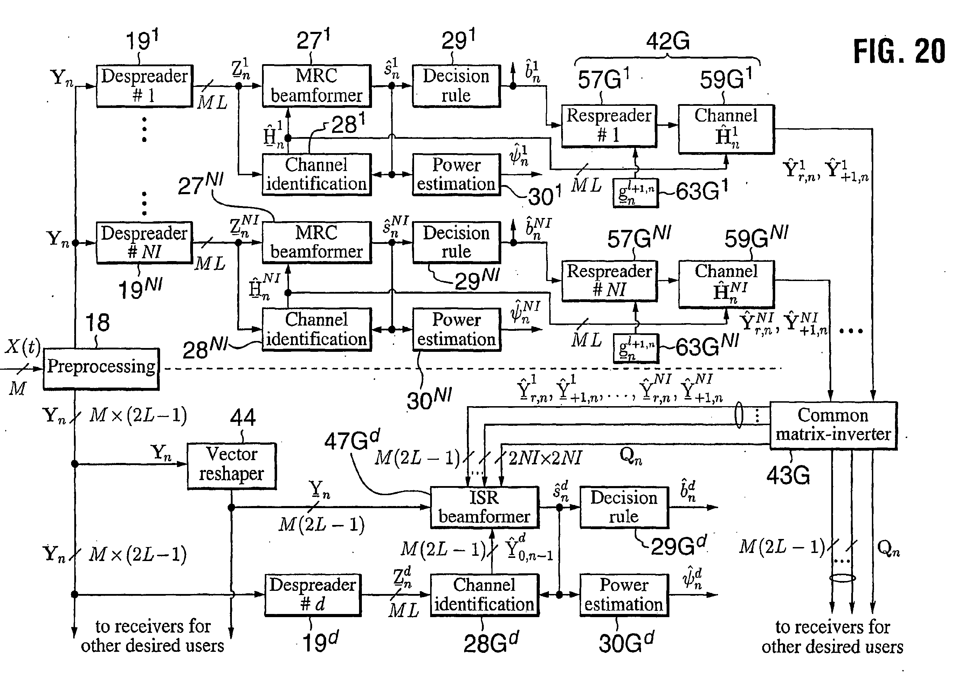

In fact, it would be desirable to reduce the number of constraints required by the ISR-H receiver described above. This can be done using an intermediate mode which is illustrated in Figure 20 and in which the receiver modules of both sets I and D are similar to those of Figure 15; most of their components are identical and have the same reference numbers. In essence, the constraint-set generator 42G of the receiver in Figure 20 combines the constraint-set generators of Figures 15 and 17 in that it uses estimated symbols and hypothetical values. Thus, it comprises a bank of respreaders $57G^1...57G^{NI}$, a corresponding bank of channel replication units $59G^1...59G^{NI}$ and a bank of symbol generators $63G^1...63G^{NI}$. In this case, however, each of the symbol generators $63G^1...63G^{NI}$ supplies only one symbol to the corresponding one of the respreaders $57G^1...57G^{NI}$, which receive actual symbol estimates $b_n^1 ... b_n^{NI}$, respectively, from the decision rule units $29^1,...,29^{NI}$, respectively. It should be appreciated that, although the symbol generators $63G^1,...,63G^{NI}$ each supply only one symbol for every actual symbol or realization from the corresponding one of the decision rule units $29^1,...,29^{NI}$, that is sufficient to generate two hypothetical values of "future" symbols $b_{n+1}^1,...,b_{n+1}^{NI}$ for every one of the symbol estimates $b_{n+1}^1 ... b_{n+1}^{NI}$ since only two hypothetical values of the symbols, namely 1 and -1, are required. The respreaders $57G^1,...,57G^{NI}$ supply the spread triplets to the channel replication units $59G^1 ...59G^{NI}$ which filter them, using the channel vector estimates $\hat{\underline{H}}_n^1 ... \hat{\underline{H}}_n^{NI}$, respectively, to produce pairs of matrices $\hat{Y}_{r,n}^1, \hat{Y}_{+1,n}^1; ... \hat{Y}_{r,n}^{NI}, \hat{Y}_{+1,n}^{NI}$ and supply them to the constraint matrix generator 43G which is configured generally as shown in Figure 9. The constraint matrix generator 43G reshapes the matrices $\hat{Y}_{r,n}^1, \hat{Y}_{+1,n}^1; ... \hat{Y}_{r,n}^{NI}, \hat{Y}_{+1,n}^{NI}$ to form vectors $\hat{\underline{Y}}_{r,n}^1, \hat{\underline{Y}}_{+1,n}^1; ... \hat{\underline{Y}}_{r,n}^{NI}, \hat{\underline{Y}}_{+1,n}^{NI}$ which then are used as the column vectors of the constraint matrix $\hat{C}_n$. The constraint matrix generator 43G supplies the constraint matrix $\hat{C}_n$ and the corresponding inverse matrix $Q_n$ in common to the beamformer $47G^d$ and the beamformers of other receiver modules in set D.

Hence, the beamformer $47G^d$ uses the past symbol estimate $\hat{b}_{n-1}^i$ of the interference data as well as the present one $\hat{b}_n^i$ (delayed by one processing cycle, *i.e.* the time taken to derive the interference estimates), and the unknown sign of $b_{n+1}^i$ reduces the number of possible bit triplets and the corresponding realisations for each interference vector to 2.

The receiver of Figure 20, using what is conveniently referred to as ISR-RH mode for reduced hypotheses over the next interference bits, rejects reduced possibilities of the interference vector realisations. Compared to the receiver of Figure 17 which uses the ISR-H mode, it is more sensitive to data estimation errors over $\hat{b}_{n-1}^i$ and $\hat{b}_n^i$ and requires only 2 constraints per interferer instead of 3.

Using the previous and current bit estimates of interferers, uncertainty over the interference subspace can be reduced and it can be characterized by the following matrix of *2NI* null-constraints (i.e., $N_c = 2NI$):

$$\hat{C}_n = \left[ \frac{\hat{\underline{Y}}_{r,n}^1}{\left\| \hat{\underline{Y}}_{r,n}^1 \right\|}, \frac{\hat{\underline{Y}}_{+1,n}^1}{\left\| \hat{\underline{Y}}_{+1,n}^1 \right\|}, ..., \frac{\hat{\underline{Y}}_{r,n}^{NI}}{\left\| \hat{\underline{Y}}_{r,n}^{NI} \right\|}, \frac{\hat{\underline{Y}}_{+1,n}^{NI}}{\left\| \hat{\underline{Y}}_{+1,n}^{NI} \right\|} \right], \tag{55}$$

where:

$$\hat{\underline{Y}}_{r,n}^i = \hat{b}_n^i \hat{\underline{Y}}_{0,n}^i + \hat{b}_{n-1}^i \hat{\underline{Y}}_{-1,n}^i, \tag{56}$$

and where each estimate $\hat{\underline{Y}}_{k,n}^i$ is reconstructed by reshaping the matrices in Equation (38), respectively for $k = -1,0,+1$. It should be noted that this mode requires a delay of one processing cycle for the estimation of the current interference bits.

The ISR-RH mode has the advantage of reducing the number of null-constraints as compared to the ISR-H mode. A larger number of null-constraints indeed increases complexity, particularly when performing the matrix inversion in Equation (43), and may also result in severe noise enhancement, especially when the processing gain $L$ is low. As the number of strong interferes $NI$ increases in a heavily loaded system, the number of null-constraints *(2NI* and *3NI)* approaches the observation dimension $M \times$ *(2L- 1)* and the constraint-matrix may become degenerate. To reduce complexity, guarantee stability in the matrix inversion of Equation (43), and minimize noise enhancement, the constraint matrix $\hat{C}_n$ in Equations. (43) and (44) is replaced by the orthonormal interference subspace of rank $K$ that spans its column vectors as follows:

$$\hat{V}_n = Vec\{\hat{C}_n\} = \{\hat{V}_{n,1},...,\hat{V}_{n,k},...,\hat{V}_{n,K}\}, \qquad (57)$$

to yield the projector $\Pi_n = I_{M*(2L-1)} - \hat{V}_n \hat{V}_n^H$ used in Equation (31), which replaces matrix inversion operation by matrix orthonormalization. The Gram-Schmidt orthonormalization procedure is used, which implements a cumulative increasing-rank cascade of "corank" -1 projections, like in linear SIC [28], except that projections there are formed differently for direct cancellation. Ultimately, after orthonormalization, ISR exploits a "corank"-$N_c$ projection to implement $N_c$ null-constraints in the combining step. This projection could be implemented as a cascade of $N_c$ corank-1 projections. It should be noted that orthonormalization becomes unnecessary if we check that $\hat{C}_n$ is close to orthonormal (i.e., $\hat{C}_n \simeq \hat{V}_n$).

In practice, $\hat{V}_n$ can hardly reflect the real rank of $\hat{C}_n$. It corresponds to the subspace of reduced rank $K \leq N_c$ with the highest interference energy to cancel. To further minimize noise enhancement, one can also increase the observation dimension $M \times (2L$ -1), as will be described later as "X option", and so on.

Another alternative that reduces noise enhancement constrains the beamformer to implement a close-to-null response towards each null-constraint instead of an exact null-response. This "relaxation" of the null-response leaves more degrees of freedom for ambient noise reduction (*i.e.*, less amplification). It usually amounts to upper-bounding the amplitude of the beamformer response towards each null-constraint to be less than a maximum threshold. This technique is well-known and classified in the literature as a "robust beamforming" method. We can combine it with ISR to reduce noise enhancement.

Constraint relaxation in robust beamforming is usually solved as an optimization problem under constraints using the Lagrange multipliers technique. Without going into the mathematical details of such derivations, we directly provide intuition-based solutions that extend ISR beamforming in a seamless manner. We extend Equations (43) to (45) as follows:

$$\bar{C}_n = \hat{C}_n \Lambda_n, \qquad (I1)$$

$$\bar{Q}_n = \left(\bar{C}_n^H \bar{C}_n + \lambda I_{N_c}\right)^{-1}, \qquad (I2)$$

$$\Pi_n = I_{M \cdot (2L-1)} - \bar{C}_n \bar{Q}_n \bar{C}_n^H, \qquad (I3)$$

$$\underline{W}_n^d = \frac{\Pi_n \underline{Y}_{0,n}^d}{\underline{Y}_{0,n}^{d^H} \Pi_n \underline{Y}_{0,n}^d}, \qquad (I4)$$

where $\Lambda_n$ is a $N_c \times N_c$ diagonal matrix of positive weights and $\lambda$ an additional weighting factor.

The above extended ISR solution reduces to that of Equations (43) to (45) by setting $\Lambda_n = I_{N_c}$ and $\lambda = 0$. It also covers the particular case of MMSE (minimum mean square error) combining also known in the beamforming literature as MVDR (minimum variance distortionless response) beamforming. Along the model equation (28), the MMSE or MVDR beamforming solution is given by:

$$\underline{W}^d_n = \frac{R^{-1}_{\underline{I+N}}\underline{Y}^d_{0,n}}{\underline{Y}^{d\,H}_{0,n}R^{-1}_{\underline{I+N}}\underline{Y}^d_{0,n}}, \tag{15}$$

where $R_{\underline{I+N}}$ is the correlation matrix of the interference-plus-noise vector $\underline{I}_n + \underline{N}_n$. Assuming that the additive noise vector is spatially and temporally uncorrelated with variance $\sigma^2_N$, $R_{\underline{I+N}}$ is given by:

$$R_{\underline{I+N}} = C_n\Phi_n C^H_n + \sigma^2_N I_{M \cdot (2L-1)}, \tag{16}$$

where $C_n$ is the constraint matrix defined along one of the ISR modes described previously, but without normalization column-wise. Depending on the signal parameters assumed unknown *a priori (cf.,* discussion above Equation (15)), the conditional statistical mean in $R_{\underline{I+N}}$ gives rise to a particular interference decomposition in $C_n$ along the corresponding ISR mode. The $N_c \times N_c$ diagonal matrix $\Phi_n$ holds the power of the unknown signal parameters along which interference is decomposed.

In the TR mode, interference characterization is quasi-deterministic with:

$$\Phi_n = [1].$$

In the R mode, we have:

$$\Phi_n = diag\left[\left(\overline{\psi}^1_n\right)^2,...,\left(\overline{\psi}^{NI}_n\right)^2\right],$$

while in the D mode, we have:

$$\Phi_n = diag\left[\left(\overline{\psi}^1_n\right)^2|\overline{\varsigma}^1_{1,n}|^2,...,\left(\overline{\psi}^1_n\right)^2|\overline{\varsigma}^1_{N_f,n}|^2,...,\left(\overline{\psi}^{NI}_n\right)^2|\overline{\varsigma}^{NI}_{1,n}|^2,...,\left(\overline{\psi}^{NI}_n\right)^2|\overline{\varsigma}^{NI}_{N_f,n}|^2\right],$$

where $\left(\overline{\psi}^i_n\right)^2$ and $|\overline{\varsigma}^i_{N_f,n}|^2$ both denote local averages in time of $\left(\psi^i_n\right)^2$ and $|\varsigma^j_{N_f,n}|^2$, respectively. The H mode gives:

$$\Phi_n = diag\left[\left(\overline{\psi}^1_n\right)^2,\left(\overline{\psi}^1_n\right)^2,\left(\overline{\psi}^1_n\right)^2,...,\left(\overline{\psi}^{NI}_n\right)^2,\left(\overline{\psi}^{NI}_n\right)^2,\left(\overline{\psi}^{NI}_n\right)^2\right].$$

Using the inversion lemma, the inverse of $R_{\underline{I+N}}$ can be written as:

$$R^{-1}_{\underline{I+N}} = \frac{1}{\sigma^2_N}\left[I_{M \cdot (2L-1)} - C_n\Phi^{1/2}_n\left(\Phi^{1/2}_n C^H_n C_n\Phi^{1/2}_n + \sigma^2_N I_{N_c}\right)\Phi^{1/2}_n C^H_n\right]. \tag{17}$$

The MMSE or MVDR beamforming can therefore be identified with the extended ISR solution using:

$$\lambda = \hat{\sigma}_{N}^{2}, \tag{I8}$$

and:

$$\Lambda_n = \begin{cases} [1] \ \textit{in the TR mode,} \\ \left[\psi_n^1, ..., \psi_n^{NI}\right] \ \textit{in the R mode,} \\ \left[\psi_n^1|\hat{\zeta}_{1,n}^1|, ..., \psi_n^1|\hat{\zeta}_{N_f,n}^1|, ..., \psi_n^{NI}|\hat{\zeta}_{1,n}^{NI}|, ..., \psi_n^{NI}|\hat{\zeta}_{N_f,n}^{NI}|\right] \ \textit{in the D mode,} \\ \left[\psi_n^1, \psi_n^1, \psi_n^1, ..., \psi_n^{NI}, \psi_n^{NI}, \psi_n^{NI}\right] \ \textit{in the H mode.} \end{cases}$$

The instantaneous estimates in the equation above can be further averaged or smoothed in time. The columns of the constraint matrix estimate $\hat{C}_n$ are reconstructed without normalization.

Although the MMSE version of ISR serves as a method to reduce noise enhancement, it is still sensitive to hard-decision errors for modes using decision feed-back. Using weights in a different way is a method to reduce sensitivity to hard-decision errors. We notice that the ISR combined signal estimate can be formulated as:

$$\underline{W}_n^{d\,H}\underline{Y}_n = \left(\underline{Y}_{0,n}^{d\,H}\Pi_n\underline{\hat{Y}}_{0,n}^d\right)^{-1}\underline{\hat{Y}}_{0,n}^{d\,H}\left(\underline{Y}_n - \hat{C}_n\hat{Q}_n\hat{C}_n^H\underline{Y}_n\right), \tag{I9}$$

$$= \left(\underline{\hat{Y}}_{0,n}^{d\,H}\Pi_n\underline{\hat{Y}}_{0,n}^d\right)^{-1}\underline{\hat{Y}}_{0,n}^{d\,H}\left(\underline{Y}_n - \hat{C}_n\underline{v}_n\right), \tag{I10}$$

$$= \left(\underline{\hat{Y}}_{0,n}^{d\,H}\Pi_n\underline{\hat{Y}}_{0,n}^d\right)^{-1}\underline{\hat{Y}}_{0,n}^{d\,H}\left(\underline{Y}_n - \underline{\hat{I}}_n^1 - \cdots - \underline{\hat{I}}_n^{N_c}\right). \tag{I11}$$

The last reformulation stresses that $\hat{C}_n\underline{v}_n$ can be understood as a sum of estimated interference vectors corresponding to the ISR mode applied. For instance each of these estimates corresponds to an interfering user in ISR-R. It can be shown that if tentative decisions, used to form the *i*-th constraint, are wrong, the corresponding constraint will sometimes be amplified rather than rejected[2]. This amplification is mitigated by considering the alternative projector:

[2] This is true when the tentative decision, which is in error, is temporally overlapping the current bit.

$$\Pi_{\Lambda,n} = I - C_n\hat{Q}_n\Lambda_n C_n^H, \tag{I12}$$

where $\Lambda_n$ is a diagonal matrix of weights. Using this projection, Equation (I11) is modified as:

$$\underline{W}_n^{d\,H}\underline{Y}_n = \left(\underline{\hat{Y}}_{0,n}^{d\,H}\Pi_{\Lambda,n}\underline{\hat{Y}}_{0,n}^d\right)^{-1}\underline{\hat{Y}}_{0,n}^{d\,H}\left(\underline{Y}_n - \{\Lambda_n\}_{1,1}\underline{\hat{I}}_n^1 - \cdots - \{\Lambda_n\}_{N_c,N_c}\underline{\hat{I}}_n^{N_c}\right). \tag{I13}$$

This modification means that the interferer is never completely rejected although tentative decisions are all correct; however, the penalty arising from wrong decisions is reduced as well. For ISR-R and ISR-D it can be shown that the optimal weight to be applied to columns representing interferer *i* is $\{\Lambda_n\}_{i,i}(1- 2SER(i))$ where SER(*i*) is the Symbol Error Rate of the tentative decisions associated with interferer *i*.

It should be noted that each of the receivers of Figures 13, 15, 16, 17 and 20 could be modified to perform ISR "after despreading" of the observation matrix $Y_n$, in effect in much the same way that the generic "after despreading" receiver of Figure 11 differs from the generic "without despreading" receiver of Figure 9. Such modified receivers will now be described with reference to Figures 21 to 26.

Thus, in the ISR-TR receiver shown in Figure 21, which corresponds to that shown in Figure 13, the delay 45 delays the observation matrix $Y_n$ from the preprocessing unit 18 by 1 bit period and supplies the resulting delayed observation matrix $Y_{n-1}$, in common, to each of the low-power user receiver modules in set D. Only one of these receiver modules, $20H^d$, is shown in Figure 21, since all are identical. The observation matrix $Y_{n-l}$ is despread by despreader $19^d$ and the resulting post-correlation observation vector $\underline{Z}^d_{n-1}$ is supplied to both the channel identification unit $28H^d$ and the beamformer $47H^d$. The receiver modules of set I and the constraints-set generator 42C are identical to those in the receiver shown in Figure 13, and supply the matrices $\hat{Y}^1_{n-1}$ ... $\hat{Y}^{NI}_{n-1}$ to an adder 60 which adds them to form the total interference matrix $\hat{I}_{n-1}$ which it supplies to each of the receiver modules in set D.

Receiver module $20H^d$ is similar to that shown in Figure 13 but has a second despreader $43H^d$ which uses the spreading code for user d to despread the total interference matrix $\hat{I}_{n-1}$ to form the user-specific constraint matrix as a single column vector $\hat{\underline{I}}^d_{PCM,n-1}$. This despreader $43H^d$, in effect, constitutes a user-specific constraint matrix generator because the constraint matrix is a vector and an inverse matrix is not needed. Also, in this case, the channel identification unit $28H^d$ supplies the channel vector estimate $\hat{\underline{H}}^d_{n-1}$ to the beamformer $47H^d$.

It should be noted that the despread data vector $\underline{Z}^d_{n-1}$ is equal to $\underline{H}^d_n \, s^d_n \, + \, \underline{I}^d_{PCM,n}, \, + \, \underline{N}^d_n,$ where $\underline{H}^d_n$ is the channel response for user station $10^d$, $s^d_n$ is the signal transmitted by the mobile station $10^d$ of user *d,* and $\underline{I}^d_{PCM,n}$ is the interference component present in the signal $\underline{Z}^d_n$ as a result of interference from the signals from the other user stations $10^i$ in set I, where $\underline{I}^d_{PCM,n}$ is as defined in Equation (14). The value $\underline{N}^d_{PCM,n}$ is additional noise which might comprise, for example, the summation of the interference from all of the other users on the system at that time, as well as thermal noise. "Other users" means other than those covered by the channels in set I.

As before, the coefficients of the beamformer $47H^d$ are tuned according to Equations (16) to (18) and the constraint matrix is defined by a single null-constraint (i.e., $N_c=1$) as:

$$\hat{C}^d_{PCM,n} \; = \; \left[ \; \frac{\hat{\underline{I}}^d_{PCM,n}}{\left\| \hat{\underline{I}}^d_{PCM,n} \right\|} \; \right] \; \approx \; \left[ \; \frac{\sum_{i=1}^{NI} \hat{\underline{I}}^{d,i}_{PCM,n}}{\left\| \sum_{i=1}^{NI} \hat{\underline{I}}^{d,i}_{PCM,n} \right\|} \; \right] \qquad (58)$$

where the estimate $\hat{\underline{I}}^d_{PCM,n}$ is obtained by despreading the matrix $\hat{I}_n$ (see Equations (47) and (48)) with the spreading sequence of the desired low-power user.

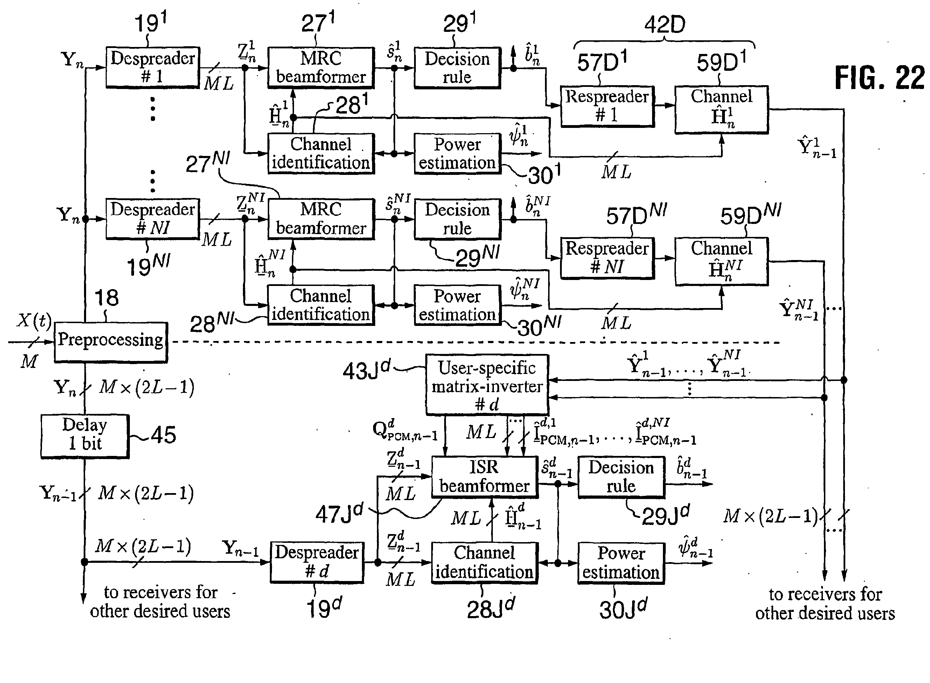

Figure 22 shows a similar modification to the low-power (set D) receiver modules of the "without despreading" ISR-R receiver of Figure 15. In this case, the output of the constraint-set generator 42D, as before, comprises the matrices $\hat{Y}^1_{n-1}$ ... $\hat{Y}^{NI}_{n-1}$. As before, only receiver module $20J^d$ is shown in Figure 22 and is identical to that shown in Figure 21 except that the second despreader $43H^d$ is replaced by a user-specific constraint matrix generator $43J^d$ of the kind shown in Figure 12. The channel identification unit 28J$^d$ again supplies the vector $\hat{\underline{H}}^d_{n-1}$ to the beamformer 47J$^d$. The bank of despreaders in the user-specific constraint matrix generator 43J$^d$ despread the respective ones of the matrices $\hat{Y}^1_{n-1}$ ... $\hat{Y}^{NI}_{n-1}$ to form the vectors $\hat{\underline{I}}^{d,1}_{PCM,n-1}$, ... , $\hat{\underline{I}}^{d,NI}_{PCM,n-1}$ which constitute the columns of the user-specific constraint matrix $\hat{C}^d_{PCM,n-1}$ and the matrix inverter 46B$^d$ produces the corresponding inverse matrix $Q^d_{PCM,n-1}$. Both of these matrices are supplied to the associated beamformer 47J$^d$ which uses them and the channel vector estimate $\hat{\underline{H}}^d_{n-1}$ to adjust its coefficients that are used to weight the elements of the post-correlation observation vector $\underline{Z}^d_{n-1}$. As before, the coefficients are adjusted according to Equations (16) to (18) and the constraint matrix is defined by *NI* null-constraints *(i.e., $N_c$=NI)* as:

$$\hat{C}^d_{PCM,n} = \left[ \frac{\hat{\underline{I}}^{d,1}_{PCM,n}}{\left\|\hat{\underline{I}}^{d,1}_{PCM,n}\right\|}, \cdots, \frac{\hat{\underline{I}}^{d,NI}_{PCM,n}}{\left\|\hat{\underline{I}}^{d,NI}_{PCM,n}\right\|} \right], \qquad (59)$$

where each estimate $\hat{\underline{I}}^{d,i}_{PCM,n}$ is obtained by despreading the matrix $\hat{Y}^i_n$ of Equation (50) with the spreading sequence of the desired low-power user.

Figure 23 illustrates the modification applied to the low-power user receiver module of the ISR-D receiver of Figure 16. Hence, there is no common matrix inverter. Instead, in the receiver of Figure 23, each of the receiver modules of set D has a user-specific constraint matrix generator 43K which receives the constraints from the constraints-set generator 42E. As illustrated, user-specific constraint matrix generator 43K$^d$ processes the sets of matrices $\hat{Y}^{1,1}_{n-1}$ ... $\hat{Y}^{1,N_f}_{n-1}$, ... ; $\hat{Y}^{NI,1}_{n-1}$, ..., $\hat{Y}^{NI,N_f}_{n-1}$ to form the set of vectors $\hat{\underline{I}}^{d,1,1}_{PCM,n-1}$ ... $\hat{\underline{I}}^{d,1,N_f}_{PCM,n-1}$, ... ; $\hat{\underline{I}}^{d,NI,1}_{PCM,n-1}$, ... , $\hat{\underline{I}}^{d,NI,N_f}_{PCM,n-1}$, which constitute the columns of user-specific constraint matrix $\hat{C}^d_{PCM,n-1}$, and the corresponding inverse matrix $Q^d_{PCM,n-1}$ which it supplies to the beamformer 47K$^d$. As before, the beamformer 47K$^d$ tunes its coefficients according to Equations (16) and (18). The constraint matrix is defined by $N_f NI$ null-constraints *(i.e., $N_c = N_f \times NI = M \times P \times NI$)* as:

$$\hat{C}^d_{PCM,n} = \left[ \frac{\hat{\underline{I}}^{d,1,1}_{PCM,n}}{\left\|\hat{\underline{I}}^{d,1,1}_{PCM,n}\right\|}, \cdots, \frac{\hat{\underline{I}}^{d,1,N_f}_{PCM,n}}{\left\|\hat{\underline{I}}^{d,1,N_f}_{PCM,n}\right\|}, \cdots, \frac{\hat{\underline{I}}^{d,NI,1}_{PCM,n}}{\left\|\hat{\underline{I}}^{d,NI,1}_{PCM,n}\right\|}, \cdots, \frac{\hat{\underline{I}}^{d,NI,N_f}_{PCM,n}}{\left\|\hat{\underline{I}}^{d,NI,N_f}_{PCM,n}\right\|} \right], \qquad (60)$$

where each estimate $\hat{\underline{I}}^{d,i,f}_{PCM,n}$ is obtained by despreading $\hat{\underline{Y}}^{i,f}_n$ of Equation (52) with the spreading sequence of the desired low-power user.

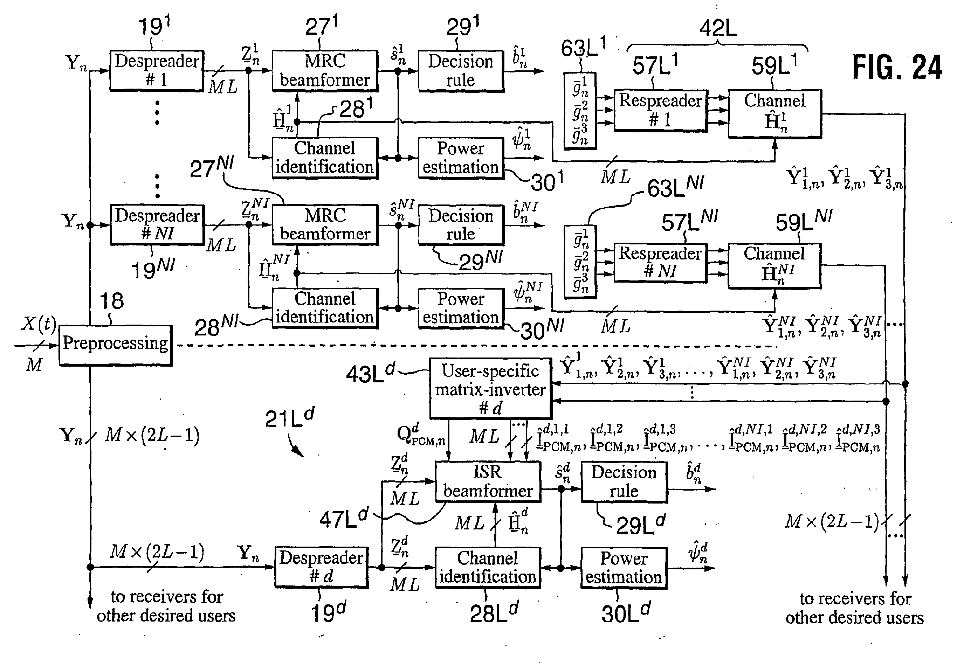

Figure 24 illustrates application of the modification to the ISR-H receiver of Figure 17. Again, the common constraint matrix generator (43F) is replaced by a user-specific constraint matrix generator 43L$^d$ in receiver module 20L$^d$ and similarly in the other receiver modules of set D. The constraints-set generator 42L differs from constraints-set generator 42F of Figure 17 because its bit sequence generators 63L$^1$,...,63L$^{NI}$ use different generating sequences. The sets of matrices $\hat{Y}^1_{1,n}$, $\hat{Y}^1_{2,n}$, $\hat{Y}^1_{3,n}$; ...; $\hat{Y}^{NI}_{1,n}$, $\hat{Y}^{NI}_{2,n}$, $\hat{Y}^{NI}_{3,n}$ from the constraints-set generator 42F are processed by the user-specific constraint matrix generator 43L$^d$ to form the vectors $\hat{\underline{I}}_{1,n}^{d,1}, \hat{\underline{I}}_{2,n}^{d,1}, \hat{\underline{I}}_{3,n}^{d,1}; \dots; \hat{\underline{I}}_{1,n}^{d,NI}, \hat{\underline{I}}_{2,n}^{d,NI}, \hat{\underline{I}}_{3,n}^{d,NI}$ which constitute the columns of the user-specific constraint matrix $\hat{C}_{PCM,n}^{d}$, and the matrix inverter (not shown) produces the corresponding inverse matrix $Q_{PCM,n}^{d}$. The constraint matrix $\hat{C}_{PCM,n}^{d}$ and the inverse matrix $Q_{PCM,n}^{d}$ are used by the beamformer 47L$^d$, together with the channel vector estimate $\hat{\underline{H}}_{n}^{d}$, to adjust its coefficients that are used to weight the elements of the post-correlation observation vector $\underline{Z}_{n}^{d}$ received from despreader 19$^d$. As before, the coefficients
are adjusted according to Equations (16) and (18) and the constraint matrix is defined by *3NI* null-constraints *(i.e., $N_c$
= 3NI)* as:

$$
\hat{C}_{PCM,n}^{d} = \left[ \frac{\hat{\underline{I}}_{PCM,n}^{d,1,1}}{\left\| \hat{\underline{I}}_{PCM,n}^{d,1,1} \right\|}, \frac{\hat{\underline{I}}_{PCM,n}^{d,1,2}}{\left\| \hat{\underline{I}}_{PCM,n}^{d,1,2} \right\|}, \frac{\hat{\underline{I}}_{PCM,n}^{d,1,3}}{\left\| \hat{\underline{I}}_{PCM,n}^{d,1,3} \right\|}, \dots, \frac{\hat{\underline{I}}_{PCM,n}^{d,NI,1}}{\left\| \hat{\underline{I}}_{PCM,n}^{d,NI,1} \right\|}, \frac{\hat{\underline{I}}_{PCM,n}^{d,NI,2}}{\left\| \hat{\underline{I}}_{PCM,n}^{d,NI,2} \right\|}, \frac{\hat{\underline{I}}_{PCM,n}^{d,NI,3}}{\left\| \hat{\underline{I}}_{PCM,n}^{d,NI,3} \right\|} \right], \tag{61}
$$

where each estimate $\hat{\underline{I}}_{PCM,n}^{d,i,k}$ is obtained by despreading the matrix $\hat{Y}_{k,n}^{i}$ with the spreading sequence of the desired
low-power user.

In this case, each of the bit sequence generators 63L$^1$...,63L$^{NI}$uses four generating bit sequences $\overline{g}^{-1}(t)$, $\overline{g}^{-2}(t)$, $\overline{g}^{-3}(t)$ and $\overline{g}^{-4}(t)$ as shown in Figure 25.

It should be noted that, in any frame of duration 3T in Figure 25, a bit triplet of any of the four generating sequences is a linear combination of the others. Therefore, any one of the four possible realisations of each interference vector is a linear combination of the others and the corresponding null-constraint is implicitly implemented by the three remaining null-constraints. The four null-constraints are restricted arbitrarily to the first three possible realisations.

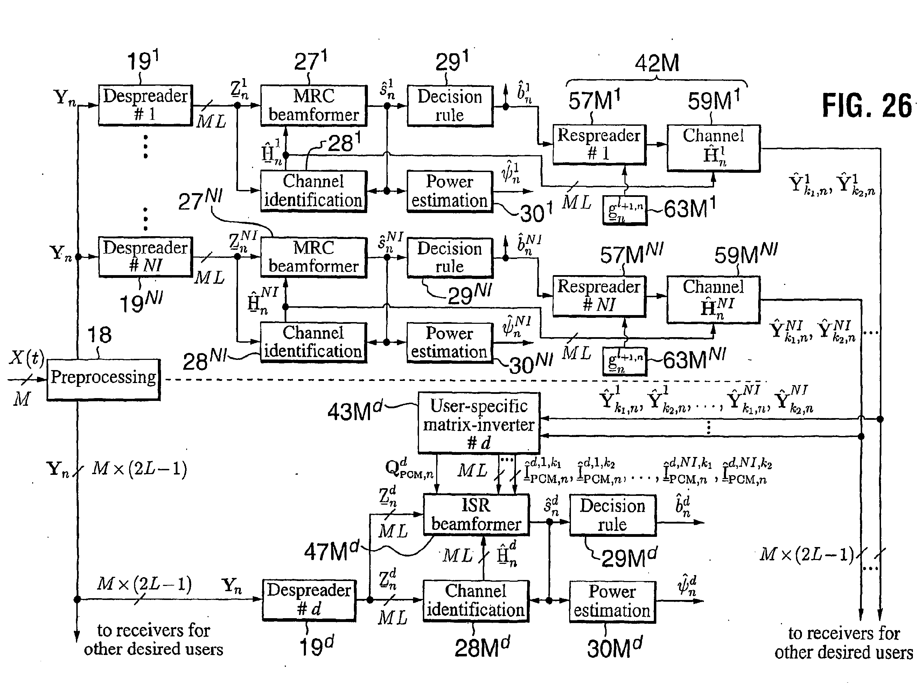

Figure 26 illustrates application of the modification to the ISR-RH receiver of Figure 20. Again, the common constraint matrix generator 43G of Figure 20 is replaced by a set of user-specific constraint matrix generators, 43M$^d$ in receiver module 20M$^d$ and similarly in the other receiver modules of set D. The constraints-set generator 42M shown in Figure 26 differs slightly from that (42G) shown in Figure 20 because each of the bit sequence generators 63M$^1$,... 63M$^{NI}$ in the receiver of Figure 26 generate the bit sequence $g_n^{l+1,n}$.

The user-specific constraint generator 43M$^d$ processes the pairs of constraint-set matrices $\hat{Y}_{k_1,n}^{1}, \hat{Y}_{k_2,n}^{1}; \dots; \hat{Y}_{k_1,n}^{NI}, \hat{Y}_{k_2,n}^{NI}$ from the channel identification units 59M$^1$,...,59M$^{NI}$, respectively, by to produce the corresponding set of vectors $\hat{\underline{I}}_{PCM,n}^{d,1,k_1}, \hat{\underline{I}}_{PCM,n}^{d,1,k_2}; \dots; \hat{\underline{I}}_{PCM,n}^{d,NI,k_1}, \hat{\underline{I}}_{PCM,n}^{d,NI,k_2}$ which constitute the columns of the user-specific constraint matrix $\hat{C}_{PCM,n}^{d}$, and to produce the corresponding inverse matrix $Q_{PCM,n}^{d}$. The constraint matrix $\hat{C}_{PCM,n}^{d}$ and the inverse matrix $Q_{PCM,n}^{d}$ are used by the beamformer 47M$^d$, together with the channel vector estimate $\hat{\underline{H}}_{n}^{d}$,

to adjust its coefficients that are used to weight the elements of the post-correlation observation vector $\underline{Z}_{n}^{d}$ received from despreader 19$^d$. As before, the coefficients are adjusted according to Equations (16) to (18) and the constraint matrix is defined by *2NI* null-constraints *(i.e., $N_c$ = 2NI)* as follows:

$$\hat{C}^d_{PCM,n} = \left[ \frac{\hat{I}^{d,1,k_1}_{-PCM,n}}{\left\| \hat{I}^{d,1,k_1}_{-PCM,n} \right\|} , \frac{\hat{I}^{d,1,k_2}_{-PCM,n}}{\left\| \hat{I}^{d,1,k_2}_{-PCM,n} \right\|} , \dots, \frac{\hat{I}^{d,NI,k_1}_{-PCM,n}}{\left\| \hat{I}^{d,NI,k_1}_{-PCM,n} \right\|} , \frac{\hat{I}^{d,NI,k_2}_{-PCM,n}}{\left\| \hat{I}^{d,NI,k_2}_{-PCM,n} \right\|} \right] , \tag{62}$$

where each pair of estimates $\hat{I}^{d,i,k_1}_{-PCM,n}$ and $\hat{I}^{d,i,k_2}_{-PCM,n}$ is obtained by despreading the matrices $\hat{Y}^i_{k_1,n}$ and $\hat{Y}^i_{k_2,n}$, respectively, with the spreading sequence of the desired low-power user.

*Inter-Symbol Interference (ISI) Rejection*

In any of the above-described embodiments of the invention it may be desirable to reduce inter-symbol interference in the receiver modules in set D, especially when low processing gains are involved. As noted in the PCM model where despreading reduces ISI to a negligible amount, for a large processing gain, $\underline{Y}^{d\,H}_{0,n} \underline{Y}^d_{-1,n} \simeq 0$ and $\underline{Y}^{d\,H}_{0,n} \underline{Y}^d_{+1,n} \simeq 0.$ Hence, the before despreading spatio-temporal beamformer $\underline{W}^d_n$ approximately implements the following additional constraints:

$$\begin{cases} \underline{W}^{d\,H}_n \underline{\hat{Y}}^d_{-1,n} \simeq 0, \\ \underline{W}^{d\,H}_n \underline{\hat{Y}}^d_{+1,n} \simeq 0. \end{cases} \tag{63}$$

Accordingly, it rejects interference and significantly reduces ISI. Complete ISI rejection can be effected by modifying the receiver to make the set of the channel parameter estimators $\mathcal{H}^d_n$ available to the constraints-sets generator 42 for processing in parallel with those of the set I receiver modules. The resulting additional constraint matrix and inverse matrix would also be supplied to the beamformer $47^d$ and taken into account when processing the data.

In such a case, the following matrix can be formed:

$$\hat{C}^d_{ISI,n} = \left[ \frac{\Pi_n \underline{\hat{Y}}^d_{-1,n}}{\left\| \Pi_n \underline{\hat{Y}}^d_{-1,n} \right\|} , \frac{\Pi_n \underline{\hat{Y}}^d_{+1,n}}{\left\| \Pi_n \underline{\hat{Y}}^d_{+1,n} \right\|} \right] , \tag{64}$$

and the following 2 × 2 matrix

$$Q^d_{ISI,n} = \left( \hat{C}^{d\,H}_{ISI,n} \, \hat{C}^d_{ISI,n} \right)^{-1} , \tag{65}$$

inverted to obtain the constrained spatio-temporal beamformer $\underline{W}^d_n$ before despreading by:

$$\Pi^d_{ISI,n} = I_{M*(2L-1)} - \hat{C}^d_{ISI,n} Q^d_{ISI,n} \hat{C}^{d\,H}_{ISI,n} , \tag{66}$$

$$\mathbf{\Pi}_n^d = \mathbf{\Pi}_{ISI,n}^d \, \mathbf{\Pi}_n, \tag{67}$$

$$\underline{W}_n^d = \frac{\mathbf{\Pi}_n^d \, \underline{\hat{Y}}_{0,n}^d}{\underline{\hat{Y}}_{0,n}^{d^H} \mathbf{\Pi}_n^d \underline{\hat{Y}}_{0,n}^d} . \tag{68}$$

The projector $\Pi_n$ is produced in the manner described earlier according to Equations (43) and (44). The projector $\mathbf{\Pi}_n^d$ orthogonal to both $\hat{C}_{ISI,n}^d$ and $\hat{C}_n$, is formed and then the low-power response vector $\underline{\hat{Y}}_{0,n}^d$ is projected and normalized to form the beamformer which fully rejects ISI from the processed user $d$ and interference from the $NI$ users in set I.

It should be noted that, if the suppression of strong interferers is not needed, ISI can still be rejected by the following beamformer:

$$\underline{W}_n^d = \frac{\mathbf{\Pi}_{ISI,n}^d \, \underline{\hat{Y}}_{0,n}^d}{\underline{\hat{Y}}_{0,n}^{d^H} \mathbf{\Pi}_{ISI,n}^d \underline{\hat{Y}}_{0,n}^d} , \tag{69}$$

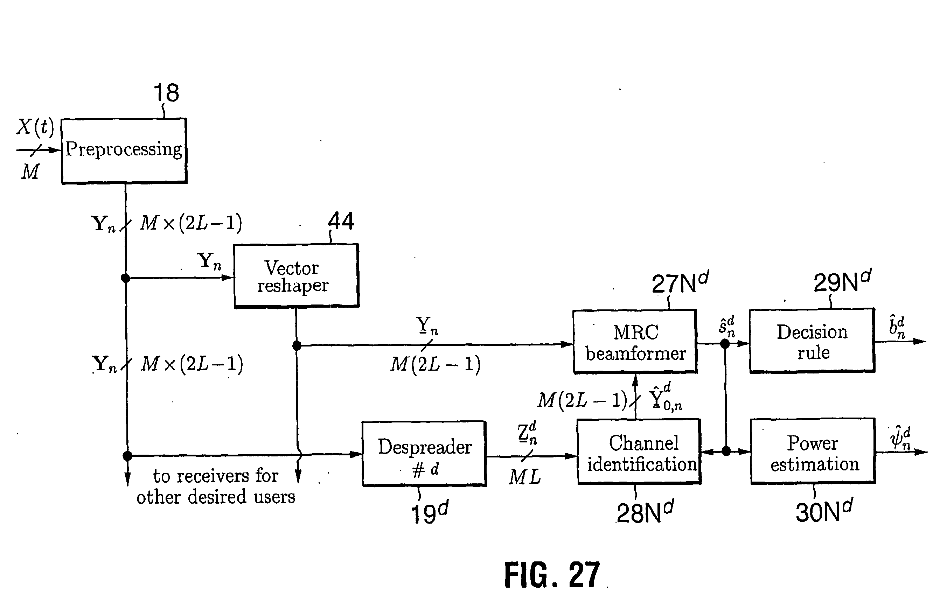

where projector $\Pi_n$ in Equation (67) would be set to identity and hence would have no effect. This is the same as setting the matrix $\hat{C}_n$ to null matrix. If the projector $\mathbf{\Pi}_{ISI,n}^d$ in the above equation is replaced by an identity matrix, (equivalent to setting matrix $\hat{C}_{ISI,n}^d$ to null matrix) then a simple MRC beamformer is implemented before despreading. A receiver module using such an MRC beamformer is illustrated in Figure 27 and could be used to replace any of the "contributor" only receiver modules, such as receiver modules $20^1$ ,...,$20^{NI}$ in Figure 9 *et seq*. The receiver module shown in Figure 27 is similar to receiver module $20A^d$ of Figure 9 except that the ISR beamformer $47A^d$ is replaced by an MRC beamformer $27N^d$ which implements the equation

$$\underline{W}_n^d = \frac{\underline{\hat{Y}}_{o,n}^d}{\parallel \underline{\hat{Y}}_{o,n}^d \parallel^2}. \tag{70}$$

It is also envisaged that the receiver module of Figure 27 using the MRC beamformer denoted $\underline{W}_{MRC,n}^d$ in the following, could be incorporated into a STAR which did not use ISR, for example the STAR described in reference [13].

*Pilot-Assisted ISR*

STAR-ISR performs blind channel identification within a sign ambiguity (or quantized-phase ambiguity for MPSK). It hence avoids differential demodulation and enables quasi-coherent detection. However, differential decoding is still required at the cost of some loss in performance to resolve the sign ambiguity. To implement full coherent detection and avoid differential decoding, a pilot signal, i.e., a predetermined sequence of symbols known to the receiver (usually a constant "1" sequence), can be sent by the transmitter to enable the receiver to resolve the sign ambiguity. Two pilot types are common namely 1) A pilot-symbol will insert pilot symbols in the data sequence at predetermined symbol positions or iterations $n_\pi$, the other indices $n_\delta$ being allocated to the data symbols with some overhead loss; 2) A pilot-channel will multiplex the pilot sequence with the data sequence using a pair of distinct spreading codes $c_l^{\pi,u}$

and $c_l^{\delta,u}$; a fraction $\zeta^2/(1 + \zeta^2)$ of the power available being allocated to the pilot, the rest $1/(1 + \zeta^2)$ to the data with some relative power loss.

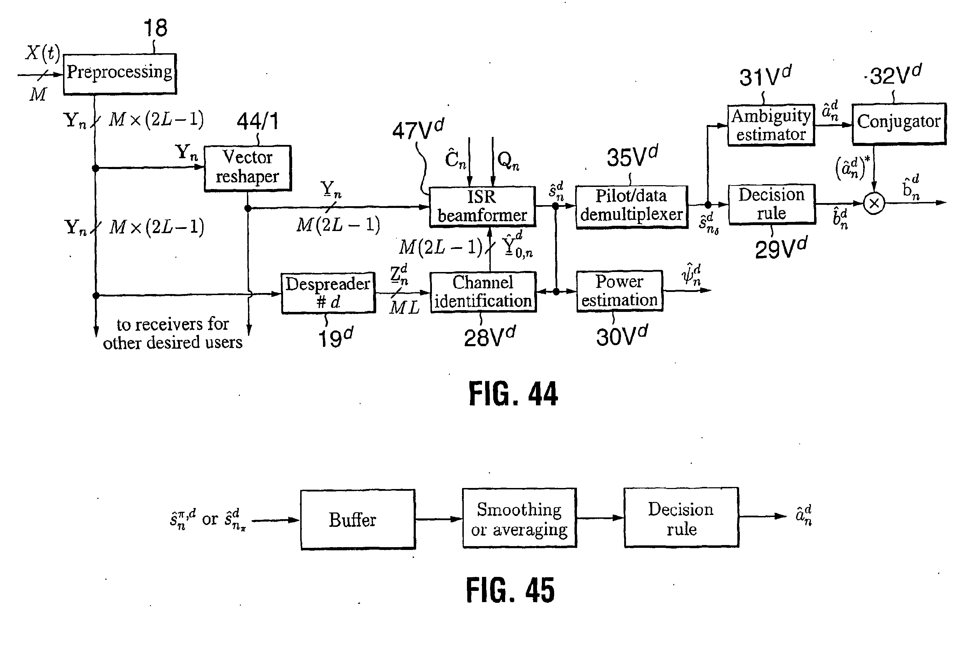

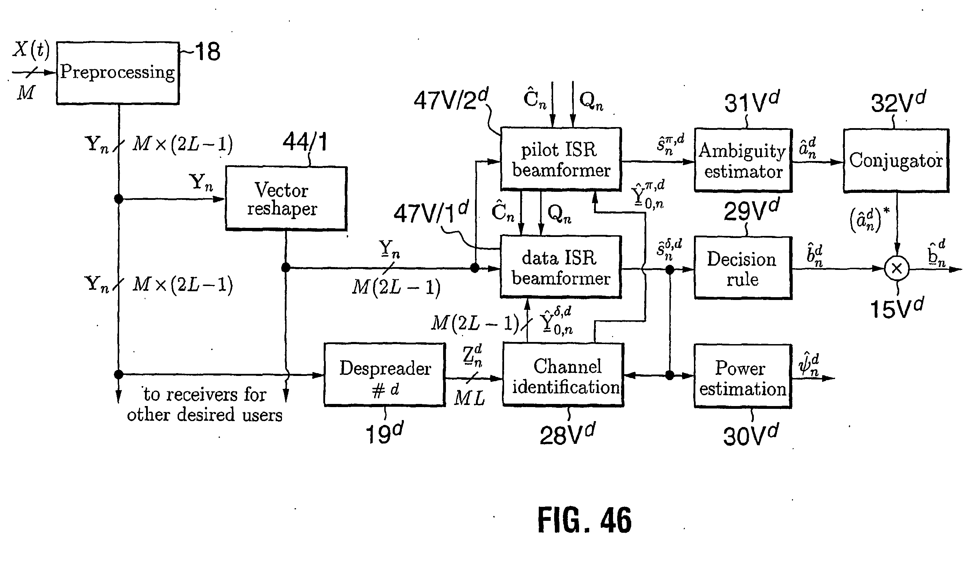

Pilot signals are usually used to perform channel identification. STAR-ISR achieves this task without a pilot and hence reduces the role of the pilot to a simple resolution of the phase ambiguity resulting from its blind channel identification approach. This new approach to pilot use enables significant reduction of the overhead or power fraction allocated to the pilot, as disclosed in references [21] and [31] in the single-user context of STAR on both uplink and downlink, respectively. Insertion of a pilot in STAR-ISR along the new approach is depicted by Figures 44 and 46 for a pilot-symbol and a pilot-channel, respectively.

In Figure 44, a pilot-symbol assisted ISR receiver is shown for user d. The ISR beamformer 47V$^d$ outputs the signal component estimates $\hat{s}_n^d$ and interacts with the channel identification and power control units 28V$^d$ and 30V$^d$

in the regular steps described earlier. However, an additional pilot/data demultiplexer 35V$^d$ at the beamformer output isolates the symbol positions $n_\delta$, and $n_\pi$ allocated to the data and the pilot. It hence extracts at the corresponding index positions two distinct streams of signal component estimates $\hat{s}_{n_\delta}^d$ and $\hat{s}_{n_\pi}^d$, respectively.

On one hand the data signal component estimates $\hat{s}_{n_\delta}^d \simeq a^d \psi_n^d b_n^d$ delivered within a quantized phase ambiguity $a^d$ (i. e. , belongs to the constellation) are fed to the decision rule unit 29V$^d$ to estimate the corresponding symbol estimates $\hat{b}_{n\delta}^d \simeq a^d b_n^d$ within the same phase ambiguity $a^d$.

On the other hand the pilot signal component estimates $\hat{s}_{n_\pi}^d \simeq a^d \psi_n^d$, which basically hold the constant phase ambiguity within little fluctuation of the received power $\left(\psi_n^d\right)^2$, are fed to an ambiguity estimator 31V$^d$ shown in Figure 45. This estimator buffers the pilot signal component estimates over a predetermined number of symbols. Once the buffer 33V$^d$ is full, the estimator averages (or smooths) the buffered values to significantly reduce the residual noise and hence minimize estimation errors using the averaging or smoothing unit 34V$^d$. It then feeds the resulting average pilot signal component estimate to a decision rule unit 29V/2$^d$ identical to the one used for the data (i.e., 29V$^d$) to quantize and estimate the phase ambiguity $\hat{a}_n^d$. Once a new estimation is made, the buffer 33V$^d$ is flushed and the phase ambiguity estimate is kept constant until a new estimate is derived when the buffer is filled again.

In the pilot-symbol assisted ISR receiver of Figure 44, a conjugator 32V$^d$ conjugates the ambiguity estimate and a multiplier 15V$^d$ multiplies the resulting phase conjugate $\left(\hat{a}_n^d\right)^*$ with the data symbol estimate $\hat{b}_{n_\delta}^d \simeq a^d b_n^d$

f for phase ambiguity compensation. The resulting symbol estimate $\underline{b}_n^d \simeq b_n$ is ambiguity-free and no longer needs differential decoding.

In Figure 46, a pilot-channel assisted ISR receiver is shown for user $d$. To better understand this structure, it is necessary to develop the corresponding data model a step further beforehand. Taking into account the fact that user $d$ uses a pair of spreading codes for pilot and data multiplexing with relative powers $\zeta^2$ and 1, respectively, the data model writes:

$$\underline{Y}_n = \underline{Y}_{0,n}^{\delta,d} s_n^{\delta,d} + \underline{Y}_{0,n}^{\pi,d} s_n^{\pi,d} + \underline{I}_n + \underline{N}_n = \underline{Y}_{0,n}^{\delta,d} \psi_n^d b_n^d + \underline{Y}_{0,n}^{\pi,d} \psi_n^d \zeta + \underline{I}_n + \underline{N}_n,$$

where $s_n^{\delta,d}$ and $s_n^{\pi,d}$ denote the data and pilot signal components, respectively.

The received pilot and data signals can be seen as two separate users received from the same physical channel

(*i.e.,* $\underline{H}_n^d$ spread by a pair of codes to yield two spread channel versions $\underline{Y}_{0,n}^{\delta,d}$ and $\underline{Y}_{0,n}^{\pi,d}$).

In Figure 46, a data ISR beamformer 47V/1$^d$ tuned to the corresponding data spreading code outputs the data signal component estimates $\hat{s}_n^{\delta,d}$ and interacts with the channel identification and the power control units 28V$^d$ and 30V$^d$ in the regular steps

$$\underline{Y}_n = \underline{Y}_{0,n}^{\delta,d} s_n^{\delta,d} + \underline{Y}_{0,n}^{\pi,d} s_n^{\pi,d} + \underline{I}_n + \underline{N}_n = \underline{Y}_{0,n}^{\delta,d} \psi_n^d b_n^d + \underline{Y}_{0,n}^{\pi,d} \psi_n^d \zeta + \underline{I}_n + \underline{N}_n,$$

described earlier. However, an additional pilot ISR beamformer 47V/2$^d$ tuned to the corresponding pilot spreading code simultaneously provides pilot signal component estimates $\hat{s}_n^{\pi,d}$. Since the pilot power fraction is weaker than the data power, the channel identification unit 28V$^d$ uses a more reliable and stronger feedback from the data signal component estimates. The channel estimate is spread by the pair of codes and the resulting estimates $\hat{\underline{Y}}_{0,n}^{\delta,d}$ and $\hat{\underline{Y}}_{0,n}^{\pi,d}$ are fed to the data and pilot ISR beamformers, 47V/1$^d$ and 47V/2$^d$, respectively. The data ISR beamformer 47V/1$^d$ may not need to steer a null towards its own weak-power pilot channel.

On one hand, the data signal component estimates $\hat{s}_n^{\delta,d} \simeq a^d \psi_n^d b_n^d$ are derived within a quantized phase ambiguity $a^d$. They are fed the decision rule unit 29V$^d$ to estimate the data symbol estimates $\hat{b}_{n_s}^d \simeq a^d b_n^d$ within the same phase ambiguity. On the other hand the pilot signal component estimates $\hat{s}_n^{\pi,d} \simeq a^d \psi_n^d \zeta$ hold the constant phase ambiguity within little fluctuations of the received power fraction $\zeta^2 \left(\psi_n^d\right)^2$. Hence, in the same way described above for pilot-symbol assisted ISR, the ambiguity estimator 31V$^d$ estimates the phase ambiguity $\hat{a}_n^d$, and forwards it to the conjugator 32V$^d$ to have $\left(\hat{a}_n^d\right)^*$, then to the multiplier 15V$^d$ for phase compensation of the data symbol estimate $\hat{b}_{n_s}^d \simeq a^d b_n^d$. The resulting symbol estimate $\underline{b}_n^d \simeq b_n$ is again ambiguity-free and no longer needs differential decoding.

*Joint ISR Detection*

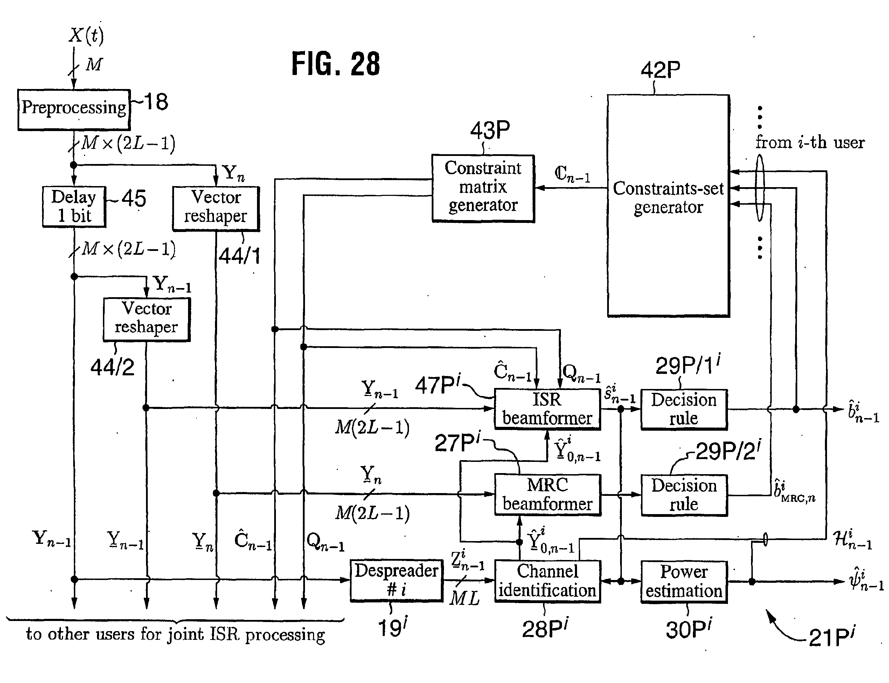

In the foregoing embodiments of the invention, ISR was applied to a selected set D of users, typically users with a low data-rate, who would implement ISR in respect of a selected set I of high-rate users. Although this approach is appropriate in most cases, particularly when the number of high-rate users is very low, there may be cases where the mutual interference caused by other high-rate users is significant, in which case mutual ISR among high-rate users may be desired as well. Such a situation is represented by user sets M1 and M2 of Figure 8. Hence, whereas in the foregoing embodiments of the invention, the receiver modules of set I do not perform ISR but merely supply constraints sets for use by the receiver modules of set D, it is envisaged that some or all of the receiver modules in set M1 and M2 also could have beamformers employing ISR. Such a Joint ISR (J-ISR) embodiment will now be described with reference to Figure 28, which shows only one receiver module, 20$^i$, as an example. In any symbol period, each such receiver module 20$^i$ (i) receives a constraint matrix $\hat{C}_{n-1}$ and an inverse matrix $Q_{n-1}$ and uses them in suppressing interference, including its own interference component, and (ii) contributes constraints to the constraint matrix $\hat{C}_n$ and inverse matrix $Q_n$ which will be used in the next symbol period. In the case of ISR-H mode receivers, which use hypothetical symbols, it is merely a matter of replacing the receiver modules in set I with receiver modules 20$^d$ having ISR beamformers, since the constraints sets are generated by the hypothetical symbols from the bit sequence generators 63$^1$,...,63$^{NI}$. Contrary to other ISR modes which require decision-feedback, in the ISR-H mode receiver module, no processing delay is required for one user to cancel another. Hence, ISR-H can be implemented to cancel strong interferers without successive interference cancellation or multi-stage processing, which will be described later.

Using $\hat{C}_n$ and $Q_n$ already computed, the ISR combiner for each interferer can be obtained readily by:

$$\underline{W}_n^i = \hat{C}_n Q_n \underline{R}_{3*(i-1)+1}, \qquad (71)$$

where $\underline{R}_k = [0,..., 0, 1, 0,..., 0]^T$ is a *(3NI)*-dimensional vector with null components except for the *k*-th one. This implementation has the advantage of implicitly rejecting ISI among strong interferers with a single *3N1 × 3NI*-matrix inversion.

For the ISR-TR, ISR-R and ISR-D modes, each receiver module, in effect, combines a receiver module of set I with a receiver module of set D, some components being omitted as redundant. Referring again to Figure 28, which shows such a combined receiver module, the preprocessor 18 supplies the observation matrix $Y_n$ to a 1-bit delay 45 and a first vector reshaper 44/1, which reshapes the observation matrix $Y_n$ to form the observation vector $\underline{Y}_n$ . A second vector reshaper 44/2 reshapes the delayed observation matrix $Y_{n-1}$ to form delayed observation vector $\underline{Y}_{n-1}$. These matrices and vectors are supplied to the receiver module 20P$^i$ and to others of the receiver modules, together with the constraint matrix $\hat{C}_{n-1}$ and the inverse matrix $Q_{n-1}$ from a common constraint matrix generator 43P, which generates the constraint matrix $C_{n-1}$ and the inverse matrix $Q_{n-1}$ from the constraints-set $\mathbb{C}_{n-1}^i$ produced by constraint set generator 42P.

The receiver module 20P$^i$ comprises a despreader 19$^i$, a channel identification unit 28P$^i$, a power estimation unit 30P$^i$, and a decision rule unit 29P$^i$, all similar to those of the above-described receiver modules. In this case, however, the receiver module 20P$^i$ comprises two beamformers, one an ISR beamformer 47P$^i$ and the other an MRC beamformer 27P$^i$, and an additional decision rule unit 29P/2' which is connected to the output of MRC beamformer 27P$^i$. The ISR beamformer 47P$^i$ processes the delayed observation vector $\underline{Y}_{n-1}$ to form the estimated signal component estimate $\hat{s}_{n-1}^i$ and supplies it to the first decision rule unit 29P$^i$, the power estimation unit 30P$^i$, and the channel identification unit 28P$^i$, in the usual way. The decision rule unit 29P$^i$ and the power estimation unit 30P$^i$ operate upon the signal component estimate $\hat{s}_{n-1}^i$ to derive the corresponding symbol estimate $\hat{b}_{n-1}^i$ and the power estimate $\hat{\psi}_{n-1}^i$ and supply them to other parts of the receiver in the usual way.

The despreader 19$^i$ despreads the delayed observation matrix $Y_{n-1}$ to form the post-correlation observation vector $\underline{Z}_{n-1}^i$ and supplies it to only the channel identification unit 28P$^i$, which uses the post-correlation observation vector $\underline{Z}_{n-1}^i$ and the signal component estimate to produce both a spread channel vector estimate $\underline{\hat{Y}}_{0,n-1}^i$ and a set of channel vector estimates $\mathcal{H}_{n-1}^i$. At the beginning of the processing cycle, the channel identification unit 28P$^i$ supplies the spread channel vector estimate $\underline{\hat{Y}}_{0,n-1}^i$ to both the ISR beamformer 47P$^i$ and the MRC beamformer 27P$^i$ for use in updating their coefficients, and supplies the set of channel vector estimates $\mathcal{H}_{n-1}^i$ to the constraints-set generator 42P.

The MRC beamformer 27P$^i$ processes the current observation vector $\underline{Y}_n$ to produce a "future" signal component estimate $\hat{s}_{MRC,n}^i$ for use by the second decision rule unit 29P/2$^i$ to produce the "future" symbol estimate $\hat{b}_{MRC,n}^i$, which it supplies to the constraints-set generator 42P at the beginning of the processing cycle. The constraints-set generator 42P also receives the symbol estimate $\hat{b}_{n-1}^i$ from the decision rule unit 29$^i$, but at the end of the processing cycle. The constraints-set generator 42P buffers the symbol $\hat{b}_{MRC,n}^i$ from the decision rule unit 29P/2$^i$ and the symbol estimate $\hat{b}_{n-1}^i$ from the decision rule unit 29P$^i$ at the end of the processing cycle. Consequently, in a particular symbol period *n-1,* when the constraints-set generator 42P is computing the constraints-set $\mathbb{C}_{n-1}$ it has available the set of

channel vector estimates $\mathcal{H}_{n-1}$, the "future" symbol estimate $\hat{b}^i_{MRC,n}$, the "present" symbol estimate $\hat{b}^i_{MRC,n-1}$ and the "past" symbol estimate $\hat{b}^i_{n-2}$, the latter two from its buffer.

Each of the other receiver modules in the "joint ISR" set supplies its equivalents of these signals to the constraints-set generator 42P. The constraints-set generator 42P processes them all to form the constraints set $\mathbb{C}_{n-1}$ and supplies the same to the constraint matrix generator 42P, which generates the constraint matrix $\hat{C}_n$ and the inverse matrix $Q_n$ and supplies them to the various receiver modules.

The constraints-set generator 42P and the constraint matrix generator 43P will be constructed and operate generally in the same manner as the constraints-set generator 43 and constraint matrix generator 42 of the embodiments of the invention described hereinbefore with reference to Figures 9 to 27. Hence, they will differ according to the ISR mode being implemented.

When the constraints-set generator 42P of the receiver of Figure 28 is configured for the ISR-D mode, *i.e.* like the constraints-set generator shown in Figure 16, the constraint matrix $\hat{C}_n$ supplied to the ISR beamformer 47P[i] contains enough information for the beamformer 47P[i] to estimate the channel parameters itself. Hence, it forwards these estimates to the channel identification unit 28P[i] for use in improving the channel vector estimation and the set of channel vector estimates produced thereby.

An ISR-RH receiver module will use a similar structure, except that the one-bit delay 45 will be omitted and the constraints-set generator 42P will use the previous symbol, estimate $\hat{b}^i_{n-1}$, the current MRC symbol estimate $\hat{b}^i_{MRC,n}$ and the two hypothetical values for "future" symbol $\hat{b}^i_{n+1}$ to produce current symbol estimate $\hat{b}^i_n$. Modification of the receiver module shown in Figure 28 to implement such a "ISR-RH mode" will be straightforward for a skilled person and so will not be described hereafter.

In order to implement J-ISR, a more general formulation of the constraint matrix is required. The general ISR constraint matrix counting $N_c$ constraints, is as follows:

$$\hat{C}_n = \left[ \frac{\hat{C}_{n,1}}{\|\underline{\hat{C}}_{n,1}\|}, \cdots, \frac{\hat{C}_{n,j}}{\|\underline{\hat{C}}_{n,j}\|}, \cdots, \frac{\hat{C}_{n,N_c}}{\|\underline{\hat{C}}_{n,N_c}\|} \right] \qquad (72)$$

where the *j*-th constraint $\underline{\hat{C}}_{nj}$ is given by:

$$\underline{\hat{C}}_{n,j} \triangleq \sum_{(u,f,k)\in S_j} \underline{\hat{Y}}^{u,f}_{k,n} \qquad (73)$$

where $S_j$ defines a subset of diversities which form the *j*-th constraint when summed. As shown in Table 2, the sets $S_j$, $j = 1, ..., N_c$ are assumed to satisfy the following restrictions:

$$S = S_1 \bigcup S_2 \bigcup \cdots \bigcup S_{N_c} = \{(u,f,k) \mid u=1,\cdots,NI; f=1,\cdots,N_f; k=-1,0,+1\},$$

and

$$S_1 \cap S_2 \cap \cdots \cap S_{N_c} = \varnothing,$$

Ø being the empty set. Table 1 defines the sets $S_j$, $j=1, ..., N_c$ for all presented ISR modes of operation.

The objective signal belongs to the total interference subspace as defined by the span of the common constraint matrix $\hat{C}_n$. Therefore, to avoid signal cancellation of the desired user d by the projection:

$$\Pi_n^d = I_{M \cdot (2L-1)} - \hat{C}_n \mathcal{Q}_n \hat{C}_n^{d^H}, \qquad (74)$$

the desired-signal blocking matrix $\hat{C}_n^d$ is introduced, as given by:

$$\hat{C}_n^d = \left[ \frac{\hat{\underline{C}}_{n,1}^d}{\| \hat{\underline{C}}_{n,1} \|}, \cdots, \frac{\hat{\underline{C}}_{n,j}^d}{\| \hat{\underline{C}}_{n,j} \|}, \cdots, \frac{\hat{\underline{C}}_{n,N_c}^d}{\| \hat{\underline{C}}_{n,N_c} \|} \right], \qquad (75)$$

where:

$$\hat{\underline{C}}_{n,j}^d \triangleq \sum_{(u,f,k) \in S_j \setminus S^d} \hat{\underline{Y}}_{k,n}^{u,f}, \qquad (76)$$

with $S^d = \{(u,f,k)|u = d; f = 1, ..., N_f; k = 0\}$. Normally $S^d$ is a small subset of $S$ and $\hat{C}_n^d$ is very close to $\hat{C}_n$.

*Joint Multi- User Data and Channel Gain Estimation in ISR-D*

Neglecting the signal contributions from the weak-power low-rate users, and limiting to the signals of the *NI* interferers, $\underline{Y}_n$, can be formulated as:

$$\underline{Y}_n = \sum_{i=1}^{NI} \sum_{f=1}^{N_f} \psi_n^i \zeta_{f,n}^i \underline{Y}_n^{i,f} + \underline{N}_n^{pth} \qquad (77)$$

$$= C_n \left[ \psi_n^i \zeta_{1,n}^1, \cdots, \psi_n^1 \zeta_{N_f,n}^1, \cdots \psi_n^{NI} \zeta_{1,n}^{NI}, \cdots \psi_n^{NI} \zeta_{N_f,n}^{NI} \right]^T + \underline{N}_n^{pth} \qquad (78)$$

$$= C_n \underline{\Gamma}_n + \underline{N}_n^{pth}, \qquad (79)$$

where $\underline{\Gamma}_n$ is a $N_f NI \times 1$ vector which aligns channel coefficients from all fingers over all users. Estimation of $\underline{\Gamma}_n$, may be regarded as a multi-source problem:

$$\hat{\underline{\Gamma}}_n = Q_n \hat{C}_n^H \underline{Y}_n. \hspace{3cm} (80)$$

This constitutes one step of ISR-D operations and allows joint multi-user channel identification.

Multi-Stage ISR Detection

Multi-stage processing may be used in combination with those of the above-described embodiments which use the above-described joint ISR, *i.e.* all except the receivers implementing ISR-H mode. It should be appreciated that, in each of the receivers which use decision-feedback modes of ISR (TR,R,D,RH), coarse MRC symbol estimates are used in order to reconstruct signals for the ISR operation. Because they are based upon signals which include the interference to be suppressed, the MRC estimates are less reliable than ISR estimates, causing worse reconstruction errors. Better results can be obtained by using multi-stage processing and, in successive stages other than the first, using improved ISR estimates to reconstruct and perform the ISR operation again.

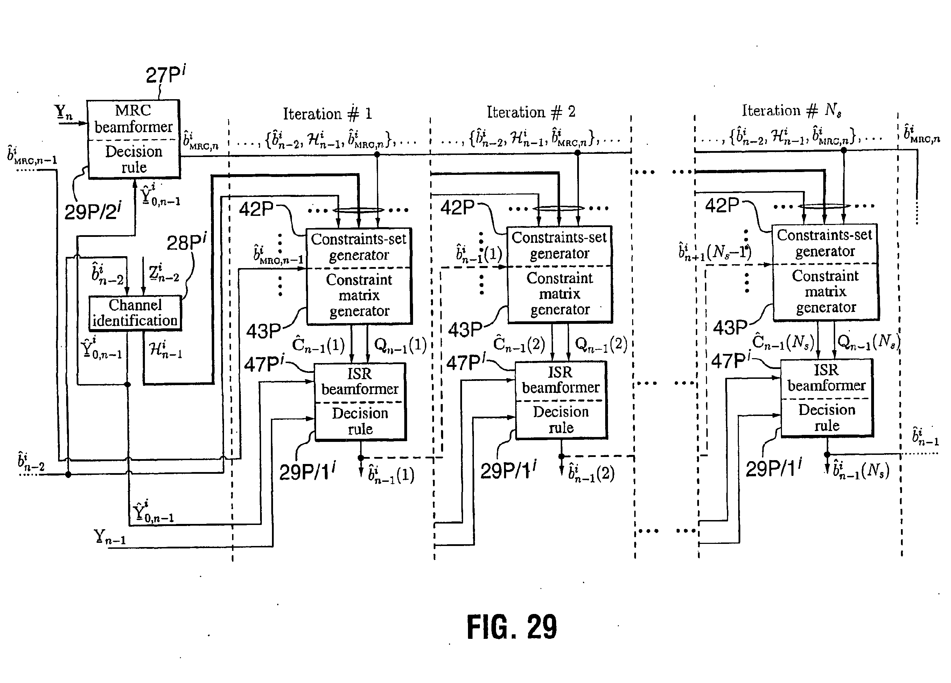

Operation of a multi-stage processing receiver module which would perform several iterations to generate a particular symbol estimate is illustrated in Figure 29, which depicts the same components, namely constraint-sets generator 42P, constraint matrix generator 43P, ISR beamformer 47P[i] and decision rule unit 29P/1[i], MRC beamformer 27P[i] and decision rule unit 29P/2[i], in several successive symbol periods, representing iterations 1, *2,...,*$N_s$ of frame n which targets the symbol estimate $\hat{b}_{n-1}^i$ for user station 10[i]. Iteration 1, if alone, would represent the operation of the receiver

module 20[i] of Figure 28 in which the constraints-set generator 42P uses the coarse symbol estimates $\hat{b}_{MRC,n-1}^i$

previously received from the second decision rule unit 29P/2[i] (and others as applicable) and buffered. In each iteration within the frame, the other variables used by the constraints-set generator 42P remain the same. These variables comprise, from at least each "contributor" receiver module in the same joint processing set, the previous symbol estimate

$\hat{b}_{n-2}^i$, the set of channel parameters $\mathcal{H}_{n-1}^i$ and the current MRC symbol estimate $\hat{b}_{MRC,n}^i$. Likewise, the spread channel vector estimate $\hat{\underline{Y}}_{0,n-1}^i$ and the delayed observation vector $\underline{Y}_{n-1}$ used by the ISR beamformer 47P[i] will remain

the same.

In iteration 1, the constraint matrix generator 42P generates constraint matrix $\hat{C}_{n-1}(1)$ and the inverse matrix

$Q_{n-1}(1)$ and supplies them to the beamformer 47P[i] which uses them, and the spread channel vector estimate $\hat{\underline{Y}}_{0,n-1}^i$

to tune its coefficients for weighting each element of the delayed observation vector $\underline{Y}_{n-1}$, as previously described, to produce a signal component estimate which the decision rule unit 29P/1[i] processes to produce the symbol estimate

$\hat{b}_{n-1}^i(1)$ at iteration 1, which would be the same as that generated by the receiver of Figure 28. This symbol estimate

$\hat{b}_{n-1}^i(1)$ is more accurate than the initial coarse MRC estimate $\hat{b}_{MRC,n-1}^i$ so it is used in iteration 2 as the input to the

constraints-set generator 42P[i], *i.e.,* instead of the coarse MRC estimate of beamformer 27P[i]. As a result, in iteration 2, the constraint matrix generator 42P produces a more accurate constraint matrix $\hat{C}_{n-1}(2)$ and inverse matrix $Q_{n-1}(2)$, Using these improved matrices, the ISR beamformer 47P[i] is tuned more accurately, and so produces a more accurate symbol estimate $\hat{b}_{n-1}^i(2)$ in iteration 2. This improved symbol estimate is used in iteration 3, and this iterative process is repeated for a total of $N_s$ iterations. Iteration $N_s$ will use the symbol estimate $\hat{b}_{n-1}^i(N_s-1)$ produced by the preceding iteration and will itself produce a symbol estimate $\hat{b}_{n-1}^i(N_s)$ which is the target symbol estimate of frame *n* and hence is outputted as symbol estimate $\hat{b}_{n-1}^i$.

This symbol estimate $\hat{b}_{n-1}^{i}$ will be buffered and used by the constraints-set generator 42P in every iteration of the next frame *(n+1)* instead of symbol estimate $\hat{b}_{n-2}^{i}$. Other variables will be incremented appropriately and, in iteration 1 of frame *n+1,* a new coarse MRC beamformer 27P$^i$ symbol estimate $\hat{b}_{MRC,n+1}^{i}$ will be used by the constraints-set generator 42P. The iterative process will then be repeated, upgrading the symbol estimate in each iteration, as before.

It should be noted that, in Figure 29, the inputs to the channel identification unit 28P$^i$ use subscripts which reflect the fact that they are produced by a previous iteration. These subscripts were not used in Figure 28 because it was not appropriate to show the transition between two cycles. The transition was clear, however, from the theoretical discussion.

One stage ISR operation can be generalized as follows:

$$\hat{s}_n^d(1) \;=\; \hat{s}_{MRC,n}^d \;-\; \underline{W}_{MRC,n}^{d^H} \hat{C}_n^d(1)\underline{v}_n(1), \quad \underline{v}_n(1) \;=\; \underline{Q}_n(1)\hat{C}_n(1)^H\underline{Y}_n, \tag{81}$$

where $\hat{s}_n^d(1)$ is the ISR estimate from first ISR stage, $\hat{s}_{MRC,n}^H$ is the MRC signal estimate, and the constraint matrices $\hat{C}_n(1)$, $\hat{C}_n^d(1)$, and $Q_n(1)$ are formed from MRC estimates at the first stage. Generalizing notation, the signal estimate at stage $N_s$ may be derived after the following iterations:

$$\hat{s}_n^d(2) \;=\; \hat{s}_{MRC,n}^d \;-\; \underline{W}_{MRC,n}^{d^H} \hat{C}_n^d(2)\underline{v}_n(2), \quad \underline{v}_n(2) \;=\; \underline{Q}_n(2)\hat{C}_n(2)^H\underline{Y}_n,$$

$$\vdots \tag{82}$$

$$\hat{s}_n^d(N_s) \;=\; \hat{s}_{MRC,n}^d \;-\; \underline{W}_{MRC,n}^{d^H} \hat{C}_n^d(N_s)\underline{v}_n(N_s), \quad \underline{v}_n(N_s) \;=\; \underline{Q}_n(N_s)\hat{C}_n(N_s)^H\underline{Y}_n.$$

The multistage approach has a complexity cost; however, complexity can be reduced because many computations from one stage to the next are redundant. For instance, the costly computation $\underline{v}(j)$ could instead be tracked because $\underline{v}(j) \approx \underline{v}(j\text{-}1)$ if the number of symbol estimation errors does not change much from stage to stage, which can be expected in most situations.

It should be noted that, in the embodiment of Figure 29, the channel identification unit 28P$^i$ updates the channel coefficients after the last iteration $N_s$. Hence, for the next cycle, the inputs to the channel identification unit 28P$^i$ will be $\hat{b}_{n-1}^{i}, \underline{Z}_{n-1}^{i}, \hat{\underline{Y}}_{0,n}$ and $H_n^i$. It is envisaged, however, that the channel coefficients could be updated more frequently, conveniently at each iteration. Hence, after the first iteration, the interim symbol estimate $\hat{b}_{n-1}^{i}(1)$ would be used; in an interim signal component feedback to the channel identification unit 28P$^i$, after the second iteration, interim symbol estimate $\hat{b}_{n-1}^{i}(2)$ would be used, and so on. The corresponding interim channel estimates for a given iteration would be supplied to the constraints-set generator 42P for use in the next iteration.

*ISR using Multistage with Intermediate Channel Decoding (MICD)*

The TURBO channel encoder has recently attracted researchers interest as a new efficient coding structure to achieve Information Bit Error Rates (IBER) close to the Shannon limit. Basically, the strength of the TURBO coding scheme is the concatenation of two convolutional decoders each transmitting the same information data, however, data is temporally organized differently (different interleaving) before it is encoded. From one of the data streams, the decoder provides likelihood estimates to be used as a sort of extrinsic information for decoding of the second stream.

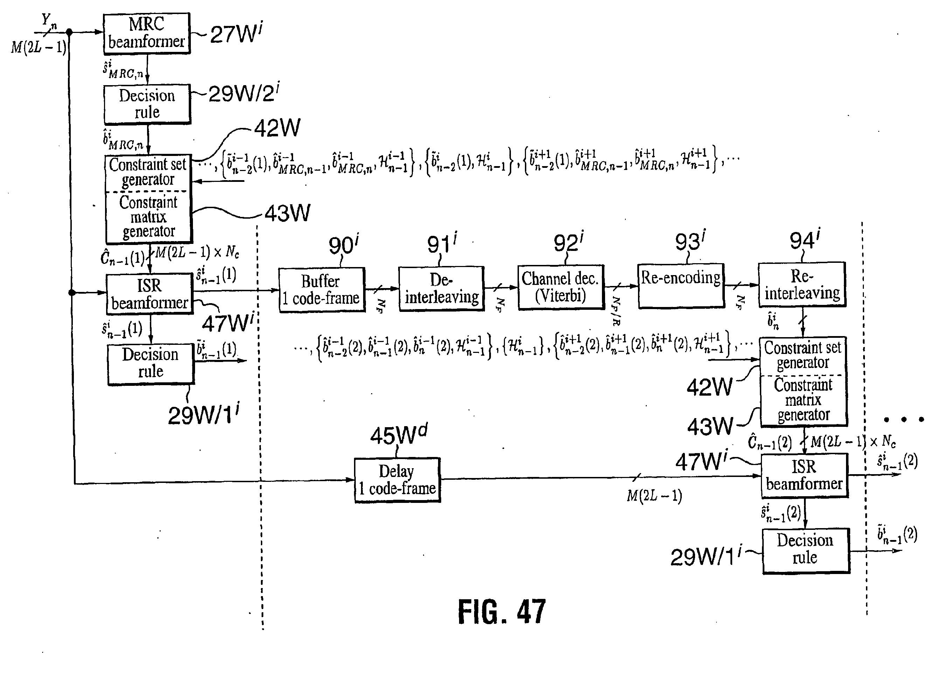

The TURBO idea has recently been generalized to TURBO multiuser receivers. Like the TURBO decoder, the TURBO multiuser principle concatenates detection stages. This idea applies to ISR, and we will name this extension of ISR Multistage with Intermediate Channel Decoding, ISR-MICD. Contrary to multistage ISR, ISR-M, ISR-MICD performs channel decoding between stages as illustrated in Figure 47.

First MRC beamforming 27W$^i$ is as usual performed in a preliminary stage to provide coarse signal estimates $\left(\hat{s}_{MRC,n}^i\right)$ from which tentative estimates of the transmitted data is derived using the decision rule unit 29W/1$^i$. The tentative decision is fed to the constraint set generator 42W, which reconstructs the signals of the objective users as well as all other interfering users. The constraint matrix generator 43W assembles the constraint matrix ($\hat{C}_{n-1}(1)$) to be applied to the ISR beamformer 47W$^i$. The ISR beamformer 47W$^i$ outputs an improved signal estimate $(\hat{s}_{n-1}^i(1))$. As usual is, the ISR symbol estimate $(\tilde{b}_{n-1}^i(1))$ is computed using the decision rule unit 29W/1$^i$, and fed back to the constraint set generator[3] 42W for construction of later constraints. More importantly, though, the ISR signal estimate is passed on for intermediate channel decoding (horizontal branch on figure). First the buffer 90$^i$ collects $N_F$ symbols corresponding to a code frame[4]. The code frame is passed to the de-interleaving unit 91$^i$ which de-interleaves data using a predefined rule[5]. The de-interleaved data is Viterbi decoded in the channel decoding unit 92$^i$ to provide a block of $N_F/R$ information bits where R is the rate of the code. Having performed the channel decoding, the decoded information bit sequence is next re-encoded in the re-encoding unit 93$^i$, then reinterleaved in the re-interleaving unit 94$^i$ to arrive at the improved channel decoded symbol sequence $\hat{b}_n^i$. This estimate is usually much better than the ISR estimate ($\tilde{b}_{n-1}$ (1)) available before the channel decoding step because redundancy of coding and time diversity due to interleaving is exploited[6]. ISR-MICD, as opposed to ISR-M, therefore gains from improved estimates in the second stage. As usual constraints are generated by the constraint set generator 42W and fed to the constraint matrix generator 43W to form the improved constraint matrix ($\hat{C}_{n-1}(2)$). This matrix is then passed to the ISR beamformer 47W$^i$ to provide the improved ISR-MICD second stage signal estimate ($\hat{s}_{n-1}(2)$) which is fed to decision rule unit 29W/1$^i$ to provide the ISR-MICD second stage data symbol estimate $(\tilde{b}_{n-1}^i(2))$. ISR-MICD can also be performed in more stages by repeating the whole process, which amounts to repeating the part of the block diagram limited by the broken lines using $\hat{s}_{n-1}(2)$ for channel decoding in the third stage, $\hat{s}_{n-1}^i(3)$ in the fourth stage, etc.

[3] This feed back is not explicitly shown on the figure

[4] It is assumed that frame synchronization has been achieved.

[5] Usually block interleaving.

[6] Only at very low SNR, channel decoding does not provide better estimates.

*Group ISR Detection*

In practice, the receiver of Figure 28 could be combined with one of the earlier embodiments to create a receiver for a "hierarchical" situation, *i.e.,* as described hereinbefore with reference to Figure 8, in which a first group of receiver modules, for the weakest signals, like those in set D of Figure 8, for example, are "recipients" only, *i.e.,* they do not contribute to the constraint matrix at all; a second group of receiver modules, for the strongest signals, like the receiver modules of set I in Figure 8, do not need to cancel interference and so are "contributors" only, *i.e.,* they only contribute constraints-sets to the constraint matrix used by other receiver modules; and a third set of receiver modules, for intermediate strength signals, like the receiver modules of sets M2 of Figure 8, are both "recipients" and "contributors", *i.e.* they both use the constraint matrix from the set I receiver modules to cancel interference from the strongest signals and contribute to the constraint matrix that is used by the set D receiver modules. Generally, this approach is referred to as "Group ISR" (G-ISR) and the equations for the constraint matrices and inverse matrices comprising the set $K_n = \{\hat{C}_{Outset,n},$ $Q_{Outset,n}, \hat{C}_{Inset,n}, Q_{Inset,n} \}$ used by the ISR beamformers in the different receivers are as follows:

$$\underline{Q}_{Outset,n} = \left( \hat{C}_{Outset,n}^{H} \hat{C}_{Outset,n} \right)^{-1}, \tag{83}$$

$$\Pi_{Outset,n} = I_{M \cdot (2L-1)} - \hat{C}_{Outset,n} \underline{Q}_{Outset,n} \hat{C}_{Outset,n}^{H}, \tag{84}$$

$$\hat{C}_{Inset,n} = \Pi_{Outset,n} \hat{C}_{Inset,n}, \tag{85}$$

$$\underline{Q}_{Inset,n} = \left( \hat{C}_{Inset,n} \hat{C}_{Inset,n} \right)^{-1}, \tag{86}$$

$$\Pi_{Inset,n}^{d} = I_{M \cdot (2L-1)} - \hat{C}_{Inset,n} \underline{Q}_{Inset,n} \hat{C}_{Inset,n}^{d^{H}}, \tag{87}$$

$$\Pi_{n}^{d} = \Pi_{Inset,n}^{d} \Pi_{Outset,n}, \tag{88}$$

$$\underline{W}_{n}^{d} = \frac{\Pi_{n}^{d} \hat{\underline{Y}}_{0,n}^{d}}{\hat{\underline{Y}}_{0,n}^{d^{H}} \Pi_{n}^{d} \hat{\underline{Y}}_{0,n}^{d}} = \Pi_{n}^{d} \times \frac{\hat{\underline{Y}}_{0,n}^{d}}{\hat{\underline{Y}}_{0,n}^{d^{H}} \Pi_{n}^{d} \hat{\underline{Y}}_{0,n}^{d}}. \tag{89}$$

It should be noted that normalization of the columns of $\hat{C}_{Inset,n}$ and $\hat{C}_{Outset,n}$ is implicit.

A receiver module for set D will set $\Pi_{inset}$ in Equation (88) to identity which means that only "outset" interference will be cancelled. Otherwise, the processing will be as described for other receivers of set D.

A receiver in set M1 does not need to cancel "outset" interference, but does need to cancel "inset" interference. Consequently, it will set $\Pi_{Outset}$ in Equation (88) to identity so that only inset interference will be cancelled. This corresponds to the joint ISR embodiment described with reference to Figure 28.

Finally, a receiver in set I does not need to cancel any interference. Consequently, it will set both $\Pi_{Inset}$ and $\Pi_{Outset}$ to identity, which means that nothing will be cancelled. This corresponds to the group I receiver modules $20^{1}$,..., $20^{NI}$ described with reference to Figures 9, 11, 13, 15-17, 20-24 and 26.

*Successive versus Parallel ISR Detection*

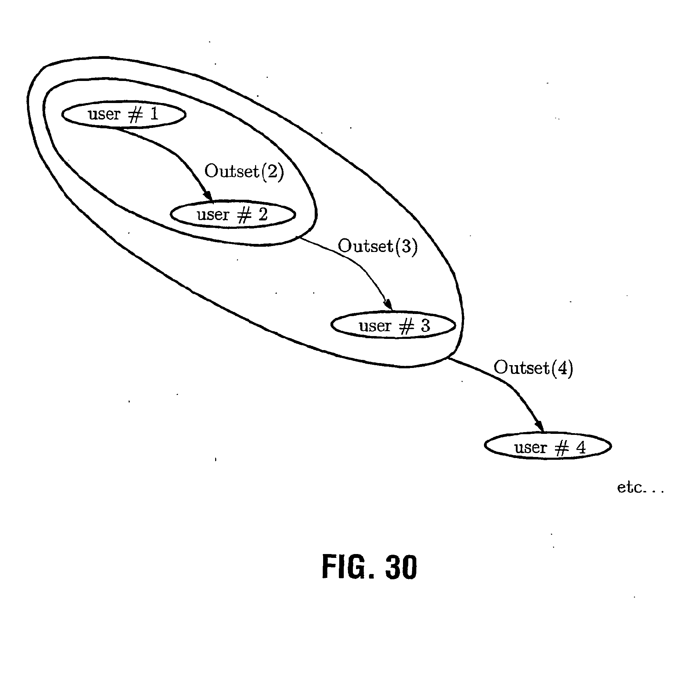

Although the embodiments of ISR receivers described hereinbefore use a parallel implementation, ISR may also be implemented in a successive manner, denoted S-ISR, as illustrated in Figure 30. Assuming implementation of successive ISR among *NI* interferers, *U* users, and assuming without loss of generality that users are sorted in order of decreasing strength such that user 1 is the strongest and user *NI* is the weakest user, when processing user *i* in S-ISR, the ISR estimate can be computed as:

$$\hat{s}_{n}^{i} = \hat{s}_{MRC,n}^{i} - \underline{W}_{MRC,n}^{i^{H}} \hat{C}_{i,n}^{i} \underline{v}_{n}(i), \qquad \underline{v}_{n}(i) = \underline{Q}_{n}^{i} \hat{C}_{i,n}^{H} \underline{Y}_{n}, \tag{90}$$

where $\hat{C}_{i,n}$ spans only the subspace of users *1, ..., i-1*[7], $\underline{Q}_{n}^{i}$ is the corresponding inverse and where $\hat{C}_{i,n}^{i}$ is the user specific constraint matrix. Clearly, $\hat{C}_{i,n}^{i}$ is no longer common for all users, which entails expensive matrix inversion for each user. However, with ISR-TR this inversion is avoided, since $\hat{C}_{i,n}^{i}{}^{H}\hat{C}_{i,n}^{i}$ is a scalar, and S-ISR-TR is a good alternative to its parallel counterpart, ISR-TR. Other ISR modes may take advantage of the common elements of $\hat{C}_{i,n}$ from one processing cycle to the next using matrix inversion by partitioning.

Hybrid ISR Detection

It should also be appreciated that the different ISR modes may be mixed, conveniently chosen according to the characteristics of their signals or transmission channels, or data rates, resulting hybrid ISR implementations (H-ISR). For example, referring to Figure 8, the sets I, M1 and M2 might use the different modes ISR-H, ISR-D and ISR-TR, respectively, and the receiver modules in set D would use the different modes to cancel the "outset" interference from those three sets. Of course, alternatively or additionally, different modes might be used within any one of the sets. [7]And also user $i$ if ISR rejection is desired.

ISR Projection for Enhanced Channel Identification

In all of the above-described embodiments of the invention, the channel identification units $28^d$ in the ISR receiver modules use the post-correlation observation vector $\underline{Z}_n^i$ to generate the spread channel vector estimate $\hat{\underline{Y}}_{0,n}^d$ (by spreading $\hat{\underline{H}}_n^d$ ). Unfortunately, the interference present in the observation matrix $Y_n$ is still present in the post-correlation observation vector $\underline{Z}_n^i$ n (see Equation (14)) and, even though it is reduced in power by despreading, it detracts from the accuracy of the spread channel vector estimate $\hat{\underline{Y}}_{0,n}^d$. As has been discussed hereinbefore, specifically with reference to Equations (83) to (89), the ISR beamformer $47^d$ effectively constitutes a projector $\mathbf{\Pi}_n^d$ and a tuning and combining portion

$$\frac{\hat{\underline{Y}}_{0,n}^d}{\hat{\underline{Y}}_{0,n}^d{}^{H}\mathbf{\Pi}_n^d\hat{\underline{Y}}_{0,n}^d}$$

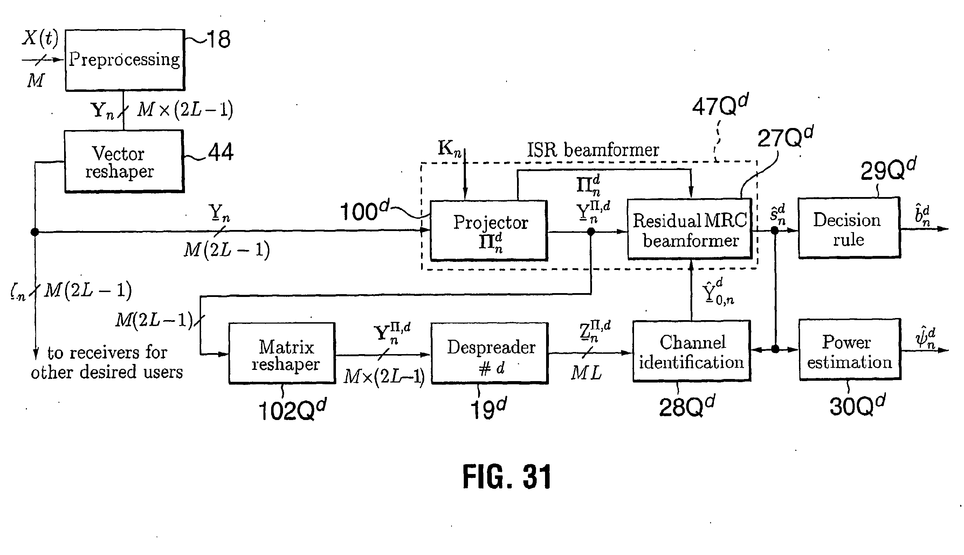

which, in effect, comprises a residual MRC beamformer $\underline{W}_n^d = \dfrac{\hat{\underline{Y}}_{0,n}^{\Pi,d}}{\|\hat{\underline{Y}}_{0,n}^{\Pi,d}\|^2}$. Figure 31 illustrates a modification, applicable to all embodiments of the invention described herein including those described hereafter, which exploits this relationship to improve the spread channel vector estimate $\hat{\underline{Y}}_{0,n}^d$ (or channel vector estimate $\hat{\underline{H}}_n^d$) by using the projector $\mathbf{\Pi}_n^d$ to suppress the interference component from the observation vector $\underline{Y}_n$. In the receiver of Figure 31, the ISR beamformer $47Q^d$ is shown as comprising a projector $100^d$ and a residual MRC beamformer portion $27Q^d$. The projector $100^d$ multiplies the projection $\mathbf{\Pi}_n^d$ by the observation vector $\underline{Y}_n$ to produce the "cleaned" observation vector $\underline{Y}_n^{\Pi,d}$ and supplies it to the residual MRC beamformer $27Q^d$, which effectively comprises a tuner and combiner to process the "cleaned" observation vector $\underline{Y}_n^{\Pi,d}$ and produce the signal component estimate $\hat{s}_n^d$ from which decision rule unit

$29Q^d$ derives the symbol estimate $\hat{b}_n^d$ in the usual way.

The "cleaned" observation vector $\underline{Y}_n^{\Pi,d}$ is reshaped by matrix reshaper $102Q^d$ to form "cleaned" observation matrix $\mathbf{Y}_n^{\Pi,d}$ which despreader $19^d$ despreads to form the "cleaned" post-correlation observation vector $\underline{Z}_n^{\Pi,d}$ for application to the channel identification unit $28Q^d$ for use in deriving the spread channel vector estimate $\hat{\underline{Y}}_{0,n}^d$.

The new "cleaned" vector resulting from the projection of the observation vector $\underline{Y}_n$ by $\mathbf{\Pi}_n^d$ is defined as follows:

$$\underline{Y}_n^{\Pi,d} = \mathbf{\Pi}_n^d \underline{Y}_n = \mathbf{\Pi}_n^d \left\{ \sum_{u \in \{1,...,N\} \cup \{d\}} \underline{Y}_n^u + \underline{N}_n \right\} \simeq (\mathbf{\Pi}_n^d \underline{Y}_{0,n}^d) s_n^d + (\mathbf{\Pi}_n^d \underline{N}_n) = \underline{Y}_{0,n}^{\Pi,d} s_n^d + \underline{N}_n^{\Pi,d}. \quad (91)$$

The new observation vector is free from the interferers and ISI and contains a projected version of the channel vector $\underline{Y}_{0,n}^{\Pi,d}$. Without being a condition, it is reasonable to assume that the projector $\mathbf{\Pi}_n^d$ is almost orthogonal to the channel vector, especially in high processing gain situations and/or in the presence of few interferers, and therefore consider that $\underline{Y}_{0,n}^{\Pi,d} \simeq \underline{Y}_{0,n}^d$. Otherwise an oblique projection can be formed which guarantees $\underline{Y}_{0,n}^{\Pi,d} = \underline{Y}_{0,n}^d$. When despreader $19^d$ despreads $\underline{Y}_n^{\Pi,d}$ with the spreading sequence of the desired user $d$, it produces an interference-free projected post-correlation observation vector $\underline{Z}_n^{\Pi,n}$ which the channel identification unit $28Q^d$ uses to create the channel vector estimate $\hat{\underline{Y}}_{0,n}^d$ to use in updating the coefficients of the residual MRC beamformer portion $27Q^d$.

With respect to the new observation vectors $\underline{Y}_n^{\Pi,d}$ and $\underline{Z}_n^{\Pi,n}$, before and after despreading, respectively, the ISR and DFI steps in STAR are modified as follows:

$$\underline{W}_n^d = \frac{\hat{\underline{Y}}_{0,n}^{\Pi,d}}{\| \hat{\underline{Y}}_{0,n}^{\Pi,d} \|^2} \equiv \frac{\hat{\underline{Y}}_{0,n}^d}{\hat{\underline{Y}}_{0,n}^{d^H} \mathbf{\Pi}_n^d \hat{\underline{Y}}_{0,n}^d}, \quad (92)$$

$$\hat{s}_n^d = Real\left\{ \underline{W}_n^{d^H} \underline{Y}_n^{\Pi,d} \right\}, \quad (93)$$

$$\hat{\underline{H}}_{n+1}^d = \hat{\underline{H}}_n^d + \mu \left( \underline{Z}_n^{\Pi,d} - \hat{\underline{H}}_n^d \hat{s}_n^d \right) \hat{s}_n^d. \quad (94)$$

The equivalence between the two expressions of the beamformer coefficients in Equation (92) due to the nilpotent property of projections should be noted. In more adverse near-far situations, the modification illustrated in Figure 31 allows more reliable channel identification than simple DFI and hence increases near-far resistance. If necessary, this new DFI version will be termed II-DFI. It is expected to be suitable for situations where the interferers are moderately strong and when the null constraints cover them all. For simplicity of discussion, projection of the observation will become implicit without reference to $\underline{Y}^d_{\Pi,n}$, $\underline{Z}^d_{\Pi,n}$ or to the corresponding modifications in STAR-ISR operations.

*Expanding Dimensionality (X-option)*

When the number of users becomes high compared to the processing gain, the dimension of the interference subspace becomes comparable to the total dimension *(M(2L -1))*. The penalty paid is an often devastating enhancement of the white noise. Unlike ISR-TR, which always requires a single constraint, other DF modes, namely ISR-R and ISR-D, may suffer a large degradation because the number of constraints these modes require easily becomes comparable to the total dimension available. However, the dimension may be increased by using additional data in the observation. This option also allows for asynchronous transmission and for the application of ISR to Mixed Spreading Factor (MSF) systems.

The matched-filtering observation vector $\underline{Y}_n$ is generated to include additional past spread data which has already been processed. If the model is expanded to include past processed $N_x$ symbols and arrive at a total temporal dimension $N_T = (N_x+1)L-1$, the observation becomes:

$$\underline{\underline{Y}}_n = \begin{bmatrix} \underline{Y}_{n-N_x+1} \\ \vdots \\ \underline{Y}_n \end{bmatrix} = \sum_{u=1}^{U}\sum_{f=1}^{N_f} \begin{bmatrix} \underline{Y}^{u,f}_{n-N_x+1} \\ \vdots \\ \underline{Y}^{u,f}_n \end{bmatrix} + \begin{bmatrix} \underline{N}^{p^{th}}_{n-N_x+1} \\ \vdots \\ \underline{N}^{p^{th}}_n \end{bmatrix} = \sum_{u=1}^{U}\sum_{f=1}^{N_f} \underline{\underline{Y}}^{u,f}_n + \underline{\underline{N}}^{p^{th}}_n \qquad (95)$$

where double underlining stresses the extended model. It should be noted that $\underline{\underline{Y}}^{u,f}_j$ is overlapping temporally $\underline{\underline{Y}}^{u,f}_{j\pm1}$ and only the first *ML* samples of the past frames *n-1, n-2, ..* etc. are used; however the same syntax is used for simplicity of notation.

As an example, application of the X option to ISR-D, referred to as ISR-DX, requires the following constraint matrix:

$$\hat{C}_n = \begin{bmatrix} \dfrac{\hat{\underline{\underline{Y}}}^{1,1}_n}{\|\hat{\underline{\underline{Y}}}^{1,1}_n\|} ,...,\dfrac{\hat{\underline{\underline{Y}}}^{1,N_f}_n}{\|\hat{\underline{\underline{Y}}}^{1,N_f}_n\|} ,...,\dfrac{\hat{\underline{\underline{Y}}}^{NI,1}_n}{\|\hat{\underline{\underline{Y}}}^{NI,1}_n\|} ,...,\dfrac{\hat{\underline{\underline{Y}}}^{NI,N_f}_n}{\|\hat{\underline{\underline{Y}}}^{NI,N_f}_n\|} \end{bmatrix}. \qquad (96)$$

The extended vectors in Equation (96) have been treated in the same way as those in Equation (95), i.e., by concatenating reconstructed vectors from consecutive symbols in the extended frame and by implicitly discarding overlapping dimensions in the concatenated vectors. Clearly, extension of the observation space leaves additional degrees of freedom and results in less white noise enhancement. However, it may exact a penalty in the presence of reconstruction errors.

Although the X-option was illustrated in the case of ISR-D, its application to the remaining DF modes is straightforward. It should also be noted that the X-option allows for processing of more than one symbol at each frame while still requiring one matrix inversion only. The duration of the frame, however, should be small compared to the variations of the channel.

In the above-described embodiments, ISR was applied to a quasi-synchronous system where all temporal delays were limited to $0 < \tau < L$. Although this model reflects well the large processing gain situation, where the limit $(L \rightarrow \infty)$, allows for placing a frame of duration *2L-1* chips which fully cover one bit of all users, including delay spreads. With realistic processing gains, and in particular in the low processing gain situation, this model tends to approach a synchronous scenario. Using the X-option serves as a method supporting complete asynchronous transmission.

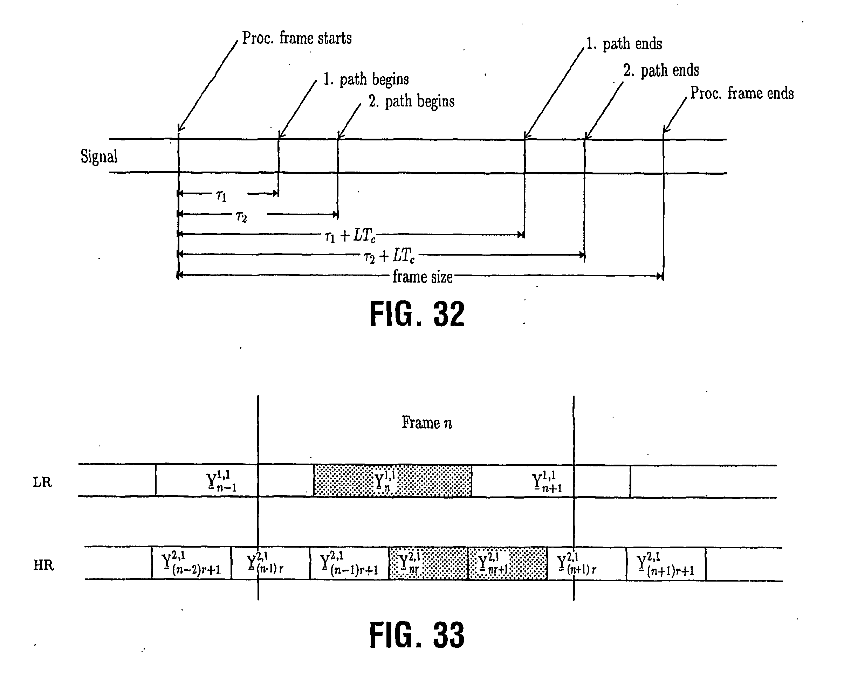

Referring to Figure 32, assuming that the users of the system have processing gain L as usual, the transmitted signal of any user is cycle-stationary and a possible time-delay of the primary path $\tau_1$ is therefore $0 < \tau_1 < L$ where possible time delays of remaining paths are $\tau_1 < \tau_2 < ... < L + \Delta\tau$ where $\Delta\tau$ is the largest possible delay spread considered. To ensure that the frame covers at least one bit of all users, the frame must at least span $L + \Delta\tau$ in the despread domain and therefore $2L + \Delta\tau$ in the spread domain. The observation should be extended slightly beyond that to ease interpolation near the edges of the frame.

Multi-Modulation (MM), Multi-Code (MC), and Mixed Spreading Factor (MSF) are technologies that potentially can offer mixed-rate traffic in wideband CDMA. MSF, which has become very timely, was shown to outperform MC in terms of performance and complexity and is also proposed by UMTS third generation mobile system as the mixed-rate scenario. Application of ISR to MSF as the mixed rate scenario considered herein will now be discussed.

In MSF, mixed rate traffic is obtained by assigning different processing gains while using the same carrier and chip-rate. In a system counting two groups of users, a low-rate (LR) and a high rate (HR) group, this means that every time a LR rate user transmits 1 symbol, a HR user transmits $2r + 1$ HR symbols, $r = L_1/L_h$ being the ratio of the LR processing gain to HR processing gain. This is illustrated in Figure 33 with $r=2$.

Therefore, fitting the ISR frame subject to LR users or in general the lowest-rate users ensures that also at least $r$ HR symbols are covered when HR and LR have the same delay spread. The ISR generalizes readily to this scenario regarding every HR user as $r$ LR users. In Figure 33, the grey shaded HR/LR bits symbolize the current bits to be estimated; whereas, former bits have already been estimated (ISR-bits) and future bits are unexplored. It should be noted that current HR bits should be chosen to lie at the end of the frame.

### Multi-Code ISR

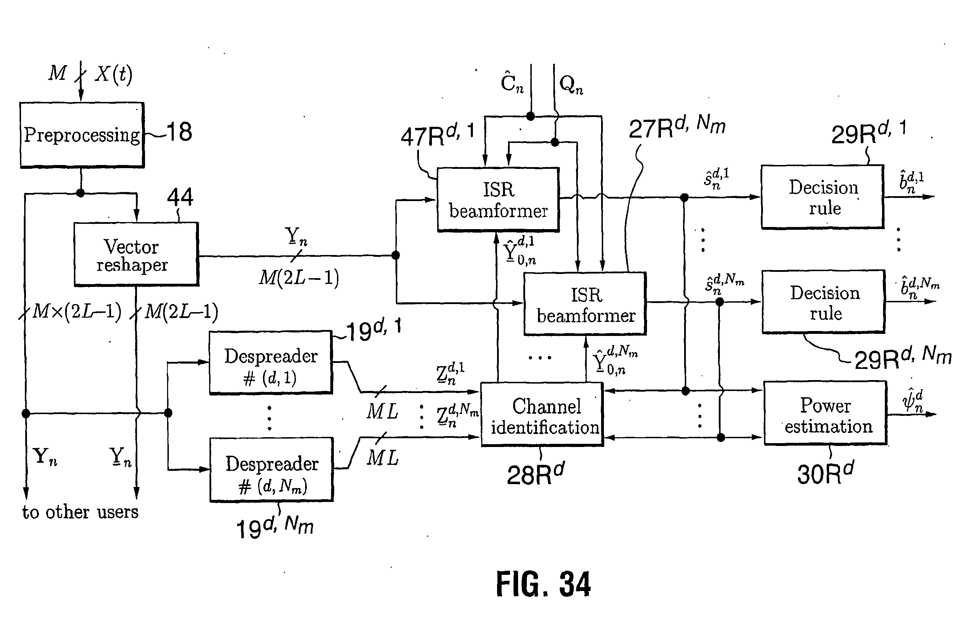

It is envisaged that a user station could use multiple codes, $N_m$ in number, each to transmit a different stream of symbols. Figure 34 illustrates this modification as applied to a "without despreading" receiver module 20R$^d$ for receiving such a multicode signal and using ISR cancellation to cancel interference from other users. The receiver module shown in Figure 34 is similar to that shown in Figure 9 except that, instead of a single ISR beamformer 47$^d$, the receiver module of Figure 34 has a bank of ISR beamformers $47R^{d,1},...,47R^{d,N_m}$ for extracting signal component estimates $\hat{s}_n^{d,1},...,\hat{s}_n^{d,N_m}$, respectively, and supplying them to a bank of decision rule units $29R^{d,1},...,29R^{d,N_m}$, respectively which produce a corresponding plurality of symbol estimates $\hat{b}_n^{d,1},...,\hat{b}_n^{d,N_m}$. Likewise, the receiver module 20R$^d$ has a bank of despreaders $19^{d,1},...,19^{d,N_m}$ each of which uses a respective one of the multiple spreading codes of the corresponding user d to despread the observation matrix $Y_n$ from the preprocessing unit 18 to produce a corresponding one of a multiplicity of post-correlation observation vectors $\underline{Z}_n^{d,1},...,\underline{Z}_n^{d,N_m}$ which are supplied to a common channel identification unit 28R$^d$. It should be appreciated that the post-correlation observation vectors share the same channel characteristics, i.e., of the channel 14$^d$ between user station 10$^d$ and the base station antenna array. Consequently, only one channel identification unit 28R$^d$ is required, which essentially processes the plural signal component estimates $\hat{s}_n^{d,1},...,\hat{s}_n^{d,N_m}$ and the post-correlation observation vectors and, in essence, averages the results to produce a single channel vector estimate $\underline{\hat{H}}_n^d$ representing the physical channel 14$^d$. The channel identification unit 28R$^d$ has a bank of spreaders (not shown) which spread the channel vector estimate $\underline{\hat{H}}_n^d$ using the multiple spreading codes to create a set of spread channel vector estimates $\underline{\hat{Y}}_{0,n}^{d,1},...,\underline{\hat{Y}}_{0,n}^{d,N_m}$, which it supplies to the ISR beamformers $47R^{d,1},...,47R^{d,N_m}$, respectively. Likewise, the power estimation unit 30R$^d$ is adapted to receive plural signal component estimates $\hat{s}_n^{d,1},...,\hat{s}_n^{d,N_m}$ and essentially average their powers to produce the power estimate $\hat{\psi}_n^d$.

While using all of the multiple codes advantageously gives a more accurate channel vector estimate, it requires many expensive despreading operations. In order to reduce the cost and complexity, the receiver module 20M$^d$ may use only a subset of the spreading codes.

It can be demonstrated that the multiple spreading codes can be replaced by a single spreading code formed by multiplying each of the multiple spreading codes by the corresponding one of the symbol estimates $\hat{b}_n^{d,1},...,\hat{b}_n^{d,N_m}$

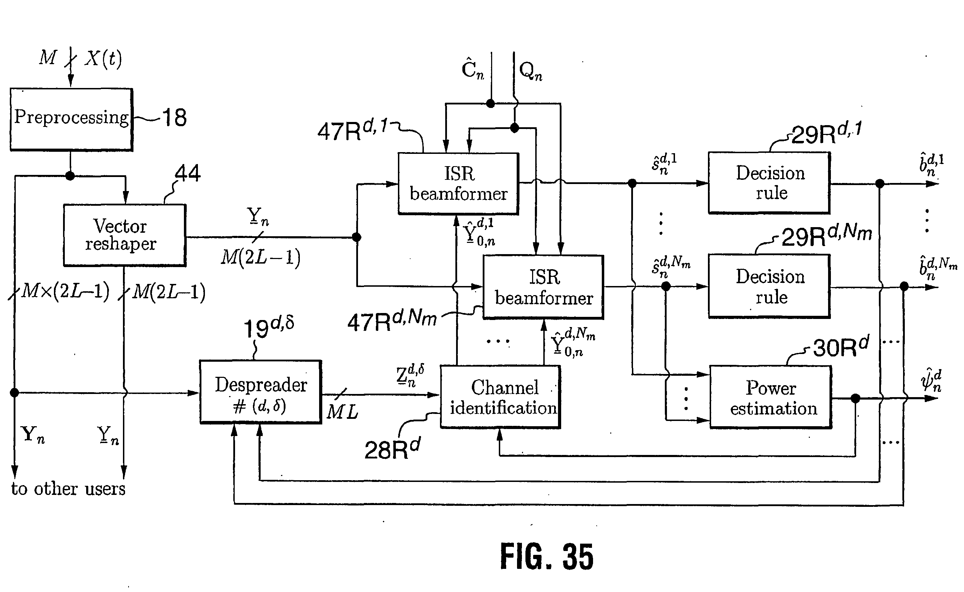

and combining the results. Figure 35 illustrates a receiver module which implements this variation. Thus, the receiver module 20R$^d$ shown in Figure 35 differs from that shown in Figure 34 in that the bank of despreaders $19^{d,1},...,19^{d,N_m}$ are replaced by a single despreader 19$^{d,\delta}$ which receives the symbol estimates $\hat{b}_n^{d,1},...,\hat{b}_n^{d,N_m}$ and multiplies them by the multiple spreading codes to form a compound spreading code, which it then uses to despread the observation matrix $Y_n$ and form a single post-correlation observation vector $\underline{Z}_n^{d,\delta}$. The channel identification unit 28R$^d$ does not receive the signal component estimates but instead receives the total amplitude $\psi_n^d$ from the power estimation unit 30R$^d$. This serves as a compound signal component estimate because the use of the compound code is equivalent to modulating a constant "1" or a constant "-1" with that code, as will be formulated by equations later. The channel identification unit 28R$^d$ processes the single post-correlation observation vector $\underline{Z}_n^{d,\delta}$ to produce a single channel vector estimate $\hat{H}_n^d$ and spreads it, as before, using the multiple spreading codes to form the multiple spread channel vector estimates $\hat{\underline{Y}}_{0,n}^{d,1},...,\hat{\underline{Y}}_{0,n}^{d,N_m}$ for use by the beamformers $47R^{d,1},...,47R^{d,N_m}$ as before.

The theory of such multicode operation will now be developed. Assuming for simplicity that each user assigned the index u transmits $N_m$ streams of DBPSK data $b^{u,1}(t), ..., b^{u,N_m}(t)$, using $N_m$ spreading codes $C^{u,1}(t), ..., C^{u,N_m}(t)$, each spread stream can be seen as a separate user among a total of $U \times N_m$ access channels, assigned the couple-index $(u,l)$. The data model can then be written as follows:

$$Y_n = \sum_{u=1}^{U} \sum_{l=1}^{N_m} \sum_{k=-1}^{+1} \psi_n^u b_{n+k}^{u,l} Y_{k,n}^{u,l} + N_n^{pth} = \sum_{u=1}^{U} \sum_{l=1}^{N_m} \sum_{f=1}^{N_f} \sum_{k=-1}^{+1} \psi_n^u b_{n+k}^{u,l} \zeta_{f,n}^u Y_{k,n}^{u,l,f} + N_n^{pth}, \qquad (97)$$

where the canonic *u*-th user *l-th* code observation matrices $Y_{k,n}^{u,l,f}$ from finger *f* are obtained by Equations (3) and (4) of with X*(t)* in Equation (3) replaced, respectively for

$$k = -1, 0, +1,$$

by:

$$X_k^{u,l,f}(t) = \underline{R}_m \delta(t - \tau_p(t)) \otimes g^{l,u}(t) c^{u,l}(t). \qquad (98)$$

In the equation above, $\underline{R}_m = [0, ...., 0, 1, 0, ..., 0]^T$ is an *M*-dimensional vector with null components except for the *m*-th one and $\delta(t)$ denotes the Dirac impulse. Reshaping matrices into vectors yields:

$$\underline{Y}_n = \sum_{u=1}^{U} \sum_{l=1}^{N_m} \sum_{k=-1}^{+1} \psi_n^u b_{n+k}^{u,l} \underline{Y}_{k,n}^{u,l} + \underline{N}_n^{pth} = \sum_{u=1}^{U} \sum_{l=1}^{N_m} \sum_{f=1}^{N_f} \sum_{k=-1}^{+1} \psi_n^u b_{n+k}^{u,l} \zeta_{f,n}^u \underline{Y}_{k,n}^{u,l,f} + N_n^{pth}, \qquad (99)$$

The particularity of the above multi-code model, where $N_m$ codes of each user share the same physical channel $\underline{H}_n^u$ and the same total received power $(\psi_n^u)^2$ should be noted. Exploitation of these common features will be discussed hereinafter in relation to adapting of the power-control and the channel-identification procedures to the multi-code configuration. The ISR combining step will now be explained.

Considering first joint ISR combining among the group of N interferers, the regular ISR modes, namely TR, R, D, H and RH easily generalize to the new multi-code configuration of $N_m NI$ users instead of *NI,* as shown in Table 3.

ISR combining operations are carried out as usual using the constraint and blocking matrices $\hat{C}_n$ and $\hat{C}_n^{i',l'}$, respectively.

It should be noted, however, that a further dimension of interference decomposition and rejection arises over the codes of each user, yielding two additional ISR modes. The new modes depicted in Table 3 and referred to as MCR and MCD (multi-code R and D) characterize interference from the entire set of codes of each user by its total realization or by the decomposition of this total realization over diversities, respectively. They combine the R and D modes, respectively, with the TR mode by summing the corresponding constraints over all the multi-codes of each user.

Although these modes partly implement TR over codes, they are still robust to power estimation errors. Indeed, the fact that the received power of a given user is a common parameter shared between all codes enables its elimination from the columns of the constrain matrices (see Table 3). The MCR and MCD modes inherit the advantages of the R and D modes, respectively. They relatively increase their sensitivity to data estimation errors compared to the original modes, since they accumulate symbol errors over codes. However, they reduce the number of constraints by $N_m$.

For a desired user assigned the index d, the constraint matrix $\hat{C}_n$ is used to form the projector $\Pi_n$. The receiver of the data stream from a user-code assigned the couple-index (d,l) can simply reject the NI interfering multi-code users by steering a unit response to $\hat{\underline{Y}}_{0,n}^{d,l}$ and a null response to the constraint matrix $\hat{C}_n$ with the projector $\Pi_n$. It can further reject ISI by steering nulls to $\hat{\underline{Y}}_{-1,n}^{d,l}$ and $\hat{\underline{Y}}_{+1,n}^{d,l}$. However, the signals received from other multi-codes contribute to self-ISI. This interference, referred to here as MC-ISI, is implicity suppressed when receiving an interfering user. It can be suppressed too when receiving the desired low-power user by joint ISR among the codes of each mobile with any of the ISR modes. The multi-code constraint and blocking matrices $\hat{C}_{MC,n}^d$ and $\hat{C}_{MC,n}^{d,l'}$, respectively, as shown in Table 4 are formed, and derive the ISR beamformer coefficients for user-code (d,l) derived, as follows:

$$Q_{MC,n}^d = \left( \hat{C}_{MC,n}^{d\,H} \hat{C}_{MC,n}^d \right)^{-1}, \qquad\qquad (100)$$

$$\Pi_{MC,n}^{d,l} = I_{M*(2L-1)} - \hat{C}_{MC,n}^d Q_{MC,n}^d \hat{C}_{MC,n}^{d,l\,H}, \qquad\qquad (101)$$

$$\Pi_n^{d,l} = \Pi_{MC,n}^{d,l} \Pi_n, \qquad\qquad (102)$$

$$\underline{W}_n^{d,l} = \frac{\Pi_n^{d,l} \hat{\underline{Y}}_{0,n}^{d,l}}{\hat{\underline{Y}}_{0,n}^{d,l\,H} \Pi_n^{d,l} \hat{\underline{Y}}_{0,n}^{d,l}}. \qquad\qquad (103)$$

The projector $\Pi_n^{d,l}$ that is orthogonal to both MC-ISI and to the NI interferers is formed and then its response normalized to have a unity response to $\hat{\underline{Y}}_{0,n}^{d,l}$.

The above processing organization of ISR among the high-power or low-power user-codes themselves or between both subsets is a particular example that illustrates G-ISR well. The fact that joint ISR among the high-power users and joint ISR among the codes of a particular low-power user may each implement a different mode is another example that illustrates H-ISR well. In the more general case, ISR can implement a composite mode that reduces to a different mode with respect to each user. For instance, within the group of NI interferers, each user-code assigned the index (i,l) can form its own multi-code constraint and blocking matrices $\hat{C}_{MC,n}^i$ and $\hat{C}_{MC,n}^{i,l}$ along a user-specific mode ($\Pi_n$, should be set to identity in Table 4). The constraint and blocking matrices then can be reconstructed for joint ISR processing by aligning the individual constraint and blocking matrices row-wise into larger matrices as follows:

$$\hat{C}_n^i = \left[ \hat{C}_{MC,n}^1, ..., \hat{C}_{MC,n}^{NI} \right], \qquad (104)$$

$$\hat{C}_n^{i,l} = \left[ \hat{C}_{MC,n}^1, ..., \hat{C}_{MC,n}^{i-1}, \hat{C}_{MC,n}^{i,l}, \hat{C}_{MC,n}^{i+1}, ..., \hat{C}_{MC,n}^{NI} \right]. \qquad (105)$$

This example illustrates the potential flexibility of ISR in designing an optimal interference suppression strategy that would allocate the null constraints among users in the most efficient way to achieve the best performance/complexity tradeoff. It should be noted that, in the particular case where the TR mode is implemented, the matrices in Equations (104) and (105) are in fact vectors which sum the individual multi-code constraint vectors $\hat{C}_{MC,n}^i$ and $\hat{C}_{MC,n}^{i,1}$, respectively.

After deriving the beamformer coefficients, each MC user assigned the index u estimates its $N_m$ streams of data for $l = 1, ..., N_m$ as follows (see Figure 34):

$$\hat{s}_n^{u,l} = Real\left\{ \underline{W}_n^{u,l^H} \underline{Y}_n \right\}, \qquad (106)$$

$$\hat{b}_n^{u,l} = Sign\left\{ \hat{s}_n^{u,l} \right\}, \qquad (107)$$

and exploits the fact that its $N_m$ access channels share the same power, and hence smooths the instantaneous signal power of each data stream over all its codes as follows:

$$(\psi_n^u)^2 = (1-\alpha)(\psi_{n-1}^u)^2 + \alpha \frac{\sum_{l=1}^{N_m} |\hat{s}_n^{u,l}|^2}{N_m}. \qquad (108)$$

It should be noted that the multi-code data-streams can be estimated using MRC, simply by setting the constraint matrices to null matrices. This option will be referred to as MC-MRC.

After despreading of the post-correlation observation vector $\underline{Y}_n$ by the $N_m$ spreading codes of a user assigned the index u, the following post-correlation observation vectors for $l = 1, ..., N_m$ are obtained as follows:

$$\underline{Z}_n^{u,l} = \underline{H}_n^u \psi_n^u b_n^{u,l} + \underline{N}_{PCM,n}^{u,l} = \underline{H}_n^u s_n^{u,l} + \underline{N}_{PCM,n}^{u,l}. \qquad (109)$$

The fact that all user-codes propagate through the same channel is exploited in the following cooperative channel identification scheme (see Figure 34):

$$\underline{\tilde{H}}_{n+1}^u = \underline{\hat{H}}_n^u + \frac{\mu}{N_m} \sum_{l=1}^{N_m} \left( \underline{Z}_n^{u,l} - \underline{\hat{H}}_n^u \hat{s}_n^{u,l} \right) \hat{s}_n^{u,l}, \qquad (110)$$

which implements a modified DFI scheme, referred to as multi-code cooperative DFI (MC-CDFI). MC-CDFI amounts to having the user-codes cooperate in channel identification by estimating their propagation vectors separately, then averaging them over all codes to provide a better channel vector estimate. It should be noted that implicit incorporation of the II-DFI version in the above MC-CDFI scheme further enhances channel identification.

Since the STAR exploits a data channel as a pilot, it can take advantage of a maximum of $N_m$ expensive despreading operations. To limit their number in practice, MC-CDFI can be restricted to a smaller subset of 1 to $N_m$ user-codes. A compromise can be found between channel estimation enhancement and complexity increase.

Another solution that reduces the number of despreading operations reconstructs the following data-modulated cumulative-code after ISR combining and symbol estimation in Equations (106) and (107):

$$c_k^{u,\delta} = \frac{1}{N_m}\sum_{l=1}^{N_m} \hat{b}_n^{u,l} c_k^{u,l}. \tag{111}$$

A single despreading operation with this code yields:

$$\underline{Z}_n^{u,\delta} = \psi_n^u \underline{H}_n^u \left[ \frac{\sum_{i=1}^{N_m} \hat{b}_n^{u,l} b_n^{u,l}}{N_m} \right] + \left[ \frac{\sum_{i=1}^{N_m} \underline{N}_{PCM,n}^{u,l}}{N_m} \right] \simeq \psi_n^u \underline{H}_n^u + \underline{N}_{PCM,n}^{u,\delta}. \tag{112}$$

It has the advantage of further reducing the noise level by $N_m$ after despreading, while keeping the signal power practically at the same level[8]. The data-modulated cumulative-code can be used to implement channel identification as follows:

$$a = sign\left\{Re\left\{\hat{\underline{H}}_n^{u\,H} \underline{Z}_n^{u,\delta}\right\}\right\},$$

$$\underline{\bar{H}}_{n+1}^u = \hat{\underline{H}}_n^u + \mu\left(\underline{Z}_n^{u,\delta} - \hat{\underline{H}}_n^u a\psi_n^u\right)a\psi_n^u. \tag{113}$$

This CDFI version is referred to as $\delta$-CDFI (see Figure 35).

Whereas multicode operation involves user stations transmitting using multiple spreading codes, but usually at the same data rate, it is also envisaged that different users within the same system may transmit at different data rates. It can be demonstrated that the receiver modules shown in Figures 34 and 35 need only minor modifications in order to handle multirate transmissions since, as will now be explained, multicode and multirate are essentially interchangeable.

### Multi-Code Approach to Multi-Rate ISR

Reconsidering now the conventional MR-CDMA, in this context, STAR-ISR operations previously were implemented at the rate $1/T$ where $T$ is the symbol duration. As described earlier, with reference to Figure 32, the "X option" extensions, enables reduction of noise enhancement by increasing the dimension of the observation space and provides larger margin for time-delay tracking in asynchronous transmissions. A complementary approach that decomposes the observation frame into blocks rather than extends it using past reconstructed data will now be described.

This block-processing version of STAR-ISR will still operate at the rate $1/T$ on data frames barely larger than the processing period $T$. However, it will decompose [8] There is a small power loss due symbol estimation errors (very low in practice). each data stream within that frame into data blocks of duration $T_r$ where $T_r$ is a power-of-2 fraction of $T$. The resolution rate $1/T_r$ can be selected in the interval $[1/T, 1/T_c]$. Hence, a receiver module that processes data frames at a processing rate $1/T$ with a resolution rate $1/T_r$ can only extract or suppress data transmissions at rates slower than or equal to $1/T_r$. Also, the channel parameters of the processed transmissions must be almost constant in the interval $T$, the processing period. This period should be chosen to be much larger than the delay spread $\Delta\tau$ for asyn-

chronous transmissions, but short enough not to exceed the coherence time of the channel.

In one processing period, STAR-ISR can simultaneously extract or suppress a maximum $N_m = T/Tr$ blocks ($N_m$ is a power of 2). In the n-th processing period of duration $T$, a stream of data $b^u(t)$ yields $N_m$ samples $b_n^{u,1},...,b_n^{u,N_m}$ sampled at the resolution rate. Over this processing period, therefore, the spread data can be developed as follows:

$$c^u(t)b^u(t) = \sum_{l=1}^{N_m} b_n^{u,l} \sqcup_{T_r}^l(t - nT)c^u(t), \qquad (114)$$

where $\sqcup_{T_r}^l(t)$ is the indicator function of the interval $[(l-1)T_r, lT_r)$. This equation can be rewritten as follows:

$$c^u(t)b^u(t) = \sum_{l=1}^{N_m} b^{u,l}(t)c^{u,l}(t), \qquad (115)$$

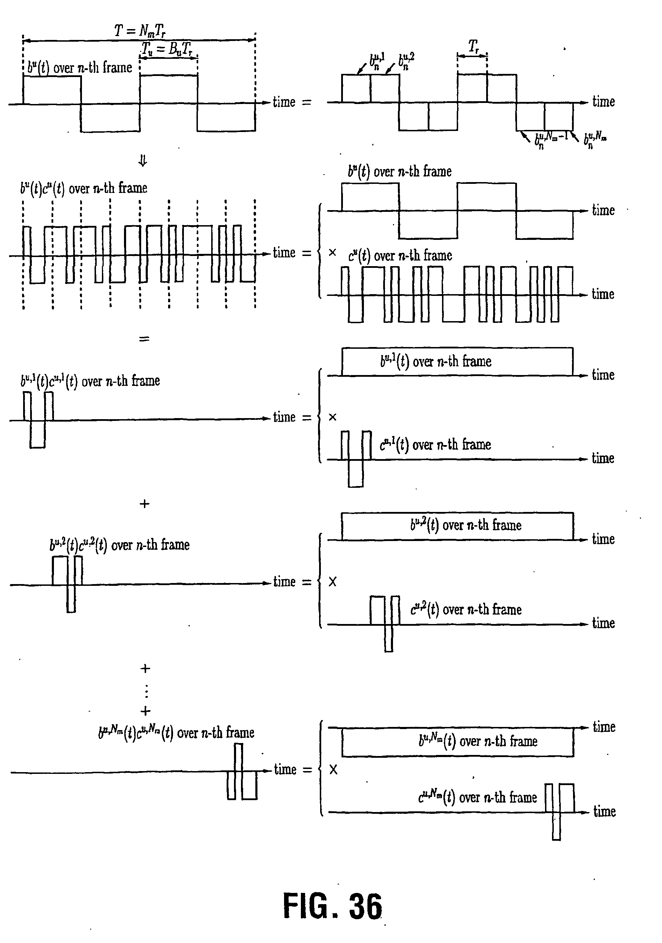

where $b^{u,1}(t),...,b^{u,N_m}(t)$ represent $N_m$ data-streams at rate 1/T spread by $N_m$ virtual orthogonal codes $c^{u,1}(t),...,c^{u,N_m}(t)$ (see Figure 36).

With the above virtual decomposition, one arrives at a MC-CDMA model where each of the processed users can be seen as a mobile that code-multiplexes $N_m$, data-streams over $N_m$, access channels. This model establishes an equivalence between MC-CDMA and MR-CDMA and provides a unifying framework for processing both interfaces simultaneously. In this unifying context, codes can be continuous or bursty. Use of bursty codes establishes another link with hybrid time-multiplexing CDMA (T-CDMA); only the codes there are of an elementary duration $T_r$ that inserts either symbols or fractions of symbols. A larger framework that incorporates MR-CDMA, MC-CDMA, and hybrid T-CDMA can be envisaged to support HDR transmissions for third generation wireless systems.

Exploiting this MC approach to MR-CDMA, the data model of MR-CDMA will be developed to reflect a MC-CDMA structure, then a block-processing version of STAR-ISR derived that implements estimation of a symbol fraction or sequence.

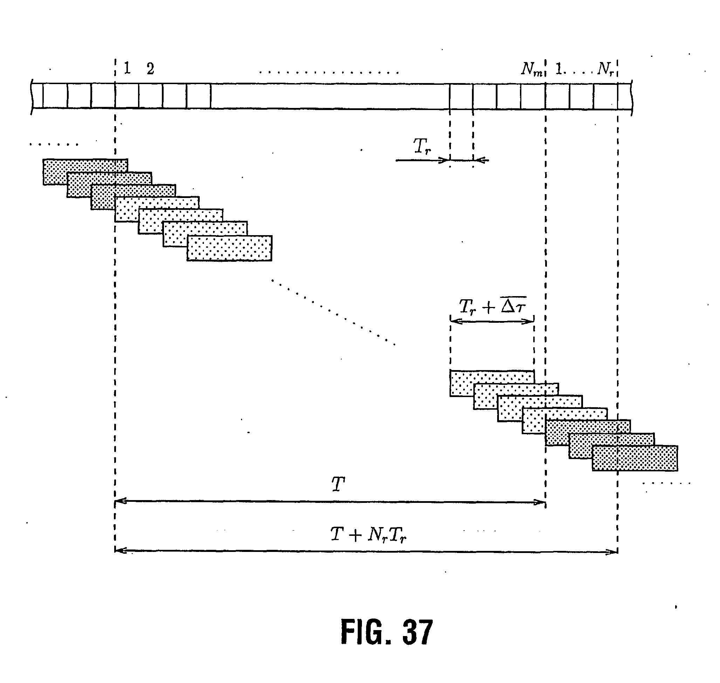

The multi-code model of Equation (97) applies immediately to MR-CDMA. However, due to the fact that codes are bursty with duration $T_r < T$, the self-ISI vectors $\hat{\underline{Y}}_{-1,n}^{u,l}$ and $\hat{\underline{Y}}_{+1,n}^{u,l}$ and the spread propagation vector $\hat{\underline{Y}}_{0,n}^{u,l}$ of a given user-code do not overlap with each other. If $\overline{\Delta\tau}$ denotes an arbitrarily enlarged delay-spread (reference [20]) to leave an increased uncertainty margin for the tracking of time-varying multipath-delays (*i.e.*, $\Delta\tau < \overline{\Delta\tau} < T$), and if $N_r = \lceil \overline{\Delta\tau}/T_r \rceil$ denotes the maximum delay-spread in $T_r$ units, then only the last $N_r$ symbols $b_{n-1}^{u,N_m-N_r+1},...,b_{n-1}^{u,N_m}$ among the past-symbols in the previous frame may contribute to self-ISI in the current processed frame (see Figure 37):

$$Y_n = \sum_{u=1}^{U} \left\{ \sum_{l=N_m-N_r+1}^{N_m} \psi_n^u b_{n-1}^{u,l} Y_{-1,n}^{u,l} + \sum_{l=1}^{N_m} \psi_n^u b_n^{u,l} Y_{0,n}^{u,l} + \sum_{l=1}^{N_m} \psi_n^u b_{n+1}^{u,l} Y_{+1,n}^{u,l} \right\} + N_n^{pth}. \quad (116)$$

In this frame of duration $2T - T_c$, the desired signals' contribution from the $N_m$ current symbols is contained in the first interval of duration $T + \overline{\Delta\tau}$, whereas the remaining interval of the frame contains non-overlapping interference from the last $N_m$ - $N_r$ future symbols in the next frame, namely $b_{n+1}^{u,N_r+1}, \ldots, b_{n+1}^{u,N_m}$ (see Figure 37). The remaining part of the frame can be skipped without any signal contribution loss from the current bits. Hence, the duration of the processed frame can be reduced to $T + \overline{\Delta\tau} - T_c$ as follows:

$$Y_n = \left[ Y_{n,0}, Y_{n,1}, \ldots, Y_{n,L+L_\Delta-2} \right], \qquad (117)$$

where $L_\Delta = \lceil \overline{\Delta\tau}/T_c \rceil$ is the maximum length of the enlarged delay-spread in chip samples. With the data block-size reduced to $M \times (L + L_\Delta - 1)$, the matched-filtering observation matrix reduces to:

$$Y_n = \sum_{u=1}^{U} \left\{ \sum_{l=N_m-N_r+1}^{N_m} \psi_n^u b_{n-1}^{u,l} Y_{-1,n}^{u,l} + \sum_{l=1}^{N_m} \psi_n^u b_n^{u,l} Y_{0,n}^{u,l} + \sum_{l=1}^{N_r} \psi_n^u b_{n+1}^{u,l} Y_{+1,n}^{u,l} \right\} + N_n^{pth}, \quad (118)$$

where $N_n^{pth}$ is the noise matrix reduced to the same dimension. This data model equation can be rewritten in the following compact vector form:

$$\underline{Y}_n = \sum_{u=1}^{U} \sum_{l=1}^{N_m} \sum_{k=-1}^{+1} \psi_n^u b_{n+k}^{u,l} \underline{Y}_{k,n}^{u,l} \lambda_k^l + \underline{N}_n^{pth}, \qquad (119)$$

where $\lambda_k^l = 0$ if $k = -1$ and $l \in \{1,\ldots,N_r\}$ or if $k = +1$ and $l \in \{N_m - N_r + 1,\ldots, N_m\}$, and 1 otherwise.

The constraint matrices can be formed in an MC approach to implement joint or user-specific ISR processing in any of the modes described in Tables 3 or 4, respectively. In contrast to the conventional MC-CDMA, the factor $\lambda_k^l$ discards all non-overlapping interference vectors in the processed frame and somehow unbalances ISI contribution among the virtual multi-code streams. In the DF modes, only the central streams of each user (*i.e.*, $l = N_r + 1, \ldots, N_m$-$N_r$) sum symbol contributions from the previous, current and future symbols; whereas the remaining streams sum signal contributions from either the current and the previous or the current and the future symbols. Indeed, the *2($N_m$ - $N_r$)* ISI terms discarded from summation contribute with null vectors to the processed frame. In the ISR-H mode, the columns previously allocated to individually suppress these vectors are eliminated from the constraint matrices, thereby reducing the number of its columns to $N_H = N_m + 2N_r$ constraints per user[9] (see Tables 3 and 4). ISR-H hence approaches ISR-R in computational complexity when $N_r$ is small compared to $N_m$.

After derivation of the beamformer coefficients of each virtual user-code assigned the couple-index *(u,l)*, its signal component $s_n^{u,l}$ is estimated using Equation (106). In this process, each ISR combiner rejects the processed interferers regardless of their exact data rates, which only need to be higher than the resolution rate. This feature finds its best use when implementing ISR at the mobile station on the downlink where data rates of suppressed interferers are not necessarily known to the desired mobile-station. For instance, orthogonal variable spreading factor (OVSF) allocation of Walsh spreading codes is no longer necessary. On the uplink, each transmission rate is known to the base station. However, one can still gain from this feature by allowing joint and well integrated processing of mixed data traffic at a common resolution rate.

Indeed, the estimation of the signal components provides sequences oversampled to the resolution rate $1/T_r$. Hence, after a given data stream is decomposed at this common rate, its signal component estimate must be restored to its original rate in an "analysis/synthesis" scheme. To do so, the data rate $1/T_u \le 1/T_r$ of user $u$ is defined and it is assumed temporarily that it is faster than the processing rate *(i.e., $1/T_u \ge 1/T$)*. Hence, one can extract from each frame $F_u = T/T_u \le N_m$ signal component estimates out of $N_m$ by averaging the oversampled sequence $s_n^{u,l}$ over consecutive blocks of size $B_u = N_m/F_u = T_u/T_r$ for $n' = 0,\dots, F_u - 1$ as follows:

$$\hat{s}_{nF_u+n'} = \frac{\sum\limits_{l=n'B_u+1}^{(n'+1)B_u} \hat{s}_n^{u,l}}{B_u}, \tag{120}$$

$$\hat{b}_{nF_u+n'}^{u} = Sign\{\hat{s}_{nF_u+n'}^{u}\}, \tag{121}$$

$$(\psi_n^u)^2 = (1 - \alpha)(\psi_{n-1}^u)^2 + \alpha\frac{\sum\limits_{n'=0}^{F_u-1} |\hat{s}_{nF_u+n'}^{u}|^2}{F_u}. \tag{122}$$

In the particular case where the data rate is equal to the processing rate *(i.e., $1/T_u = 1/T$)*, the equations above have simpler expressions with $F_u = 1$ and $B_u = N_m$:

$$\hat{s}_n^u = \frac{\sum\limits_{l=1}^{N_m} \hat{s}_n^{u,l}}{N_m}, \tag{123}$$

$$\hat{b}_n^u = Sign\{\hat{s}_n^u\}, \tag{124}$$

$$(\psi_n^u)^2 = (1 - \alpha)(\psi_{n-1}^u)^2 + \alpha\ |\hat{s}_n^u|^2. \tag{125}$$

[9]ISR may be equally reformulated with $N_m + 2N_r$ generating sequences that process all the contributing symbols as if they were independent streams without MC-ISI. Only the $N_m$ current symbols are estimated then; the $2N_r$ remaining symbols being corrupted by the edge effect.

If the data rate is slower than the processing rate, the signal component estimate $\hat{s}_n^u$ of Equation (123) is further averaged over consecutive blocks of size $F_u' = T_u/T$ to yield the following subsampled sequence:

$$\hat{s}''_{\lfloor n/F_u'\rfloor} = \frac{\sum_{n'=0}^{F_u'-1} \hat{s}''_{\lfloor n/F_u'\rfloor F_u'+n'}}{F_u'}. \tag{126}$$

Symbol and power estimations in Equations (124) and (125) are on the other hand modified as follows:

$$\hat{b}''_{\lfloor n/F_u'\rfloor} = Sign\{\hat{s}''_{\lfloor n/F_u'\rfloor}\}, \tag{127}$$

$$\left(\hat{\varphi}''_{\lfloor n/F_u'\rfloor}\right)^2 = (1-\alpha)\left(\hat{\varphi}''_{\lfloor n/F_u'\rfloor -1}\right)^2 + \alpha \ |\hat{s}''_{\lfloor n/F_u'\rfloor}|^2. \tag{128}$$

It should be noted that a higher value is needed for the smoothing factor $\alpha$ to adapt to a slower update rate of power estimation. If the channel power variations are faster than the data rate, then it is preferable to keep the power estimation update at the processing rate in Equation (125). In this case, Equation (126) is modified as follows[10]:

$$\hat{s}_{\lfloor n/F_u'\rfloor} = \frac{\sum_{n'=0}^{F_u'-1} \psi''_{\lfloor n/F_u'\rfloor F_u'+n'}\hat{s}''_{\lfloor n/F_u'\rfloor F_u'+n'}}{\sum_{n'=0}^{F_u'-1}\left(\psi''_{\lfloor n/F_u'\rfloor F_u'+n'}\right)^2}, \tag{129}$$

to take into account channel power variations within each symbol duration.

It should be noted that the multi-rate data-streams can be estimated using MRC, simply by setting the constraint matrices to null matrices. This option may be referred to as MR-MRC.

It should be also noted that combination of Equations (106) and (120), along with Equation (128) for data rates slower than the processing rate, successively implements the processing gain of each user in fractioned ISR combining steps.

In general, regrouping the symbol-fractions back to their original rate can be exploited in the design of the constraint matrices; first by reducing reconstruction errors from enhanced decision feedback; and secondly by reducing the number of constraints

[10] This signal component estimate is not used for power estimation. Only its sign is taken in Equation (127) as the estimate of the corresponding bit. Hence, power normalization given here for completeness is skipped in practice. of a given user u from $N_m$ to $F_u$ in the modes implementing decomposition over user-codes (*i.e.*, R, D, and H). For these modes, the common factor $N_m NI$ appearing in the total number of constraints $N_c$ reduces to $\sum_{i=1}^{NI} F_i$, by regrouping the constraint vectors over the user-code indices that restore a complete symbol within the limit of the processing period[11].

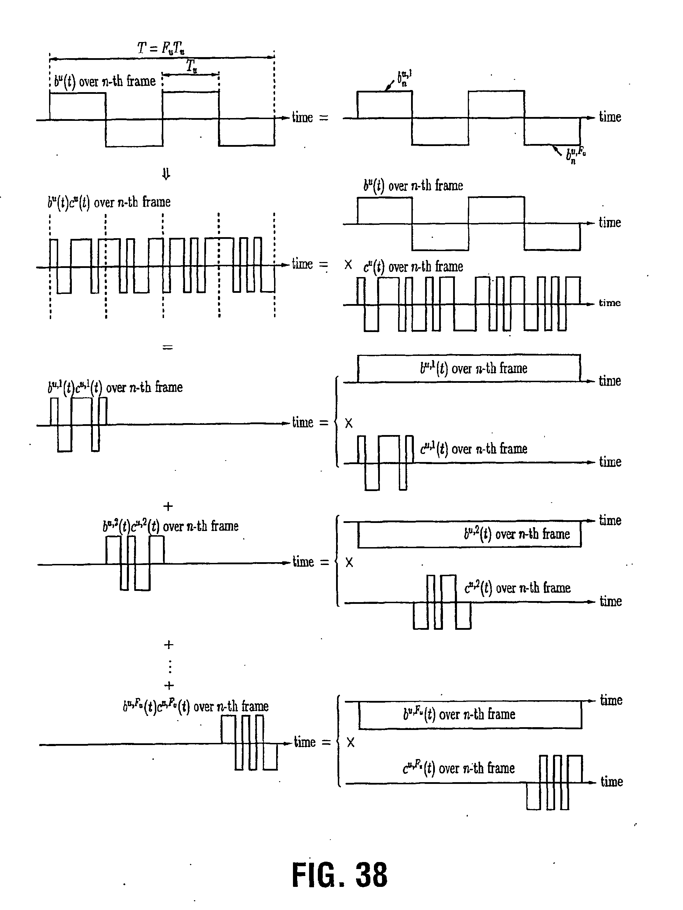

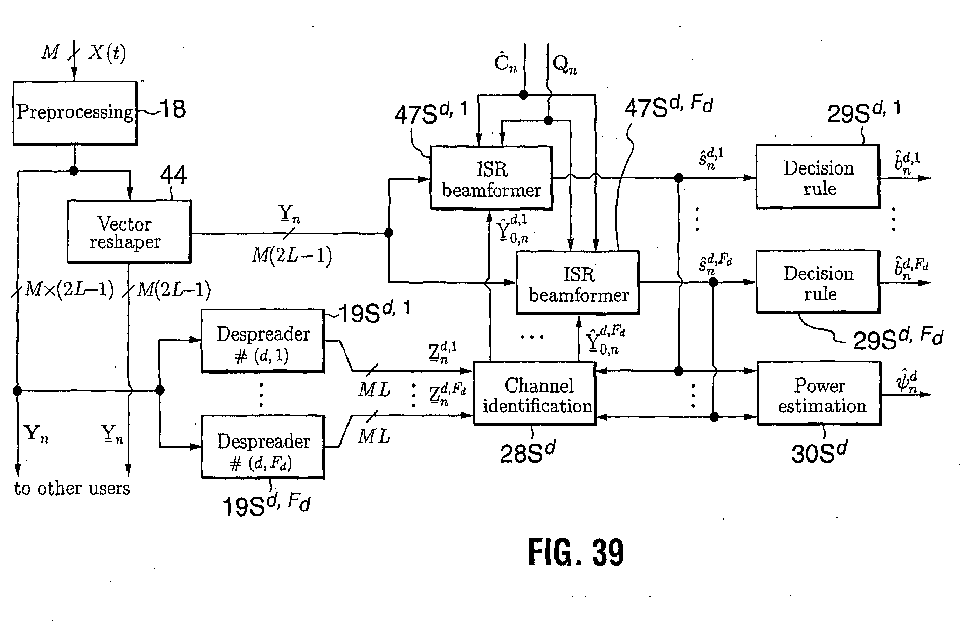

Regrouping the constraints of user $u$ to match its original transmission rate amounts to regrouping the codes of this user into a smaller subset that corresponds to a subdivision of its complete code over durations covering its symbol periods instead of the resolution periods. In fact, user u can be characterized by $F_u$ concatenated multi-codes instead of $N_m$. Overall, MR-CDMA can be modeled as a mixed MC-CDMA system where each user assigned the index *u* has its own number $F_u$ of multi-codes (see Figure 38). Therefore, the ISR-combining and channel-identification steps can be carried out in one step along the MC formulation of the previous section, using user-codes simply renumbered from 1 to $F_u$ for simplicity. Hence, as shown in Figure 39, the only change needed to the receiver module of Figure 34 is to the bank of despreaders. In the receiver module shown in Figure 34, the spreading codes used by the despreaders $19^{d,l},...,19^{d,F_d}$ comprise segments of the spreading code of user *d, i.e.,* the segments together form the part of the code used in a particular frame. The number of code segments $F_u$ corresponds to the number of symbols $b_n^{u,l},...,b_n^{u,F_u}$

transmitted in the frame. The estimates of these symbols, and the signal component estimates $\hat{s}_n^{u,1},...,\hat{s}_n^{u,F_u}$ map with those of Equations (120), (121), (123) and (124) within a parallel/serial transform.

[11] Feedback of symbols with rates slower than the processing rate to the constraints-set generator is feasible.

This illustrates again the flexibility afforded by using ISR in designing optimal interference suppression strategies that suit well with MR-CDMA. It enables simultaneous processing of blocks of symbols or fractions of symbols in an integrated manner at two common resolution and processing rates.

To carry out channel identification operations, the $M \times L_\Delta$ reduced-size post-correlation observation matrix of user-code *(u,l)* is defined as follows:

$$Z_n^{u,l} = \left[ Z_{n,0}^{u,l}, Z_{n,1}^{u,l},..., Z_{n,L_\Delta-1}^{u,l} \right], \tag{130}$$

where the columns of this matrix are given for $j = 0,...,L_\Delta - 1$ by:

$$Z_{n,j}^{u,l} = \frac{1}{L_r} \sum_{j'=0}^{L-1} Y_{n,j+j'} C_{j'}^{u,l} = \frac{1}{L_r} \sum_{j'=(l-1) * L_r}^{l * L_r} Y_{n,j+j'} C_{j'}^u. \tag{131}$$

This correlation with the virtual user-code *(u,l)* amounts to partial despreading by a reduced processing gain $L_r = T_l/T_c$ = $L/N_m$, using the *l*-th block of length $L_r$ of the user's code $C_{j'}^u$. It should be noted that, in contrast to conventional MC-CDMA, the above partial despreading operations are less expensive in terms of complexity per user-code.

The reduced-size post-correlation observation vector $\underline{Z}_n^{u,l}$ resulting from vector-reshaping of $Z_n^{u,l}$ has the same model expression of Equations (109), except that vectors there all have reduced dimension $(ML_\Delta) \times 1$. It should be noted that the post-correlation window length $L_\Delta$ was fixed long enough to contain the delay-spread with an enlarged margin for asynchronous time-delay estimation from the reduced-size propagation vector $\underline{H}_n^u$ (reference [20]). Identification with post-correlation windows shorter than *L*, investigated in [6], reduces complexity and proves to work nearly as well as the original full-window version of STAR *(i.e, $L_\Delta = L$)*.

Channel identification with the MC-CDFI scheme of Equation (110) can be readily implemented using the user-code post-correlation observation vectors $\underline{Z}_n^{u,l}$. However, this procedure would feed back symbol fractions without taking full advantage of the complete processing gain. Instead, the vectors $\underline{Z}_n^{u,l}$ are regrouped and averaged in the same way the signal component estimates are restored to their original rate in Equations (120), (123) or (126), and $\underline{Z}_{nF_u+n'}^u$, $\underline{Z}_n^u$ or $\underline{Z}_{\lfloor n/F_u' \rfloor}^u$, respectively[12] are obtained. Hence, the CDFI channel identification procedure, renamed MR-CDFI, is implemented as follows:

$$\tilde{\underline{H}}^u_{n+1} \;=\; \hat{\underline{H}}^u_n \;+\; \frac{\mu}{F_u}\sum_{n'=0}^{F_u-1}\left(\underline{Z}^u_{nF_u+n'} \;-\; \hat{\underline{H}}^u_n\hat{s}^u_{nF_u+n'}\right)\hat{s}^u_{nF_u+n'}, \tag{132}$$

when the data-rate is faster than the processing rate[13], or by:

$$\tilde{\underline{H}}^u_{n+1} \;=\; \hat{\underline{H}}^u_n \;+\; \mu\left(\underline{Z}^u_n \;-\; \hat{\underline{H}}^u_n\hat{s}^u_n\right)\hat{s}^u_n, \tag{133}$$

in the particular case where the data rate is equal to the processing rate, or by:

$$\tilde{\underline{H}}^u_{\lfloor n/F'_u\rfloor} \;=\; \hat{\underline{H}}^u_{\lfloor n/F'_u\rfloor} \;+\; \mu\left(\underline{Z}^u_{\lfloor n/F'_u\rfloor} \;-\; \hat{\underline{H}}^u_{\lfloor n/F'_u\rfloor}\hat{s}^u_{\lfloor n/F'_u\rfloor}\right)\hat{s}^u_{\lfloor n/F'_u\rfloor}, \tag{134}$$

when the data-rate is slower than the processing rate. It should be noted that channel identification at data rates faster than the processing gain in Equation (132) has a structure similar to MC-CDFI. Averaging over $F_u$ despread observations there can be reduced to a smaller subset to gain in complexity like in MC-CDMA. Use of the $\delta$-CDFI version described in Equations (111) to (113) instead of, or combination with, the above scheme are other alternatives that reduce the amount of complexity due to despreading operations.

By regrouping codes to match the original data transmission rates as discussed earlier (see Figure 38), channel identification can be easily reformulated along a mixed MC-CDMA model where each user is characterized by $F_u$

multi-codes and $F_u$ despread vectors $\underline{Z}^{u,1}_n,...,\underline{Z}^{u,F_u}_n$, as shown in Figure 39.

[12] In practice, these vectors are computed directly from $Y_n$ in regular despreading steps which exploit the entire spreading sequences in one step along a mixed MC-CDMA scheme.

[13] Implementation of $F_u$ channel updates (with time-delay tracking) instead of averaging is computationally more expensive.

To reduce further the number of expensive despreading operations, slower channel identification (reference [20]) can update channel coefficients less frequently if the channel can still show very weak variations over larger update periods. However, high mobility can prevent the implementation of this scheme and faster channel identification update may even be required. For data rates faster than the processing rate, updating at a rate higher than the processing rate is not necessary. The processing period $T$ is chosen to guarantee that the channel parameters are constant over that time interval. For data rates slower than the processing rate, the channel update rate could be increased above the data rate up to the processing rate using Equation (133) and partial despreading to provide $\underline{Z}^u_n$. In Equation (133), $\hat{s}^u_{\lfloor n/F'_u\rfloor}$

from Equation (126) should be fed back instead of $\hat{s}^u_n$ to benefit from the entire processing gain in the decision feedback process.

Although the foregoing embodiments of the invention have been described as receiver modules for a base station, *i.e.,* implementing ISR for the uplink, the invention is equally applicable to the downlink, *i.e.* , to receiver modules of user stations.

*Downlink ISR*

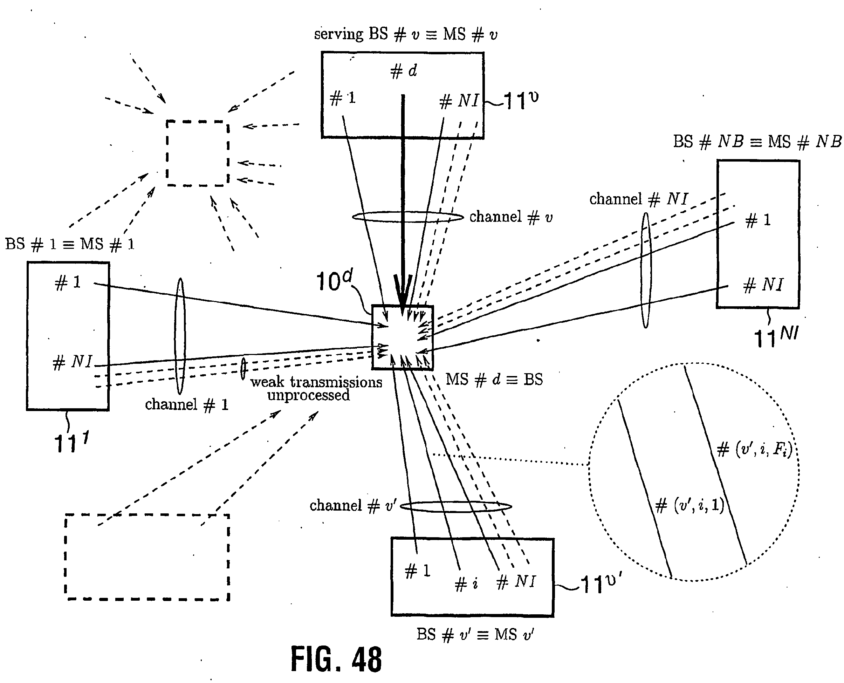

Figure 48 illustrates how the downlink can be modelled like an uplink, so that the ISR techniques developed for the uplink can be employed. Figure 48 shows a single (desired user) mobile $10^d$ which will be one of many, receiving signals from all base stations within range. Only the serving base station $11^v$ and three main interfering base stations $11^1,...,11^u,...11^{Nl}$ are shown. The mobile station may communicate with two or three base stations at a given time, so two of the interferers could be such other stations. The bold arrow illustrates that only one signal, the desired user signal d from server base station $11^v$ is the signal which is to be received. The serving base station $11^v$ will also transmit to other mobiles and those signals will also be received by mobile $10^d$ as interfering signals. Also, each of the other three base stations will be transmitting. Even though one of the signals from each of the other base stations are intended for the mobile d, they constitute interference so far as the reception of signal 10$^d$ from serving base station 11" is concerned. Basically, signals #1 to #NI of BS 11$^v$ (excepting d) are in-cell interferers and the interfering signals from the other base stations are out-cell interferers.

The base stations range from #1 to # NB. BS 11$^v$ is a generic one of them. BS 11$^v$ is a specific one of the NB stations is the serving base station.

There will be other signals from other base stations, some of which are shown in broken lines, and other signals also shown in broken lines, from the base stations shown in full, since figure 48 shows only the strongest signals transmitted by each base station. I.e., there will be more than *NI* mobile stations in cell v but their transmissions weaker. Those mobiles close to the base station will require weak transmissions whereas those far from the base station will require more power, and the base station power control will increase transmit power to achieve it. Also, the data rates could vary and hence affect power levels. Consequently, many signals are not represented in Figure 48. They are ignored because they are relatively weak. Of course, they will be part of the noise signal represented in Figure 2.

Each base station may be transmitting multiple codes, so its signal will have a multi-code structure. Because these signals are being transmitted via the same antenna, they are similar to a multicode signal. Hence, mobile station 10$^d$ receives from base station 11$^v$ the signals *#1 ...d...NI* via channel v, so those signals appear to be a multicode signal. The same applies to signals received from other base stations for processing.

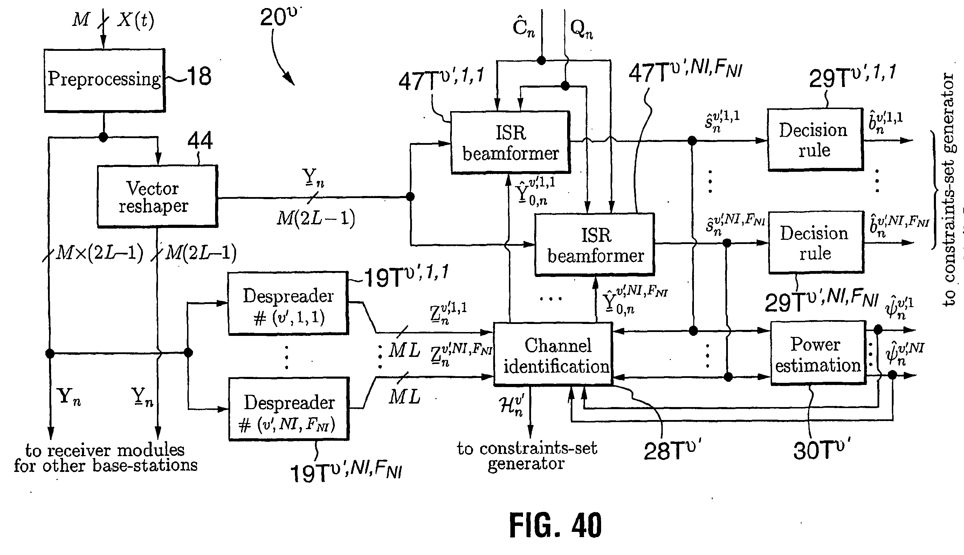

The "zoom" inset shows the signal transmitted to a mobile station *i* by its serving base station v' but received as interference by mobile 10$^d$. It could be a multirate and/or multicode signal, since it is a summation of different signals using different codes and possibly different rates as described with reference to Figures 40-42, for example, though their despreaders handle all interferers whereas here we select only one. The composite signal comprises components transmitted from base station v' to user *i* using codes ranging from 1 to $F_i$, i.e., from first component #(*v', i, 1*) to a final component *(v', i, $F_i$)*. Hence the multicode structure model developed for the uplink applies to the downlink as well at the mobile receiver.

To implement ISR rejection, the user/mobile station needs to identify the group of users (*i.e.*, interferers) to suppress. Assuming temporarily that suppression is restricted to in-cell users, served by base-station v, and that the number of suppressed interferers is limited to *NI* to reduce the number of receivers needed at the desired base-station to detect each of the suppressed users, in order to identify the best users to suppress, the user station can probe the access channels of base-station v, seeking the *NI* strongest transmissions. Another scheme would require that the strongest in-cell interfering mobiles cooperate by accessing the first *NI* channels *(i.e., u = i ∈ {1,...,NI})* of base-station v.

Once the *NI* suppression channels have been identified, the desired user-station can operate as a "virtual base-station" receiving from *NI* "mobiles", i.e., base station transmitter modules, on a "virtual uplink" . If the desired user is not among the *NI* interferers, an additional user station is considered. Similar *NI* channels may be identified for transmissions from the neighbouring base-stations. Accordingly, consideration will be given to the *NB* base-stations, assigned the index v' ∈ *{1,...,NB}*, which include the desired base-station with index v' = v without loss of generality. This formulation allows the user-station to apply block-processing STAR-ISR with specific adaptations of ISR combining and channel identification to the downlink.

In essence, each "virtual base station" user station would be equipped with a set of receiver modules similar to the receiver modules 20$^1$,..., 20$^U$, one for extracting a symbol estimate using the spreading code of that user station and the others using spreading codes of other users to process actual or hypothesized symbol estimates for the signals of those other users. The receiver would have the usual constraints-set generator and constraint matrix generator and cancel ISR in the manner previously described according to the mode concerned.

It should be appreciated, however, that the signals for other users emanating from a base station are similar to multicode or multirate signals. Consequently, it would be preferable for at least some of the user station receiver modules to implement the multicode or multirate embodiments of the invention with reference to Figures 34 and 39. Unlike the base station receiver, the user station's receiver modules usually would not know the data rates of the other users in the system. In some cases, it would be feasible to estimate the data rate from the received signal. Where that was not feasible or desired, however, the multirate or multicode receiver modules described with reference to Figures 34 and 39 could need to be modified to dispense with the need to know the data rate.

Referring to Figure 40, the user station receiver comprises a plurality of receiver modules similar to those of Figure 39, one for each of the *NB* base stations whose *NI* strongest users' signals are to be cancelled, though only one of them, receiver module 20$^{v'}$ for base station v', is shown in Figure 40. Recognizing that one or more of those *NI* signals could be multirate or multicode, and hence involve not only different spreading codes but also different code segmentations, the number of despreaders equals $\sum_{i=1}^{i=NI} F_i$, i.e. 19$^{v',1,1}$,..., 19$^{v',1,F_1}$,..., 19$^{v',i,1}$,..., 19$^{v',i,F_i}$,..., 19$^{v',NI,1}$ ,..., 19$^{v',NI,F_{NI}}$.

In any given base station, the *NI* users are power-controlled independently and so are received by the mobile/user station with different powers. Consequently, it is necessary to take into account their power separately, so the power estimates from power estimation means $30T^{v'}$ are supplied to the channel identification unit $28T^{v'}$. The channel identification unit $28T^{v'}$ processes the data in the same way as previously described, spreading the resulting channel vector estimate $\underline{H}_{0,n}^{v'}$ to form the spread channel vector estimates $\underline{\hat{Y}}_{0,n}^{v',1,1},...,\ \underline{\hat{Y}}_{0,n}^{v',NI,F_M}$ and supplying them to the ISR beamformers $47T^{v',1,1},..., 47T^{v',NI,F_{NI}}$, respectively, for use in processing the observation vector $Y_n$.

The resulting signal component estimates $\hat{s}_n^{v',1,1},...,\ \hat{s}_n^{v',NI,F_M}$ are similarly fed back to the channel identification unit $28T^{v'}$ to update the channel vector estimates and to the decision rule units $30T^{v',1,1},..., 30T^{v',NI,F_{NI}}$ for production of the corresponding symbol estimates $\hat{b}_n^{v',1,1},...,\ \hat{b}_n^{v',NI,F_M}$. In all modes except ISR-H, these symbol estimates are supplied to the constraints-set generator (not shown in Figure 40), together with the set of channel vector estimates $\mathcal{H}_n^{v'}$, from channel identification unit $28T^{v'}$ for use by the constraint matrix generator (not shown) in forming the set of constraints $\mathbb{C}_n$. The set of channel parameter estimates includes the power estimates from the power estimation units. It should be noted that the constraints-set generator and constraint matrix generator may be described hereinbefore, the actual configuration and operation being determined by the particular ISR mode selected.

If the desired user, i.e. of the user station receiver $20^v$ is among the *NI* users, its symbols will be extracted and output to the subsequent parts of the receiver in the usual way. If, however, the desired user is not among the *NI* strong users of the serving base station $v$, the user station receiver will include not only one of the receiver modules of Figure 40 for each base station but also a separate receiver module specifically for extracting the signal for the desired user and which could be similar to that shown in Figure 39.

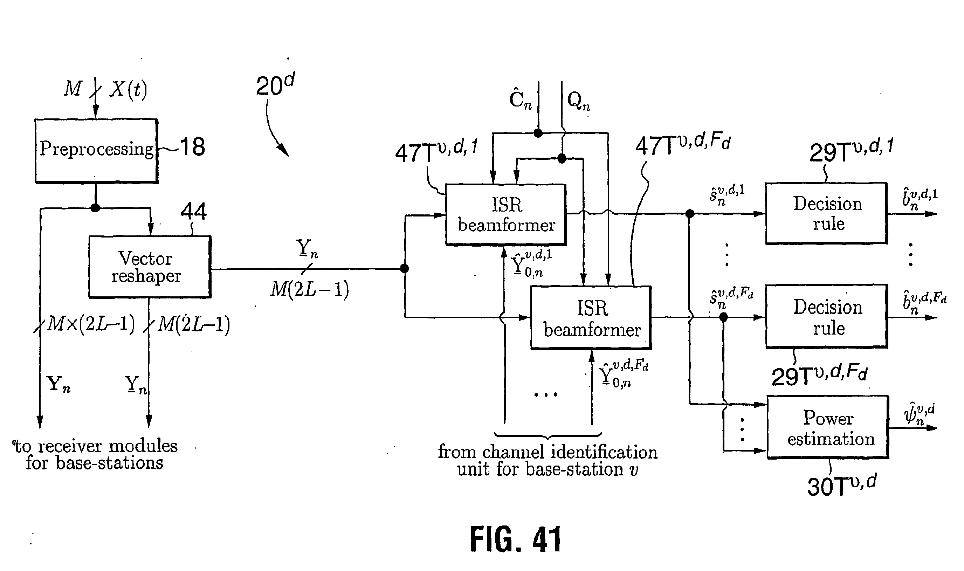

Bearing in mind, however, that the channel vector estimate derived by the receiver module for the serving base station's strong users in Figure 40 will be for the same channel, but more accurate than the estimate produced by the channel identification unit of Figure 39, it would be preferable to omit the channel identification unit ($29^{F_d}$) and despreaders $19^{d,1},..., 19^{d,F_d}$ (Figure 39), and supply the spread channel vector estimates from the channel identification unit of the receiver module for serving base station $v$. As shown in Figure 41, in such a modified receiver module $20T^d$, the beamformer means comprises a bank of ISR beamformers $(47T^{v,d,1},..., 47T^{v,d,F_d}),$ , a bank of decision rule means $(29T^{v,d,1},..., 29T^{v,d,F_d}),$ and power estimation means $30T^{v,d}$ which process elements of the observation vector $\underline{Y}_n$ from vector reshaper 44 in a similar manner to the receiver module of Figure 39. The bank of beamformers $(47T^{v,d,1},..., 47T^{v,d,F_d}),$ are tuned, however, by a set of channel vector estimates $(\underline{\hat{Y}}_{0,n}^{v,d,1},...,\underline{\hat{Y}}_{0,n}^{v,d,F_d}),$ produced by the channel estimation means $(28T^v)$ (Figure 40) corresponding to serving base station $v$, which produces the channel vector estimate $\hat{\underline{H}}_n^v$ and spreads it to produce the channel vector estimates $(\underline{\hat{Y}}_{0,n}^{v,d,1},...,\underline{\hat{Y}}_{0,n}^{v,d,F_d}),$ .

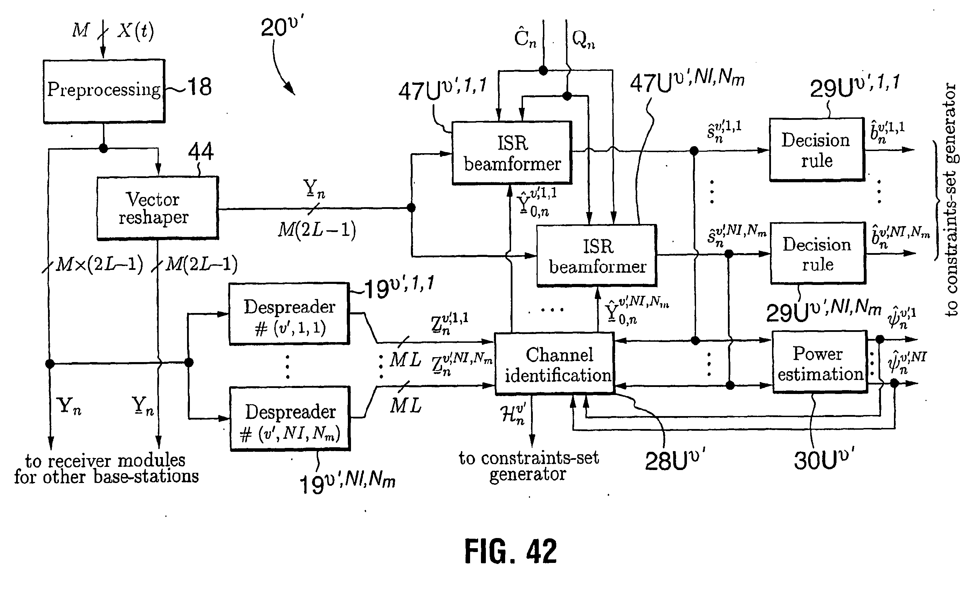

The receiver module shown in Figure 40 is predicated upon the data rates of each set of *NI* users being known to the instant user station receiver. When that is not the case, the receiver module shown in Figure 40 may be modified as shown in Figure 42, *i.e.,* by changing the despreaders to segment the code and oversample at a fixed rate that is higher than or equal to the highest data rate that is to be suppressed.

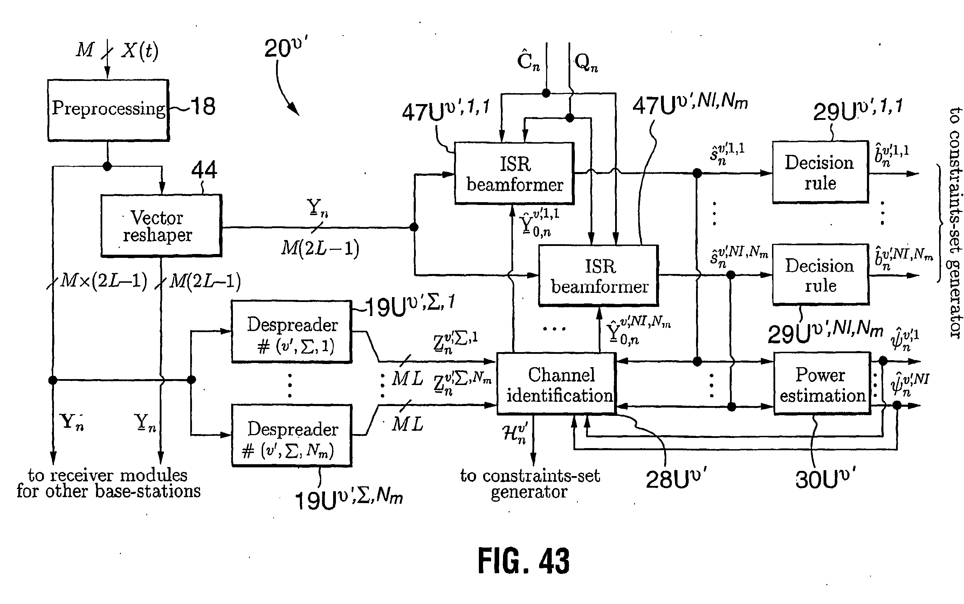

It is also possible to reduce the number of despreading operations performed by the receiver module of Figure 42 by using a set of compound segment codes as previously described with reference to Figure 35 to compound over segments. However, as shown in Figure 43, a set of different compound codes could be used to compound over the set of *NI* interferers. It would also be possible to combine the embodiment of Figure 43 with that of Figure 35 and compound over both the set of interferers and each set of code segments.

A desired user station receiver receiving transmissions on the downlink from its base-station and from the base-stations in the neighbouring cells will now be discussed. Each base-station communicates with the group of user stations located in its cell. Indices $v$ and $u$ will be used to denote a transmission from base-station $v$ destined for user $u$. For simplicity of notation, the index of the desired user station receiving those transmissions will be omitted, all of the signals being implicity observed and processed by that desired user station.

Considering a base-station assigned the index $v$, its contribution to the matched-filtering observation vector $\underline{Y}_n$

of the desired user station is given by the signal vector of the v-th base-station $\underline{Y}^v_n$ defined as:

$$\underline{Y}^v_{u,n} = \sum_{u=1}^{U_v} \underline{Y}^{v,u}_{u,n},$$  (135)

where the vector $\underline{Y}^{v,u}_{u,n}$ denotes the signal contribution from one of the $U_v$ users communicating with base-station $v$ and assigned the index $u$. Using the block-processing approach described in the previous section, the vector $\underline{Y}^{v,u}_{u,n}$ can be decomposed as follows:

$$\underline{Y}^{v,u}_n = \psi^{v,u}_n \sum_{l=k}^{N_m+1} \sum_{k=-1}^{+1} b^{v,u,l}_{n+k} \zeta^v_{f,n} \underline{Y}^{v,u,l}_{k,n} \Lambda^l_k.$$  (136)

It should be noted that the channel coefficients $\zeta^v_{f,n}$ just hold the index of the base-station $v$. Indeed, transmissions from base-station $u$ to all its mobiles propagate to the desired user station through a common channel. Base-station signals therefore show a multi-code structure at two levels. One comes from the virtual or real decomposition of each user-stream into multiple codes, and one, inherent to the downlink, comes from summation of code-multiplexed user-streams with different powers. As will be described hereinafter, this multi-code structure will be exploited to enhance cooperative channel identification at both levels.

In a first step, the desired user-station estimates the multi-code constraint and blocking matrices of each of the processed in-cell users *(i.e., $u \in \{1, \dots ,Nl\} \cup \{d\})$*. Table 4 shows how to build these matrices, renamed here as $\hat{C}^{v,u}_{MC,n}$ and $\hat{C}^{v,u,l}_{MC,n}$ to show the index $v$ of the serving base-station. Indexing the symbol and channel vector estimates with $v$ in Table 4 follows from Equation (136). In a second step, the user-station estimates the base-specific constraint and blocking matrices $\hat{C}^v_{BS,n}$ and $\hat{C}^{v,u,l}_{BS,n}$ using Table 5. These matrices enable suppression of the in-cell interferers using one of the modes described in Table 5. For the downlink, a new mode BR, for base-realization, replaces the TR mode of Table 3. Suppression of interfering signals from multiple base-stations adds another dimension of interference decomposition and results in TR over the downlink as shown in Table 6. Therefore, in a third step the mobile-station estimates the base-specific constraint and blocking matrices $\hat{C}^v_{BS,n}$ and $\hat{C}^{v,u,l}_{BS,n}$ from the interfering base-stations and concatenates them row-wise to form the multi-base constraint and blocking matrices denoted as $\hat{C}_n$ and $\hat{C}^{v,u,l}_n$, respectively. In the TR mode, the base-specific constraint and blocking vectors in the BR mode now are summed over all interfering base-stations, leaving a single constraint. For the other modes, the number of constraints $N_c$ in Table 3 is multiplied by the number of interfering base-stations $NB$. The receiver module dedicated to extracting the data destined to the desired mobile-station # $d$ from the serving base station # $v$ is depicted in Figure 41.

It should be noted that the multi-rate data-streams can be estimated using MRC on the downlink, simply by setting the constraint matrices to null matrices[14]. This option will be termed D-MRC.

If the user-station knows[15] the data rates of the suppressed users, it can estimate their symbols[16] as long as their symbol rate does not exceed the processing rate. As mentioned hereinbefore, this block-based implementation of the symbol detection improves reconstruction of the constraint matrices from reduced decision feedback errors[17]. Otherwise, the user-station can process all interfering channels at the common resolution rate regardless of their transmission rate. It should be noted that estimation of the interferers' powers is necessary for reconstruction in both the BR and TR modes, for channel identification as detailed below, and possibly for interference-channel probing and selection. It is carried out at the processing rate.

Identification of the propagation channels from each of the interfering base-stations to the desired user station is required to carry out the ISR operations. Considering the in-cell propagation channel, its identification from the post-correlation vectors of the desired user is possible as described hereinbefore with reference to Figure 39. It exploits the fact that the multi-codes of the desired user propagate through the same channel. However, the in-cell interfering users share this common channel as well. Therefore, the MC-CDFI and MR-CDFI approaches apply at this level as well. Indeed, the user-station has access to data channels which can be viewed as $NI \times N_m$ virtual pilot-channels with strong powers. It is preferable to implement cooperative channel identification over the interfering users whether the desired user is among the in-cell interferers or not. The same scheme applies to the neighbouring base-stations and therefore enables the identification of the propagation channel from each out-cell interfering base-station using its $NI$ interfering users.

[14] In this case, ISR processing is not needed and the desired signal is expected to be strong enough to enable reliable channel identification for its own.

[15] Data-rate detection can be implemented using subspace rank estimation over each stochastic sequence of $N_m$ symbol fractions.

[16] In the ISR-H mode, only the signal component estimates are needed for power and channel estimation (see next subsection).

[17] Recovery of the interfering symbols at data rates slower than the processing gain could be exploited in slow channel identification. However, selection of a user as a strong interferer suggests that its transmission rate should be high.

If the data rates are known to the base-station, identification of the propagation channel from a given base-station $v' \in \{1,...,NB\}$ can be carried out individually from each of its $NI$ interfering users, as described in the previous section. To further enhance channel identification, the resulting individual channel vector estimates are averaged over the interfering users. Both steps combine into one as follows:

$$\underline{\tilde{H}}_{n+1}^{v'} = \underline{\hat{H}}_{n}^{v'} + \frac{\mu}{\sum\limits_{i=1}^{NI}\left(\psi_n^{v',i}\right)^2}\sum_{i=1}^{NI}\frac{1}{F_i}\sum_{n'=0}^{F_i-1}\left(\underline{Z}_{nF_i+n'}^{v',i} - \underline{\hat{H}}_n^u \hat{s}_{nF_i+n'}^{v',i}\right)\hat{s}_{nF_i+n'}^{v',i}. \tag{137}$$

This downlink version of MR-CDFI, referred to as DMR-CDFI, is illustrated in Figure 40. It should be noted that averaging over the interferers takes into account normalization by their total power. To reduce the number of despreading operations, averaging over interferers can be limited to a smaller set ranging between 1 and $NI$.

If the data rates of the interfering users are unknown to the user-station, identification can be then carried out along the steps described with reference to Figure 34 to process interfering signals at the common resolution rate as follows:

$$\underline{\tilde{H}}_{n+1}^{v'} = \underline{\hat{H}}_{n}^{v'} + \frac{\mu}{N_m\sum\limits_{i=1}^{NI}\left(\psi_n^{v',i}\right)^2}\sum_{i=1}^{NI}\sum_{l=1}^{N_m}\left(\underline{Z}_n^{v',i,l} - \underline{\hat{H}}_n^{v'}\hat{s}_n^{v',i,l}\right)\hat{s}_n^{v',i,l}. \tag{138}$$

This downlink version of MC-CDFI, referred to as DMC-CDFI, is illustrated in Figure 42. To reduce the number of despreading operations, averaging over interferers and user-codes can be limited to smaller subsets ranging between 1 and $NI$ and 1 and $N_m$, respectively.

An alternative solution that reduces the number of despreading operations utilizes the following cumulative multi-codes for $l = 1,..., N_m$:

$$c_k^{v',\Sigma,l} = \frac{1}{\sqrt{NI}}\sum_{i=1}^{NI}c_k^{v',i,l}. \tag{139}$$

Despreading with these cumulative codes yields:

$$\underline{Z}_n^{v',\Sigma,l} = \underline{H}_n^{v'} \left[ \frac{\sum_{i=1}^{NI} S_n^{v',i,l}}{\sqrt{NI}} \right] + \left[ \frac{\sum_{i=1}^{NI} \underline{N}_{PCM,n}^{v',i,l}}{\sqrt{NI}} \right] = \underline{H}_n^{v'} S_n^{v',\Sigma,l} + \underline{N}_{PCM,n}^{v',\Sigma,l}. \qquad (140)$$

Averaging the user-codes over interferers does not reduce noise further after despreading. However, the composite signal $\hat{S}_n^{v',\Sigma,l}$ collects an average power from the $NI$ interferers and therefore benefits from higher diversity. The cumulative multi-codes can be used to implement channel identification as follows:

$$\tilde{\underline{H}}_{n+1}^{v'} = \hat{\underline{H}}_n^{v'} + \frac{\mu}{N_m \left( \psi_n^{v',\Sigma} \right)^2} \sum_{l=1}^{N_m} \left( \underline{Z}_n^{v',\Sigma,l} - \hat{\underline{H}}_n^{v'} \hat{S}_n^{v',\Sigma,l} \right) \hat{S}_n^{v',\Sigma,l}, \qquad (141)$$

where:

$$\hat{S}_n^{v',\Sigma,l} = \frac{\sum_{i=1}^{NI} \hat{S}_n^{v',i,l}}{\sqrt{NI}}, \qquad (142)$$

$$\left( \psi_n^{v',\Sigma} \right)^2 = (1-\alpha)\left( \psi_{n-1}^{v',\Sigma} \right)^2 + \alpha \frac{\sum_{l=1}^{N_m} \sum_{i=1}^{NI} |\hat{S}_n^{v',i,l}|^2}{N_m NI}. \qquad (143)$$

This downlink version of MC-CDFI, referred to as DSMC-CDFI, is illustrated in Figure 43. Again, averaging over a smaller set of user-codes reduces the number of despreading operations. Use of the δ-CDFI version described in Equations (111) to (113) instead of, or combination with, the above scheme[18], are other alternatives that reduce the amount of complexity due to despreading operations.

In situations where a pilot code is transmitted, it can be incorporated into the cumulative code. This version which we denote δπ-MC-CDFI, uses a data modulated cumulative code over multi-codes, interferers, and pilot(s) for despreading. We also introduce normalization by powers in order to meet situations with significant differences in powers (such as on the downlink). δπ-MC-CDFI uses the following code for despreading:

$$c_k^{v,\delta\pi} = \frac{1}{\sum_{l=1}^{N_m} \left[ \sum_{i=1}^{NI} (\psi_n^{v',i,l})^2 + (\lambda^\pi \psi_n^{v',l})^2 \right]} \sum_{l=1}^{N_m} \left[ \sum_{i=1}^{NI} s_n^{v',i,l} c_k^{v',i,l} + \lambda^\pi \pi_k^{v',l} \right], \qquad (144)$$

where $\pi$, is the spread pilot signal and $\lambda^\pi$ is a weight factor which may serve to signify the pilot since no decision errors are associated with it. In the special case

where $\lambda^\pi = 0$, the scheme amounts to $\delta$-MC-CDFI with normalization by powers.

Moreover, these downlink versions could be combined with the pilot assisted ISR embodiments described with reference to Figures 44 and 46. It will be appreciated that the pilot channel will not be user-specific but rather specific to the serving base station or to a group of user stations served by that serving base station. In such cases, the pilot power is relatively strong so the corresponding beamformer (see Figure 46) may implement simple MRC instead of ISR. [18] Summing user-codes over resolution periods does not increase diversity. However, use of the $\delta$-CDFI version further reduces noise after despreading.

The embodiments of the invention described so far use one transmit (Tx) antenna. Adding spatial dimension using multiple Tx antennas provides a means of supporting more users. In the following section we present a transmitter structure especially suited for high-rate low-processing gain downlink transmission, which can potentially provide high capacity when ISR is employed at the receiver.

*Multiple-Input, Multiple Output (MIMO) ISR with Space-Time Coding (STC)*

On the uplink, increasing the number of receive (Rx) antennas from one to two almost doubles capacity of the system when ISR is employed at the BS. The improvement results from the additional spatial dimension which allows users to be distinguished not only by their code but also by their spatial signature. When, on the downlink, a single Tx antenna is employed, all signals originating from one specific base station (BS) antenna have the same spatial signature at the antenna array of the receiver. It is therefore a demand that the BS transmitter is equipped with multiple antennas and that a wise space-time coding strategy for transmitting signals is employed.

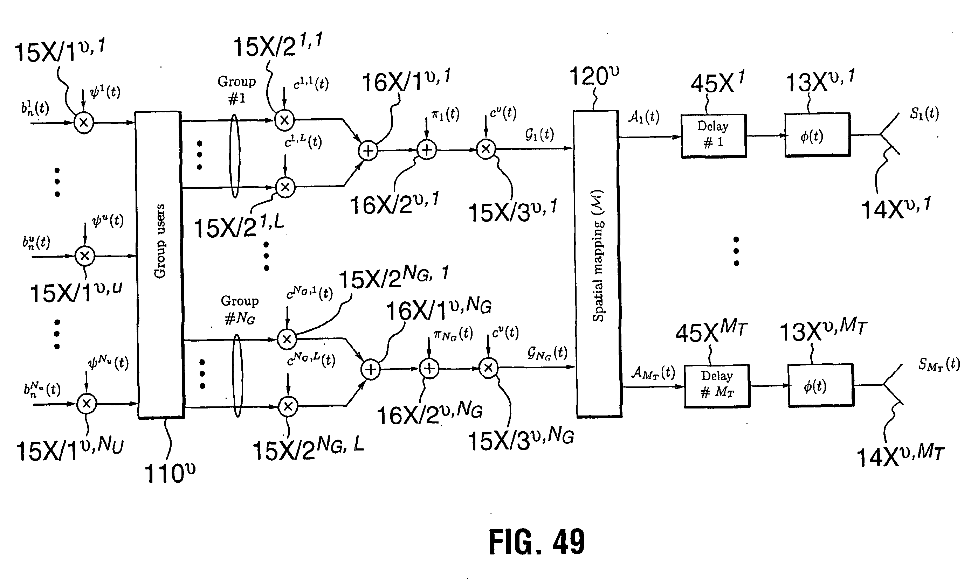

Such a MIMO transmitter using STC is shown in Figure 49 for serving base station $\nu$. This figure shows base station $\nu$ serving the mobiles indexed from 1 to $N_u$ located within its cell coverage. It transmits to each of these mobile a corresponding stream of data $(b_n^u),$ each power-controlled with the total amplitude $(\psi_n^u)$ using a multiplier 15X$^{\nu,u}$.

It should be noted that $(\psi_n^u)$ is not the real amplification factor, but a product obtained at the receiver and put at the transmitter to ease both data modelling and algorithmic description (please refer to description of Figure 4).

The power-controlled data streams are then fed to a group-selector 110$^\nu$ to divide the $N_u$ served mobiled in $N_G$ groups (see discussion below). Each group cannot be large than $L$ mobiles in number. Depending on the cell load $N_u$, a given number $N_{IG} \le L$ of mobiles will be allocated within each group. For convenience of notation, $N_{IG}$ is fixed in Figure 49 to $L$, i.e., the maximum.

For each group, identical operation will be performed; hence only operation for group # 1 will be described. The $N_{IG} = L$ data streams in group # 1 will be spread by codes $c^{1,1}$ $(t), ..., c^{1,L}(t)$ using multipliers 15X/2$^{1,1}$,..., 15X/2$^{1,L}$, respectively. The spread signals are then summed using adder 16X/1$^{\nu,1}$. The resulting signal is summed to a pilot signal $\pi_1(t)$ specific to group # 1 using adder 16X/2$^{\nu,1}$, then spread with code $c^\nu(t)$ specific to base station $\nu$ using multiplier 15X/3$^{\nu,1}$. The resulting spread signal is denoted as G$_1$(t). Identical operations on other groups will result in similar signals. The $N_G$ signals resulting from such operations in the $N_G$ groups of mobiles are denoted as $G_1(t), ..., G_{N_G}(t)$.

These signals are fed to a spatial mapper 120$^\nu$. This mapper operates like a $N_G \times M_T$ coupler to linearly transform the $N_G$ input streams inot $M_T$ output streams equal in number to the *Tx* antennas and denoted as $A_1(t), ..., A_{M_G}(t)$. The first stream $A_1$(t) is delayed by delay 45X$^1$ and filtered by the shaping pulse 13X$^{\nu,1}$ (which includes carrier frequency modulation), then transmitted over antenna 14X$^{\nu,1}$ as signal S$_1$(t), Identical operations performed on the mapper output streams result in signals S$_1$(t), ..., $S_{M_T}$(t) being separately transmitted on antennas 14X$^{\nu,1}$, ..., *14X$^{\nu'M_T}$,* respectively. The structure of this transmitter is particularly interesting in high data-rate, low-processing gain situations. First, the data sequences $b^{u,u'}(t)$ of the $N_u$ users, are scaled with $\varphi^{\nu,u}(t)$, where $\varphi^{\nu,u}(t)^2$, $u = 1, ...,N_u$ is the desired transmit power. These signals are then grouped in $N_G$ groups. A user belonging to group $g$ is assigned a *user specific* short channelization code drawn from a fixed set of $N_{IG}$ $L$-chip codes ($L$ is the processing gain) which we conveniently organize column-wise in the matrix $C_g = [c^{g,1}(t)^T, \cdots, c^{g,N_{IG}}(t)^T]^T$ and denote it the code-set of group $g$. Codes belonging to same code-set are all chosen mutually orthogonal such that $C_g^H C_g$ is diagonal, which in its turn means that the number of fixed channelization codes per group is limited to $N_{IG} \le L$; at the same time code-sets across groups should have low cross-correlation, as will be explained later. It should be noted that code-sets are assumed to be reused in all sectors. When user signals of the same group are coded by their respective channelization code, they are summed to provide a one streamed signal. *A group-specific* pilot code is added, and the resulting signal is scrambled by a *BS specific* PN code to arrive at the total group signal $G_g^v(t)$. Using a linear mapping function M, the $N_G$ group signals are mapped onto $M_T$ antenna branches, to arrive at

$$A^v(t) = MG^v(t), \qquad (145)$$

where $A^v(t) = [A_1^v(t)^T, \cdots, A_M^v(t)^T]$, and $G^v(t) = [G_1^v(t)^T, \cdots G_{N_G}^v(t)^T]$. Branch signals are finally delayed to allow for transmit delay diversity, then formed by the chip-pulse matched filter.

The physical channel matrix which defines transmission from $M_T$ Tx antennas of the BS indexed $v$ to the $M$ receive antennas of the mobile with couple index $(v, u)$ is:

$$H^{v,u}(t) = \begin{bmatrix} h_{1,1}^{v,u}(t) & \cdots & h_{1,M_T}^{v,u}(t) \\ \vdots & & \vdots \\ h_{M,1}^{v,u}(t) & \cdots & h_{M,M_T}^{v,u}(t) \end{bmatrix}, \qquad (146)$$

where the $(i,j)$-*th* element of the matrix is the channel between the *j*-th Tx antenna of the base-station and the *i*-th Rx antenna of the mobile. This definition allows the signal transmitted from the base-station $v$, when received at the antenna array of the desired mobile, to be written as:

$$X^{v,u}(t) = H^{v,u}(t) \otimes S^v(t) \qquad (147)$$

$$= H^{v,u}(t) \otimes MG^v(t) \otimes D(t) \qquad (148)$$

$$= H^{v,u}(t)M \otimes [G^v(t) \otimes D(t)] \qquad (149)$$

$$= D(t) \otimes H^{v,u}(t)M \otimes G^v(t) \qquad (150)$$

where $D(t) = [\phi(t - \Delta_1), ..., \phi(t - \Delta_{Mt})]^T$ represent the transmit delays and chip-pulse forming. From Equation (149) it is clear that the effective spatial mapping function due to the channel becomes $H(t)M$, which is generally not orthogonal which in its turn means that groups will interfere with each other. Therefore, unless the transmitter has knowledge of the channel, orthogonality at reception cannot be promised. Design of the mapping function will be described later. Equation (150) further shows that the delay elements can be regarded as part of the channel, and it is clear that they provide virtual multi-path. This is normally referred to as "delay transmit diversity."

If the channel as seen by the vector of group signals $G^v(t)$ is denoted by $\Gamma^{v,u}(t) = D(t) \otimes H^{v,u}(t)M$, then the signal received at the antenna array may be written as:

$$X^{v,u}(t) = \sum_{v=1}^{N_B} \Gamma^{v,u}(t) \otimes G^v(t) \qquad (151)$$

$$= \sum_{v=1}^{N_B} \Gamma_1^{v,u} \otimes G_1^v(t) + \cdots + \Gamma_{N_G}^{v,u} \otimes G_{N_G}^v(t) \qquad (152)$$

where $\Gamma_j^{v,u}$ is the $j^{th}$ column of $\Gamma^{v,u}$. From Equation (20) it is noted that each group of users' signals propagate through the same channel, and that the receiver sees $N_B N_G$ sources. When the proposed MIMO downlink transmitter is employed, the model for the received matched filtered signal (Equation 3) can be written as:

$$Y(t) = \sum_{v=1}^{N_B} \sum_{u=1}^{N_u} Y^{v,u}(t) + N(t) \qquad (153)$$

$$= \sum_{v=1}^{N_B} \sum_{u=1}^{N_u} \varphi^{v,u}(t)(H^{v,u}(t) \otimes b^{v,u}(t)c^{v,u}(t)) + N(t) \qquad (154)$$

$$= \sum_{v=1}^{N_B} \sum_{g=1}^{N_G} \sum_{u \in G_g^v} \varphi^{v,u}(t)(H_\Sigma^{v,g}(t) \otimes b^{v,u}(t)c^{v,u}(t)) + N(t) \qquad (155)$$

$$= \sum_{v=1}^{N_B} \sum_{g=1}^{N_G} H_\Sigma^{v,g}(t) \otimes \left[ \sum_{u \in G_g^v} \varphi^{v,u}(t)b^{v,u}(t)c^{v,u}(t) \right] + N(t) \qquad (156)$$

from which it is clear that users belonging to the same group of same BS, have the same channel response $H_\Sigma^{v,g}(t)$. This allows for improved identification of the channel at the mobile receiver. The most apparent difference from the uplink model is hence that users belonging to the same group experience the same channel, a feature well exploited on the downlink using CDFI (see previous descriptions).

Appropriate choice of codes across groups is important since the resultant channel is not generally orthogonal. Since channelization codes are chosen from a fixed set, sets with good properties can be found by optimization. It should be noted that, since the same scrambling code is used across groups, cross-correlation properties, once set by proper choice of channelization code-sets, are preserved after scrambling and hence after transmission. Here, only the situation with two groups ($N_G$ = 2) is considered since it is particularly simple. $C_1$ is first chosen as an orthogonal matrix, for instance the Hadamard matrix (or part of it). It is noted that, if A is a diagonal matrix having $\pm$ 1 entries, then $\Lambda C_1$ will still be an orthogonal span because $\Lambda$ is unitary. Therefore, the second set of codes is defined by $C_2 = \Lambda C_1$, where $\Lambda$ satisfies

$$\Lambda = arg \min_{\Lambda} \left\{ \sup \max_{ij} |A_{ij}| \right\}, \tag{157}$$

where

$$A = C_1^H \Lambda^H C_1 \tag{158}$$

which, in most cases, is easily solved by search. When sets are full (*i.e.*, $N_{IG} = L$), this amounts to a 45° rotation between sets. In the more general case where $N_G > 2$, the optimization becomes difficult especially when the processing gain is large. Here a blend of guessing and search must be invoked.

Experience shows that reusing the same or opposite code in different groups is not attractive. The number of users (total number of possible channelization codes) is therefore limited by $2^{L-1}$. This limit clearly suggests that a low processing gain also encompasses a very limited potential capacity. For instance if $L = 2$, only two users can be supported, and it can be verified that there is no profit from multiple Tx antennas, since one Tx antenna can already provide near orthogonal transmission (using orthogonal codes). With $L = 4$ the limit is $N_u \leq 8$ and for this situation, there is benefit from going from one to two Tx antennas, but not three. In general, the number of Tx antennas for a cost-effective system is limited by $M_T \leq \dfrac{2^{L-1}}{L}$ because adding more antennas will not provide potential increase of capacity.

The purpose of the spatial mapping function is to assign a unique $M_T$-dimensional spatial signature to each of the $N_G$ groups. In situations where the transmitter has some knowledge of the channel[19], the mapping function may be chosen as a function of time such that the resultant channel $\Gamma^{v,u}(t)$ becomes orthogonal. In mobile cellular CDMA, however, this is not an option because the physical channels are user specific, and therefore an orthogonality condition can only be provided for one receiving user.

Considering therefore the design of a fixed mapping function, the rank properties of the resultant channel $\Gamma^{v,u}(t) = D(t) \otimes H^{v,u}(t)M$ are intuitively optimized if the mapping function $M$ is chosen to have the best rank properties. In the case where the number of groups $(N_G)$ equals the number of Tx antennas $(M_T)$, optimal rank properties are obtained by choosing an orthogonal mapping function. Identity mapping $(M = I)$ is orthogonal, and simply maps group 1 to antenna 1, group 2 to antenna 2, etc. However, it causes unequal load on antennas, and delay transmit diversity is not exploited. These problems are both avoided if the Hadamard matrix is used, since it distributes signals equally on antenna branches and therefore exploits "delay transmit diversity" and avoids power imbalance.

[19] E.g., feed-back from the receivers or time-division duplex.

In the more general case, power control can be distributed among the transmit antennas. Such power control distribution techniques are well known and will not be described in detail here.

It should be noted that embodiments of the invention are not limited to using the space-time coding scheme described with reference to Figure 49 but could use other known space-time coding schemes.

It will be appreciated that the base station transmitter described with reference to Figure 49 does not require a modification to the receiver at the user station, i.e., any of the receivers described with reference to Figures 40-43 may be used to receive its signals. Actually, with a MIMO system, the receiver will "see" the MIMO base station transmitter as $N_G$ sub-base stations corresponding to the group partitioning of Figure 49.

It should be noted that each user station could have a plurality of transmit antennas and use a MIMO transmitter similar to that of the base station and described with reference to Figure 49. Of course, the corresponding receiver at the base station will not require modification for the reasons given above.

TABLE 1

| - | IC Method | $N_c$ | Delay | Robustness to estimation errors of | | | |
| --- | --- | --- | --- | --- | --- | --- | --- |
| | | | | Timing | Phase | Power | Symbols |
| PIC | Subtracts reconstructed interference | - | 1+PC | | | | |
| SIC | Subtracts reconstructed interference of higher power users | - | 1+$NI$ PC | | | | |
| ISR-H | Nulls reconstructed bits of interfering users | $3NI$ | 1PC | | (some) | ✓ | ✓ |
| ISR-D | Nulls reconstructed interfering diversities | $MxPxNI$ | 1+1PC | | ✓ | ✓ | |
| ISR-R | Nulls reconstructed interfering users | $NI$ | 1+1PC | | (some) | ✓ | |
| ISR-TR | Nulls total reconstructed interference | 1 | 1+1PC | | | (some) | |
| ISR-TR-S | Nulls total reconstructed interference of higher power users | 1 | 1+$NI$ PC | | | (some) | |

EP 1 240 731 B1

TABLE 2

| | $S_j$ | $j =$ |
|---|---|---|
| ISR-TR | $S_i = \{(u,f,l) \mid u = 1, \ldots, N_u; \; f = 1, \ldots, N_f; \; l = -1,0,1\}$ | 1 |
| ISR-R | $S_j = \{(u,f,l) \mid u = j; \; f = 1, \ldots, N_f; \; l = -1,0,1\}$ | $1, \ldots, NI$ |
| ISR-H | $S_j = \left\{(u,f,l) \mid u = \lfloor \dfrac{j-1}{3} \rfloor; \; f = 1, \ldots, N_f; \; l = j - \lfloor \dfrac{j-1}{3} \rfloor - 1\right\}$ | $1, \ldots, 3NI$ |
| ISR-D | $S_j = \left\{(u,f,l) \mid u = \lfloor \dfrac{j-1}{N_f} \rfloor; \; f = j - \lfloor \dfrac{j-1}{N_f} \rfloor; \; l = -1,0,1\right\}$ | $1, \ldots, N_f NI$ |

EP 1 240 731 B1

TABLE 3

| | $\hat{C}_n$ | $\hat{C}_n^{i',l'}$ | $N_c$ |
|---|---|---|---|
| | $\hat{C}_n$ $\uparrow$ $\left[\cdots,\dfrac{\hat{\underline{C}}_{n,j}}{\|\hat{\underline{C}}_{n,j}\|},\cdots\right]$ $\uparrow$ $[\cdots,\hat{\underline{C}}_{n,j},\cdots]$ $\Uparrow$ | $\hat{C}_n^{i',l'}$ $\uparrow$ $\left[\cdots,\dfrac{\hat{\underline{C}}_{n,j}^{i',l'}}{\|\hat{\underline{C}}_{n,j}\|},\cdots\right]$ $\uparrow$ $[\cdots,\hat{\underline{C}}_{n,j}^{i',l'},\cdots]$ $\Uparrow$ | $N_c$ |
| TR | $\left[\displaystyle\sum_{i=1}^{Nl}\sum_{l=1}^{N_m}\sum_{f=1}^{N_f}\sum_{k=-1}^{+1}\psi_n^i\,\hat{b}_{n+k}^{i,l}\,\hat{\varsigma}_{f,n}^i\,\hat{\underline{Y}}_{-k,n}^{j,l,f}\lambda_k^l\right]$ | $\left[\displaystyle\sum_{i=1}^{Nl}\sum_{l=1}^{N_m}\sum_{f=1}^{N_f}\sum_{k=-1}^{+1}\psi_n^i\,\hat{b}_{n+k}^{i,l}\,\hat{\varsigma}_{f,n}^i\,\hat{\underline{Y}}_{-k,n}^{j,l,f}\delta_{i,l,k}^{i',l',0}\lambda_k^l\right]$ | 1 |
| MCR | $\left[\cdots,\displaystyle\sum_{l=1}^{N_m}\sum_{f=1}^{N_f}\sum_{k=-1}^{+1}\hat{b}_{n+k}^{i,l}\,\hat{\varsigma}_{f,n}^i\,\hat{\underline{Y}}_{-k,n}^{j,l,f}\lambda_k^l,\cdots\right]$ | $\left[\cdots,\displaystyle\sum_{l=1}^{N_m}\sum_{f=1}^{N_f}\sum_{k=-1}^{+1}\hat{b}_{n+k}^{i,l}\,\hat{\varsigma}_{f,n}^i\,\hat{\underline{Y}}_{-k,n}^{j,l,f}\delta_{i,l,k}^{i',l',0}\lambda_k^l,\cdots\right]$ | $NI$ |
| MCD | $\left[\cdots,\displaystyle\sum_{l=1}^{N_m}\sum_{k=-1}^{+1}\hat{b}_{n+k}^{i,l}\,\hat{\underline{Y}}_{-k,n}^{j,l,f}\lambda_k^l,\cdots\right]$ | $\left[\cdots,\displaystyle\sum_{l=1}^{N_m}\sum_{k=-1}^{+1}\hat{b}_{n+k}^{i,l}\,\hat{\underline{Y}}_{-k,n}^{j,l,f}\delta_{i,l,k}^{i',l',0}\lambda_k^l,\cdots\right]$ | $N_f NI$ |

EP 1 240 731 B1

72

| | $\hat{C}_n$ | $\hat{C}_n^{i',l'}$ | $N_c$ |
|---|---|---|---|
| R | $\left[\cdots, \displaystyle\sum_{f=1}^{N_f} \sum_{k=-1}^{+1} \hat{b}_{n+k}^{i,l} \hat{\zeta}_{f,n}^{i} \hat{Y}_{-k,n}^{j,l,f} \lambda_k^l, \cdots\right]$ | $\left[\cdots, \displaystyle\sum_{f=1}^{N_f} \sum_{k=-1}^{+1} \hat{b}_{n+k}^{i,l} \hat{\zeta}_{f,n}^{i} \hat{Y}_{-k,n}^{j,l,f} \bar{\delta}_{i,l,k}^{i',l',0} \lambda_k^l, \cdots\right]$ | $N_m NI$ |
| D | $\left[\cdots, \displaystyle\sum_{k=-1}^{+1} \hat{b}_{n+k}^{i,l} \hat{Y}_{-k,n}^{j,l,f} \lambda_k^l, \cdots\right]$ | $\left[\cdots, \displaystyle\sum_{k=-1}^{+1} \hat{b}_{n+k}^{i,l} \hat{Y}_{-k,n}^{j,l,f} \bar{\delta}_{i,l,k}^{i',l',0} \lambda_k^l, \cdots\right]$ | $N_f N_m NI$ |
| H | $\left[\cdots, \displaystyle\sum_{f=1}^{N_f} \hat{\zeta}_{f,n}^{i} \hat{Y}_{-k,n}^{j,l,f} \lambda_k^l, \cdots\right]$ | $\left[\cdots, \displaystyle\sum_{f=1}^{N_f} \hat{\zeta}_{f,n}^{i} \hat{Y}_{-k,n}^{j,l,f} \bar{\delta}_{i,l,k}^{i',l',0} \lambda_k^l, \cdots\right]$ | $N_H NI$ |

TABLE 3

Table 3 shows common constraint and blocking matrices $\hat{C}_n$ and $\hat{C}_n^{i',l'}$, respectively, and the corresponding number of constraints or columns $N_c$ for each ISR mode: Generic columns are shown before normalization and $\bar{\delta}_{i,l,k}^{i',l',k'} = 0$ if $(i,l,k) = (i',l',k')$ and 1 otherwise. In the conventional MC case, $\lambda_k^l = 1$ and $N_H = 3N_m$. In the MR case modeled as MC-CDMA, $\lambda_k^l = 0$ if $k = -1$ and $l \in \{1, \ldots, N_r\}$ or if $k = +1$ and $l \in \{N_m - N_r + 1, \ldots, N_m\}$, and 1 otherwise. In the H mode, $2(N_m - N_r)$ columns or more in $\hat{C}_n$ are null. These columns and the corresponding ones in $\hat{C}_n^{i',l'}$ are removed leaving a maximum of $N_H = N_m + 2N_r$ constraints.

TABLE 4

| | | | |
|---|---|---|---|
| | $\hat{C}''_{MC,n}$ <br> $\uparrow$ <br> $\left[\cdots, \dfrac{\Pi_n \hat{\underline{C}}''_{nj}}{\|\Pi_n \hat{\underline{C}}''_{nj}\|}, \cdots\right]$ <br> $\uparrow$ <br> $[\cdots, \hat{\underline{C}}''_{nj}, \cdots]$ <br> $\Uparrow$ | $\hat{C}''^{,l'}_{MC,n}$ <br> $\uparrow$ <br> $\left[\cdots, \dfrac{\Pi_n \hat{\underline{C}}''^{,l'}_{nj}}{\|\Pi_n \hat{\underline{C}}''_{nj}\|}, \cdots\right]$ <br> $\uparrow$ <br> $[\cdots, \hat{\underline{C}}^{i',l'}_{nj}, \cdots]$ <br> $\Uparrow$ | $N_c$ |
| MCR | $\left[\sum\limits_{l=1}^{N_m}\sum\limits_{f=1}^{N_f}\sum\limits_{k=-1}^{+1} \hat{b}^{u,l}_{n+k}\hat{\zeta}^u_{f,n}\hat{\underline{Y}}^{u,l,f}_{k,n}\lambda^l_k\right]$ | $\left[\sum\limits_{l=1}^{N_m}\sum\limits_{f=1}^{N_f}\sum\limits_{k=-1}^{+1} \hat{b}^{u,l}_{n+k}\hat{\zeta}^u_{f,n}\hat{\underline{Y}}^{u,l,f}_{k,n}\delta^{l',0}_{l,k}\lambda^l_k\right]$ | 1 |
| MCD | $\left[\cdots, \sum\limits_{l=1}^{N_m}\sum\limits_{k=-1}^{+1} \hat{b}^{u,l}_{n+k}\hat{\underline{Y}}^{u,l,f}_{k,n}\lambda^l_k, \cdots\right]$ | $\left[\cdots, \sum\limits_{l=1}^{N_m}\sum\limits_{k=-1}^{+1} \hat{b}^{u,l}_{n+k}\hat{\underline{Y}}^{u,l,f}_{k,n}\delta^{l',0}_{l,k}\lambda^l_k, \cdots\right]$ | $N_f$ |
| R | $\left[\cdots, \sum\limits_{f=1}^{N_f}\sum\limits_{k=-1}^{+1} \hat{b}^{u,l}_{n+k}\hat{\zeta}^u_{f,n}\hat{\underline{Y}}^{u,l,f}_{k,n}\lambda^l_k, \cdots\right]$ | $\left[\cdots, \sum\limits_{f=1}^{N_f}\sum\limits_{k=-1}^{+1} \hat{b}^{u,l}_{n+k}\hat{\zeta}^u_{f,n}\hat{\underline{Y}}^{u,l,f}_{k,n}\delta^{l',0}_{l,k}\lambda^l_k, \cdots\right]$ | $N_m$ |

| | | | |
|---|---|---|---|
| D | $$\left[\ \ldots,\ \sum_{k=-1}^{+1}\ \hat{b}_{n+k}^{u,l}\ \hat{Y}_{-k,n}^{u,l,f}\ \lambda_k^l,\ \ldots\ \right]$$ | $$\left[\ \ldots,\ \sum_{k=-1}^{+1}\ \hat{b}_{n+k}^{u,l}\ \hat{Y}_{-k,n}^{u,l,f}\sqrt{\delta_{l,k}^{l',0}}\ \lambda_k^l,\ \ldots\ \right]$$ | $N_f N_m$ |
| H | $$\left[\ \ldots,\ \sum_{f=1}^{N_f}\ \hat{\gamma}_{f,n}^{u}\ \hat{Y}_{-k,n}^{u,l,f}\ \lambda_k^l,\ \ldots\ \right]$$ | $$\left[\ \ldots,\ \sum_{f=1}^{N_f}\ \hat{\gamma}_{f,n}^{u}\ \hat{Y}_{-k,n}^{u,l,f}\sqrt{\delta_{l,k}^{l',0}}\ \lambda_k^l,\ \ldots\ \right]$$ | $N_H NI$ |

TABLE 4

Table 4 shows multi-code constraint and blocking matrices $\hat{C}_{MC,n}^{u}$ and $\hat{C}_{MC,n}^{u,l'}$, respectively, and the corresponding number of constraints or columns $N_c$ for each ISR mode: Generic columns are shown before projection and normalization and $\overline{\delta}_{l,k}^{l',k'} = 0$ if $(l,k) = (l',k')$ and 1 otherwise. In the conventional MC case, $\lambda_k^l = 1$ and $N_H = 3N_m$. In the MR case modeled as MC-CDMA, $\lambda_k^l = 0$ if $k = -1$ and $l \in \{1, \ldots, N_r\}$ or if $k = +1$ and $l \in \{N_m - N_r + 1, \ldots, N_m\}$, and 1 otherwise. In the H mode, $2(N_m - N_r)$ columns in $\hat{C}_{MC,n}^{u}$ are null. These columns and the corresponding ones in $\hat{C}_{MC,n}^{u,l'}$ are removed leaving a maximum of $N_H = N_m + 2N_r$ constraints.

EP 1 240 731 B1

| TABLE 5 | |
|---|---|
| | BR |
| $\hat{C}_{BS,n}^{v} \Leftarrow$ | $\left[ \sum_{u=1}^{NI} \psi_n^{v,u} \sum_{l=1}^{N_m} \sum_{f=1}^{N_f} \sum_{k=-1}^{+1} \hat{b}_{n+k}^{v,i,l} \hat{\zeta}_{f,n-k,n}^{v} \hat{\Upsilon}_{k}^{v,i,l,f} \lambda_k^l \right]$ |
| $\hat{C}_{BS,n}^{v,l',l'} \Leftarrow$ | $\left[ \sum_{u=1}^{NI} \psi_n^{v,u} \sum_{l=1}^{N_m} \sum_{f=1}^{N_f} \sum_{k=-1}^{+1} \hat{b}_{n+k}^{v,l,l'} \hat{\zeta}_{f,n-k,n}^{v} \hat{\Upsilon}_{k}^{v,l,l,f} \overline{\delta}_{i,l,k}^{l',l',0} \lambda_k^l \right]$ |
| $N_c$ | 1 |

TABLE 5

Table 5 shows base-specific constraint and blocking matrices $\hat{C}_{BS,n}^{v}$ and $\hat{C}_{BS,n}^{v,l',l'}$ which will apply to the modes shown in Table 3 except for TR, replaced by BR. Indices of remaining modes in Table 3 should be modified to include the index of the base-station $v$ as shown for the TR mode. It should be noted that channel coefficients $\hat{\zeta}_{f,n}^{u}$ hold the index of the base-station $u$ instead of the user $i$. Transmissions to all user-stations from base-station $u$ propagate to the desired user station through a common channel. It should also be noted that summation over users is weighted by the estimate of the total amplitude due to user-independent power control. Definitions of $\overline{\delta}_{l,l,k}^{l',l',0}$ and $\lambda_k^l$ are given in Table 3.

| TABLE 6 | |
|---|---|
| | TR |
| $\hat{C}_n \Leftarrow$ | $\left[ \sum_{v=1}^{NB} \sum_{U=1}^{NI} \psi_n^{v,u} \sum_{l=1}^{N_m} \sum_{f=1}^{N_f} \sum_{k=-1}^{+1} \hat{b}_{n+k}^{v,i,l} \hat{\zeta}_{f,n-k,n}^{v} \hat{\Upsilon}_{k}^{v,i,l,f} \lambda_k^l \right]$ |
| $\hat{C}_n^{v',l',l'} \Leftarrow$ | $\left[ \sum_{v=1}^{NB} \sum_{u=1}^{NI} \psi_n^{v,u} \sum_{l=1}^{N_m} \sum_{f=1}^{N_f} \sum_{k=-1}^{+1} \hat{b}_{n+k}^{v,i,l} \hat{\zeta}_{f,n-k,n}^{v} \hat{\Upsilon}_{k}^{v,i,l,f} \overline{\delta}_{v,i,l,k}^{v',l',l',0} \lambda_k^l \right]$ |
| $N_c$ | 1 |
| | BR |
| $\hat{C}_n \Leftarrow$ | $\left[ \dots, \sum_{u=1}^{NI} \psi_n^{v,u} \sum_{l=1}^{N_m} \sum_{f=1}^{N_f} \sum_{k=-1}^{+1} \hat{b}_{n+k}^{v,i,l} \hat{\zeta}_{f,n-k,n}^{v} \hat{\Upsilon}_{k}^{v,i,l,f} \lambda_k^l \right]$ |
| $\hat{C}_n^{v',i',l'} \Leftarrow$ | $\left[ \dots, \sum_{u=1}^{NI} \psi_n^{v,u} \sum_{l=1}^{N_m} \sum_{f=1}^{N_f} \sum_{k=-1}^{+1} \hat{b}_{n+k}^{v,i,l} \hat{\zeta}_{f,n-k,n}^{v} \hat{\Upsilon}_{k}^{v,i,l,f} \overline{\delta}_{v,i,l,k}^{v',l',l',0} \lambda_k^l, \dots \right]$ |

Table continued

| $N_c$ | 1 |
|-------|---|
| $N_c$ | NB |

TABLE 6

Table 6 shows multi-base constraint and blocking matrices $\hat{C}_n$ and $\hat{C}_n^{v',i',l'}$ which apply to the modes of Table 5 by row-wise aligning the constraint and blocking matrices $\hat{C}_{BS,n}$ and $\hat{C}_{BS,n}^{v',i',l'}$ from base-stations into larger matrices $\hat{C}_n$ and $\hat{C}_n^{v',i',l'}$ in the way suggested by Equations (104) and (105). The number of constraints in Table 5 is multiplied by *NB* as shown here for the BR mode. The additional TR mode sums the constraint-vectors of the BR mode over all base-stations. The definition of $\lambda_k^l$ is given in Table 3 and $\overline{\delta_{v,i,l,k}^{v',i',l',l''}} = 0$ if *(v,i,l,k) = (v',i',l',k')* and 1 otherwise.

It should be appreciated that, whether ISR is used for the uplink or the downlink, it will function either as a single antenna or multiple antenna for reception or transmission.

Embodiments of the invention are not limited to DBPSK but could provide for practical implementation of ISR in mixed-rate traffic with MPSK or MQAM modulations without increased computing complexity. Even orthogonal Walsh signalling can be implemented at the cost of a computational increase corresponding to the number of Walsh sequences. Moreover, different users could use different modulations. Also, one or more users could use adaptive coding and modulation (ACM).

It is also envisaged that embodiments of the invention could employ carrier frequency offset recovery (CFOR). It should be appreciated that the decision rule units do not have to provide a binary output; they could output the symbol and some other signal state.

It should also be noted that, although the above-described embodiments are asynchronous, a skilled person would be able to apply the invention to synchronous systems without undue experimentation.

The invention comprehends various other modifications to the above-described embodiments. For example, long *PN* codes could be used, as could large delay-spreads and large inter-user delay-spreads.

For simplicity, the foregoing description of preferred embodiments assumed the use of short spreading codes. In most practical systems, however, long spreading codes would be used. Because the portion of the long code differs from one symbol to the next, certain operations, which were unnecessary for short codes, will have to be performed, as would be appreciated by one skilled in this art. For further information, the reader is directed to references [22] and [23]. It is envisaged, however, that short codes could still be used during acquisition and the long codes used once a link has been established.

During the acquisition step, a user station could be required to connect using one of a plurality of predetermined (short) codes. The null-constraints used by the receiver then would be preselected to cancel signals using such predetermined codes. This would avoid problems arising when a user station begins to transmit and for which the receiver has not derived any constraints. Such a modification would be applicable to the downlink situation and use ISR-H.

REFERENCES

For further information, the reader is directed to the following documents.

1. F. Adachi, M.Sawahashi and H. Suda, "Wideband DS-CDMA for next generation mobile communications systems", IEEE communications Magazine, vol. 36, No. 9, pp. 55-69, September 1998.

2. A. Duel-Hallen, J. Holtzman, and Z. Zvonar, "Multiuser detection for CDMA systems", *IEEE Personal Communications,* pp. 46-58, April 1995.

3. S. Moshavi, "Multi-user detection for DS-CDMA communications", *IEEE Communications Magazine,* pp. 124-136, October 1996.

4. S. Verdu, "Minimum probability of error for asynchronous Gaussian multiple-access channels", *IEEE Trans. on Information Theory,* vol. 32, no. 1, pp. 85-96, January 1986.

5. K.S. Schneider, "Optimum detection of code division multiplexed signals", *IEEE Trans. on Aerospace and Electronic Systems,* vol. 15, pp. 181-185, January 1979.

6. R. Kohno, M. Hatori, and H. Imai, "Cancellation techniques of co-channel interference in asynchronous spread spectrum multiple access systems", *Electronics and Communications in Japan,* vol. 66-A, no. 5, pp. 20-29, 1983.

7. Z. Xie, R.T. Short, and C.K. Rushforth, "A family of suboptimum detectors for coherent multi-user communications", *IEEE Journal on Selected Areas in Communications,* vol. 8, no. 4, pp. 683-690, May 1990.

8. A.J. Viterbi, "Very low rate convolutional codes for maximum theoretical performance of spread-spectrum multiple-access channels", *IEEE Journal of Selected Areas in Communications,* vol. 8, no. 4, pp. 641-649, May 1990.

9. M.K. Varanasi and B. Aazhang, "Multistage detection in asynchronous code-division multiple-access communications", *IEEE Trans. on Communications,* vol. 38, no. 4, pp. 509-519, April 1990.

10. R. Kohno et al, "Combination of an adaptive array antenna and a canceller of interference for direct-sequence spread-spectrum multiple-access system", *IEEE Journal on Selected Areas in Communications,* vol. 8, no. 4, pp. 675-682, May 1990.

11. A. Duel-Hallen, "Decorrelating decision-feedback multi-user detector for synchronous code-division multiple-access channel", *IEEE Trans. on Communications,* vol. 41, no. 2, pp. 285-290, February 1993.

12. A. Klein, G.K. Kaleh, and P.W. Baier, "Zero forcing and minimum mean-square-error equalization for multi-user detection in code-division multiple-access channels", *IEEE Trans. on Vehicular Technology,* vol. 45, no. 2, pp. 276-287, May 1996.

13. S. Affes and P. Mermelstein, "A new receiver structure for asynchronous CDMA : STAR - the spatio-temporal array-receiver", *IEEE Journal on Selected Areas in Communications,* vol. 16, no. 8, pp. 1411-1422, October 1998.

14. S. Affes, S. Gazor, and Y. Grenier, "An algorithm for multisource beamforming and multitarget tracking", *IEEE Trans. on Signal Processing,* vol. 44, no. 6, pp. 1512-1522, June 1996.

15. P. Patel and J. Holtzman, "Analysis of a simple successive interference cancellation scheme in a DS/CDMA system", *IEEE Journal on Selected Areas in Communications,* vol. 12, no. 5, pp. 796-807, June 1994.

16. J. Choi, "Partial decorrelating detection for DS-CDMA systems", *Proceedings of IEEE PIMRC '99,* Osaka, Japan, vol. 1, pp. 60-64, September 12-15, 1999.

17. S. Affes and P. Mermelstein, "Signal Processing Improvements for Smart Antenna Signals in IS-95 CDMA", Proceedings of *IEEE PIMRC* '98, Boston, U.S.A., Vol. II, pp. 967-972, September 8-11, 1998.

18. S. Affes and P. Mermelstein, "Performance of a CDMA beamforming array-receiver in spatially-correlated Rayleigh-fading multipath", *Proc. of IEEE VTC'99,* Houston, USA, May 16-20, 1999.

19. H. Hansen, S. Affes and P. Mermelstein, "A beamformer for CDMA with enhanced near-far resistance", *Proc. of IEEE ICC'99,* Vancouver, Canada, Vol. 3, pp. 1583-1587, June 6-10, 1999.

20. K. Cheikhrouhou, S. Affes, and P. Mermelstein, "Impact of synchronization on receiver performance in wideband CDMA networks", *Proc. of 34th Asilomar Conference on Signals, and Computers,* Pacific Grove, USA, to appear, October 29-November 1, 2000.

21. S. Affes, A. Louzi, N. Kandil, and P. Mermelstein, "A High Capacity CDMA Array-Receiver Requiring Reduced Pilot Power", *Proc. IEEE GLOBECOM'2000, San Francisco, USA, vol. 2, pp. 910-916, November 27-December 1, 2000.*

22. S. Affes, H. Hansen, and P. Mermelstein, "Interference subspace rejection in wideband CDMA - part I: Modes for mixed power operation", *submitted to JSAC, October 2000.*

23. H. Hansen, S. Affes, and P. Mermelstein, "Interference subspace rejection in wideband CDMA - part II: Modes for high data-rate operation", *submitted to JSAC, October 2000.*

24. E.H. Dinan and B. Jabbari, "Spreading codes for direct sequence CDMA and wideband CDMA cellular networks", *IEEE Communications Magazine,* vol. 36, no. 9, pp. 48-54, September 1998.

25. R. Lupas and S. Verdu, "Near-far resistance of multiuser detectors in asynchronous channels", *IEEE Trans. on Communications,* vol 38, no. 4, pp.496-508, April 1990.

26. A. Duel-Hallen, "A family of multiuser decision-feedback detectors for asynchronous code-division multiple-access channels", *IEEE Trans. on Communications,* vol. 43, no. 5, pp. 796-807, June 1994.

27. C. Schlegel, P. Alexander, and S. Roy, "Coded asynchronous CDMA and its efficient detection", *IEEE Trans. on Information Theory,* vol. 44, no. 7, pp. 2837-2847, November 1998.

28. L.K. Rasmussen, T.J. Lim, and A.-L. Johansson, "A matrix-algebraic approach to successive interference cancellation in CDMA", *IEEE Trans. on Communications,* vol. 48, no. 1, pp. 145-151, January 2000.

29. M. Latva-aho and M.J. Juntti, "LMMSE detection for DS-CDMA systems in fading channels", *IEEE Trans. on Communications,* vol. 48, no. 2, pp. 194-199, February 2000.

30. S. Affes, H. Hansen, and P. Mermelstein, "Near-Far Resistant Single-User Channel Identification by Interference Subspace Rejection in Wideband CDMA", *Proc. of IEEE Signal Processing Workshop on Signal Processing Advances in Wireless Communications SPAWC'01,* Taoyuan, Taiwan, to appear, March 20-23, 2001.

31. S. Affes, A. Saadi, and P. Mermelstein, "Pilot-Assisted STAR for Increased Capacity and Coverage on the Downlink of Wideband CDMA Networks", *Proc. of IEEE Signal Processing Workshop on Signal Processing Advances in Wireless Communications SPAWC'01,* Taoyuan, Taiwan, to appear, March 20-23, 2001.

**Claims**

1. A receiver suitable for a base station of a CDMA communications system comprising at least one base station (11) having a transmitter and a said receiver and a multiplicity (U) of user stations ($10^1$,..., $10^U$) including a plurality (U') of user stations served by said at least one base station, each user station having a transmitter and a receiver for communicating with said at least one base station via a corresponding one of a plurality of channels ($14^I$,...,$14^U$), the base station receiver for receiving a signal (X(t)) comprising components corresponding to spread signals transmitted by the transmitters of the plurality of user stations, each of said spread signals comprising a series of symbols spread using a spreading code unique to the corresponding user station, said base station receiver **characterized by**:

   a plurality (U') of receiver modules ($20^1$,...,$20^{NI}$,$20^d$) each for deriving from successive frames of the received signal (X(t)) estimates of said series of symbols of a corresponding one of the user stations,
   preprocessing means (18) for deriving from the received signal (X(t)) a series of observation matrices ($Y_n$) each for use by each of the receiver modules (20) in a said frame to derive an estimate of a symbol of a respective one of said series of symbols, and
   means (19,44;44/1,44/2) for deriving from each observation matrix a plurality of observation vectors ($\underline{Y}_n$; $\underline{Y}_{n-1}$;

   $\underline{Z}_n^1..\underline{Z}_n^{NI}$; $\underline{Z}_n^d$) and applying each of the observation vectors to a respective one of the plurality of receiver modules ($20^1$,...,$20^{NI}$,$20^d$);
   each receiver module comprising;

   channel identification means (28) for deriving from one of the observation vectors a channel vector estimate

   $(\hat{\underline{H}}_n^1,...,\hat{\underline{H}}_n^{NI};\hat{\underline{Y}}_{0,n}^d;\hat{\underline{Y}}_{0,n-1}^i)$ based upon parameter estimates of the channel between the base station receiver and the corresponding user station transmitter;
   beamformer means ($27^1$,...,$27^{NI}$,$27^d$; $47^d$) having coefficient tuning means (50) for producing a set of weighting coefficients in dependence upon the channel vector estimate, and combining means (51,52) for using the weighting coefficients to weight respective ones of the elements of a respective one of the observation vectors and combining the weighted elements to provide a signal component estimate $(\hat{s}_n^1,...,\hat{s}_n^U)$; and

   symbol estimating means ($29^1$,...,$29^u$, $30^1$,...,$30^u$) for deriving from the signal component estimate an estimate $(\hat{b}_n^1,...,\hat{b}_n^U)$ of a symbol $(b_n^1,...,b_n^U)$ transmitted by a corresponding one of the user stations ($10^1$,..., $10^u$),

   wherein said receiver further comprises means (42,43) responsive to symbol estimates

   $(\hat{b}_n^1,...,\hat{b}_n^{NI};g^1,g^2,g^3;g^{I+1,n})$ and to channel estimates $(\mathcal{H}_n^1 ... \mathcal{H}_n^{NI}; \mathcal{H}_{n-1}^i)$ comprising at least said channel vector estimates $(\hat{\underline{H}}_n^1,...,\hat{\underline{H}}_n^{NI})$ for channels ($14^1$,...,$14^{NI}$) of a first group (I) of said plurality of user

   stations ($10^1$,... , $10^{NI}$) to provide at least one constraint matrix ($\hat{C}_n$) representing interference subspace of components of the received signal corresponding to said predetermined group, and in each of one or more receiver modules ($20A^d$) of a second group (D) of said plurality of receiver modules, the coefficient tuning means ($5OA^d$) produces said set of weighting coefficients in dependence upon both the constraint matrix ($\hat{C}_n$) and the channel vector estimates $(\hat{\underline{H}}_n^d)$ so as to tune said one or more receiver modules ($20A^d$) each towards a substantially null response to that portion of the received signal (X(t)) corresponding to said interference subspace.

2. A receiver according to claim 1, **characterized in that** said coefficient tuning means ($50A^d$) also tune said one or more receiver modules ($20A^d$), respectively, each towards a substantially unity response for the component of the received signal (X(t)) from the transmitter of the corresponding one of the user stations.

3. A receiver according to claim 1, **characterized in that** the observation vector deriving means (19;44) comprises first reshaping means (44) for reshaping the observation matrix $(Y_n)$ from the preprocessing means (18) and supplying the resulting observation vector $(\underline{Y}_n)$ to said beamformer means (47A$^d$) of each of said one or more receiver modules (20A$^d$), and wherein the means (42,43) for providing said at least one constraint matrix comprises constraints-set generating means (42A) responsive to said channel estimates $(\mathcal{H}_n^1, ..., \mathcal{H}_n^{NI}; \mathcal{H}_{n-1}^i)$ symbol estimates $(\hat{b}_n^1, ..., \hat{b}_n^{NI}; g^1, g^2, g^3; g^{I+1,n})$ corresponding to said first group for generating a plurality of constraints-set matrices $(\mathcal{C}_n^1, ..., \mathcal{C}_n^{N_c})$ together characterizing the subspace of interference attributable to said first group of user stations and the constraint matrix generating means (43A) comprises a bank of vector reshapers (48A$^1$,...,48A$^{N_c}$) for reshaping the constraints-set matrices $(\mathcal{C}_n^1, ..., \mathcal{C}_n^{N_c})$ to form columns, respectively, of the constraint matrix $(\hat{C}_n)$, the constraint matrix generating means (43A) supplying the constraint matrix to each of said coefficient tuning means (50A$^d$) of said one or more receiver modules (20$^d$) of said second group, and wherein, in each of said one or more receiver modules (20A$^d$), the channel estimation means (28A$^d$) supplies spread channel vector estimates $(\hat{\underline{Y}}_{0,n}^d)$ to the coefficient tuning means (50A$^d$) for use in updating said weighting coefficients.

4. A receiver according to claim 3, **characterized in that** said constraint matrix generating means (43A) comprises transformation means (49A) for forming an inverse matrix $(Q_n)$ in dependence upon the constraint matrix $(\hat{C}_n)$ and supplying said inverse matrix to said coefficient tuning means (50A$^d$) of said one or more receiver modules (20A$^d$), and wherein said coefficient tuning means (50A$^d$) computes said weighting coefficients in dependence upon said constraint matrix, said inverse matrix and said channel vector estimate.

5. A receiver according to claim 1, **characterized in that** the observation vector deriving means comprises a plurality of despreaders (19$^1$, ...,19$^{NI}$,19$^d$) each for using a corresponding one of the user spreading codes to despread the observation matrix $(Y_n)$ using a respective one of the spreading codes to form a user-specific post-correlation vector $(\underline{Z}_n^1, ..., \underline{Z}_n^{NI}, \underline{Z}_n^d)$ and supplying same to a respective one of the channel identification means (28$^1$,...,28$^{NI}$,28$^d$).

6. A receiver according to claim 3, further **characterized by** means (30$^1$,...,30$^{NI}$) for deriving amplitude estimates $(\psi_n^1, ..., \psi_n^{NI})$ of signal components from said first group of user stations and supplying the amplitude estimates to said constraints-set generating means as parts of said channel estimates, and wherein the constraints-set generating means (42C) comprises a plurality of respreaders (57C$^1$,...,57C$^{NI}$) each for using a corresponding one of the user spreading codes to respread a respective one of the symbol estimates $(\hat{b}_n^1, ..., \hat{b}_n^{NI})$ from the receiver modules corresponding to said first group (I) of user stations, scaling means (58C$^1$,...,58C$^{NI}$) for scaling the respread symbol estimates by the amplitudes $(\psi_n^1, ..., \psi_n^{NI})$ of the signal components corresponding to the symbol estimates $(\hat{b}_n^1, ..., \hat{b}_n^{NI})$, respectively, and a plurality of channel replication means (59C$^1$,...,59C$^{NI}$) having coefficients adjustable in dependence upon the channel vector estimates $(\underline{\hat{H}}_n^1, ..., \underline{\hat{H}}_n^{NI})$, respectively, for filtering the corresponding respread and scaled symbol estimates to provide user-specific observation matrix estimates $(\hat{Y}_{n-1}^1, ..., \hat{Y}_{n-1}^{NI})$, respectively, and means (60) for summing the user-specific observation matrices to form an observation matrix estimate $(\hat{I}_{n-1})$, and supplying same to the constraint matrix generator means (43C), the constraint matrix generator means (43C) comprising vector reshaping means for reshaping the observation matrix estimate $(\hat{I}_{n-1})$ to form an observation vector estimate $(\hat{\underline{I}}_{n-1})$ as a single column constraint matrix $(\hat{C}_n)$ for application to the coefficient tuning means (50A$^d$) of each of said receiver modules (20$^d$) of said second group (D).

7. A receiver according to claim 3, **characterized in that** the constraints-set generating means (42D) generates a number of constraints ($N_c$) equal to the number (NI) of user stations in said first group (I) and comprises a plurality of respreaders ($57D^1$,...3,$57D^{NI}$) each for using a corresponding one of the user spreading codes to respread a respective one of the symbol estimates $(\hat{b}_n^1, ..., \hat{b}_n^{NI})$ from a predetermined group (I) of said receiver modules corresponding to said selected ones of said components of the received signals, and a plurality of channel replication means ($59D^1$,...,$59D^{NI}$) having coefficients adjustable in dependence upon the channel vector estimates $(\underline{\hat{H}}_n^1, ..., \underline{\hat{H}}_n^{NI})$, respectively, for filtering the corresponding respread symbol estimates to provide a plurality of user-specific observation matrix estimates $(\hat{Y}_{n-1}^1, ..., \hat{Y}_{n-1}^{NI})$ respectively, and wherein, in the constraint matrix generator (43D), the bank of vector reshapers ($48A^1$,...,$48A^{N}$c ) reshape the user-specific observation matrix estimates to form a plurality of user-specific observation vector estimates $(\underline{\hat{Y}}_{n-1}^1, ..., \underline{\hat{Y}}_{n-1}^{NI})$, respectively, as respective columns of the constraint matrix ($\hat{C}_n$) for supply to each of the coefficient tuning means ($50A^d$) of each of said receiver modules ($20^d$) of said second group (D).

8.   A receiver according to claim 3, **characterized in that** the plurality of channel identification means ($28^1$,...,$28^{NI}$) of said first group of receiver modules ($20E^1$,...,$20E^{NI}$) provide both the channel vector estimates $(\underline{\hat{H}}_n^1, ..., \underline{\hat{H}}_n^{NI})$, respectively, and a plurality of sets of sub-channel vector estimates $(\hat{H}_n^{1,1}, ..., \hat{H}_n^{1,N_f}, ..., \hat{H}_n^{NI,1}, ..., \hat{H}_n^{NI,N_f})$, respectively, each of the channel estimates $(\mathcal{H}_n^1, ..., \mathcal{H}_n^{NI})$ comprising a respective one of the sets of sub-channel vector estimates, each of the sets of sub-channel vector estimates representing an estimate of the channel parameters of $N_f$ sub-channels of said channel between the base station and the transmitter of the corresponding one of the NI user stations in said first group, the constraints-set generator means (42E) comprises a plurality of respreaders ($57E^1$,...,$57E^{NI}$) and a plurality of channel replicators ($59E^1$,...,$59E^{NI}$) coupled to the plurality of respreaders ($57E^1$,..., $57E^{NI}$), respectively, for filtering the plurality of respread symbols $(\hat{b}_n^1, ..., \hat{b}_n^{NI})$, respectively, using respective ones of the sub-channel vector estimates $(\hat{H}_n^{1,1}, ..., \hat{H}_n^{1,N_f}, ..., \hat{H}_n^{NI,1}, ..., \hat{H}_n^{NI,N_f})$, to form a plurality ($N_c$) of constraints equal in number to $N_f NI$ and forming a plurality of user-specific sub-channel observation matrix estimates $(\hat{Y}_{n-1}^{1,1}, ..., \hat{Y}_{n-1}^{1,N_f}, ..., \hat{Y}_{n-1}^{NI,1}, ..., \hat{Y}_{n-1}^{NI,N_f})$ corresponding to the sub-channels, respectively, and, in the constraint matrix generator (43E), the bank of reshapers ($48A^1$,...,$48A^{N_c}$) reshape the sets of user-specific observation matrix estimates to form a corresponding plurality of sets of user-specific sub-channel observation vector estimates $(\underline{\hat{Y}}_{n-1}^{1,1}, ..., \underline{\hat{Y}}_{n-1}^{1,N_f}, ..., \underline{\hat{Y}}_{n-1}^{NI,1}, ..., \underline{\hat{Y}}_{n-1}^{NI,N_f})$ as respective columns of the constraint matrix ($\hat{C}_n$) for supply to each of the coefficient tuning means ($50A^d$) of each of said receiver modules ($20^d$) of said second group (D).

9.   A receiver according to claim 3, further **characterized by** hypothetical symbol estimate generating means ($63F^1$,..., $63F^{N1}$) for generating for each of said selected ones of said components a series of hypothetical symbol estimates $(g_n^1, g_n^2, g_n^3)$, wherein the constraints-set generating means (42F) comprises a plurality of respreaders ($57F^1$,..., $57F^{NI}$) each for respreading, using a corresponding one of the user spreading codes, selected sets of said hypothetical symbol estimates, and a plurality of channel replicator means ($59F^1$,...,$59F^{NI}$), respectively, for filtering the sets of respread symbol estimates, each to form a plurality ($N_c$) of constraints equal in number to $3 NI$ and forming a plurality of user-specific observation matrix estimates $(\hat{Y}_{0,n}^1, \hat{Y}_{-1,n}^1, \hat{Y}_{+1,n}^1, ..., \hat{Y}_{0,n}^{NI}, \hat{Y}_{-1,n}^{NI}, \hat{Y}_{+1,n}^{NI})$, the plurality of channel replication means ($59F^1$,...,$59F^{NI}$) having coefficients adjustable in dependence upon the channel vector estimates $(\underline{\hat{H}}_n^1, ..., \underline{\hat{H}}_n^{NI})$, respectively, and, in the constraint matrix generating means (43F), the bank of reshapers ($48A^1$,..., $48A^{Nc}$) reshape the sets of user-specific observation matrix estimates to form a plurality of user-specific observation vector estimates $(\hat{\underline{Y}}_{0,n}^{1}, \hat{\underline{Y}}_{-1,n}^{1}, \hat{\underline{Y}}_{+1,n}^{1}, ..., \hat{\underline{Y}}_{0,n}^{NI}, \hat{\underline{Y}}_{-1,n}^{NI}, \hat{\underline{Y}}_{+1,n}^{NI}),$ respectively, as respective columns of the constraint matrix $(\hat{C}_{n})$ for supply to each of the coefficient tuning means (50A$^{d}$) of each of said receiver modules (20$^{d}$) of said second group (D).

10. A receiver according to claim 3, <u>further **characterized by**</u> means (63G$^{1}$,... ,63G$^{NI}$) for providing hypothetical symbol estimates $(g_{n}^{l,1,n})$ and wherein the constraints-set generating means uses a combination of said symbol estimates $(\hat{b}_{n}^{1},...,\hat{b}_{n}^{NI})$ and said hypothetical symbol values in producing said set of user-specific observation matrix estimates.

11. A receiver according to claim 10, **characterized in that** the constraints-set generating means (42G) comprises a plurality of respreaders (57G$^{1}$,...,57G$^{NI}$) each for respreading, using a corresponding one of the user spreading codes, a respective one of the symbol estimates $(\hat{b}_{n}^{1},...,\hat{b}_{n}^{NI})$ and a said hypothetical symbol estimates $(g_{n}^{l,1,n})$ to provide a plurality of respread symbol estimates, and a plurality of channel replicator means (59G$^{1}$,...,59G$^{NI}$), respectively, for filtering the respread symbol estimates to form a plurality $(N_{c})$ of constraints equal in number to $2NI$ and forming a plurality of user-specific observation matrix estimates $(\hat{Y}_{r,n}^{1}, \hat{Y}_{+1,n}^{1}, ..., \hat{Y}_{r,n}^{NI}, \hat{Y}_{+1,n}^{NI}),$ the plurality of channel replication means (59F$^{1}$,...,59F$^{NI}$) having coefficients adjustable in dependence upon the channel vector estimates $(\hat{\underline{H}}_{n}^{1}, ..., \hat{\underline{H}}_{n}^{NI}),$ respectively, and, in the constraint matrix generating means (43G), the bank of vector reshapers (48A$^{1}$,...,48A$^{N_{c}}$) reshape the user-specific observation matrix estimates to form a corresponding plurality of user-specific observation vector estimates $(\hat{\underline{Y}}_{r,n}^{1}, \hat{\underline{Y}}_{+1,n}^{1}, ..., \hat{\underline{Y}}_{r,n}^{NI}, \hat{\underline{Y}}_{+1,n}^{NI}),$ respectively, as respective columns of the constraint matrix $(\hat{C}_{n})$ for supply to each of the coefficient tuning means (50A$^{d}$) of each of said receiver modules (20$^{d}$) of said second group (D).

12. A receiver according to claim 1, **characterized in that** the observation vector deriving means comprises a plurality of despreaders (19$^{1}$,...,19$^{NI}$,19$^{d}$) each for despreading the observation matrix $(Y_{n})$ using a corresponding one of the user spreading codes to produce a corresponding one of a plurality of post-correlation observation vectors $(\underline{Z}_{n}^{1}, ..., \underline{Z}_{n}^{NI}, \underline{Z}_{n}^{d})$ and supplying the post-correlation observation vectors to both the channel identification means and the coefficient tuning means of the beamformer means of each of said one or more receiver modules, said elements of the observation vector weighted by said combining means of said one or more receiver modules being elements of the corresponding post-correlation observation vector, and wherein the constraint matrix providing means (42B, 43B) comprises means (42B) responsive to said channel estimates $(\mathcal{H}_{n}^{1}, ..., \mathcal{H}_{n}^{NI}; \mathcal{H}_{n-1}^{i})$ and to symbol estimates $(\hat{b}_{n}^{1}, ..., \hat{b}_{n}^{NI}; g^{1}, g^{2}, g^{3}; g^{l,1,n})$ corresponding to said first group (I) of user stations for providing a plurality of constraints-sets matrices $(\mathcal{C}_{n})$ together characterizing the subspace of interference attributable to said spread signals of said first group of user stations, and constraint matrix generating means (43B) comprising a plurality of user-specific constraint matrix generators (43B$^{d}$) each associated with a respective one of said one or more receiver modules (20$^{d}$), each user-specific matrix generator (43B$^{d}$) having despreading means (55B $^{d,1}$,..., 55B$^{d,N_{c}}$) for using the corresponding user spreading code of the specific user to despread each of the user-specific constraints-set matrices respectively, to form a respective column of a corresponding one of a plurality of user-specific post-correlation constraint matrices $(\hat{C}_{PCM,n}^{d}),$ the plurality of user-specific constraint matrix generating means (43B$^{d}$) supplying said plurality of user-specific post-correlation constraint matrices to the coefficient tuning means of the respective one of said one or more receiver modules (20B$^{d}$).

13. A receiver according to claim 12, <u>further</u> **characterized by** means (30[1],...,30[NI]) for deriving amplitude estimates $(\hat{\psi}_n^1, ..., \hat{\psi}_n^{NI})$ of signal component estimates of said first group of user stations and supplying the amplitude estimates to said constraints-set generating means as parts of said channel estimates, and wherein the constraints-set generating means (42C) comprises a plurality of respreaders (57C[1],...,57C[NI]) each for using a corresponding one of the user spreading codes to respread a respective one of the symbol estimates from receiver modules (20[1],...,20[NI]) corresponding to said first group of user stations, scaling means (58C[1],...,58C[NI]) for scaling each of the respread symbol estimates by said amplitudes $(\hat{\psi}_n^1, ..., \hat{\psi}_n^{NI})$, respectively, a plurality of channel replication means (59C[1],..., 59C[NI]) having coefficients adjustable in dependence upon the channel vector estimates $(\hat{\underline{H}}_n^1, ..., \hat{\underline{H}}_n^{NI})$, respectively, for filtering the corresponding respread and scaled symbol estimates to provide user-specific observation matrix estimates $(\hat{Y}_{n-1}^1, ..., \hat{Y}_{n-1}^{NI})$, respectively, and means (60) for summing the user-specific observation matrix estimates to form an observation matrix estimate ($\hat{I}_{n-1}$) and supplying same to each of the user-specific constraint matrix generators (43H[d]) of said one or more receiver modules of said second group, each of the user-specific constraint matrix generators (43H[d]) comprising despreading means (55B[d]) for despreading the observation matrix estimate ($\hat{I}_{n-1}$) using the corresponding user spreading code to form a respective one $(\hat{\underline{I}}_{PCM,n-1}^d)$ of a plurality of post-correlation user-specific observation vector estimates each as a single column respective constraint matrix $(\hat{C}_{PCM,n}^d)$, for use by the associated one of the coefficient tuning means (50B[d]) in said second group (D).

14. A receiver according to claim 12, **characterized in that** the constraints-set generating means (42D) comprises a plurality of respreaders (57D[1],...,57D[NI]) each for respreading a respective one of the symbol estimates $(\hat{b}_n^1, ..., \hat{b}_n^{NI})$ from a predetermined group (I) of said receiver modules corresponding to said selected ones of said components of the received signals, and a plurality of channel replication means (59D[1],...,59D[NI]) having coefficients adjustable in dependence upon the channel vector estimates $(\hat{\underline{H}}_n^1, ..., \hat{\underline{H}}_n^{NI})$, respectively, for filtering the corresponding respread symbol estimates to provide a plurality of user-specific observation matrix estimates $(\hat{Y}_{n-1}^1, ..., \hat{Y}_{n-1}^{NI})$ and wherein, in each of the user-specific constraint matrix generating means (43I[d]), the despreading means *(55B[d,1],..., 55B[d,Nc])* despreads the user-specific observation matrix estimates to form a plurality of user-specific observation vector estimates $(\hat{\underline{Y}}_{n-1}^1, ..., \hat{\underline{Y}}_{n-1}^{NI})$ respectively, as respective columns of a respective user-specific constraint matrix ($\hat{C}_{PCM,n}$) for supply to the associated one of the coefficient tuning means (50B[d]) of said one or more receiver modules (20[d]) in said second group (D).

15. A receiver according to claim 12, **characterized in that** the plurality of channel identification means (28[1],...,28[NI]) of said first group (I) of receiver modules (20E[1],... ,20E[NI]) generate both said channel vector estimates $(\hat{\underline{H}}_n^1, ..., \hat{\underline{H}}_n^{NI})$, respectively, and a plurality of sets of sub-channel vector estimates $(\hat{H}_n^{1,1}, ..., \hat{H}_n^{1,N_f}, ..., \hat{H}_n^{NI,1}, ..., \hat{H}_n^{NI,N_f})$, respectively, each of the channel vector estimates $(\hat{\underline{H}}_n^1, ..., \hat{\underline{H}}_n^{NI})$, comprising a respective one of the sets of sub-channel vector estimates, each of the sets of sub-channel vector estimates representing an estimate of the channel parameters of sub-channels of said channel between the base station and the transmitter of the corresponding user station, the constraints-set generator means (42E) comprises a plurality of respreaders (57E[1],...,57E[NI]) and a plurality of channel replicators (59E[1],...,59E[NI]) coupled to the plurality of respreaders (57E[1],...,57E[NI]), respectively, for filtering the plurality of respread symbols $(\hat{b}_n^1, ..., \hat{b}_n^{NI})$, respectively, of said first group using respective ones of the sub-channel vector estimates

$(\hat{H}_n^{1,1},...,\hat{H}_n^{1,N_f},...,\hat{H}_n^{NI,1},...,\hat{H}_n^{NI,N_f})$, to form a plurality of sets of user-specific observation matrix estimates $(\hat{Y}_{n-1}^{1,1}...,\hat{Y}_{n-1}^{1,N_f}, ... ,\hat{Y}_{n-1}^{NI,1},...,\hat{Y}_{n-1}^{NI,N_f})$, the sets corresponding to the sub-channels, respectively, and, in each of the user-specific constraint matrix generators (43K$^d$), the despreading means (55B$^{d,1}$,...,55B$^{d,N_c}$) despreads the sets of user-specific observation matrix estimates to form a corresponding plurality of sets of user-specific observation vector estimates $(\hat{\underline{I}}_{PCM,n-1}^{1,1},......,\hat{\underline{I}}_{PCM,n-1}^{d,NI,N_f})$, the sets forming respective columns of a respective user-specific constraint matrix $(\hat{C}_{PCM,n}^d)$ for supply to the associated one of the coefficient tuning means (50B$^d$) of the one or more receiver modules (20$^d$) in said second group (D).

16. A receiver according to claim 12, <u>further **characterized by**</u> hypothetical symbol estimate generating means (63L$^1$,..., 63L$^{NI}$) for generating for each of said selected ones of said components a series of hypothetical symbol estimates $(g_n^1, g_n^2, g_n^3)$, wherein the constraints-set generating means (42L) comprises respreading means (57L$^1$,...,57L$^{NI}$) for respreading, using a corresponding one of the user spreading codes for said first group, selected sets of said hypothetical symbol estimates, and channel replicator means (59L$^1$, ... ,59L$^{NI}$), respectively, for filtering the sets of respread hypothetical values, each to form one of a plurality of sets of user-specific observation matrix estimates $(\hat{Y}_{0,n}^1, \hat{Y}_{-1,n}^1, \hat{Y}_{+1,n}^1, ..., \hat{Y}_{0,n}^{NI}, \hat{Y}_{-1,n}^{NI}, \hat{Y}_{+1,n}^{NI})$, the plurality of channel replication means (59L$^1$,...,59L$^{NI}$) having co-efficients adjustable in dependence upon the channel vector estimates $(\underline{\hat{H}}_n^1, ..., \underline{\hat{H}}_n^{NI})$, respectively, and, in each of the user-specific constraint matrix generating means (43L$^d$), the despreading means (55B$^{d,1}$,...,55B$^{d,N_c}$) despreads the sets of user-specific observation matrix estimates to form a corresponding plurality of sets of user-specific observation vector estimates $(\hat{\underline{I}}_{PCM,n}^{d,1,1}, \hat{\underline{I}}_{PCM,n}^{d,1,2}, \hat{\underline{I}}_{PCM,n}^{d,1,3}, ..., \hat{\underline{I}}_{PCM,n}^{d,NI,1}, \hat{\underline{I}}_{PCM,n}^{d,NI,2}, \hat{\underline{I}}_{PCM,n}^{d,NI,3})$, respectively, as respective columns of a respective user-specific constraint matrix $(\hat{C}_{PCM,n}^d)$ for supply to the coefficient tuning means (50B$^d$) of the associated one of said one or more receiver modules (20$^d$) in said second group (D).

17. A receiver according to claim 12, <u>further **characterized by**</u> means (63M$^1$,...,63M$^{NI}$) for providing hypothetical symbol estimates $(g_n^{l+1,n})$ and wherein the constraints-set generating means (42M) uses a combination of said symbol estimates $(\hat{b}_n^1,...,\hat{b}_n^{NI})$ and said hypothetical symbol estimates in producing said sets of user-specific observation matrix estimates.

18. A receiver according to claim 17, <u>**characterized in that**</u> the constraints-set generating means (42M) comprises a respreading means (57M$^1$,...,57M$^{NI}$) for respreading, using the symbol estimates $(\hat{b}_n^1,...,\hat{b}_n^{NI})$ and said hypothetical symbol estimates $(g_n^{l+1,n})$ using respective ones of the user spreading codes, to provide a plurality of respread symbol estimates, and channel replicator means (59M$^1$,... ,59M$^{NI}$) for filtering the respread symbol estimates to form a plurality of pairs of user-specific observation matrix estimates $(\hat{Y}_{r,n}^1, \hat{Y}_{+1,n}^1, ..., \hat{Y}_{r,n}^{NI}, \hat{Y}_{+1,n}^{NI})$, each pair corresponding to one of said first group of user stations, the channel replication means (59M$^1$,...,59M$^{NI}$) having coefficients adjustable in dependence upon the channel vector estimates $(\underline{\hat{H}}_n^1, ..., \underline{\hat{H}}_n^{NI})$, respectively, and, in each of the user-specific constraint matrix generating means (43M$^d$), the despreading means (55B$^{d,1}$,...,55B$^{d,N_c}$) despreads the user-specific observation matrix estimates to form a corresponding plurality of user-specific observation

vector estimates $(\hat{\underline{I}}_{PCM,n}^{d,1,k_1}, \hat{\underline{I}}_{PCM,n}^{d,1,K_1}, ..., \hat{\underline{I}}_{PCM,n}^{d,NI,k_1}, \hat{\underline{I}}_{PCM,n}^{d,NI,k_1})$, respectively, as respective columns of a corresponding user-specific constraint matrix ($\hat{C}_{PCM,n}$) for supply to the coefficient tuning means (50B$^d$) of the associated one of said one or more receiver modules (20$^d$) in said second group (D) .

19. A receiver according to claim 1, **characterized in that**:

   at least one (20$^i$) of said one or more receiver modules both supplies symbol estimates to said constraint-matrix generating means (42P,43P) for use in deriving said constraint matrices and uses said constraint matrices in tuning weighting coefficients of its beamformer means (47P$^i$),
   said at least one of said one or more receiver modules further comprising a second beamformer means (27P$^i$) having second combining means and second coefficient tuning means for tuning the weighting coefficients of the second combining means;
   the observation vector deriving means (19,44;44/1,44/2) further comprising second reshaping means (44/2) for reshaping said observation matrix ($Y_n$) and supplying a resulting second observation vector ($\underline{Y}_n$) to said second combining means (27P$^i$) and delay means (45) for delaying the first observation vector ($\underline{Y}_{n-1}$) relative to the second observation vector ($\underline{Y}_n$);
   the second coefficient tuning means also being arranged to tune the weighting coefficients of the second combining means in dependence upon the channel vector estimate ($\hat{\underline{Y}}_{0,n-1}^i$) used by the first coefficient tuning means in beamformer (47P$^i$); and wherein

   the channel identification means (28P$^i$) of said at least one of the one or more receiver modules derives the channel vector estimate $(\hat{\underline{Y}}_{0,n-1}^i)$ from the delayed first observation vector ($\underline{Y}_{n-1}$) and supplies said channel vector estimate to the respective coefficient tuning means of the first combining means and the second combining means for use in updating their weighting coefficients and supplies to the constraint matrix generator means (42P,43P) said channel estimates $(\mathcal{H}_{n-1}^i)$ for use in deriving the constraint matrix;
   the first combining means (47P$^i$;51,52) and second combining means (27P$^i$;51,52)

   use their respective weighting coefficients to weight respective ones of the elements of the delayed first observation vector and the second observation vector, respectively, and combine the weighted elements of the respective first and second observation vectors to provide first signal component estimate $(\hat{s}_{n-1}^i)$ and second signal component estimate $(\hat{s}_{MRC,n}^i)$, respectively;
   said at least one of said one or more receiver modules further comprises second symbol estimating means (29P/2$^i$) for deriving from the second signal component estimate $(\hat{s}_{MRC,n}^i)$ a symbol estimate $(\hat{b}_{MRC,n}^i)$ and supplying said symbol estimate $(\hat{b}_{MRC,n}^i)$ to the constraint matrix providing means (42P,43P);
   the constraint means (42P,43P) comprises constraints-set generating means (42P) for generating a plurality of constraints-set matrices ($\mathcal{C}_{n-1}$) together characterizing the subspace of interference attributable to said first group of user station signals and the constraint matrix generating means (43P) comprises vector reshaping means (48A$^1$,...,48A$^{Nc}$) for reshaping the constraints-set matrices ($\mathcal{C}_n^1, ..., \mathcal{C}_n^{N_c}$) form columns, respectively, of the constraint matrix ($\hat{C}_{n-1}$), the constraint matrix generating means (43P) supplying the constraint matrix to each of said coefficient tuning means (50P$^d$) of said one or more receiver modules (20$^d$).

20. A receiver according to claim 19, **characterized in that** said at least one of said one or more receiver modules further comprises amplitude estimation means (30P$^i$) for providing amplitude estimates $(\psi_{n-1}^i)$ of signal components from said first group of user stations and supplying the amplitude estimates to the constraints-set generating means (42P) as parts of the channel estimates $(\mathcal{H}_{n-1}^{i})$.

**21.** A receiver according to claim 19, **characterized in that** said at least one of the one or more receiver modules is arranged to perform for each frame a plurality of iterations (#1, #2, ..., #$N_s$) to derive each symbol estimate, the arrangement being such that:

in each of the iterations of a particular frame (n), the constraints-set generator (42P) uses the channel estimates $(\mathcal{H}_{n-1}^{i})$, a first symbol estimate $(\hat{b}_{n-2}^{i})$ and a second symbol estimate $(\hat{b}_{MRC,n}^{i})$ from the first and second beamformer means, respectively of said one or more receiver modules,
in a first iteration, the constraint matrix providing means (42P,43P) generates a first-iteration constraint matrix $(\hat{C}_{n-1}(1))$ in dependence also upon a previous symbol estimate $(\hat{b}_{MRC,n-1}^{i})$ previously generated by each of said second beamformers of said one or more receiver modules and supplies said first-iteration constraint matrix $(\hat{C}_{n-1}(1))$ to the coefficient tuning means of the first beamformer means (47P$^i$) for use, with the spread channel estimate $\hat{Y}_{0,n-1}^{i}$, to tune the coefficients of the first beamformer means (47P$^i$) for weighting each element of the delayed first observation vector ($\underline{Y}_{n-1}$) to produce a first-iteration signal component estimate and the decision rule unit (29P/1$^i$) processes said first-iteration signal component estimate to produce a first-iteration symbol estimate $(\hat{b}_{n-1}^{i}(1))$,
in a second iteration, the constraint matrix generating means (43P) uses said first-iteration symbol estimate $(\hat{b}_{n-1}^{i}(1))$, instead of the previous symbol estimate $(\hat{b}_{MRC,n-1}^{i})$ to tune the weighting coefficients and derive a second-iteration constraint matrix $(\hat{C}_{n-1}(2))$ for use by the first beamformer means and first decision rule means to produce a second-iteration symbol estimate $(\hat{b}_{n-1}^{i}(2))$, and
in a final iteration of a total of N, iterations, the constraint matrix providing means (42P,43P) uses a penultimate-iteration symbol estimate $(\hat{b}_{n-1}^{i}(N_s-1))$ produced by the first decision rule means (29P/1$^i$) in the penultimate iteration to provide a final-iteration constraint matrix $(\hat{C}_{n-1}(N_s))$ for use by the first combining means and first decision rule means to provide a final iteration symbol estimate $(\hat{b}_{n-1}^{i}(N_s))$ as the target Symbol estimate of that frame (u) for output as the symbol estimate $(\hat{b}_{n-1}^{i})$, and wherein the constraints-set generator (42P) buffers the symbol estimate $(\hat{b}_{n-1}^{i})$ for use in every iteration of the next frame (*n+1*) instead of symbol estimate $\hat{b}_{n-2}^{i}$, and the constraints-set generator (42P) uses a new symbol estimate $(\hat{b}_{MRC,n+1}^{i})$ from said second beamformer (27P$^i$) for all iterations of the new frame, and uses the previous symbol estimate $(\hat{b}_{MRC,n}^{i})$ from said second beamformer means (27P$^i$) in only the first iteration of said new frame, said previous symbol estimate being buffered as required and other variables being incremented appropriately.

**22.** A receiver according to claim 1, **characterized in that** said plurality of receiver modules ($20^1$,...., $20^{NI}$,$20^d$) comprises a first set (I) of receiver modules ($20^1$,...,$20^{NI}$) for relatively strong user signals and that contribute at least respective sets of said channel estimates to said constraints-set generator (42) for use in deriving said constraint matrices but do not use said constraint matrices to update the weighting coefficients of their respective beamformer means, and a second set (D) of receiver modules ($20^d$) for relatively weaker user signals and that use the constraint matrices to update the weighting coefficients of their respective beamformer means but do not contribute either channel estimates or symbol estimates to the constraints-set generator (42) for use in deriving said constraint matrices.

**23.** A receiver according to claim 22, **characterized in that** said plurality of receiver modules further comprises at least one further set (M1) of at least one receiver module ($20^i$) as defined in claim 19 for a user signal having a signal strength that is intermediate the relatively strong and relatively weaker user signals and that both supplies at least channel estimates to said constraint-matrix generating means (42P,43P) for use by receiver modules in other sets in deriving said constraint matrices and uses said constraint matrices derived from constraints supplied by receiver modules in its own set in tuning weighting coefficients of its beamformer means (47P$^i$).

24. A receiver according to claim 22, **characterized in that** said plurality of receiver modules further comprises at least one further set (M2) of at least one receiver module (20$^i$) as defined in claim 19 for a user signal having a signal strength that is intermediate the relatively strong and relatively weaker user signals and that both supplies at least channel estimates to said constraint-matrix generating means (42P,43P) for use in deriving said constraint matrices and, in tuning weighting coefficients of its beamformer means (47P$^i$), uses said constraint matrices derived from constraints supplied by receiver modules in either or both of its own set and other sets.

25. A receiver according to claim 23, **characterized in that** the receiver modules are arranged in hierarchical order according to signal power and each lower power receiver module uses a constraint matrix formed from constraints-sets supplied by each of the higher power receiver modules.

26. A receiver according to claim 24, **characterized in that** the receiver modules are arranged in hierarchical order according to signal power and each lower power receiver module uses a constraint matrix formed from constraints-sets supplied by each of the higher power receiver modules.

27. A receiver according to claim 23, **characterized in that** each of the receiver modules in one of said sets is different from the receiver modules in the other sets.

28. A receiver according to claim 23, **characterized in that** the receiver modules in one of said second and further sets of receiver modules differ from each other.

29. A receiver according to claim 3, **characterized in that** said beamformer means of said at least one of the one or more receiver modules comprise projector means (100$^d$) for multiplying a projection $(\mathbf{\Pi}_n^d)$ with the observation vector ($\underline{Y}_n$) to form an interference-reduced observation vector $(\underline{Y}_n^{\Pi,d})$, and a residual beamformer (27Q$^d$) responsive to the projection $(\mathbf{\Pi}_n^d)$ and to the channel vector estimate $(\underline{\hat{Y}}_{0,n}^d)$ to produce said signal component estimate $(\hat{s}_n^d)$, and the channel identification means (28Q$^d$) derives the channel vector estimate $(\underline{\hat{Y}}_{0,n}^d)$ from the interference-reduced observation vector $(\underline{Y}_n^{\Pi,d})$.

30. A receiver according to claim 29, **characterized in that** said at least one of the one or more receiver modules further comprises reshaping means (102Q$^d$) for reshaping the interference-reduced observation vector $(\underline{Y}_n^{\Pi,d})$ to form an interference-reduced observation matrix $(Y_n^{\Pi,d})$, and a despreader (19$^d$) for despreading the interference-reduced observation matrix $(Y_n^{\Pi,d})$, with the corresponding user spreading code to form a post-correlation reduced-interference observation vector $(\underline{Z}_n^{\Pi,d})$ for use by the channel identification means (28Qd) in deriving said channel vector estimate.

31. A receiver according to claim 3, for a base station in a CDMA system in which at least one of the user stations uses a plurality of different spreading codes to spread respective ones of said series of symbols for simultaneous transmission, such that the component of the received signal (X(t)) corresponding to that user station comprises a corresponding plurality of spread signals, and charcterized in that, in said at least one of the one or more receiver modules (20$^d$) , said beamformer means (47$R^{d,1}$,..., 47$R^{d,N_m}$) uses different sets of weighting coefficients to weight each element of said observation vector ($\underline{Y}_n$) to form a plurality of signal component estimates $(\hat{s}_n^{d,1},...,\hat{s}_n^{d,N_m})$ corresponding to said respective ones of said series of symbols and the symbol estimating means derives from the plurality of signal component estimates $(\hat{s}_n^{d,1},...,\hat{s}_n^{d,N_m})$ a corresponding plurality of symbol estimates $(\hat{b}_n^{d,1},...,\hat{b}_n^{d,N_m})$, said observation vector deriving means comprises means ($19^{d,1}$,..., $19^{d,N_m}$) for deriving from the observation matrix a plurality of post-correlation observation vectors $(\underline{Z}_n^{d,1},...,\underline{Z}_n^{d,N_m})$ each corresponding to a respective one of the plurality of different spreading codes, the channel identification means ($28R^d$) derives from said plurality of post-correlation observation vectors $(\underline{Z}_n^{d,1},...,\underline{Z}_n^{d,N_m})$ a corresponding plurality of sets of channel vector estimates $(\hat{\underline{Y}}_{0,n}^{},...,\hat{\underline{Y}}_{0,n}^{d,N_m})$ and supplies the sets to said beamformer means ($47R^{d,1}$,..., $47R^{d,N_m}$) and the coefficient tuning means of the beamformer means ($47R^{d,1}$,..., $47R^{d,N_m}$) uses the sets of channel vector estimates $(\hat{\underline{Y}}_{0,n}^{},...,\hat{\underline{Y}}_{0,n}^{d,N_m})$ to derive said different sets of weighting coefficients, respectively.

**32.** A receiver according to claim 31, **characterized in that** the means ($19^{d,1}$,...,$19^{d,N_m}$) for deriving the plurality of observation vectors comprises despreading means for despreading said observation matrix ($Y_n$) using one or more of said plurality of different spreading codes to form a plurality of post-correlation observation vectors $(\underline{Z}_n^{d,1},...,\underline{Z}_n^{d,N_m})$ for use by the channel identification means ($28R^d$) in deriving said plurality of spread channel vector estimates $(\hat{\underline{Y}}_{0,n}^{d,1},...,\hat{\underline{Y}}_{0,n}^{d,N_m})$.

**33.** A receiver according to claim 32, **characterized in that** the observation vector deriving means further comprises also supplies said plurality of post-correlation observation vectors $(\underline{Z}_n^{d,1},...,\underline{Z}_n^{d,N_m})$ to said beamformer means ($47R^{d,1}$,...,$47R^{d,N_m}$), and the coefficient tuning means therein uses said sets of weighting coefficients to weight elements of respective ones of the plurality of post-correlation observation vectors, and each of the user-specific constraint-matrix generator means comprises despreading means ($55B^{d,1}$, ..., $55B^{d,N_m}$) for despreading the user-specific constraints-set matrices using one or more of the plurality of different spreading codes.

**34.** A receiver according to claim 31, **characterized in that** said means for deriving said plurality of observation vectors comprises despreading means ($19^{d,\delta}$) for weighting said plurality of different spreading codes by the plurality of symbol estimates $(\hat{b}_n^{d,1},...,\hat{b}_n^{d,N_m})$, respectively, to form a single spreading code and despreading the observation matrix ($Y_n$) using said single spreading code to produce a compound post-correlation observation vector $(\underline{Z}_n^{d,\delta})$ for use by the channel identification means ($28R^d$) to derive said plurality of sets of channel vector estimates $(\hat{\underline{Y}}_{0,n}^{},...,\hat{\underline{Y}}_{0,n}^{d,N_m})$ .

**35.** A receiver according to claim 34, **characterized in that** the observation vector deriving means also supplies said plurality of post-correlation observation vectors $(\underline{Z}_n^{d,1},...,\underline{Z}_n^{d,N_m})$ to said beamformer means ($47R^{d,1}$,...,$47R^{d,N_m}$), and the coefficient tuning means therein uses said sets of weighting coefficients to weight elements of respective ones of the plurality of post-correlation observation vectors, and each of the user-specific constraint-matrix generator means comprises despreading means ($55B^{d,1}$,...,$55B^{d,N_m}$) for despreading the user-specific constraints-set matrices using the plurality of different spreading codes.

**36.** A receiver according to claim 3, **characterized in that** each of said plurality of receiver modules ($20^1$,...,$20^{NI}$,$20^d$) operates with a frame duration equal to integer multiples ($F_1$,...,$F_{NI}$,$F_d$) of symbol periods of the corresponding users and uses a plurality ($F_1$,...,$F_{NI}$,$F_d$) of different segments of the same long spreading code equal to said the number of symbol periods in said frame, in said at least one of the one or more receiver modules ($20^d$), said beamformer means ($47S^{d,1}$,..., $47S^{d,F_d}$) uses different sets of weighting coefficients to weight each element of said observation

vector ($\underline{Y}_n$) to form a plurality ($F_d$) of signal component estimates $(\hat{s}_n^{d,1},...,\hat{s}_n^{d,F_d})$, respectively, and the symbol estimating means ($29S^{d,l},...,29S^{d,F_d}$) derives from the plurality of signal component estimates $(\hat{s}_n^{d,1},...,\hat{s}_n^{d,F_d})$ a corresponding plurality of symbol estimates $(\hat{b}_n^{d,1},...,\hat{b}_n^{d,F_d})$, said observation vector deriving means deriving from the observation matrix one or more of a plurality of post-correlation observation vectors $(\underline{Z}_n^{d,1},...,\underline{Z}_n^{d,F_d})$ the channel identification means ($28S^d$) derives from said post-correlation observation vectors $(\underline{Z}_n^{d,1},...,\underline{Z}_n^{d,F_d})$ a corresponding plurality of spread channel vector estimates $(\underline{\hat{Y}}_{0,n}^{d,1},...,\underline{\hat{Y}}_{0,n}^{d,F_d})$, and supplies said spread channel vector estimates $(\underline{\hat{Y}}_{0,n}^{d,1},...,\underline{\hat{Y}}_{0,n}^{d,F_d})$, to said beamformer means *(47S^{d,1},...,47S^{d,F_d})*, each spread channel vector estimate being spread by a respective one of the segments of the long spreading code, and the coefficient tuning means of the beamformer means ($47S^{d,1},..., 47S^{d,F_d}$) uses said channel vector estimates $(\underline{\hat{Y}}_{0,n}^{d,1},...,\underline{\hat{Y}}_{0,n}^{d,F_d})$ to derive said different sets of weighting coefficients.

**37.** A receiver according to claim 36, **characterized in that** the means ($19S^{d,1},..., 19S^{d,F_d}$) for deriving one or more of the plurality of post-correlation observation vectors comprises despreading means for despreading said observation matrix *($Y_n$)* using one or more of said different segments of the same long spreading code such that said plurality of observation vectors comprise a plurality of post-correlation observation vectors $(\underline{Z}_n^{d,1},...,\underline{Z}_n^{d,F_d})$ one or more thereof for use by the channel identification means ($28S^d$).

**38.** A receiver according to claim 37, **characterized in that** the observation vector deriving means also supplies said plurality of post-correlation observation vectors $(\underline{Z}_n^{d,1},...,\underline{Z}_n^{d,F_d})$ to said beamformer means ($47S^{d,1},...,47S^{d,F_d}$), and the coefficient tuning means therein uses said sets of weighting coefficients to weight elements of respective ones of the plurality of post-correlation observation vectors, and each of the user-specific constraint-matrix generator means comprises despreading means *($55B^{d,1},...,55B^{d,F_d}$)* for despreading the user-specific constraints-set matrices using the corresponding one of the plurality ($F_d$) of different spreading code segments.

**39.** A user station receiver for a CDMA communications system comprising a plurality (NB) of base stations (11) and a multiplicity (U) of user stations ($10^1,...,10^U$), at least a plurality (U') of the user stations being in a cell associated with one of said base stations and served thereby, said one base station having a plurality of transmitter modules for spreading user signals for transmission to the plurality (U') of user stations, respectively, and a receiver for receiving spread user signals transmitted by the plurality (U') of user stations, the user stations each having a receiver for receiving the corresponding spread user signal transmitted by the base station, said plurality (U') of user stations each having a unique spreading code assigned thereto for use by the user station and the corresponding one of the base station transmitter modules to spread the user signals of that user for transmission,
the spread user signals transmitted from the base station transmitter modules to a particular one of the plurality (U') of user stations propagating via a plurality of channels ($14^1,...,14^{U'}$), respectively,
the receiver of a particular one of said plurality (U') of user stations receiving a signal (X(t)) comprising components corresponding to spread user signals for said particular user station and spread user signals transmitted by other transmitter modules of said plurality (NB) of base stations for other users, each of said spread user signals comprising a series of symbols spread using the spreading code associated with the corresponding one of the user stations, **characterized in that** said user station receiver comprises:

a plurality (NB) of receiver modules ($20^{v'}$) each for deriving from successive frames of the received signal (X(t)) estimates of sets of said series of symbols from a corresponding one of the base stations,
preprocessing means (18) for deriving from the received signal (X(t)) a series of observation matrices ($Y_n$) each for use by each of the receiver modules ($20^{v'}$) in a said frame to derive estimates of sets of said symbols, and means (19,44) for deriving from each observation matrix a plurality of sets of observation vectors

$(\underline{Y}_n^{v',1,1}, \ldots, \underline{Y}_n^{v',NI,F_{NI}}; \underline{Z}_n^{v',1,1}, \ldots, \underline{Z}_n^{v',NI,F_{NI}})$ and applying each of the

sets of observation vectors to a respective one of the plurality of receiver modules ($20^v$);
each receiver module comprising;

channel identification means ($28T^v$) for deriving from the respective one of the sets of observation vectors a set of spread channel vector estimates $(\hat{\underline{Y}}_{0,n}^{v',1,1}, \ldots, \hat{\underline{Y}}_{0,n}^{v',NI,F_{NI}})$ based upon parameter estimates of the channel between the corresponding one of the base stations and said user station;
beamformer means ($47T^{v,1'1}, \ldots, 47T^{v'NI,F_{NI}}$) having coefficient tuning means for producing sets of weighting coefficients in dependence upon the sets of channel vector estimates, respectively, and combining means for using each of the sets of weighting coefficients to weight respective ones of the elements of a respective one of the observation vectors and combining the weighted elements to provide a corresponding set of signal component estimates $(\hat{s}_n^{v',1,1}, \ldots, \hat{s}_n^{v',NI,F_{NI}})$ and

symbol estimating means ($29T^{v',1,1}, \ldots, 29T^{v',NI,FNI}$) for deriving from the set of signal component estimates a set of estimates $(\hat{b}_n^{v',1,1}, \ldots, \hat{b}_n^{v',NI,F_{NI}})$ of symbols spread by the corresponding one of the transmitter modules and transmitted by the base station;

said user station r                                    ,43) responsive to said
symbol estimates $(\hat{b}_n^{v',1,1}, \ldots, \hat{b}_n^{v',NI,F_{NI}}; g_n^1, g_n^2, g_n^3)$ and channel estimates $(\mathcal{H}_n^{v'})$ from each of said plurality (NB) of receiver modules, said channel estimates comprising at least channel vector estimates $(\hat{\underline{H}}_n^{v'})$

for channels ($14^v$) between the user station receiver and said base stations, for providing at least one constraint matrix ($\hat{C}_n$) representing interference subspace of components of the received signal corresponding to said spread signals, and in each of said receiver modules ($20^v$), the coefficient tuning means produces said sets of weighting coefficients in dependence upon both the constraint matrix ($\hat{C}_n$) and the channel vector estimates so as to tune said receiver module ($20^v$) towards a substantially null response to that portion of the received signal (X(t)) corresponding to said interference subspace.

40. A user station receiver according to claim 39, **characterized in that** said observation vector deriving means comprises means ($19^{v',1,1}, \ldots, 19^{v',NI,F_{NI}}$) for deriving from the observation matrix a plurality of post-correlation observation

vectors $(\underline{Z}_n^{v',1,1}, \ldots, \underline{Z}_n^{v',NI,F_{NI}})$ and supplying said plurality of post-correlation observation vectors

$(\underline{Z}_n^{v',1,1}, \ldots, \underline{Z}_n^{v',NI,F_{NI}})$ to the channel identification means ($28T^v$) for use in producing said sets of channel vector

estimates $(\hat{\underline{Y}}_{0,n}^{v',1,1}, \ldots, \hat{\underline{Y}}_{0,n}^{v',NI,F_{NI}})$ .

41. A user station receiver according to claim 39, **characterized in that** said plurality (NB) of receiver modules ($20^v$) derive symbols for user signals other than those destined for the user of said user station receiver, and said user station receiver comprises an additional receiver module ($20^d$) for deriving symbols from the received signal destined for said user of said user station receiver and transmitted by a corresponding serving one (v) of said plurality of base stations, wherein each of said plurality of receiver modules ($20^v, 20^d$) operates with a frame duration equal to an integer multiple of the symbol period and uses a corresponding number of segments ($F_1, \ldots, F_{NI}, F_d$) of a long spreading code, each segment corresponding to a respective one of a plurality ($F_1, \ldots, F_{NI}, F_d$) of different segments of the same long spreading code equal to said plurality of symbol periods in said frame, and wherein, in said additional receiver module ($20^d$), said beamformer means ($47S^{d,1}, \ldots, 47S^{d,F_d}$) uses different sets of weighting coefficients to weight each element of said observation vector ($\underline{Y}_n$) to form a plurality ($F_d$) of signal component estimates

$(\hat{s}_n^{d,1}, \ldots, \hat{s}_n^{d,F_d})$, respectively, and the symbol estimating means ($29S^{d,1}, \ldots, 29S^{d,F_d}$) derives from the plurality of signal component estimates $(\hat{s}_n^{d,1}, \ldots, \hat{s}_n^{d,F_d})$ a corresponding plurality of symbol estimates $(\hat{b}_n^{d,1}, \ldots, \hat{b}_n^{d,F_d})$,

said observation vector deriving means deriving from the observation matrix a plurality of observation vectors $(\underline{Y}_n^{d,1},...,\underline{Y}_n^{d,F_d})$ the channel identification means (28S$^d$) derives from said observation vectors $(\underline{Y}_n^{d,1},...,\underline{Y}_n^{d,F_d})$ a corresponding plurality of spread channel vector estimates $(\hat{\underline{Y}}_{0,n}^{d},...,\hat{\underline{Y}}_{0,n}^{d,F_d})$, and supplies same said beamformer means (47S$^{d,1}$,..., 47S$^{d,F_d}$), each spread channel vector estimate being spread by a respective one of the segments of the long spreading code, and the coefficient tuning means of the beamformer means (47S$^{d,1}$,..., 47S$^{d,F_d}$) uses said channel vector estimates $(\hat{\underline{Y}}_{0,n}^{d,1},...,\hat{\underline{Y}}_{0,n}^{d,F_d})$ to derive said different sets of weighting coefficients.

**42.** A user station receiver according to claim 39, <u>**characterized in that**</u> said plurality (NB) of receiver modules (20$^v$) derive symbols for user signals other than those destined for the user of said user station receiver, and said user station receiver comprises an additional receiver module (20$^d$) for deriving symbols from the received signal destined for said user of said user station receiver, wherein each of said plurality of receiver modules (20$^v$,20$^d$) operates with a frame duration equal to an integer multiple of the symbol period and uses a corresponding number of segments of a long spreading code, each segment corresponding to a respective one of a plurality ($F_1$, ...,$F_{NI}$,$F_d$) of different segments of the same long spreading code equal to said plurality of symbol periods in said frame, and wherein, in said additional receiver module (20$^d$), said beamformer means (47$T^{v,d,1}$,..., 47$T^{v,d,F_d}$) uses different sets of weighting coefficients to weight each element of said observation vector ($\underline{Y}_n$) to form a plurality ($F_d$) of signal component estimates $(\hat{s}_n^{v,d,1},...,\hat{s}_n^{v,d,F_d})$, respectively, and the symbol estimating means (29$T^{v,d,1}$,...,29$T^{v,d,F_d}$)derives from the plurality of signal component estimates $(\hat{s}_n^{v,d,1},...,\hat{s}_n^{v,d,F_d})$ a corresponding plurality of symbol estimates $(\hat{b}_n^{v,d,1},...,\hat{b}_n^{v,d,F_d})$, and wherein the coefficient tuning means of said beamformer means *(47$T^{v,d,1}$,...,47$T^{v,d,F_d}$)* derives the weighting coefficients using said constraint matrix received from the constraint matrix generating means (43T) and said spread channel vector estimates $(\hat{\underline{Y}}_{0,n}^{v,d,1},...,\hat{\underline{Y}}_{0,n}^{v,d,F_d})$ produced by the channel identification means (28T$^v$) of the receiver module (20$^v$) corresponding to the base station (v) serving said user station.

**43.** A user station receiver according to claim 42, <u>**characterized in that**</u> said observation vector deriving means comprises despreading means (19$^{v',1,1}$,...,19$^{v',NI,F_{NI}}$) for despreading the observation matrix to form a plurality of post-correlation observation vectors $(\underline{Z}_n^{v',1,1},...,\underline{Z}_n^{v',NI,F_{NI}})$ and supplying said plurality of post-correlation observation vectors $(\underline{Z}_n^{v',1,1},...,\underline{Z}_n^{v',NI,F_{NI}})$ to the channel identification means (28T$^{v'}$) for use in producing said sets of channel vector estimates $(\hat{\underline{Y}}_{0,n}^{v',1,1},...,\hat{\underline{Y}}_{0,n}^{v',NI,F_{NI}})$ .

**44.** A user station receiver according to claim 39, <u>**characterized in that**</u> at least one said transmitter module of one of the base stations uses a plurality ($N_m$) of different spreading codes to spread respective ones of said series of symbols for simultaneous transmission in the same frame, such that the component of the received signal (X(t)) corresponding to that base station transmitter module comprises a corresponding plurality of spread signals, and at least one (20$^v$) of the plurality of receiver modules (20U) further comprises amplitude estimation means (30U$^v$) for deriving total amplitude of a set of signal component estimates $(\hat{s}_n^{v',1,1},...,\hat{s}_n^{v',NI,N_m})$ produced by beamformer means (47U$^{v,1,1}$,...,47U$^{v,NI,N_m}$) thereof, said beamformer means (47U$^{v,1,1}$,...,47U$^{v,NI,N_m}$) uses different sets of weighting coefficients to weight each element of said observation vector ($\underline{Y}_n$) to form said plurality of signal component estimates $(\hat{s}_n^{v',1,1},...,\hat{s}_n^{v',NI,N_m})$ corresponding to said respective ones of said series of symbols, and the symbol estimating means (29U$^{v',1,1}$,..., 29U$^{v',NI,N_m}$) derives from the plurality of signal component estimates

$(\hat{s}_n^{v',1,1},...,\hat{s}_n^{v',NI,N_m})$ a corresponding plurality of symbol estimates $(\hat{b}_n^{v',1,1},...,\hat{b}_n^{v',NI,N_m})$, the channel identification means (28U$^{v'}$) derives a corresponding plurality of sets of spread channel vector estimates $(\hat{\underline{Y}}_{0,n}^{v',1,1},...,\hat{\underline{Y}}_{0,n}^{v',NI,N_m})$ each spread by a respective one of said plurality of different spreading codes, and supplies the sets to said beamformer means *(47U$^{v',1,1}$,...,47U$^{v',NI,N_m}$)* and the coefficient tuning means of the beamformer means *(47U$^{v',1,1}$,...,47U$^{v',NI,N_m}$)* uses the sets of spread channel vector estimates $(\hat{\underline{Y}}_{0,n}^{v',1,1},...,\hat{\underline{Y}}_{0,n}^{v',NI,N_m})$ to derive said different sets of weighting coefficients, respectively.

**45.** A user station receiver according to claim 44, **characterized in that** said plurality (NB) of receiver modules (20$^v$) derive symbols for user signals other than those destined for the user of said user station receiver, and said user station receiver comprises an additional receiver module (20$^d$) for deriving symbols from the received signal destined for said user of said user station receiver, wherein each of said plurality of receiver modules (20$^v$ ,20$^d$) operates with a frame duration equal to an integer multiple of the symbol period and uses a corresponding number of segments of a long spreading code, each segment corresponding to a respective one of a plurality (N$_m$,F$_d$) of different segments of the same long spreading code equal to said plurality of symbol periods in said frame, and wherein, in said additional receiver module (20$^d$), said beamformer means *(47T$^{v,d,1}$,..., 47T$^{v,d,F_d}$)* uses different sets of weighting coefficients to weight each element of said observation vector ($\underline{Y}_n$) to form a plurality (F$_d$) of signal component estimates $(\hat{s}_n^{v,d,1},...,\hat{s}_n^{v,d,F_d})$, respectively, and the symbol estimating means (29T$^{v,d,l}$,...,29T$^{v,d,F_d}$) derives from the plurality of signal component estimates $(\hat{s}_n^{v,d,1},...,\hat{s}_n^{v,d,F_d})$ a corresponding plurality of symbol estimates $(\hat{b}_n^{v,d,1},...,\hat{b}_n^{v,d,F_d})$, and wherein the coefficient tuning means of said beamformer means (47T$^{v,d,1}$,...,47T$^{vd,F_d}$) derives the weighting coefficients using said constraint matrix received from the constraint matrix generating means (43T) and said spread channel vector estimates $(\hat{\underline{Y}}_{0,n}^{v,d,1},...,\hat{\underline{Y}}_{0,n}^{v,d,F_d})$ produced by the channel identification means (28T$^v$) of the receiver module (20$^v$) corresponding to the base station (v) serving said user station.

**46.** A receiver according to claim 44, **characterized in that** said observation vector deriving means comprises despreading means (19$^{v',1,1}$,..., 19$^{v',NI,N_m}$) for despreading the observation matrix to form a plurality of post-correlation observation vectors $(\underline{Z}_n^{v',1,1},...,\underline{Z}_n^{v',NI,N_m})$ and supplying said plurality of post-correlation observation vectors $(\underline{Z}_n^{v',1,1},...,\underline{Z}_n^{v',NI,N_m})$ to the channel identification means (28U$^{v'}$) for use in producing said sets of channel vector estimates $(\hat{\underline{Y}}_{0,n}^{v',1,1},...,\hat{\underline{Y}}_{0,n}^{v',NI,N_m})$ .

**47.** A user station receiver according to claim 39, **characterized in that** at least one said transmitter module of one of the base stations uses a plurality (N$_m$) of different spreading codes to spread respective ones of said series of symbols for simultaneous transmission in the same frame, such that the component of the received signal (X(t)) corresponding to that base station transmitter module comprises a corresponding plurality of spread signals, and at least one (20U') of the plurality of receiver modules further comprises amplitude estimation means (30U$^{v'}$) for deriving total amplitudes $(\psi_n^{v',1},...,\psi_n^{v',NI})$ of a set of signal component estimates $(\hat{s}_n^{v',1,1},...,\hat{s}_n^{v',NI,N_m})$ produced by beamformer means (47U$^{v',1,1}$,...,47U$^{v',NI,N_m}$) thereof, said beamformer means *(47U$^{v',1,1}$,..., 47U$^{v',NI,N_m}$)* uses different sets of weighting coefficients to weight each element of said observation vector ($\underline{Y}_n$) to form said plurality of signal component estimates $(\hat{s}_n^{v',1,1},...,\hat{s}_n^{v',NI,N_m})$ corresponding to said respective ones of said series of symbols and the symbol estimating means (29U$^{v',1,1}$,..., 29U$^{v',NI,N_m}$) derives from the plurality of signal component estimates $(\hat{s}_n^{v',1,1},...,\hat{s}_n^{v',NI,N_m})$ a corresponding plurality of symbol estimates $(\hat{b}_n^{v',1,1},...,\hat{b}_n^{v',NI,N_m})$, said observation vector deriving means comprises despreading means ($19^{v,\Sigma,1}$,..., $19^{v',\Sigma,N_m}$) for despreading the observation matrix ($Y_n$), using one or more of said plurality ($N_m$) of different spreading codes, each of these codes being a compound code formed by averaging the codes of all others of said multiplicity of interfering users (NI), to form a plurality of observation vectors $(\underline{Z}_n^{v',\Sigma,1},...,\underline{Z}_n^{v',\Sigma,N_m})$ , the channel identification means ($28U^{v'}$) derives from said plurality of observation vectors $(\underline{Z}_n^{v',\Sigma,1},...,\underline{Z}_n^{v',\Sigma,N_m})$ , said signal component estimates $(\hat{s}_n^{v',\Sigma,1},...,\hat{s}_n^{v',\Sigma,N_m})$ and said amplitudes $(\hat{\psi}_n^{v',1},...,\hat{\psi}_n^{v',NI})$ a corresponding plurality of sets of channel vector estimates $(\hat{\underline{Y}}_{0,n}^{v',1,1},...,\hat{\underline{Y}}_{0,n}^{v',NI,N_m})$ and supplies the sets to said beamformer means ($47U^{v',1,1}$,..., $47U^{v',NI,N_m}$) and the coefficient tuning means of the beamformer means ($47U^{v',1,1}$,..., $47U^{v',NI,N_m}$) uses the sets of channel vector estimates $(\hat{\underline{Y}}_{0,n}^{v',1,1},...,\hat{\underline{Y}}_{0,n}^{v',NI,N_m})$ to derive said different sets of weighting coefficients, respectively.

**48.** A receiver according to claim 1, **characterized in that** each said receiver module is located in a user/mobile station and the received signal comprises a plurality of spread user signals transmitted by a plurality of transmitter modules at a base station communicating with said receiver via said channels.

**49.** A receiver for a CDMA communications system **characterized by** preprocessing means (18) for deriving from a received signal (X(t)) a succession of observation matrices ($Y_n$), means (44) for reshaping each observation matrix to form an observation vector ($\underline{Y}_n$), beamformer means ($27N^d$) for weighting each element of the observation vector using weighting coefficients and combining the weighted elements to form a signal component estimate $(\hat{s}_n^d)$ , said beamformer means comprising tuning means for tuning said weighting coefficients in dependence upon a channel vector estimate $(\hat{\underline{Y}}_{0,n}^d)$ , means ($29N^d$) for deriving from the signal component estimate $(\hat{s}_n^d)$ a corresponding symbol estimate $(\hat{b}_n^d)$ for output from the receiver module, means ($19^d$) for despreading the observation matrix using the spreading code of the corresponding user to form a post-correlation observation vector $(\underline{Z}_n^d)$ , and channel identification means ($28N^d$) for deriving said channel vector estimate $(\hat{\underline{Y}}_{0,n}^d)$ in dependence upon said post-correlation observation vector $(\underline{Z}_n^d)$ and said signal component estimate $(\hat{s}_n^d)$ .

**50.** A CDMA communications system **characterized by** at least one base station and a multiplicity (U) of user stations ($10^1$, ..., $10^U$) including a plurality (U') of user stations served by said at least one base station, the base station capable of transmitting unique space-time encoded signals each dedicated to a corresponding mobile user station, each user station having a transmitter and a receiver for communicating with said at least one base station via a corresponding one of a plurality of channels ($14^1$,...,$14^U$), the base station transmitter comprising:

a plurality of transmission antennas;
means for providing user-destined signals;
a distribution unit for grouping the user-destined signals into $N_G$ groups;
a temporal channelization-code unit for spreading each user-destined signal by a unique dedicated code belonging to a fixed set of $L$ orthogonal codes and summing the spread signals in each group;
means for adding to the summed spread signals of each group a respective one of a plurality of pilot signals each specific to one of the groups and generated by a PN code generator;
means for scrambling the summed signal from each of said groups using the same long scrambling code specific to the base station;

each pilot signal being assigned a fixed fraction of the total power transmitted from the base station transmitter; means for mapping the signals from the groups ($G_1$ (t) ..., $G_{NG}$(t)) onto antenna branches ($A_1(t),...,A_{M_\tau}$ (t)) by means of a linear space coding (M) such that signals assigned to different groups are substantially orthogonal at transmission;

at least one of the user stations having a receiver for receiving the corresponding spread user signal transmitted by the base station, said plurality (U') of user stations each having a unique spreading code assigned thereto for use by the user station and the corresponding one of the base station transmitter modules to spread the user signals of that user for transmission,

the spread user signals transmitted from the base station transmitter modules to a particular one of the plurality (U') of user stations propagating via a plurality of channels ($14^1,...,14^{U'}$), respectively,

the receiver of a particular one of said plurality (U') of user stations receiving a signal (X(t)) comprising components corresponding to spread user signals for said particular user station and spread user signals transmitted by other transmitter modules of said plurality (NB) of base stations for other users, each of said spread user signals comprising a series of symbols spread using the spreading code associated with the corresponding one of the user stations,

said user station receiver comprising:

a plurality (NB) of receiver modules ($20^{v'}$) each for deriving from successive frames of the received signal (X(t)) estimates of sets of said series of symbols from a corresponding one of the base stations,

preprocessing means (18) for deriving from the received signal (X(t)) a series of observation matrices ($Y_n$) each for use by each of the receiver modules ($20^{v'}$) in a said frame to derive estimates of sets of said symbols, and

means (19,44) for deriving from each observation matrix a plurality of sets of observation vectors

$(\underline{Y}_n^{v',1,1}, ... , \underline{Y}_n^{v',NI,F_{NI}}; \ \underline{Z}_n^{v',1,1}, ... , \underline{Z}_n^{v',NI,F_{NI}})$ and applying each of the sets of observation vectors to a respective one of the plurality of receiver modules ($20^{v'}$);

each receiver module comprising;

channel identification means ($28T^{v'}$) for deriving from the respective one of the sets of observation vectors a set of spread channel vector estimates $(\hat{\underline{Y}}_{0,n}^{v',1,1},..., \hat{\underline{Y}}_{0,n}^{v',NI,F_{NI}})$ based upon parameter estimates of the channel between the corresponding one of the base stations and said user station;

beamformer means ($47T^{v',1,1},..., 47T^{v',NI,F_{NI}}$)having coefficient tuning means for producing sets of weighting coefficients in dependence upon the sets of channel vector estimates, respectively, and combining means for using each of the sets of weighting coefficients to weight respective ones of the elements of a respective one of the observation vectors and combining the weighted elements to provide a corresponding set of signal component estimates $(\hat{s}_n^{v',1,1},...,\hat{s}_n^{v',NI,F_{NI}})$ and

symbol estimating means ( $29T^{v',1,1},..., 29T^{v',NI,F_{NI}}$) for deriving from the set of signal component estimates a set of estimates $(\hat{b}_n^{v',1,1},...,\hat{b}_n^{v',NI,F_{NI}})$ of symbols spread by the corresponding one of the transmitter modules and transmitted by the base station;

said user station receiver further comprising means (42,43) responsive to said symbol estimates

$(\hat{b}_n^{v',1,1},...,\hat{b}_n^{v',NI,F_{NI}}; \underline{g}_n^1,\underline{g}_n^2,\underline{g}_n^3)$ and channel estimates $(\mathcal{H}_n^{v'})$ from each of said plurality (NB) of receiver modules, said channel estimates comprising at least channel vector estimates $(\underline{\hat{H}}_n^{v'})$ for channels

($14^{v'}$) between the user station receiver and said base stations, for providing at least one constraint matrix ($\hat{C}_n$) representing interference subspace of components of the received signal corresponding to said spread signals, and in each of said receiver modules ($20^{v'}$), the coefficient tuning means produces said sets of weighting coefficients in dependence upon both the constraint matrix ($\hat{C}_n$) and the channel vector estimates so as to tune said receiver module ($20^{v'}$) towards a substantially null response to that portion of the received signal (X(t)) corresponding to said interference subspace.

**51.** A CDMA system according to claim 50, **characterized in that** the transmitter further comprises:

delay means for delaying the signals from the mapping means each by a branch-specific delay, forming a corresponding signalling pulse modulating the signalling pulse with a carrier frequency signal, and supplying the modulated signal to the antenna elements for transmission thereby.

**52.** A CDMA system according to claim 50, **characterized in that**, in the transmitter, the grouping means is arranged to group data signals dedicated for user stations into a predetermined number $N_G$ of groups and, when the number of users is less than or equal to the processing gain, assigning all user signals to the same group; otherwise assigning user signals pseudo-randomly so as to tend to balance the number of users in each group.

**53.** A CDMA system according to claim 50, **characterized in that** the transmitter further comprises, for each group, a space-time coding means comprising:

a channel coding unit for spreading user signals by a group specific set of orthogonal codes;
a scrambling unit for spreading each group of user signals with the same base station specific scrambling code; and
a spatial coding unit for mapping the total group signals ($G_1(t),...,G_{N_G}(t)$) onto the antenna branch signals ($A_1(t), \cdots, A_{N_o}(t)$) by a linear transformation (M).

**54.** A CDMA system according to claim 53, **characterized in that**, in the transmitter, the channel coding unit assigns to each user in the group indexed g a chip-code chosen from a fixed set of $L_g \leq L$ orthogonal group specific $L$-chip codes ($a_{i,1}(t), ..., a_{i,L_s}(t)$). , the code-sets across groups being chosen subject to minimize the maximum cross-correlation, any code belonging to any group being orthogonal to any other code within the group while its cross-correlation with any out-group channelization code is minimized.

**55.** A CDMA communications system **characterized by** at least one base station and a multiplicity (U) of user stations ($10^1, \cdots, 10^U$) including a plurality (U') of user stations served by said at least one base station, each user station having a transmitter and a receiver for communicating with said at least one base station via a corresponding one of a plurality of channels ($14^l,...,14^u$), at least one user station being capable of transmitting a user signal comprising a plurality of unique space-time encoded signals each carrying different data from that same user,
said at least one user station having a transmitter comprising:

a plurality of transmission antennas;
means for providing said user signals;
a distribution unit for grouping the space-time encoded signals into $N_G$ groups;
a temporal channelization-code unit for spreading each different data stream of the user signals by a unique dedicated code belonging to a fixed set of $L$ orthogonal codes and summing the spread signals in each group;
means for adding to the summed spread signals of each group a respective one of a plurality of pilot signals each specific to one of the groups and generated by a PN code generator;
each pilot signal being assigned a fixed fraction of the total power transmitted from the base station transmitter;
means for scrambling the summed signals from the groups using the same long scrambling code specific to the user station;
means for mapping the signals from the groups ($G_1(t),..., G_{N_o}(t)$) onto antenna branches ($A_1(t),...,A_{M_\tau}(t)$) by means of a linear space coding (M) such that signals assigned to different groups are substantially orthogonal at transmission;
the base station having a receiver for receiving a signal (X(t)) comprising components corresponding to spread signals transmitted by the transmitters of the plurality of user stations, each of said spread signals comprising a series of symbols spread using a spreading code unique to the corresponding user station, said base station receiver comprising:

a plurality (U') of receiver modules ($20^1,...,20^{NI},20^d$) each for deriving from successive frames of the received signal ($X(t)$) estimates of said series of symbols of a corresponding one of the user stations,
preprocessing means (18) for deriving from the received signal (X(t)) a series of observation matrices ($Y_n$) each for use by each of the receiver modules (20) in a said frame to derive an estimate of a symbol of a respective one of said series of symbols, and

means (19,44;44/1,4 4'⁰) for deriving from each observation matrix a plurality of observation vectors $(\underline{Y}_n;\ \underline{Y}_{n-1};\ \underline{Z}_n^1...\underline{Z}_n^{NI};\ \underline{Z}_n^d)$ and applying each of the observation vectors to a respective one of the plurality of receiver modules ($20^1$,...,$20^{NI}$,$20^d$); each receiver module comprising;

channel identification means (28) for deriving from one of the observation vectors a channel vector estimate $(\underline{\hat{H}}_n^1,...,\underline{\hat{H}}_n^{NI};\hat{\underline{Y}}_{0,n}^d;\hat{\underline{Y}}_{0,n-1}^i)$ based upon parameter estimates of the channel between the base station receiver and the corresponding user station transmitter;
beamformer means ($27^1$,...,$27^d$; $47^d$) having coefficient tuning means (50) for producing a set of weighting coefficients in dependence upon the channel vector estimate, and combining means (51,52) for using the weighting coefficients to weight respective ones of the elements of a respective one of the observation vectors and combining the weighted elements to provide a signal component estimate $(\hat{s}_n^1,...,\hat{s}_n^U);$ and symbol estimating means ($29^1$,..., $29^U$, $30^1$,...,$30^U$) for deriving from the signal component estimate an estimate $(\hat{b}_n^1,...,\hat{b}_n^U)$ of a symbol $(b_n^1,...,b_n^U)$ transmitted by a corresponding one of the user stations ($10^1$,...,$10^U$),

wherein said receiver further comprises means (42,43) responsive to symbol estimates $(\hat{b}_n^1,...,\hat{b}_n^{NI};g^1,g^2,g^3;g^{l_{+1,n}})$ and to channel estimates $(\mathcal{H}_n^1 ... \mathcal{H}_n^{NI};\mathcal{H}_{n-1}^i)$ comprising at least said channel vector estimates $(\underline{\hat{H}}_n^1,...,\underline{\hat{H}}_n^{NI})$ for channels ($14^1$,... , $14^{NI}$) of a first group (I) of said plurality of user stations ($10^1$,..., $10^{NI}$) to provide at least one constraint matrix ($\hat{C}_n$) representing interference sub-space of components of the received signal corresponding to said predetermined group, and in each of one or more receiver modules ($20A^d$) of a second group (D) of said plurality of receiver modules, the coefficient tuning means ($50A^d$) produces said set of weighting coefficients in dependence upon both the constraint matrix $(\hat{C}_n)$ and the channel vector estimates $(\underline{\hat{H}}_n^d)$ so as to tune said one or more receiver modules ($20A^d$) each towards a substantially null response to that portion of the received signal (X(t)) corresponding to said interference subspace.

**56.** A CDMA system according to claim 55, <u>**characterized in that**</u> the transmitter further comprises:

delay means for delaying the signals from the mapping means each by a branch-specific delay, forming a corresponding signalling pulse modulating the signalling pulse with a carrier frequency signal, and supplying the modulated signal to the antenna elements for transmission thereby.

**57.** A CDMA system according to claim 55, <u>**characterized in that**</u>, in the transmitter, the distribution unit means is arranged to group data signals dedicated for user stations into a predetermined number $N_G$ of groups and, when the number of users is less than or equal to the processing gain, assign all user signals to the same group, otherwise assigning user signals pseudo-randomly so as to tend to balance the number of users in each group.

**58.** A CDMA system according to claim 55, <u>**characterized in that**</u> the transmitter further comprises, for each group, space-time coding means comprising:

a channel coding unit for spreading user signals by a group specific set of orthogonal codes;
a scrambling unit for spreading each group of user signals with the same base station specific scrambling code; and
a spatial coding unit for mapping the total group signals ($G_1(t)$,..., $G_{N_G}(t)$) onto the antenna branch signals ($A_1(t)$,..., $A_{N_G}(t)$) by a linear transformation (M).

**59.** A CDMA system according to claim 58, <u>**characterized in that**</u>, in the transmitter, the channel coding unit assigns to each user in the group indexed g a chip-code chosen from a fixed set of $L_g \leq L$ orthogonal group specific L-chip codes ($a_{i,1}(t)$,...,$a_{i,L_g}(t)$). , the code-sets across groups being chosen subject to minimize the maximum cross-correlation, any code belonging to any group being orthogonal to any other code within the group while its cross-correlation with any out-group channelization code is minimized.

**60.** A receiver according to claim 1, for use with a transmitter transmitting pilot-symbol assisted user signals comprising pilot symbols multiplexed with data symbols, the receiver <u>further</u> **characterized by** demultiplexing means ($35V^d$) for demultiplexing the signal component estimates from the ISR beamformer to extract pilot signal component estimates and data signal component estimates and supplying the data signal component estimates to the decision rule unit ($29V^d$) and the pilot signal component estimates to an ambiguity estimation means ($31V^d$), the ambiguity estimation means ($31V^d$) smoothing or averaging each pilot signal component estimate $(\hat{s}_n^{\pi,d})$ to provide an ambiguity estimate $(\hat{a}_n^d)$, conjugation means ($32V^d$) for "deriving from the ambiguity estimate $(\hat{a}_n^d)$ its conjugate $((\hat{a}_n^d)^*)$ and multiplier means ($15V^d$) for multiplying the conjugate with the symbol estimate $(\hat{b}_n^d)$ from the decision rule means ($29V^d$) to form an improved symbol estimate $(\hat{b}_n^d)$.

**61.** A receiver according to claim 1, <u>further</u> **characterized by** a second ISR beamformer ($47V/2^d$) connected in parallel with the first ISR beamformer ($47V/1^d$) and responsive to the same channel coefficients and constraint matrix as the first ISR beamformer to derive from the observation vector ($\underline{Y}_n$) a pilot signal component estimate, ambiguity estimation means ($31V^d$) for smoothing or averaging the pilot signal component estimate $(\hat{s}_n^{\pi,d})$ to provide an ambiguity estimate $(\hat{a}_n^d)$, conjugation means ($32V^d$) for deriving from the ambiguity estimate $(\hat{a}_n^d)$ its conjugate $((\hat{a}_n^d)^*)$ and multiplier means ($15V^d$) for multiplying the conjugate with the symbol estimate $(\hat{b}_n^d)$ from the decision rule unit ($29V^d$) to form an improved symbol estimate $(\hat{b}_n^d)$.

**62.** A receiver according to claim 60, **characterized in that** the ambiguity estimation means comprises a buffer for buffering bit estimates, smoothing means for smoothing or averaging the buffered estimates and a further decision rule unit ($29V/2^d$) for deriving from the smoothed or averaged estimates said corresponding ambiguity estimates $(\hat{a}_n^d)$.

**63.** A receiver according to claim 61, **characterized in that** the ambiguity estimation means comprises a buffer for buffering bit estimates, smoothing means for smoothing or averaging the buffered estimates and a further decision rule unit ($29V/2^d$) for deriving from the smoothed or averaged estimates said corresponding ambiguity estimates $(\hat{a}_n^d)$.

**64.** A receiver according to claim 39, for use with a transmitter transmitting pilot-symbol assisted user signals comprising pilot symbols multiplexed with data symbols, the receiver <u>further</u> **characterized by** demultiplexing means ($35V^d$) for demultiplexing the signal component estimates from the ISR beamformer to extract pilot signal component estimates and data signal component estimates and supplying the data signal component estimates to the decision rule unit ($29V^d$) and the pilot signal component estimates to an ambiguity estimation means ($31V^d$), the ambiguity estimation means ($31V^d$) smoothing or averaging each pilot signal component estimate $(\hat{s}_n^{\pi,d})$ to provide an ambiguity estimate $(\hat{a}_n^d)$, conjugation means ($32V^d$) for deriving from the ambiguity estimate $(\hat{a}_n^d)$ its conjugate $((\hat{a}_n^d)^*)$ and multiplier means ($15V^d$) for multiplying the conjugate with the symbol estimate $(\hat{b}_n^d)$ from the decision rule means ($29V^d$) to form an improved symbol estimate $(\hat{b}_n^d)$.

**65.** A receiver according to claim 39, <u>further</u> **characterized by** a second ISR beamformer (47V/2$^d$) connected in parallel with the first ISR beamformer (47V/1$^d$) and responsive to the same channel coefficients and constraint matrix as the first ISR beamformer to derive from the observation vector ($\underline{Y}_n$) a pilot signal component estimate , ambiguity estimation means (31V$^d$) for smoothing or averaging the pilot signal component estimate $(\hat{s}_n^{\pi,d})$ to provide an ambiguity estimate $(\hat{a}_n^d)$ , conjugation means (32V$^d$) for deriving from the ambiguity estimate $(\hat{a}_n^d)$ its conjugate $((\hat{a}_n^d)^*)$ and multiplier means (15V$^d$) for multiplying the conjugate with the symbol estimate $(\hat{b}_n^d)$ from the decision rule unit (29V$^d$) to form an improved symbol estimate $(\hat{b}_n^d)$ .

**66.** A receiver according to claim 64, **characterized in that** the ambiguity estimation means comprises a buffer for buffering bit estimates, smoothing means for smoothing or averaging the buffered estimates and a further decision rule unit (29V/2$^d$) for deriving from the smoothed or averaged estimates said corresponding ambiguity estimates $(\hat{a}_n^d)$ .

**67.** A receiver according to claim 65, **characterized in that** the ambiguity estimation means comprises a buffer for buffering bit estimates, smoothing means for smoothing or averaging the buffered estimates and a further decision rule unit (29V/2$^d$) for deriving from the smoothed or averaged estimates said corresponding ambiguity estimates $(\hat{a}_n^d)$ .

**68.** A receiver according to claim 19, <u>further</u> **characterized by** buffering means (90$^i$), deinterleaving means (91$^i$), channel decoding means (92$^i$), re-encoding means (93$^i$) and re-interleaving means (94$^i$) for buffering a first frame of signal component estimates $(\hat{s}_{n-1}^i(1))$ , deinterleaving, channel decoding, re-encoding and re-interleaving the frame of signal component estimates to provide a frame of improved decided symbol estimates $(\hat{b}_n^i)$ , and supplying same to the constraint set generator (42W), the constraint matrix generator (43W) forming therefrom an improved constraint matrix, the ISR beamformer (47W$^i$) using said improved constraint matrix to provide an improved signal component estimate $(\hat{s}_{n-1}^i(2))$ for use in a next iteration, the receiver repeating the iterations a predetermined number of times.

**69.** A receiver according to claim 39, <u>further</u> **characterized by** buffering means (90$^i$), deinterleaving means (91$^i$), channel decoding means (92$^i$), re-encoding means (93$^i$) and re-interleaving means (94$^i$) for buffering a first frame of signal component estimates $(\hat{s}_{n-1}^i(1))$ , deinterleaving, channel decoding, re-encoding and re-interleaving the frame of signal component estimates to provide a frame of improved decided symbol estimates $(\hat{b}_n^i)$ , and supplying same to the constraint set generator (42W), the constraint matrix generator (43W) forming therefrom an improved constraint matrix, the ISR beamformer (47W$^i$) using said improved constraint matrix to provide an improved signal component estimate $(\hat{s}_{n-1}^i(2))$ for use in a next iteration, the receiver repeating the iterations a predetermined number of times.

**70.** A receiver according to claim 1, **characterized in that** coefficient tuning means (50A$^d$) produces said set of weighting coefficients in dependence upon both the constraint matrix $(\hat{C}_n)$ and the channel vector estimates $(\underline{\hat{H}}_n^d)$ so as to tune said one or more receiver modules (20A$^d$) each towards a response that is bound in magnitude to be close but not equal to a null.

**71.** A receiver according to claim 39, **<u>characterized in that</u>** coefficient tuning means (50A$^d$) produces said set of weighting coefficients in dependence upon both the constraint matrix ($\overset{\wedge}{C}_n$) and the channel vector estimates ($\hat{H}_n^d$) so as to tune said one or more receiver modules (20A$^d$) each towards a response that is bound in magnitude to be close but not equal to a null.

**Patentansprüche**

**1.** Empfänger, der für eine Basisstation eines CDMA-Kommunikationssystems geeignet ist, das zumindest eine Basisstation (11) mit einem Transmitter und einem besagten Empfänger und einer Mehrzahl (U) von Benutzerstationen (10$^1$,...,10$^U$) hat, der eine Mehrzahl (U') von Benutzerstationen beinhaltet, die von der zumindest einen Basisstation bedient werden, wobei jede Benutzerstation einen Transmitter bzw. Übertrager und einen Receiver bzw. Empfänger für die Kommunikation mit der zumindest einen Basisstation über einen entsprechenden Kanal der Mehrzahl von Kanälen (14$^1$,...,14$^U$) hat, wobei der Basisstationsempfänger für das Empfangen eines Signals (X(t)) Komponenten aufweist, die Spreading- bzw. Verteilsignalen entsprechen, die von dem Übertrager der Mehrzahl von Benutzerstationen übertragen wurden, wobei jedes der Verteil- bzw. Spreizsignale eine Reihe von Symbolen aufweist, die verteilt sind unter Verwendung eines Verteil- bzw. Spreizcodes, der eindeutig für die entsprechende Benutzerstation ist, wobei der Basisstationsempfänger **gekennzeichnet ist durch**:

eine Mehrzahl (U') von Empfängermodulen (20$^1$,...,20$^{NI}$, 20$^d$), die jeweils vorgesehen sind für das Ableiten aus aufeinanderfolgenden Einzelbildern des empfangen Signals (X(t)) von Abschätzungen der Reihen von Symbolen einer entsprechenden der Benutzerstationen,
Vorverarbeitungseinrichtungen (18) für das Ableiten aus dem empfangenen Signal (X(t)) einer Reihe von Beobachtungsmatrizen (Y$_n$), die jeweils für die Verwendung von jedem der Empfängermodule (20) in dem Einzelbild vorgesehen sind, um eine Abschätzung eines Symbols der Symbole der Reihe von Symbolen abzuleiten, und eine Einrichtung (19, 44; 44/1. 44/2) für das Ableiten von jeder Beobachtungsmatrix einer Mehrzahl von Beobachtungsvektoren ($\underline{Y}_n ; \underline{Y}_{n-1} ; \underline{Z}_n^1 \cdots \underline{Z}_n^{NI} ; \underline{Z}_n^d$) und Anwenden jedes der Beobachtungsvektoren an ein jeweiliges der Mehrzahl von Empfängermodulen (20$^1$,..,20$^{NI}$, 20$^d$); wobei jedes Receivermodul aufweist:

eine Kanalidentifikationseinrichtung (28) für das Ableiten aus jedem der Beobachtungsvektoren einer Kanalvektorabschätzung $\left( \hat{\underline{H}}_n^1 ,...,\hat{\underline{H}}_n^{NI} ; \hat{\underline{Y}}_{0,n}^d ; \hat{\underline{Y}}_{0,n-1}^i \right)$ basierend auf Parameterschätzungen des Kanals zwischen dem Basisstationsempfänger und dem korrespondierenden Benutzerstationstransmitter
eine strahlbündelnde Einrichtung (27$^1$,...,27$^{NI}$, 27$^d$; 47$^d$) mit einer Koeffizienteneinstelleinrichtung (50) für das Erzeugen eines Satzes von Gewichtungskoeffizienten in Abhängigkeit von der Kanalvektorabschätzung und Kombinationseinrichtungen (51, 52) für das Verwenden der Gewichtungskoeffizienten, um die entsprechenden Elemente eines entsprechenden der Observationsvektoren zu gewichten und die gewichteten Elemente zu kombinieren, um eine Signalkomponentenabschätzung $\left( \hat{S}_n^1 ,...,\hat{S}_n^U \right)$ bereitzustellen, und
eine Symbolschätzeinrichtung (29$^1$,...,29$^U$, 30$^1$,...,30$^U$) für das Ableiten einer Abschätzung $\left( \hat{b}_n^1 ,...,\hat{b}_n^U \right)$ eines Symbols $\left( b_n^1 ,...,b_n^U \right)$, das von einer entsprechenden der Benutzerstationen (10$^1$,...,10$^U$) übertragen wurde aus der Signalkomponentenabschätzung,

wobei der Empfänger weiterhin eine Einrichtung (42, 43) aufweist, die auf Symbolabschätzungen $\left( \hat{b}_n^1 \cdots \hat{b}_n^{NI} ; g^1, g^2, g^3, g^{I+1,n} \right)$ und auf Kanalabschätzungen $(\mathfrak{H}_n^1 ,...,\mathfrak{H}_n^{NI} ; \mathfrak{H}_{n-1}^i)$, die zumindest die Kanalvektorabschätzungen $\left( \hat{\underline{H}}_n^1 ,..., \hat{\underline{H}}_n^{NI} \right)$ für die Kanäle (14$^1$,...,14$^{NI}$) einer ersten Gruppe (I) der Mehrzahl von Benutzerstationen ($10^1$,..,$10^{NI}$), reagiert, um zumindest eine Beschränkungsmatrix ($\hat{C}_n$) bereitzustellen, die einen Interferenzunterraum von Komponenten des empfangenen Signals darstellt entsprechend der vorbestimmten Gruppe, wobei in jedem des ein oder mehreren Empfängermodulen ($20A^d$) einer zweiten Gruppe (D) der Mehrzahl von Empfängermodulen die Koeffizienteneinstelleinrichtung ($50A^d$) den Satz von Gewichtungskoeffizienten in Abhängigkeit von sowohl der Beschränkungsmatrix ($\hat{C}_n$) und der Kanalvektorabschätzungen $\left( \hat{\underline{H}}_n^d \right)$ erzeugt, um so das eine oder die mehreren Empfängermodule ($20A^d$) jeweils auf eine im wesentlichen Null-Antwort auf den Abschnitt des empfangenen Signals (X(t)), der dem Interferenzunterraum entspricht, einzustellen.

2. Empfänger nach Anspruch 1, **dadurch gekennzeichnet, daß** die Koeffizienteneinstelleinrichtung ($50A^d$) ebenso das eine bzw. die mehreren Empfängermodule ($20A^d$) einstellt, wobei auf eine im wesentlichen Eins-Antwort eingestellt wird für die Komponente des empfangenen Signals (X(t)) von dem Transmitter der entsprechenden Benutzerstation.

3. Empfänger nach Anspruch 1, **dadurch gekennzeichnet, daß** die Beobachtungsvektorableitungseinrichtung (19; 44) erste Umformungseinrichtungen (44) für das Umformen der Beobachtungsmatrix ($Y_n$) von der Vorverarbeitungseinrichtung (18) und das Liefern des resultierenden Beobachtungsvektors ($\underline{Y}n$) zu der strahlformenden Einrichtung ($47A^d$) von jedem des einen oder der mehreren Empfängermodule ($20A^d$) aufweist, und wobei die Einrichtung (42, 43) für das Bereitstellen der zumindest einen Beschränkungsmatrix eine beschränkungssatzerzeugende Einrichtung (42A) aufweist, die auf die Kanalabschätzungen $(\mathcal{H}_n^1,...,\mathcal{H}_n^{NI};\mathcal{H}_{n-1})$ und auf Symbolabschätzungen $\left( \hat{b}_n^1 \cdots \hat{b}_n^{NI}; g^1, g^2, g^3, g^{I+1,n} \right)$, die der ersten Gruppe entsprechen für das Erzeugen einer Mehrzahl von Beschränkungssatzmatrizen $(\mathbb{C}_n^1,...,\mathbb{C}_n^{Nc})$, die zusammen den Interferenzunterraum charakterisieren, der der ersten Gruppe von Benutzerstationen zurechenbar ist, und wobei die beschränkungsmatrixerzeugende Einrichtung (43A) eine Bank von Vektorumformern ($48A^1$, $48A^{Nc}$) für das Umformen der Beschränkungssatzmatrizen $(\mathbb{C}_n^1,...,\mathbb{C}_n^{Nc})$ aufweist, um Spalten der Beschränkungsmatrix ($\hat{C}_n$) zu bilden, wobei die beschränkungsmatrixerzeugende Einrichtung (43A) die Beschränkungsmatrix zu jeder der Koeffizienteneinstelleinrichtungen ($50A^d$) des einen oder der mehreren Empfängermodule ($20^d$) der zweiten Gruppe liefert, und wobei in jedem von dem einen oder der mehreren Empfängermodule ($20A^d$) die Kanalabschätzeinrichtung ($28A^d$) Spreizkanalvektorabschätzungen $\left( \hat{\underline{Y}}_{0,n}^d \right)$ zu der Koeffizienteneinstelleinrichtung ($50A^d$) liefert für die Verwendung bei der Aktualisierung der Gewichtungskoeffixienten.

4. Empfänger nach Anspruch 3, **dadurch gekennzeichnet, daß** die beschränkungsmatrixerzeugende Einrichtung (43A) eine Transformationseinrichtung (49A) für das Bilden einer inversen Matrix ($Q_n$) in Abhängigkeit von der Beschränkungsmatrix ($\hat{C}_n$) und für das Liefern der inversen Matrix zu der Koeffizienteneinstelleinrichtung ($50A^d$) des einen oder der mehreren Empfängermodule ($20A^d$) aufweist, und wobei die Koeffizienteneinstelleinrichtung ($50A^d$) die Gewichtungskoeffizienten in Abhängigkeit von der Beschränkungsmatrix, der inversen Matrix und der Kanalvektorabschätzung berechnet.

5. Empfänger nach Anspruch 1, **dadurch gekennzeichnet, daß** die Beobachtungsvektorableiteinrichtung eine Mehrzahl von Despreadern ($19^1$,...,$19^{NI}$, $19^d$) aufweist, jeder für die Verwendung eines entsprechenden der Benutzerspreadingcodes, um die Beobachtungsmatrix ($Y_n$) unter Verwendung eines entsprechenden Spreadingcodes zu entspreizen (Despreading), um einen benutzerspezifischen Postkorrelationsvektor $\left( \underline{Z}_n^1,...,\underline{Z}_n^{NI}, \underline{Z}_n^d \right)$ zu bilden und selbigen zu einer entsprechenden Kanalidentifikationseinrichtung ($28^1$, ..., $2S^{NI}$, $28^d$) zu liefern.

6. Empfänger nach Anspruch 3, der weiterhin **gekennzeichnet ist durch** eine Einrichtung ($30^1$,....$30^{NI}$) für das Ableiten

von Amplitudenschätzungen $(\psi_n^1,...,\psi_n^{NI})$ von Signalkomponenten von der ersten Gruppe von Benutzerstationen und Liefern der Amplitudenabschätzungen zu der beschränkungssatzerzeugenden Vorrichtung als Teile der Kanalabschätzungen, und wobei die beschränkungssatzerzeugende Einrichtung (42C) ein Mehrzahl von Respreadern (57C$^1$,...,57C$^{NI}$) aufweist, die jeweils für die Verwendung eines entsprechenden der Benutzerspreadingcodes vorgesehen sind, um eine entsprechende der Symbolabschätzungen $\left(\hat{b}_n^1,...,\hat{b}_n^{NI}\right)$ von den Empfängermodulen entsprechend zu der ersten Gruppe (I) von Benutzerstationen zu respreaden bzw. erneut zu verteilen, Skalierungseinrichtung (58C$^1$,...,58C$^{NI}$) für das Skalieren der erneut verteilten Symbolabschätzungen **durch** die Amplituden $(\psi_n^1,...,\psi_n^{NI})$ der Signalkomponenten entsprechend der Symbolabschätzungen $\left(\hat{b}_n^1,...,\hat{b}_n^{NI}\right)$, und eine Mehrzahl von Kanalreplikationseinrichtungen (59C$^1$,...,59C$^{NI}$) mit Koeffizienten, die einstellbar sind in Abhängigkeit von den Kanalvektorabschätzungen $\left(\hat{\underline{H}}_n^1,...,\hat{\underline{H}}_n^{NI}\right)$ für das Filtern der entsprechenden erneut verteilten (respread) und skalierten Symbolabschätzungen, um benutzerspezifische Beobachtungsmatrixabschätzungen $\left(\hat{\underline{Y}}_{n-1}^1,...,\hat{\underline{Y}}_{n-1}^{NI}\right)$ und eine Einrichtung (60) für das Summieren der benutzerspezifischen Observationsmatrizen bereitzustellen, um eine Observationsmatrixabschätzung ($\hat{I}_{n-1}$) zu bilden und selbige zu der Beschränkungsmatrixerzeugungseinrichtung (43C) zu liefern, wobei die Beschränkungsmatrixerzeugungseinrichtung (43C) eine Vektorumformeinrichtung aufweist für das Umformen der Beobachtungsmatrixabschätzung $\left(\hat{\underline{I}}_{n-1}\right)$, um eine Beobachtungsvektorabschätzung $\left(\hat{\underline{I}}_{n-1}\right)$ als eine Ein-Spalten-Beschränkungsmatrix ($\hat{C}_n$) für die Anwendung an die Koeffizienteneinstelleinrichtung (59A$^d$) von jedem der Empfängermodule (20$^d$) der zweiten Gruppe (D) zu bilden.

7. Empfänger nach Anspruch 3, **dadurch gekennzeichnet, daß** die beschränkungssatzerzeugende Einrichtung (42D) eine Anzahl von Beschränkungen ($N_c$) gleich der Anzahl (NI) von Benutzerstationen in der ersten Gruppe (I) erzeugt und eine Mehrzahl von Respreadern (57D$^1$,...3,57D$^{N1}$) aufweist, jeden für die Verwendung eines entsprechenden der Benutzerspreadingcodes, um eine entsprechende der Symbolabschätzungen $\left(\hat{b}_n^1,...,\hat{b}_n^{NI}\right)$ von einer vorbestimmten Gruppe (I) der Empfängermodule entsprechend der ausgewählten Komponenten des empfangenen Signals erneut zu verteilen, und eine Mehrzahl von Kanalreplikationseinrichtungen (59D$^1$,...,59D$^{NI}$) mit einstellbaren Koeffizienten in Abhängigkeit von den Kanalvektorabschätzungen $\left(\hat{\underline{H}}_n^1,...,\hat{\underline{H}}_n^{NI}\right)$ für das Filtern der entsprechenden Respreadsymbolabschätzungen, um eine Mehrzahl von benutzerspezifischen Beobachtungsmatrixabschätzungen $\left(\hat{\underline{Y}}_{n-1}^1,...,\hat{\underline{Y}}_{n-1}^{NI}\right)$ bereitzustellen und wobei in dem Beschränkungsmatrixerzeuger (43D) die Bank aus Vektorumformem (48A$^1$,...,48$^{N_c}$) die benutzerspezifischen Beobachtungsmatrixabschätzungen umformt, um eine Mehrzahl von benutzerspezifischen Beobachtungsvektorabschätzungen $\left(\hat{\underline{Y}}_{n-1}^1,...,\hat{\underline{Y}}_{n-1}^{NI}\right)$ als entsprechende Spalten der Beschränkungsmatrix ($\hat{C}_n$) zu bilden für das Liefern zu jeder der Koeftizienteneinstelleinrichtungen (50A$^d$) von jedem der Empfängermodule (20$^d$) der zweiten Gruppe (D).

8. Empfänger nach Anspruch 3, **dadurch gekennzeichnet, daß** die Mehrzahl von Kanalidentifikationseinrichtungen (28$^1$,... ,28$^{NI}$) der ersten Gruppe von Empfängermodulen (20E$^1$,...,20E$^{NI}$) sowohl die Kanalvektorabschätzungen

$$\left( \underline{\hat{H}}_n^1,\ldots,\underline{\hat{H}}_n^{NI} \right)$$ als auch eine Mehrzahl von Sätzen von Subkanalvektorabschätzungen

$$\left( \hat{H}_n^{1,1},\ldots,\hat{H}_n^{1,N_f},\ldots,\hat{H}_n^{NI,1},\ldots,\hat{H}_n^{NI,N_f} \right)$$ bereitstellt, wobei jede der Kanalabschätzungen $\left( \mathcal{H}_n^1,\ldots,\mathcal{H}_n^{NI} \right)$ einen der Sätze von Subkanalvektorabschätzungen aufweist, wobei jeder der Sätze von Subkanalvektorabschätzungen eine Abschätzung der Kanalparameter von $N_f$ Subkanälen des Kanals zwischen der Basisstation und des Transmitters der entsprechenden Benutzerstation der NI-Benutzerstationen in der ersten Gruppe darstellt, wobei die Beschränkungssatzerzeugungseinrichtung (42E) eine Mehrzahl von Respreadern ($57E^1,\ldots,57E^{NI}$) und eine Mehrzahl von Kartalreplikatoren ($59E^1,\ldots,59E^{NI}$) aufweist, die mit der Mehrzahl von Respreadern ($57E^1,\ldots,57E^{NI}$) verbunden sind für das Filtern der Mehrzahl von Respreadsymbolen $\left( \hat{b}_n^1,\ldots,\hat{b}_n^{NI} \right)$ unter Verwendung der entsprechenden Subkanalvektorabschätzungen $\left( \hat{H}_n^{1,1},\ldots,\hat{H}_n^{1,N_f},\ldots,\hat{H}_n^{NI,1},\ldots,\hat{H}_n^{NI,N_f} \right)$, eine Mehrzahl ($N_c$) von Beschränkungen zu bilden gleich der Anzahl N,NI und Bilden einer Mehrzahl von benutzerspezifischen Unterkanalbeobachtungsmatrixabschätzungen $\left( \hat{Y}_{n-1}^{1,1},\ldots,\hat{Y}_{n-1}^{1,N_f},\ldots,\hat{Y}_{n-1}^{NI,1},\ldots,\hat{Y}_{n-1}^{NI,N_f} \right)$ entsprechend der Subkanäle, und in dem Beschränkungsmatrixerzeuger (43E) die Bank aus Umformem ($48A^1,\ldots,48^{N_c}$) die Sätze von benutzerspezifischen Beobachtungsmatrixabschätzungen umformt, um eine entsprechende Mehrzahl von Sätzen von benutzerspezifischen Subkanalbeobachtungsvektorabschätzungen $\left( \underline{\hat{Y}}_{n-1}^{1,1},\ldots,\underline{\hat{Y}}_{n-1}^{1,N_f},\ldots,\underline{\hat{Y}}_{n-1}^{NI,1},\ldots,\underline{\hat{Y}}_{n-1}^{NI,N_f} \right)$ als entsprechende Spalten der Beschränkungsmatrix ($\hat{C}_n$) für das Bereitstellen zu jeder der Koeffizienteneinstelleinrichtungen ($50A^d$) von jedem der Empfängermodule ($20^d$) der zweiten Gruppe (D) zu bilden.

9. Empfänger nach Anspruch 3, der weiterhin **gekennzeichnet ist durch** hypothetische Symbolabschätzungserzeugungseinrichtungen ($63F^1,\ldots,63F^{NI}$) für das Erzeugen von jeder der ausgewählten Komponenten einer Reihe von hypothetischen Symbolabschätzungen $\left( \underline{g}_n^1,\underline{g}_n^2,\underline{g}_n^3 \right)$ wobei die beschränkungssatzerzeugende Einrichtung (42F) eine Mehrzahl von Respreadern ($57F^1,\ldots,57F^{NI}$) aufweist, die jeweils für das Respreading von ausgewählten Sätzen der hypothetischen Symbolabschätzungen unter Verwendung eines entsprechenden der Benutzerspreadingcodes vorgesehen ist, und eine Mehrzahl von Kanalreplikatoreinrichtungen ($59F^1,\ldots,59F^{NI}$) für das Filtern der Sätze von Respreadsymbolabschätzungen, jeweils um eine Mehrzahl ($N_c$) von Beschränkungen gleich der Zahl 3 NI zu bilden und das Bilden einer Mehrzahl von benutzerspezifischen Observationsmatrixabschätzungen

$$\left( \hat{Y}_{0,n}^1,\hat{Y}_{-1,n}^1,\hat{Y}_{+1,n}^1,\ldots,\hat{Y}_{0,n}^{NI},\hat{Y}_{-1,n}^{NI},\hat{Y}_{+1,n}^{NI} \right),$$ wobei die Mehrzahl von Kanalreplikationseinrichtungen ($59F^1,\ldots,59F^{NI}$) Koeffizienten haben, die in Abhängigkeit von den Kanalvektorabschätzungen $\left( \underline{\hat{H}}_n^1,\ldots,\underline{\hat{H}}_n^{NI} \right)$ einstellbar sind, und wobei in der Beschränkungsmatrixerzeugungseinrichtung (43F) die Bank von Umformern ($48A^1,\ldots,48A^{N_i}$) die Sätze von benutzerspezifischen Beobachtungsmatrixabschätzungen umformt, um eine Mehrzahl von benutzerspezifischen Beobachtungsvektorabschätzungen

$$\left( \underline{\hat{Y}}_{0,n}^1,\underline{\hat{Y}}_{-1,n}^1,\underline{\hat{Y}}_{+1,n}^1,\ldots,\underline{\hat{Y}}_{0,n}^{NI},\underline{\hat{Y}}_{-1,n}^{NI},\underline{\hat{Y}}_{+1,n}^{NI} \right)$$ als entsprechende Spalten der Beschränkungsmatrix ($\hat{C}_n$) zu bilden für das Liefern zu jeder der Koeffizienteneinstelleinrichtungen ($50A^d$) jedes Empfängermoduls ($20^d$) der zweiten Gruppe (D).

10. Empfänger nach Anspruch 3, der weiterhin **gekennzeichnet ist durch** Einrichtungen ($63G^1,\ldots,63G^{NI}$) für das Bereitstellen von hypothetischen Symbolabschätzungen $\left(\underline{g}_n^{l_{+1,n}}\right)$, und wobei die beschränkungssatzerzeugende Einrichtung eine Kombination der Symbolabschätzungen $\left(\hat{b}_n^1,...,\hat{b}_n^{NI}\right)$ und die hypothetischen Symbolwerte verwendet bei der Produzierung des Satzes von benutzerspezifischen Beobachtungsmatrixabschätzungen.

11. Empfänger nach Anspruch 10, **dadurch gekennzeichnet, daß** die beschränkungssatzerzeugende Einrichtung (42G) eine Mehrzahl von Respreadern (57G$^1$,...,57G$^{NI}$), jeden für das Respreaden unter Verwendung eines entsprechenden Benutzerspreadingcodes von einer entsprechenden der Symbolabschätzungen $\left(\hat{\underline{b}}_n^1,...,\hat{\underline{b}}_n^{NI}\right)$ und

einer der hypothetischen Symbolabschätzungen $\left(\underline{g}_n^{l_{+1,n}}\right)$, um eine Mehrzahl von Respreadsymbolabschätzungen bereitzustellen, und eine Mehrzahl von Kanalreplikatoreinrichtungen (59G$^1$,...,59G$^{NI}$) aufweist, für das Filtern der Respreadsymbolabschätzungen, um eine Mehrzahl ($N_c$) von Beschränkungen, die gleich der Zahl 2 NI ist, zu bilden und Bilden einer Mehrzahl von benutzerspezifischen Beobachtungsmatrixabschätzungen

$\left(\hat{\underline{Y}}_{r,n}^1,\hat{\underline{Y}}_{+1.n}^1,...,\hat{\underline{Y}}_{r,n}^{NI},\hat{\underline{Y}}_{+1.n}^{NI}\right)$, wobei die Mehrzahl von Kanalreplikationseinrichtungen (59F$^1$,...,59F$^{NI}$) Koef-

fizienten hat, die in Abhängigkeit von den Kanalvektorabschätzungen $\left(\hat{\underline{H}}_n^1,...,\hat{\underline{H}}_n^{NI}\right)$ einstellbar sind, und wobei in der beschränkungsmatrixerzeugenden Einrichtung (43G) die Bank von Vektorumformern (48A$^1$,...,48$A^{Nc}$) die benutzerspezifischen Beobachtungsmatrixabschätzungen umformt, um eine entsprechende Mehrzahl von benut-

zerspezifischen Beobachtungsvektorabschätzungen $\left(\hat{\underline{Y}}_{r,n}^1,\hat{\underline{Y}}_{+1.n}^1,...,\hat{\underline{Y}}_{r,n}^{NI},\hat{\underline{Y}}_{+1.n}^{NI}\right)$ als entsprechende Spal-

ten der Beschränkungsmatrix ($\hat{C}_n$) zu bilden für das Bereitstellen zu jedem der Koeffizienteneinstelleinrichtungen (50A$^d$) jedes Empfängermoduls (20$^d$) der zweiten Gruppe (D).

12. Empfänger nach Anspruch 1, **gekennzeichnet dadurch, daß** die Observationsvektorableitungseinrichtung eine Mehrzahl von Despreadern (19$^1$,...,19$^{NI}$, 19$^d$) aufweist, jeweils für das Despreading der Observationsmatrix (Y$_n$) unter Verwendung eines entsprechenden der Benutzerspreadingcodes, um einen entsprechenden der Mehrzahl

von Postkorrelationsobservationsvektoren $\left(\underline{Z}_n^1,\underline{Z}_n^{NI},\underline{Z}_n^d\right)$ zu erzeugen und die Poslkorrelationsobservationsvektoren zu sowohl der Kanalidentifizierungseinrichtung als auch der Koeffizienteneinstelleinrichtung der strahlbündelnden Einrichtung von jedem von dem einen oder der mehreren Empfängermodule zu liefern, wobei die Elemente des Observationsvektors gewichtet durch die Kombinationseinrichtung des einen oder der mehreren Empfängermodule Elemente des entsprechenden Postkorrelationsobservationsvektor sind, und wobei die beschränkungsmatrixbereitstellende Einrichtung (42B, 43B) einer Einrichtung (42B) aufweist, die auf die Kanalabschätzungen

$(\mathcal{H}_n^1,...,\mathcal{H}_n^{MI},\mathcal{H}_{n-1}^i)$ und auf die Symbolabschätzungen $\left(\hat{\underline{b}}_n^1,...,\hat{\underline{b}}_n^{NI},\underline{g}^1,\underline{g}^2,\underline{g}^3,\underline{g}^{l+1,n}\right)$ entspre-

chend der ersten Gruppe (I) von Benutzerstationen reagiert für das Bereitstellen einer Mehrzahl von Beschränkungssatzmatrizen (C$_n$), die zusammen den Subraum der Interferenz, die den Spreadsignalen der ersten Gruppe von Benutzerstationen zuweisbar ist, charakterisieren, und wobei die beschränkungsmatrixerzeugende Einrichtung (43B) eine Mehrzahl von benutzerspezifischen Beschränkungsmatrixerzeugern (43B$^d$) aufweist, die jeweils mit einem entsprechenden der ein oder mehreren Empfängermodule (20$^d$) verknüpft sind, wobei jeder benutzerspezifische Matrixgenerator (43B$^d$) Despreadlngeinrichtungen (55B$^{d.l}$,..., 55B$^{d.Nt}$) hat für die Verwendung des entsprechenden Benutzerspreadingcodes des spezifischen Benutzers, um jede der benutzerspezifischen Beschränkungssatzmatrizen zu despreaden, um eine entsprechende Spalte einer entsprechenden der Mehrzahl von benutzerspe-

zifischen Postkorrelationsbeschränkungsmatrizen $\left(\hat{C}^{d}_{PCM,n}\right)$ zu bilden, wobei die Mehrzahl von benutzerspezifischen beschränkungsmatrixzerzeugenden Einrichtungen (43B$^d$) die Mehrzahl von benutzerspezifischen Postkorrelatiansbeschränkungsmatrizen zu den Koeffizienteneinstelleinrichtungen des jeweiligen einen Moduls von dem einen oder mehreren Empfängermodulen (20B$^d$) liefert.

13. Empfänger nach Anspruch 12, weiterhin **gekennzeichnet durch** Einrichtungen (30$^1$,...,30$^{NI}$) für das Ableiten von Amplitudenschätzungen $\left(\psi^{1}_{n},...,\psi^{NI}_{n}\right)$ der Signalkomponentenabschätzungen der ersten Gruppe von Benutzerstationen und für das Bereitstellen der Amplitudenabschätzungen zu den beschränkungssatzerzeugenden Einrichtungen als Teile der Kanalabschätzungen, und wobei die beschränkungssatzerzeugende Einrichtung (42C) eine Mehrzahl von Respreadern (52C$^1$,...,52C$^{NI}$) aufweist, jeweils für die Verwendung von einem entsprechenden der Benutzerspreadingcodes, um eine entsprechende der Symbolahschätzungen von den Empfängermoduten (20$^1$,..., 20$^{NI}$), der der ersten Gruppe von Benutzerstationen entspricht, zu respreaden, Skalierungseinrichtungen (58C$^1$,..., 58C$^{NI}$) für das Skalieren jeder der Respreadsymbolabschätzungen **durch** die Amplituden $\left(\psi^{1}_{n},...,\psi^{NI}_{n}\right)$, eine Mehrzahl von Kanalreplikationseinrichtungen (59C$^1$,..., 59C$^{NI}$) mit einstellbaren Koeffizienten in Abhängigkeil von den Kanalvektorabschätzungen $\left(\hat{\underline{H}}^{1}_{n},...,\hat{\underline{H}}^{NI}_{n}\right)$ für das Filtern der entsprechenden erneut verteilten und skalierten Symbolabschätzungen, um benutzerspezifische Beobachtungsmatrixabschätzungen $\left(\hat{Y}^{1}_{n-1},...,\hat{Y}^{NI}_{n-1}\right)$ bereitzustellen, und Einrichtungen (60) für das Summieren der benutzerspezifischen Observationsmatrixabschätzungen, um eine Observationsmatrixabschätzung ($\hat{I}_{n-1}$) zu bilden und selbige zu jedem der benutzerspezifischen Beschränkungsmatrixgeneratoren (43H$^d$) des einen oder der mehreren Empfängermodule der zweiten Gruppe zu liefern, wobei jeder der benutzerspezifischen Beschränkungsmatrixgeneratoren (43H$^d$) eine Despreadingeinrichtung (55B$^d$) aufweist für das Despreading der Observationsmatrixabschätzung $\left(\hat{I}_{n-1}\right)$ unter Verwendung des entsprechenden Benutzerspreadingcodes, um eine entsprechende $\left(\hat{I}^{d}_{PCM,n-1}\right)$ einer Mehrzahl von postkorrelationsbenutzerspezifischen Observationsvektorabschätzungen jeweils als eine einzelne Spalte der jeweiligen Beschränkungsmatrix $\left(\hat{C}^{d}_{PCM,n}\right)$ für die Verwendung durch die verknüpfte Einrichtung der Koeffizienteneinstelleinrichtungen (50B$^d$) in der zweiten Gruppe (D) zu bilden.

14. Empfänger nach Anspruch 12, **dadurch gekennzeichnet, daß** die beschränkungssatzerzeugende Einrichtung (42D) eine Mehrzahl von Respreadern (57D$^1$,...,57D$^{NI}$) jeweils für das Respreading einer entsprechenden der Symbolabschätzungen $\left(\hat{b}^{1}_{n},...,\hat{b}^{NI}_{n}\right)$ aus einer vorbestimmten Gruppe (I) der Empfängermodule entsprechend der ausgewählten der Komponenten der empfangenen Signale, und eine Mehrzahl von Kanalreplikationseinrichtungen (59D$^1$,...,59D$^{NI}$) mit in Abhängigkeit von den Kanalvektorabschätzungen $\left(\hat{\underline{H}}^{1}_{n},...,\hat{\underline{H}}^{NI}_{n}\right)$ einstellbaren Koeffizienten aufweist für das Filtern der entsprechenden Respreadsymbolabschätzungen, um eine Mehrzahl von benutzerspezifischen Observationsmatrixabschätzungen $\left(\hat{Y}^{1}_{n-1},...,\hat{Y}^{NI}_{n-1}\right)$ bereitzustellen, und wobei in jeder der benutzerspezifischen beschränkungsmatrixerzeugenden Einrichtungen (43I$^d$) die Despreadingeinrtchtung (55B$^{d,1}$,...,55B$^{d,Nc}$) die benutzerspezifischen Beobachtungsmatrixabschätzungen entspreizt (Despreading). um eine Mehrzahl von benutzerspezifischen Beobachtungsvektorabschätzungen $\left(\hat{Y}^{1}_{n-1},...,\hat{Y}^{NI}_{n-1}\right)$ als entsprechende

9palten einer entsprechenden benutzerspezifischen Beschränkungsmatrix ($\hat{C}_{PCM,n}$)zu bilden für das $\left( \hat{C}_{PCM,n} \right)$

zu bilden für das Liefern zu der verknüpften Koeffizienteneinstelleinrichtung (50B$^d$) des einen oder der mehreren Empfängermodule (20$^d$) in der zweiten Gruppe (D).

15. Empfänger nach Anspruch 12, **dadurch gekennzeichnet, daß** die Mehrzahl der Kanalidentifikationseinrichtungen (28$^1$,...,28$^{NI}$) der ersten Gruppe (I) der Empfängermodule (20E$^1$,...,20E$^{NI}$) sowohl die Kanalvektorabschätzungen

$$\left( \underline{\hat{H}}_n^1, ..., \underline{\hat{H}}_n^{NI} \right)$$ als auch eine Mehrzahl von Sätzen von Subkanalvektorabschätzungen

$$\left( \hat{H}_n^{1,1}, ..., \hat{H}_n^{1,N_f}, ..., \hat{H}_n^{NI,1}, ..., \hat{H}_n^{NI,N_f} \right)$$ jeweils der Kanalvektorabschätzungen $\left( \underline{\hat{H}}_n^1, ..., \underline{\hat{H}}_n^{NI} \right)$ er-

zeugt, die einen der Sätze der Subkanalvektorabschätzungen aufweist, wobei jeder der Sätze von Subkanalvektorabschätzungen eine Abschätzung der Kanalparameter der Subkanäle des Kanals zwischen der Basisstation und dem Transmitter der entsprechenden Benutzerstation repräsentiert, wobei die Beschränkungssatzgeneratoreinrichtung (42E) aufweist eine Mehrzahl von Respreadern (57E$^1$,...,57E$^{NI}$) und eine Mehrzahl von Kanalreplikatoren (59E$^1$,...,59E$^{NI}$) gekoppelt mit der Mehrzahl von Respreadern (57E$^1$,...,57E$^{NI}$) für das Filtern der Mehrzahl von

Respreadsymbolen $\left( \hat{b}_n^1, ..., \hat{b}_n^{NI} \right)$ der ersten Gruppe unter Verwendung entsprechender der Subkanalvektorab-

schätzungen $\left( \hat{H}_n^{1,1}, ..., \hat{H}_n^{1,N_f}, ..., \hat{H}_n^{NI,1}, ..., \hat{H}_n^{NI,N_f} \right)$, um eine Mehrzahl von Sätzen von benutzerspezifi-

schen Beobachtungsmatrixabschätzungen $\left( \hat{Y}_{n-1}^{1,1}, ..., \hat{Y}_{n-1}^{1,N_f}, ..., \hat{Y}_{n-1}^{NI,1}, ..., \hat{Y}_{n-1}^{NI,N_f} \right)$ zu bilden, wobei die Sätze zu den Unterkanälen korrespondieren und in jedem der benutzerspezifischen Beschränkungsmatrixgeneratoren (43K$^d$) die Despreadingeinrichtung (55B$^{d,1}$,...,55B$^{d,Nf}$) die Sätze von benutzerspezifischen Observationsmatrixabschätzungen entspreizt, um eine entsprechende Mehrzahl von Sätzen von benutzerspezifischen Beobachtungs-

vektorabschätzungen $\left( \underline{\hat{I}}_{PCM,n-1}^{1,1}, ..., \underline{I}_{PCM,n-1}^{d,NI,N_f} \right)$ zu bilden, wobei die Sätze entsprechende Spalten einer ent-

sprechende benutzerspezifischen Beschränkungsmatrix $\left( \hat{C}_{PCM,n}^d \right)$ bilden für das Bereitstellen zu der verknüpften Einrichtung der Koeffizienteneinstefleinrichtungen (50B$^d$) des einen oder der mehreren Empfängermodule (20$^d$) in der zweiten Gruppe (D).

16. Empfänger nach Anspruch 12, weiterhin **gekennzeichnet durch** hypothetische symbolabschätzungserzeugende Einrichtungen (63L$^1$,...,63L$^{NI}$) für das Erzeugen von jeder der ausgewählten Komponenten einer Reihe von hypo-

thetischen Symbolabschätzungen $\left( \underline{g}_n^1, \underline{g}_n^2, \underline{g}_n^3 \right)$, wobei die beschränkungssatzerzeugende Einrichtung (42L)

aufweist Respreadingeinrichtungen (57L$^1$,...,57L$^{NI}$) für das erneute Spreizen bzw. Verteilen unter Verwendung eines entsprechenden der Benutzerspreadingcodes für die erste Gruppe, ausgewählte Sätze der hypothetischen Symbolabschätzungen und eine Kanalreplikatoreinrichtung (59L$^1$,...,59L$^{NI}$) für das Filtern der Sätze von hypothetischen Respreadwerten, jeweils, um einen einer Mehrzahl von Sätzen von benutzerspezifischen Observationsma-

trixabschätzungen $\left( \hat{Y}_{0,n}^1, \hat{Y}_{-1,n}^1, \hat{Y}_{+1,n}^1, ..., \hat{Y}_{0,n}^{NI}, \hat{Y}_{-1,n}^{NI}, \hat{Y}_{+1,n}^{NI} \right)$ zu bilden, wobei die Mehrzahl on Kanalre-

plikationseinrichtungen (59L$^1$,...,59L$^{NI}$) in Abhängigkeit von den Kanalvektorabschätzungen $\left( \underline{\hat{H}}_n^1, ..., \underline{\hat{H}}_n^{NI} \right)$

einstellbaren Koeffizienten, und wobei in jeder der benutzerspezifischen beschränkungsmatrixerzeugenden Einrichtung (43L$^d$) die Despreadingeinrichtung (55B$^{d,1}$,...,55B$^{d,Nt}$) die Sätze von benutzerspezifischen Observationsmatrixabschätzungen entspreizt, um eine entsprechende Mehrzahl von Sätzen von benutzerspezifischen Beob-

achtungsvektürabschätzungen $\left( \hat{\underline{I}}_{PCM,n}^{d,1,1}, \hat{\underline{I}}_{PCM,n}^{d,1,2}, \hat{\underline{I}}_{PCM,n}^{d,1,3}, \ldots, \hat{\underline{I}}_{PCM,n}^{d,NI,1}, \hat{\underline{I}}_{PCM,n}^{d,NI,2}, \hat{\underline{I}}_{PCM,n}^{d,NI,3} \right)$ zu bilden, und zwar als entsprechende Spalten einer entsprechenden benutzerspezifischen Beschränkungsmatrix $\left( \hat{C}_{PCM,n}^{d} \right)$ für das Bereitstellen zu der Koeffizienteneinstelleinrichtung (50B$^d$) des verknüpften Empfängermoduls (20$^d$) in der zweiten Gruppe (D).

**17.** Empfänger nach Anspruch 12, weiterhin **gekennzeichnet durch** eine Einrichtung (63M$^1$,...,63M$^{NI}$) für das Bereitstellen von hypothetischen Symbolabschätzungen $\left( \underline{g}_n^{l+1,n} \right)$ und wobei die beschränkungssatzerzeugende Einrichtung (42M) eine Kombination der Symbolabschätzungen $\left( \hat{b}_n^1, \ldots, \hat{b}_n^{NI} \right)$ und der hypothetischen Symbolabschätzungen für das Erzeugen der Sätze von benutzerspezifischen Beobachtungsmatrixabschätzungen verwendet.

**18.** Empfänger nach Anspruch 17, **dadurch gekennzeichnet, daß** die beschränkungssatzerzeugende Einrichtung (42M) aufweist eine Respreadingeinrichtung (57M$^1$,...,57M$^{NI}$) für das erneute Verteilen bzw. Respreading, die die Symbolabschätzungen $\left( \hat{b}_n^1, \ldots, \hat{b}_n^{NI} \right)$ und die hypothetischen Symbolabschätzungen $\left( \underline{g}_n^{l+1,n} \right)$ unter Verwendung der entsprechenden Benutzerspreadingcodes verwendet, um eine Mehrzahl von Respreadsymbolabschätzungen bereitzustellen, und Kanalreplikatoreinrichtungen (59M$^1$,...,59M$^{NI}$) für das Filtern der Respreadsymbolabschätzungen, um eine Mehrzahl von Paaren von benutzerspezifischen Observationsmatrixabschätzungen $\left( \hat{Y}_{r,n}^1, \hat{Y}_{+1,n}^1, \ldots, \hat{Y}_{r,n}^{NI}, \hat{Y}_{+1,n}^{NI} \right)$ zu bilden, wobei jedes Paar zu einer der ersten Gruppe von Benutzerstationen korrespondiert, wobei die Kanalreplikationseinrichtung (59M$^1$,...,59M$^{NI}$) einstellbare Koeffizienten hat und zwar in Abhängigkeit von den Kanalvektorabschätzungen $\left( \hat{\underline{H}}_n^1, \ldots, \hat{\underline{H}}_n^{NI} \right)$ und wobei in jeder der benutzerspezifischen beschränkungsmatrixerzeugenden Einrichtungen (43M$^d$) die Despreadingeinrichtung (55B$^{d,l}$,...,55B$^{d,N_c}$) die benutzerspezifischen Observationsmatrixabschätzungen entspreizt, um eine entsprechende Mehrzahl von benutzerspezifischen Observationsvektorabschätzungen $\left( \hat{\underline{I}}_{PCM,n}^{d,1,k_1}, \hat{\underline{I}}_{PCM,n}^{d,1,k_2}, \ldots, \hat{\underline{I}}_{PCM,n}^{d,NI,k_1}, \hat{\underline{I}}_{PCM,n}^{d,NI,k_2} \right)$ als entsprechende Spalten einer entsprechenden benutzerspezifischen Beschrankungsmatrix $\left( \hat{C}_{PCM,n} \right)$ zu bilden für das Bereitstellen zu der Koeffizienteneinstelleinrichtung (50B$^d$) des verknüpften Empfängermoduls (20$^d$) in der zweiten Gruppe (D).

**19.** Empfänger nach Anspruch 1, **dadurch gekennzeichnet, daß**:

zumindest eines (20$^i$) des einen oder der mehreren Empfängermodule sowohl Symbolabschätzungen zu der beschränkungsmatrixerzeugenden Einrichtung (42P, 43P) für die Verwendung bei der Ableitung der Beschränkungsmatrizen liefert als auch die Beschränkungsmatrizen verwendet bei der Einstellung der Gewichtungskoeffizienlen seiner strahlbündelnden Einrichtung (47P$^l$),
wobei zumindest eines von dem einen oder der mehreren Empfängermodule weiterhin eine zweite strahlbündelnde Einrichtung (27P$^i$) mit zweiten Kombinationseinrichtungen und zweiten Koeffizienteneinstellungseinrichtungen für das Einstellen der Gewichtungskoeffizienten der zweiten Kombinationseinrichtungen hat,
die Observationsvektorableiteinrichtung (19, 44; 44/1, 44/2) weiterhin aufweist zweite Umformeinrichtungen (44/2) für das Umformen der Observationsmatrix (Y$_n$) und Liefern eines resultierenden zweiten Observationsvektors ($\underline{Y}_n$) zu der zweiten Kombinationseinrichtung (27P$^1$) und Verzögerungseinrichtungen (45) für das Verzögern des ersten Observationsvektors ($\underline{Y}_{n.1}$) relativ zu dem zweiten Observationsvektor ($\underline{Y}_n$).

wobei die zweite Koeffizienteneinstelleinrichtung ebenso angeordnet ist, um die Gewichtungskoeffizienten der zweiten Kombinationseinrichtung in Abhängigkeit von der Kanalvektorabschätzung $\left(\underline{\hat{Y}}^{i}_{0,n-1}\right)$, die von der ersten Koeffizienteneinstelleinrichtung im Strahlbündler (47P$^l$) verwendet wird, einzustellen, und wobei die Kanalidentifizierungseinrichtung (28P$^l$) des zumindest einen von dem einen oder der mehren Empfänger-module die Kanalvektorabschätzung $\left(\underline{\hat{Y}}^{l}_{0,n-1}\right)$ aus dem verzögerten ersten Observationsvektor $\left(\underline{Y}_{n-1}\right)$ ableitet und die Kanalvektorabschätzung zu der entsprechenden Koeffzienteneinstelleinrichtung der ersten Kombinationseinrichtung und der zweiten Kombinationseinrichtung liefert für die Verwendung bei der Aktualisierung ihrer Gewichtungskoeffizienten, und die Kanalabschätzungen $\left(\mathcal{H}^{i}_{n-1}\right)$ zu der Beschränkungsmatrix-erzeugungseinrichtung (42P, 43P) für die Verwendung bei der Ableitung der Beschränkungsmatrix liefert, wobei die erste Kombinationseinrichtung (47P'; 51, 52) und die zweite Kombinationseinrichtung (27PI; 51, 52) ihre entsprechenden Gewichtungskoeffizienten verwenden, um das jeweilige der Elemente des ersten verzögerten Observationsvektors und des zweiten Observationsvektors zu gewichten, und die gewichteten Elemente des entsprechenden ersten und zweiten Observationsvektors kombinieren, um eine erste Signalkomponen-tenabschätzung $\left(\hat{s}^{i}_{n-1}\right)$ bzw. eine zweite Signalkomponentenabschätzung $\left(\hat{s}^{i}_{MRC,n}\right)$ bereitzustellen, wobei zumindest eines der einen oder der mehreren Empfängermodule weiterhin aufweist zweite Symbolabschätzungseinrichtungen (29/P/2') für das Ableiten von der zweiten Signalkomponentenabschätzung $\left(\hat{s}^{i}_{MRC,n}\right)$ einer Symbolabschätzung $\left(\hat{b}^{l}_{MRC,n}\right)$ und Liefern der Symbolabschätzung $\left(\hat{b}^{i}_{MRC,n}\right)$ zu der beschränkungs-matrixbereitstellenden Einrichtung (42P, 43P), wobei die Beschränkungseinrichtung (42P, 43P) aufweist beschränkungssatzerzeugende Einrichtungen (42P) für das Erzeugen einer Mehrzahl von Beschränkungssatzmatrizen (C n-1), die zusammen den Subraum der Interferenz, die der ersten Gruppe von Benutzerstationssignalen zuweisbar ist, charakterisieren, und wobei die beschränkungsmatrixzerzeugende Einrichtung (43P) eine Vektorumformeinrichtung (48A$^1$,..., 48$^{N_r}$) für das Um-formen der Beschränkungssatzmatrizen $\left(\mathbb{C}^{1}_{n},...,\mathbb{C}^{N_r}_{n}\right)$ aufweist, um Spalten der Beschränkungsmatrix $\left(\hat{C}_{n-1}\right)$ zu bilden, wobei die beschränkungsmatrixerzeugende Einrichtung (43P) die Beschränkungsmatrix zu jeder der Koeffizienteneinstelleinrichtungen (50P$^d$) des einen oder der mehreren Empfängermodule (20$^d$) liefert.

20. Empfänger nach Anspruch 19, **dadurch gekennzeichnet, daß** zumindest eines des einen oder der mehreren Empfängermodule weiterhin eine Amplitudenabschätzeinrichtung (30P') für das Bereitstellen von Amplitudenab-schätzungen $\left(\psi^{l}_{n-1}\right)$ der Signalkomponenten von der ersten Gruppe von Benutzerstationen und das Liefern der Amplitudenabschätzungen zu der beschränkungssatzerzeugenden Einrichtung (42P) als Teile der Kanalabschät-zungen $\left(\mathcal{H}^{l}_{n-1}\right)$ aufweist.

21. Empfänger nach Anspruch 19, **dadurch gekennzeichnet, daß** zumindest eines des einen oder der mehreren Empfängermodule angeordnet ist, um für jedes Frame bzw. Einzelbild von Iterationen (#1, #2,...,#N$_s$) durchzuführen, um jede Symbolabschätzung abzuleiten, wobei die Anordnung derart ist, daß:

In jeder der Iterationen eines bestimmten Frame (n) der Beschränkungssatzerzeuger (42P) die Kanalabschät-zungen $\left(\mathcal{H}^{i}_{n-1}\right)$, eine erste Symbolabschätzung $\left(\hat{b}^{l}_{n-2}\right)$ und eine zweite Symbolabschätzung $\left(\hat{b}^{l}_{MRC,n}\right)$ von der ersten und zweiten strahlbündelnden Einrichtung des einen oder der mehreren Empfängermodule verwendet,

in einer ersten Iteration die beschränkungsmatrixbereitstellende Einrichtung (42P, 43P) eine Beschränkungs-matrix erster Iteration $\left( \hat{C}_{n-1}(1) \right)$ in Abhängigkeit ebenso von einer vorherigen Symbolabschätzung

$\left( \hat{b}_{MRC,n-1}^{i} \right)$, die vorher von jedem der zweiten Strahlbündler des einen oder der mehreren Empfängermodule erzeugt wurde, erzeugt, und die Beschränkungsmatrix $\left( \hat{C}_{n-1}(1) \right)$ der ersten Iteration zu der Koeffizieiiteneinstelleinrichtung der ersten stratllformenden Einrichtung (47P') liefert für die Verwendung mit der Spreadka-nalabschätzung $\hat{\underline{Y}}_{0,n-1}^{i}$, um die Koeffizienten der ersten strahlformenden Einrichtung (47P') für das Gewichten jedes Elementes des verzögerten ersten Observationsvektors ($\underline{Y}_{n-1}$) einzustellen, um eine erste Iterationssignalkomponentenabschätzung zu erzeugen, und die Entscheidungsregeleinheit (29P/1$^l$) die erste Iterationssignalkomponentenabschätzung verarbeitet, um eine erste Iterationssymbolabschätzung $\left( \hat{b}^{i}(1) \right)$ zu erzeu-gen,

in einem zweiten Iterationsschritt verwendet die beschränkungsmatrixerzeugende Einrichtung (43P) die erste Iterationssymbolabschätzung $\left( \hat{b}_{n-1}^{i}(1) \right)$ anstelle der vorherigen Symbolabschätzung $\left( \hat{b}_{MRC,n-1}^{i} \right)$, um die

Gewichtungskoeffizienten einzustellen und eine zweite Iterationsbeschränkungsmatrix $\left( \hat{C}_{n-1}(2) \right)$ für die Verwendung von der ersten strahlbündelnden Einrichtung und der ersten Entscheidungsregeleinrichtung einzustellen, um eine zweite Iterationssymbolabschätzung $\left( \hat{b}_{n-1}^{i}(2) \right)$ zu erzeugen, und

in einer letzten Iteration von insgesamt $N_3$-Iterationen die beschränkungsmatrixbereitstellende Einrichtung (42P, 43P) eine vorletzte Iterationssymbolabschätzung $\left( \hat{b}_{n-1}^{i}(N_s - 1) \right)$, die von der ersten Entscheidungsregel-einrichtung (29P/1$^1$) in der vorletzten Iteration erzeugt wurde, verwendet, um eine letzte Iterationsbeschrän-kungsmatrix $\left( \hat{C}_{n-1}(N_s) \right)$ für die Verwendung durch die erste Kombinationseinrichtung und die erste EntscheidungslregelEinrichtung bereitstellt, um eine letzte Iterationssyrnbolabschätzung $\left( \hat{b}_{n-1}^{i}(N_s) \right)$ als die

Zielsymbolabschätzung dieses Frames (u) für die Ausgabe als die Symbolabschätzung $\left( \hat{b}_{n-1}^{i} \right)$ bereitzustellen,

und wobei der Beschränkungssatzgenerator (42P) die Symbolabschätzung $\left( \hat{b}_{n-1}^{i} \right)$ puffert für die Verwen-dung in jeder Iteration des nächsten Frames (n+1) anstelle der Symbaiabschätzung $\hat{b}_{n-2}^{i}$ und der Beschränkungssatzgenerator (42P) eine neue Symbolabschätzung $\left( \hat{b}_{MRC,n+1}^{i} \right)$ von dem zweiten Strahlbündler (27P$^l$)

für alle Iterationen des neuen Frames verwendet, und die vorherige Symbolabschätzung $\left( \hat{b}_{MRC,n}^{i} \right)$ von der zweiten strahlbündeinden Einrichtung (27P$^i$) in nur der ersten Iteration des neuen Frames verwendet, wobei die vorherige Symbolabschätzung gepuffert wird, soweit erforderlich, und andere Variablen entsprechend inkrementiert werden.

22. Empfänger nach Anspruch 1 **dadurch gekennzeichnet, daß** die Mehrzahl von Empfängermodulen ($20^1$,...,,$20^{NI}$, $20^d$) aufweist einen ersten Satz (I) von Empfängermodulen ($20^1$,...,$20^{NI}$) für relativ starke Benutzersignale, wobei zumindest entsprechende Sälze der Kanalabschätzungen zu dem Beschränkungssatzgenerator (42) bei der Verwendung bei der Ableitung der Beschränkungsmatrizen beitragen, jedoch nicht die Beschränkungsmatrizen verwenden, um die Gewichtungskoeffizienten ihrer entsprechenden strahlbündelnden Einrichtungen zu aktualisieren, und einen zweiten Satz (D) der Empfängermodule ($20^d$) für relativ schwächere Benutzersignale, die die Beschränkungsmatrizen verwenden, um die Gewichtungskoeffizienten für ihre entsprechenden Strahlbündeleinrichtungen zu aktualisieren, jedoch weder Kanalabschätzungen noch Symbolabschätzungen zu dem Beschränkungssatzgenerator (42) beitragen für die Verwendung bei der Ableitung der Beschränkungsmatrizen.

23. Empfänger nach Anspruch 22, **dadurch gekennzeichnet, daß** die Mehrzahl von Empfängermodulen weiterhin aufweist zumindest einen weiteren Satz (M1) von zumindest einem Empfängermodul ($20^1$) wie in Anspruch 19 festgelegt für ein Benutzersignal mit einer Signalstärke, die zwischen den relativ starken und den relativ schwächeren Benutzersignalen liegt, und daß sowohl zumindest Kanalabschätzungen zu der beschränkungsmatrixerzeugenden Einrichtung (42P, 43P) für die Verwendung von Empfängermodulen in anderen Sätzen bei der Ableitung der Beschränkungsmatrizen beiträgt und die Beschränkungsmatrizen, die von den Beschränkungen abgeleitet wurden, die von den Empfängermodulen in ihrem eigenen Satz geliefert wurden, bei der Einstellung der Gewichtungskoeffizienten seiner Strahlbündeleinrichtung (47P') verwendet.

24. Empfänger nach Anspruch 23, **dadurch gekennzeichnet, daß** die Mehrzahl von Empfängermodulen weiterhin aufweist zumindest einen weiteren Satz (M2) von zumindest einem Empfängermodul ($20^l$) wie in Anspruch 29 festgelegt, für ein Benutzersignal mit einer Signalstärke, die zwischen dem relativ starken und den relativ schwächeren Benutzersignalen liegt, und wobei sowohl Kanalabschätzungen zu der beschränkungsmatrixerzeugenden Einrichtung (42P, 43P) für die Verwendung bei der Ableitung der Beschränkungsmatrizen geliefert werden als auch bei der Einstellung der Gewichtungskoeffizienten seiner Strahlbündeleinrichtung ($47P^i$), die Beschränkungsmatrizen, die von den Beschränkungen, die von den Empfängermodulen in einem eigenen Satz, anderen Sätzen oder eigenen und anderen Sätzen abgeleitet wurden, verwendet werden.

25. Empfänger nach Anspruch 23, **dadurch gekennzeichnet, daß** die Empfängermodule in hierarchischer Ordnung angeordnet sind entsprechend der Signalleistung und daß jedes Empfängermodul geringerer Leistung eine Beschränkungsmatrix verwendet, die von Beschränkungssälzen gebildet wird, die von jedem der Empfängermodule höherer Leistung geliefert werden.

26. Empfänger nach Anspruch 24, **dadurch gekennzeichnet, daß** die Empfängermodule in hierarchischer Ordnung entsprechend der Signalstärke angeordnet sind und daß jedes Empfängermodul geringerer Leistung eine Beschränkungsmatrix verwendet, die aus Beschränkungssätzen gebildet wird, die von jedem der Empfängermodule höherer Leistung bereitgestellt werden.

27. Empfänger nach Anspruch 23, **dadurch gekennzeichnet, daß** sich jedes der Empfängermodule in einem der Sätze von den Empfängermodulen in den anderen Sätzen unterscheidet.

28. Empfänger nach Anspruch 23, **dadurch gekennzeichnet, daß** die Empfängermodule in dem zweiten oder einem der weiteren Sätze von Empfängermodulen sich voneinander unterscheiden.

29. Empfänger nach Anspruch 3, **dadurch gekennzeichnet, daß** die strahlbündelnde Einrichtung von zumindest einem des einen oder der mehreren Empfängermodule eine Projektoreinrichtung ($100^d$) für das Multiplizieren einer Projektion $\left( \Pi_n^d \right)$ mit dem Beobachtungsvektor ($\underline{Y}_n$) aufweist, um einen interferenzreduzierten Observationsvektor $\left( \underline{Y}_n^{\Pi,d} \right)$ und einen Reststrahlbündler ($27Q^d$) aufweist, der auf die Projektion $\left( \Pi_n^d \right)$ und auf die Kanalvektorabschätzung $\left( \underline{\hat{Y}}_{0,n}^d \right)$ reagiert, um die Signalkomponentenabschätzung $\left( \hat{S}_n^d \right)$ zu erzeugen, und wobei die Kanalidentifikationseinrichtung (28Q$^d$) die Keinalvektorabschätzung $\left( \hat{\underline{Y}}^{d}_{0.n} \right)$ von dem interferenzreduzierten Beobach-

tungsvektor $\left( \underline{Y}^{II.d}_{n} \right)$ ableitet.

**30.** Empfänger nach Anspruch 29, **dadurch gekennzeichnet, daß** zumindest eines des einen oder der mehreren Empfängermodule weiterhin aufweist Umformungseinrichtungen (102Q$^d$) für das Umformen des interferenzredu-zierten Observationsvektors $\left( \underline{Y}^{II.d}_{...n} \right)$, um eine interferenzreduzierte Observationsmatrix $\left( Y^{II.d}_{n} \right)$ zu bilden, und

Despreader (19$^d$) für das Entspreizen der interferenzreduzierten Observationsmatrix $\left( Y^{II.d}_{n} \right)$ mit dem entspre-chenden Benutzerspreadingcode, um einen reduzierten Interferenzpostkorrelationsvektor $\left( \underline{Z}^{II.d}_{n} \right)$ für die Ver-wendung durch die Kanalidentifikationseinrichtung (28Q$^d$) bei dem Ableiten der Kanalvektorabschätzung zu bilden.

**31.** Empfänger nach Anspruch 3 für eine Basisstation in einem CDMA-System, in dem zumindest eine der Benutzerstationen eine Mehrzahl von unterschiedlichen Spreadingcodes verwendet, um entsprechende der Reihe von Symbolen für die gleichzeitige Übertragung zu verteilen bzw. zu spreaden, so daß die Komponente des empfangenen Signals (X(t)) entsprechend der Benutzerstation aufweist eine entsprechende Mehrzahl von Spreadsignalen, **dadurch gekennzeichnet, daß** in zumindest einem der einen oder mehreren Empfängermodule (20$^d$) die Strahlbün-deleinrichtung (47R$^{d,l}$,...,47R$^{d,N_m}$) verschiedene Sätze von Gewichtungskoeffizienten verwendet, um jedes Element des Observationsvektors ($\underline{Y}_n$) zu gewichten, um eine Mehrzahl von Signalkomponentenabschätzungen $\left( \hat{s}^{d,l}_{n},...,\hat{s}^{d,N_m}_{n} \right)$ entsprechend jeweiliger Serien der Serien von Symbolen zu bilden, und die Symbolabschätzungseinrichtung aus der Mehrzahl von Signalkomponentenabschätzungen $\left( \hat{s}^{d,l}_{n},...,\hat{s}^{d,N_m}_{n} \right)$ eine entsprechende

Mehrzahl von Symbolabschätzungen $\left( \hat{b}^{d,l}_{n},...,\hat{b}^{d,N_m}_{n} \right)$ ableitet, wobei die observationsvektorableitende Einrichtung aufweist Einrichtungen (19$^{d,l}$,...,19$^{d,N_m}$)für das Ableiten aus der Observationsmatrix einer Mehrzahl von Postkorrelationsobservationsvektoren $\left( \hat{\underline{Z}}^{d,l}_{n},...,\hat{\underline{Z}}^{d,N_m}_{n} \right)$, die jeweils einem entsprechenden der Mehrzahl von unterschiedlichen Spreadingcodes entsprechen, wobei die Kanalidentifikationseinrichtung (28R$^d$) aus der Mehrzahl von Postkorrelationsobservationsvektoren $\left( \hat{\underline{Z}}^{d,l}_{n},...,\hat{\underline{Z}}^{d,N_m}_{n} \right)$ eine entsprechende Mehrzahl von Sätzen von

Kanalvektorabschätzungen $\left( \hat{\underline{Y}}_{0.n},...,\hat{\underline{Y}}^{d.N_m}_{0.n} \right)$ ableitet und die Sätze zu den strahlbündelnden Einrichtungen (47R$^{d,l}$,...,47R$^{d,N_m}$) liefert und die Koeffizienteneinstelleinrichtung der strahlbündelnden Einrichtung (47R$^{d,l}$,..., 47R$^{d,N_m}$) die Sätze von Kanalvektorabschätzungen $\left( \hat{\underline{Y}}_{0,n},...,\hat{\underline{Y}}^{d.N_m}_{0,n} \right)$ verwendet, um die unterschiedlichen Sätze von Gewichtungskoeffizienten abzuleiten.

**32.** Empfänger nach Anspruch 31, **dadurch gekennzeichnet, daß** die Einrichtungen (19$^{d.l}$,...,19$^{d,N_m}$) für das Ableiten der Mehrzahl von Observationsvektoren aufweist Despreadingeinrichtungen für das Entspreizen (Despreading) der Observationsmatrix ($Y_n$) unter Verwendung von einem oder mehreren der Mehrzahl von unterschiedlichen Spreadingcodes, um eine Mehrzahl von Postkorrelationsbeobachtungsvektoren $\left(\hat{\underline{Z}}_n^{d,1},...,\hat{\underline{Z}}_n^{d,N_m}\right)$ für die Verwendung durch die Kanalidentifikationseinrichtung (28R$^d$) bei der Ableitung der Mehrzahl von Spreadkanalvektorabschätzungen $\left(\hat{\underline{Y}}_{0,n}^{d,1},...,\hat{\underline{Y}}_{0,n}^{d,N_m}\right)$ zu bilden.

33. Empfänger nach Anspruch 32, **dadurch gekennzeichnet, daß** die observationsvektorableitende Einrichtung weiterhin ebenso die Mehrzahl von Postkorrelationsobservationsvektoren $\left(\hat{\underline{Z}}_n^{d,1},...,\hat{\underline{Z}}_n^{d,N_m}\right)$ zu der strahlbündelnden Einrichtung (47$R^{d.l}$,...,47$R^{d.N_m}$) liefert und die Koeffizienteneinstelleinrichtung darin die Sätze von Gewichtungskoeffizienten verwendet, um die Elemente von den entsprechenden der Mehrzahl von Postkorrelationsobservationsvektoren zu gewichten, und jede der benutzerspezifischen Seschränkungsmatrixgeneratoreinrichtungen Despreadingeinrichtungen (55$B^{d.1}$ ,..., 55$B^{d.N_m}$)für das Despreading der benutzerspezifischen Beschränkungssatzmatrizen unter Verwendung von ein oder mehreren der Mehrzahl von unterschiedlichen Spreadingcodes aufweist.

34. Empfänger nach Anspruch 31, **dadurch gekennzeichnet, daß** die Einrichtungen für das Ableiten der Mehrzahl von Observationsvektoren aufweist Despreadingeinrichtungen (19$^{dδ,}$) für das Gewichten der Mehrzahl von unterschiedlichen Spreadingcodes durch die Mehrzahl von Symbolabschätzungen $\left(\hat{b}_n^{d,1},...,\hat{b}_n^{d,N_m}\right)$, um einen einzelnen Spreadingcode zu bilden und das Despreading der Observationsmatrix (Y$_n$) unter Verwendung des einzelnen Spreadingcodes, um einen Verbindungspostkorrelationsobservationsvektor $\left(\underline{Z}_n^{d,δ}\right)$ für die Verwendung durch die Kanalidentifikationseinrichtung (28R $^d$) zu erzeugen, um die Mehrzahl von Sätzen von Kanalvektorabschätzungen $\left(\hat{\underline{Y}}_{0,n},...,\hat{\underline{Y}}_{-0,n}^{d,N_m}\right)$ abzuleiten.

35. Empfänger nach Anspruch 34, **dadurch gekennzeichnet, daß** die observationsvektorableitende Einrichtung auch die Mehrzahl von Postkorrelationsobservationsvektoren $\left(\hat{\underline{Z}}_n^{d,1},...,\hat{\underline{Z}}_n^{d,N_m}\right)$ zu der strahlbündeinden Einrichtung (47R$^{d,l}$,...,47R$^{d,Nm}$) liefert und die Koeffizienteneinstelleinrichtung darin die Sätze von Gewichtungskoeffizienten verwendet, um die Elemente von den entsprechenden der Mehrzahl von Postkorrelationsobservationsvektoren zu gewichten, und jede der benutzerspezifischen Beschränkungsmatrixgeneratoreinrichtungen Despreadingeinrichtungen (55$B^{d,1}$,...,55$B^{d.Nm}$) für das Despreading der benutzerspezifischen Beschränkungssatzmatrizen unter Verwendung von der Mehrzahl von unterschiedlichen Spreadingcodes aufweist.

36. Empfänger nach Anspruch 3, **dadurch gekennzeichnet, daß** jedes der Mehrzahl von Empfängermodulen (20$^1$,..., 20$^{NI}$,20$^d$) mit einer Einzelbilddauer gleich ganzer Vielfacher (F$_1$,....,F$_{NI}$,F$_d$) von Symbolperioden der entsprechenden Benutzer arbeitet und eine Mehrzahl (F$_1$,...,F$_{NI}$,F$_d$) von unterschiedlichen Segmenten desselben langen Spreadingcodes gleiche der Anzahl von Symbolperioden in dem Frame verwendet, wobei in dem zumindest einem des ein oder mehreren Receivermodulen (20$^d$) die strahlformende Einrichtung (47$S^{d.1}$,...,47$S^{d,F_d}$) verschiedene Sätze vom Gewichtungskoeffizienten verwendet, um jedes Element des Observationsvektors (Y$_n$) zu gewichten, um eine Mehrzahl (F$_d$) von Signalkomponentenabschätzungen $\left(\hat{s}_n^{d,1},...,\hat{s}_n^{d,F_d}\right)$ zu bilden, und die Symboleinschätzungseinrichtung (29S$^{d,l}$ ,..., 29S$^{d,F_d}$) aus der Mehrzahl von Signalkomponentenabschätzungen $\left(\hat{s}_n^{d,1},...,\hat{s}_n^{d.F_d}\right)$ eine entsprechende Mehrzahl von Symbolabschätzungen $\left(\hat{b}_n^{d,1},...,\hat{b}_n^{d,F_d}\right)$ ableitet, wobei die observationsvektorableitende Einrichtung aus der Observationsmatrix einen oder mehrere einer Mehrzahl von Postkorrelationsobservationsvek-

toren $\left(\hat{\underline{Z}}_n^{d,1},...,\hat{\underline{Z}}_n^{d,F_d}\right)$ ableitet, die Kanalidentifikationseinrichtung (28S$^d$) aus den Postkorrelationsobservati-

onsvektoren $\left(\hat{\underline{Z}}_n^{d,1},...,\hat{\underline{Z}}_n^{d,F_d}\right)$ eine entsprechende Mehrzahl von Sproadkarialvektorabschätzungen

$\left(\hat{\underline{Y}}_{0,n}^{d,1},...,\hat{\underline{Y}}_{0,n}^{d,F_d}\right)$ ableitet und die Spreadkanalvektorabschätzungen $\left(\hat{\underline{Y}}_{0,n}^{d,1},...,\hat{\underline{Y}}_{0,n}^{d,F_d}\right)$ zu der strahlbündeln-

den Einrichtung (47S$^{d,1}$,...,47S$^{d,F_d}$) liefert, wobei jede Spreadkanalvektorabschätzung durch eines der Segmente des langen Spreadingcodes geteilt ist und die Koeffizienteneinstelleinrichtung der strahlbündelnden Einrichtung

(47S$^{d,1}$,...,47S$^{d,F_d}$) die Kanalvektorabschätzungen $\left(\hat{\underline{Y}}_{0,n}^{d,1},...,\hat{\underline{Y}}_{0,n}^{d,F_d}\right)$ verwendet, um die unterschiedlichen Sätze von Gewichtungskoeffizienten abzuleiten.

**37.** Empfänger nach Anspruch 36, **dadurch gekennzeichnet, daß** die Einrichtung *(19S$^{d,1}$,.....,19S$^{d,F_d}$)* für das Ableiten von einem oder mehreren der Mehrzahl von Postkorrelationsobservationsvektoren eine Despreadingeinrichtung für das Despreading der Observationsmatrix (Y$_n$) unter Verwendung von ein oder mehreren der unterschiedlichen Segmente desselben langen Spreadingcodes aufweist, so daß die Mehrzahl von Observationsvektoren eine Mehr-

zahl von Postkorrelationsobservationsvektoren $\left(\hat{\underline{Z}}_n^{d,1},...,\hat{\underline{Z}}_n^{d,F_d}\right)$ aufweist, wobei einer oder mehrere hiervon für die Verwendung durch die Kanalidentifikationseinrichtung (28S$^d$) vorgesehen sind.

**38.** Empfänger nach Anspruch 37, **dadurch gekennzeichnet, daß** die observationsvektorableitende Einrichtung ebenso die Mehrzahl von Postkorrelationsobservationsvektoren $\left(\hat{\underline{Z}}_n^{d,1},...,\hat{\underline{Z}}_n^{d,F_d}\right)$ zu der strahlbündelnden Einrich-

tung (47S$^{d,1}$,...,47S$^{d,F_d}$) liefert und die Koeffizienteneinstelleinrichtung darin die Sätze von gewichteten Koeffizienten verwendet, um die Elemente der entsprechenden der Mehrzahl von Postkorrelationsobservationsvektoren zu gewichten, und wobei jede der benutzerspezifischen Beschränkungsmatrixerzeugungseinrichtungen Despreadingeinrichtungen (55B$^{d,1}$,...,55B$^{d,F_d}$) für das Despreading der benutzerspezifischen Beschränkungssatzmatrizen unter Verwendung des entsprechenden Segmentes der Mehrzahl (F$_d$) von unterschiedlichen Spreadingcodesegmenten aufweist.

**39.** Benutzerstationsempfänger für ein CDMA-Kommunikationssystem, der eine Mehrzahl (NB) von Basisstationen (11) und eine Vielzahl (U) von Benutzerstationen (10$^1$,...,10$^U$) aufweist, wobei zumindest eine Mehrzahl (U') der Benutzerstationen in einer Zelle, die mit einer der Basisstationen verknüpft ist und von dieser bedient wird, ist, wobei diese eine Basisstation eine Mehrzahl von Transmittermodulen für das Verteilen bzw. Spreading der Benutzersignale für die Übertragung zu der Mehrzahl (U') von Benutzerstationen und einen Empfänger für das Empfangen der verteilten Benutzersignale, die von der Mehrzahl (U') von Benutzerstationen übermittelt werden, aufweist, wobei die Benutzerstationen jeweils einen Empfänger für das Empfangen des entsprechenden verteilten Benutzersignals, das durch die Basisstation übertragen wird, hat, wobei die Mehrzahl (U') der Benutzerstationen jeweils einen eindeutigen Verteilcode bzw. Spreadingcode hat, der ihr zugewiesen ist, für die Verwendung durch die Benutzerstation und die entsprechenden der Basisstationstransmittermodule, um die Benutzersignale dieses Benutzers für die Übertragung zu verteilen,
wobei sich die verteilten Benutzersignale, die von den Basisstationstransmittermodulen zu einer bestimmten der Mehrzahl (U') von Benutzerstationen übertragen wurden, über eine Mehrzahl von Kanälen (14$^1$,...,14$^{U'}$) ausbreiten, der Empfänger einer bestimmten der Mehrzahl (U') von Benutzerstationen ein Signal (X(t)) empfängt, das Komponenten aufweist entsprechend der verteilten Benutzersignale für die bestimmte Benutzerstation und verteilte Benutzersignale, die von anderen Transmittermodulen der Mehrzahl (NB) von Basisstationen für andere Benutzer übertragen wurden, wobei jedes der verteilten Benutzersignale eine Reihe von Symbolen aufweist, die verteilt sind unter Verwendung des Spreadingcodes bzw. Verteilcodes, der mit der entsprechenden der Benutzerstationen verknüpft ist,

**dadurch gekennzeichnet, daß** der Benutzerstationsempfänger aufweist:

eine Mehrzahl (NB) von Empfängermodulen ($20^{v'}$), wobei jedes für das Ableiten von aufeinanderfolgenden Frames des empfangenen Signals (X(t)) von Abschätzungen von Sätzen der Serien von Symbolen von einer entsprechenden der Basisstationen vorgesehen ist,

Vorverarbeitungseinrichtungen (18) für das Ableiten einer Reihe von Observationsmatrizen ($Y_n$) aus dem empfangenen Signal (X(t)), jedes für die Verwendung durch jedes der Empfängermodule ($20^v$) in dem Frame, um Abschätzungen von Sätzen der Symbole abzuleiten, und

eine Einrichtung (19, 44) für das Ableiten einer Mehrzahl von Sätzen von Observationsvektoren

$$\left( \underline{Y}_n^{v',1,1} ,..., \underline{Y}_n^{v',NI,F_{NI}} ; \underline{Z}_n^{v',1,1} ,..., \underline{Z}_n^{v',NI,F_{NI}} \right)$$ von jeder Observationsmatrix und Anlegen jedes der Sätze von Observationsvektoren an eines der Mehrzahl von Empfängermodulen ($20^{v'}$),

wobei jedes Empfängermodul aufweist:

Kanalidentifikationseinrichtungen ($28T^{v'}$) für das Ableiten eines Satzes von Spreadkanalvektorabschäfzun-

gen $$\left( \underline{\hat{Y}}_{0,n}^{v',1,1} ,..., \underline{\hat{Y}}_{0,n}^{v',NI,F_{NI}} \right)$$ basierend auf Parameterabschätzungen des Kanals zwischen der entsprechenden Basisstation und der Benutzerstation aus dem entsprechenden Satz der Sätze von Observationsvektoren,

eine strahlbündelnde Einrichtung ($47T^{v',1,1},...,47T^{v',NI,F_{NI}}$) mit einer Koeffizienteneinstelleinrichtung für das Erzeugen von Sätzen von Gewichtungskoeffizienten in Abhängigkeit von den Sätzen von Kanalvektorabschätzungen und Kombinationseinrichtungen für das Verwenden von jedem der Sätze von Gewichtungskoeffizienten, um die entsprechenden Elemente eines der Observationsvektoren zu gewichten und die gewichteten

Elemente zu kombinieren, um einen korrespondierenden Satz von Signalkomponentenabschätzungen

$$\left( \hat{S}_n^{v',1,1} ,..., \hat{S}_n^{v',NI,F_{NI}} \right)$$ bereitzustellen, und Symbolabschätzeinrichtungen ($29T^{v',1,1},...,29T^{v',NI,F_{NI}}$) für das Ableiten aus dem Satz von Signalkomponentenabschätzungen eines Satzes von Abschätzungen

$$\left( \hat{b}_n^{v',1,1} ,..., \hat{b}_n^{v',NI,F_{NI}} \right)$$ von Symbolen, die von dem entsprechenden Transmit-termodul verteilt und von der Basisstation übertragen wurden,

wobei der Benutzerstationsempfänger weiterhin aufweist eine Einrichtung (42, 43), die auf die Symbolabschät-

zungen $$\left( \hat{b}_n^{v',1,1} ,..., \hat{b}_n^{v',NI,F_{NI}} ; \underline{g}_n^1, \underline{g}_n^2, \underline{g}_n^3 \right)$$ und die Kanalabschätzungen $(\mathcal{H}_n^{v'})$ von jedem der Mehrzahl (NB) von Empfängermodulen reagiert, wobei die Kanalabschätzungen zumindest Kanalvektorabschätzun-

gen $(\underline{\hat{H}}_n^{v'})$ für die Kanäle ($14^v$) zwischen dem Benutzerstationsempfänger und den Basisstationen aufweist,

für das Bereitstellen zumindest einer Beschrärikungsmatrix $\left( \hat{C}_n \right)$, die dem Interferenzunterraum der Komponenten des empfangenen Signals entsprechend den verteilten Signalen darstellt, und wobei in jedem der Empfängermodule ($20^{v'}$) die Koeffizienteneinstelleinrichtung die Sätze von Gewichtungskoeffizienten in Abhängigkeit von sowohl der Beschränkungsmatrix ($\hat{C}_n$) als auch der Kanalvektorabschätzungen erzeugt, um das Empfängermodul ($20^{v'}$) auf eine im wesentlichen Null-Antwort auf den Abschnitt des empfangenen Signals (X(t)), der dem Interferenzunterraum entspricht, einzustellen.

**40.** Benutzerstationsempfänger nach Anspruch 39, **dadurch gekennzeichnet, daß** die observationsvektorableitende Einrichtung aufweist eine Einrichtung ($19^{v',1,1},...,19^{v',NI,F_{NI}}$) für das Ableiten aus der Observationsmatrix einer Mehr-

zahl von Postkorrelationsobservationsvektoren $\left( \underline{Z}_n^{v',1,1},...,\underline{Z}_n^{v',NI.F_{Nt}} \right)$ und Liefern der Mehrzahl von Postkor-

relationsobservationsvektoren $\left( \underline{Z}_n^{v',1,1},...,\underline{Z}_n^{v',NI.F_{Nt}} \right)$ zu der Kanalidentifikationseinrichtung (28T$^{v'}$) für die Verwendung bei der Erzeugung der Sätze von Kanatvektorabschätzungen $\left( \underline{\hat{Y}}_{0.n}^{v',1,1},...,\underline{\hat{Y}}_{0.n}^{v',NI.F_{Nt}} \right)$.

**41.** Benutzerstationsempfänger nach Anspruch 39, **gekennzeichnet dadurch, daß** die Mehrzahl (NB) von Empfängermodulen (20$^v$) Symbole für Benutzersignale außer denjenigen, die für den Benutzer des Benutzerstationsempfängers ableitet, und der Benutzerstationsempfänger ein zusätzliches Empfängermodul (20$^d$) aufweist für das Ableiten von Symbolen aus dem empfangenen Signal, das für den Benutzer des Benutzerstationsempfängers bestimmt ist und von einer entsprechenden bedienenden (v) der Mehrzahl von Basisstationen übertragen wurde, wobei jedes der Mehrzahl von Empfängermodulen (20$^v$, 20$^d$) mit einer Framedauer gleich einem ganzzahligen Vielfachen der Symbolperiode arbeitet und eine entsprechende Anzahl von Segmenten ($F_1,...,F_{NI},F_d$) eines langen Spreadingcodes bzw. Verteilcodes verwendet, wobei jedes Segment einem einer Mehrzahl ($F_1,...,F_{NI},F_d$) von unterschiedlichen Segmenten desselben langen Spreadingcodes gleich der Mehrzahl von Symbolperioden in dem Frame entspricht und wobei in dem zusätzlichen Empfängermodul (20$^d$) die strahlbündeinde Einrichtung (47S$^{d,1}$,...,47$S^{d,F_d}$) verschiedene Sätze von Gewichtungskoeffizienten verwendet, um jedes Element des Observationsvektors ($\underline{Y}_n$ zu

gewichten, um eine Mehrzahl ($F_d$) von Signalkomponentenabschätzungen $\left( \hat{\underline{S}}_n^{d,1},...,\hat{\underline{S}}_n^{d,F_d} \right)$ zu bilden, und die

Symbolabschätzungseinrichtung $\left( 29S_n^{d,1},...,29S_n^{d,F_d} \right)$ aus der Mehrzahl von Signalkomponentenabschät-

zungen $\left( \hat{\underline{S}}_n^{d,1},...,\hat{\underline{S}}_n^{d,F_d} \right)$ eine entsprechende Mehrzahl von Symbolabschätzungen $\left( \hat{\underline{b}}_n^{d,1},...,\hat{\underline{b}}_n^{d,F_d} \right)$ abzulei-

ten, wobei die observationsvektorableitende Einrichtung aus der Observationsmatrix eine Mehrzahl von Observa-

tionsvektoren $\left( \underline{Y}_n^{d,1},...,\underline{Y}_n^{d,F_d} \right)$ ableitet, wobei die Kanalidentifizierungseinrichtung (28S$^d$) aus den Observati-

onsvektoren $\left( \underline{Y}_n^{d,1},...,\underline{Y}_n^{d,F_d} \right)$ eine entsprechende Mehrzahl von Spreadkanalvektorabschätzungen

$\left( \underline{Y}_{0.n}^{d,1},...,\underline{Y}_{0.n}^{d,F_d} \right)$ ableitet, und selbige der strahlbündelnden Einrichtung (47$S^{d,1}$, ..., 47$S^{d,F_d}$) bereitstellt, wobei jede Kanalveklorabschätzung von dern entsprechenden Segment der Segmente des langen Spreadingcodes verteilt wird, und die Koeffizienleneinstelleinrichtung der strahlbündelnde Einrichtung (47S$^{d,1}$,...,47S$^{d,F_d}$)die Kanalvektor-

abschätzungen $\left( \hat{\underline{Y}}_{0.n}^{d,1},...,\hat{\underline{Y}}_{0.n}^{d,F_d} \right)$ verwendet, um die unterschiedlichen Sätze von Gewichtungskoeffizienten abzuleiten.

**42.** Benutzerstationsempfänger nach Anspruch 39, **dadurch gekennzeichnet, daß** die Mehrzahl (NB) von Empfängermodulen (20$^v$) andere Symbole für Benutzersignale als diejenigen, die für den Benutzer des Benutzerstationsempfängers vorgesehen sind, ableitet, und der Benutzerstationsempfänger aufweist ein zusätzliches Empfängermodul (20$^d$) für das Ableiten von Symbolen aus dem empfangenen Signal, das für den Benutzer des Benutzerstationsempfängers vorgesehen ist, wobei jedes der Mehrzahl von Empfängermodulen (20$^v$,20$^d$) mit einer Framedauer gleich einem ganzzahligen Vielfachen der Symbolperiode arbeitet und eine entsprechende Anzahl von Segmenten eines langen Spreadingcodes verwendet, wobei jedes Segment einer Mehrzahl ($F_1,...,F_{NI},F_d$) von unterschiedlichen Segmenten desselben langen Spreadingcodes gleich der Mehrzahl von Symbolperioden in dem Frame entspricht, und wobei in dem zusätzlichen Empfängermodul (20$^d$) die strahlbündelnde Einrichtung (47$T^{v,d,1}$,...,47$T^{v,d,F_d}$) verschiedene Sätze von Gewichtungskoeffizienten verwendet, um jedes Element des Observationsvektors ($\underline{Y}_n$) zu

gewichten, um eine Mehrzahl ($F_d$) der Signalkomponentenabschätzungen $\left(\hat{S}_n^{v,d,1},...,\hat{S}_n^{v,d,F_d}\right)$ zu bilden, und die Symbolabschätzeinrichtung ($29T^{v,d,1},...,29T^{v,d,F_d}$) aus der Mehrzahl von Signalkomponentenabschätzungen $\left(\hat{S}_n^{v,d,1},...,\hat{S}_n^{v,d,F_d}\right)$ eine entsprechende Mehrzahl von Symbolabschätzungen $\left(\hat{b}_n^{v,d,1},...,\hat{b}_n^{v,d,F_d}\right)$ ableitet, und wobei die Koeffizienteneinstelleinrichtung der strahlbündelnden Einrichtung ($47T^{v,d,1},...,47T^{v,d,F_d}$) die Gewichtungskoeffizienten unter Verwendung der Beschränkungsmatrix ableitet, die von der beschränkungsmatrixerzeugenden Einrichtung ($43T$) und den Spreadkanalvektorabschätzungen $\left(\hat{\underline{Y}}_{0,n}^{v,d,1},...,\hat{\underline{Y}}_{0,n}^{v,d,F_d}\right)$ abgeleitet werden, der von der Kanalidentifikationseinrichtung ($28T^v$) des Empfängermoduls ($20^v$) entsprechend der Basisstation (v), die die Benutzerstation bedient, erzeugt wird.

43. Benutzerstationsempfänger nach Anspruch 42, **dadurch gekennzeichnet, daß** die observatiansvektorableitende Einrichtung eine Despreadingeinrichtung ($19^{v',1,1},...,19^{v',N,Nl,F_{Nl}}$) für Despreading der Observationsmatrix, um eine Mehrzahl von Postkorrelationsobservationsvektoren $\left(\underline{Z}_n^{v',1,1},...,\underline{Z}_n^{v',Nl,F_{Nl}}\right)$ zu bilden, und das Liefern der Postkorrelationsobservationsvektoren $\left(\underline{Z}_n^{v',1,1},...,\underline{Z}_n^{v',Nl,F_{Nl}}\right)$ zu der Kanalidentifikationseinrichtung ($28T^v$) für die Verwendung bei der Erzeugung der Sätze von Kanalvektorabschätzungen $\left(\hat{\underline{Y}}_{0,n}^{v',1,1},...,\hat{\underline{Y}}_{-0,n}^{v',Nl,F_{Nl}}\right)$ aufweist.

44. Benutzerstationsempfänger nach Anspruch 39, **dadurch gekennzeichnet, daß** zumindest eines der Transmittermodule von einer der Basisstationen eine Mehrzahl ($N_m$) von unterschiedlichen Spreadingcodes verwendet, um jeweilige der Serien von Symbolen für die simultane Übertragung in demselben Frame verteilt bzw. spreizt, so daß die Komponente des empfangenen Signals ($X(t)$) entsprechend dieses Basisstationstransmittermoduls eine entsprechende Mehrzahl von Spreadsignalen aufweist, und zumindest eines ($20^v$) der Mehrzahl von Empfängermodulen ($20U$) weiterhin aufweist eine Amplitudenabschätzeinrichtung ($30U^{v'}$) für das Ableiten der Gesamtamplitude eines Satzes von Signalkomponentenabschätzungen $\left(\hat{S}_n^{v',1,1},...,\hat{S}_n^{v',Nl,N_m}\right)$, der von Strahlbündelungseinrichtungen ($47U^{v',1,1},...,47U^{v',Nl,N_m}$) hiervon erzeugt wurde, wobei die Strahlbündelungseinrichtungen ($47Uv'.1.1,...,47U^{v',Nl,N_m}$) verschiedene Sätze von Gewichtungskoeffizienten verwendet, um jedes Element des Observationsvektors ($\underline{Y}_n$) zu gewichten, um die Mehrzahl von Signalkomponentenabschätzungen $\left(\hat{S}_n^{v',1,1},...,\hat{S}_n^{v',Nl,N_m}\right)$ entsprechend der jeweiligen der Serie von Symbolen zu bilden, und wobei die Symbolabschätzeinrichtung ($29U^{v',1,1},...,29U^{v',Nl,N_m}$) aus der Mehrzahl von Signsikomponentenabschätzungen $\left(\hat{S}_n^{v',1,1},...,\hat{S}_n^{v',Nl,N_m}\right)$ eine entsprechende Mehrzahl von Symbolabschätzungen $\left(\hat{b}_n^{v',1,1},...,\hat{b}_n^{v',Nl,N_m}\right)$ ableitet, wobei die Kanalidentifikationseinrichtung ($28U^v$) eine entsprechende Mehrzahl von Sätzen von Spreadkanatvektorabschätzungen $\left(\hat{\underline{Y}}_{0,n}^{v',1,1},...,\hat{\underline{Y}}_{0,n}^{v',Nl,N_m}\right)$ ableitet und zwar jeweils verteilt durch einen der Mehrzahl von unterschiedlichen Spreadingcodes, und die Sätze zu der strahlbündelnden Einrichtung ($47U^{v',1,1l},...,47U^{v'Nl,N_m}$) liefert und die Koeffizienteneinstelleinrichtung der Strahlbündeinden Einrichtung ($47U^{v',1,1},...,47U^{v',Nl,Nm}$), die Sätze von Spreadkanalvektorabschätzungen

$$\left(\hat{\underline{Y}}_{0,n}^{v',1,1},...,\hat{\underline{Y}}_{0,n}^{v',Nl,N_m}\right)$$ verwendet, um die unterschiedlichen Sätze von Gewichtungskoeffizienten abzuleiten.

**45.** Benutzerstationsempfänger nach Anspruch 44, **dadurch gekennzeichnet, daß** die Mehrzahl (NB) von Empfängermodulen ($20^{v'}$) Symbole für Benutzersignale außer denen, die für den Benutzer den Benutzerstationsempfänger vorgesehen sind, ableitet und der Benutzerstationsempfänger aufweist ein zusätzliches Empfängermodul ($20^d$) für das Ableiten von Symbolen aus dem empfangenen Signal, das für den Benutzer des Benutzerstationsempfängers vorgesehen ist, wobei jedes der Mehrzahl von Empfängermodulen ($20^{v'}, 20^d$) mit einer Framedauer gleich einem ganzzahligen Vielfachen der Symbolperiode arbeitet und eine entsprechende Anzahl von Segmenten eines langen Spreadingcodes verwendet, wobei jedes Segment zu einem entsprechenden einer Mehrzahl ($N_m, F_d$) von unterschiedlichen Segmenten desselben langen Spreadingcodes gleich der Mehrzahl von symbolperioden in dem Frame entspricht, und wobei in dem zusätzlichen Empfängermodul ($20^d$) die strahlbündelnde Einrichtung ($47T^{v,d,1},..., 47T^{v,d,F_d}$)verschiedene Sätze von Gewichtungskoeffizienten verwendet, um jedes Element des Beobachtungsvektors ($\underline{Y}_n$) zu wichten, um eine Mehrzahl ($F_d$) von Signalkomponentenabschätzungen $\left(\hat{\underline{S}}_n^{v,d,1},...,\hat{\underline{S}}_n^{v,d,F_d}\right)$ zu bilden und wobei die Syrnbolabschätzungseinrichtung ($29T^{v,d,1},..., 29T^{v,d,F_d}$) aus der Mehrzahl von Signalkomponentenabschätzungen $\left(\hat{\underline{S}}_n^{v,d,1},...,\hat{\underline{S}}_n^{v,d,F_d}\right)$ eine entsprechende Mehrzahl von Symbolabschätzungen $\left(\hat{b}_n^{v,d,1},...,\hat{b}_n^{v,d,F_d}\right)$ ableitet, und wobei die Koeffizieriteneinstelleinrichtung der strahlbündelnden Einrichtung ($47T^{v,d,1},...,47T^{v,d,F_d}$) die Gewichtungskoeffizienten unter Verwendung der Beschränkungsmatrix, die von der beschränkungsmatrixerzeugenden Einrichtung (43T) und die Spreadkanal-vektorabschätzungen $\left(\hat{\underline{Y}}_{0,n}^{v,d,1},...,\hat{\underline{Y}}_{0,n}^{v,d,F_d}\right)$, die von der Kanalidentifikationseinrichtung ($28T^{v'}$) des Empfängermoduls ($20^v$) entsprechend der Basisstation (v), die die Benutzerstation bedient, hergestellt wurde, ableitet.

**46.** Empfänger nach Anspruch 44, **dadurch gekennzeichnet, daß** die observationsvektorableitende Einrichtung aufweist eine Despreadingeinrichtung ($19^{v',1,1},...,19^{v',Nl,F_m}$) für das Despreading der Observationsmatrix, um eine Mehrzahl von Postkorrelationsobservationsvektoren $\left(\underline{Z}_n^{v',1,1},...,\underline{Z}_n^{v',Nl,F_m}\right)$ zu bilden und die Mehrzahl von Postkorrelationsobservationsvektoren $\left(\underline{Z}_n^{v',1,1},...,\underline{Z}_n^{v',Nl,F_m}\right)$ zu der Kanalidentifikationseinrichtung ($28U^{v'}$) für die Verwendung bei der Erzeugung der Sätze von Kanalvektorabschätzungen $\left(\hat{\underline{Y}}_{0,n}^{v',1,1},...,\hat{\underline{Y}}_{0,n}^{v',Nl,F_m}\right)$ zu liefern.

**47.** Benutzerstationsempfänger nach Anspruch 39, **dadurch gekennzeichnet, daß** zumindest ein Transmittermodul von einer der Basisstationen eine Mehrzahl (Nm) von unterschiedlichen Spreadingcodes verwendet, um entsprechende der Serien von Symbolen für die simultane Übertragung in demselben Frame zu verteilen bzw. zu spreizen, so daß die Komponente des empfangenen Signals (X(t)) entsprechend diesem Basisstationstransmittermodul eine entsprechende Mehrzahl von Spreadsignalen aufweist, und zumindest eines der Mehrzahl von Empfängermodulen weiterhin aufweist eine Amplitudenschätzeinrichtung ($30U^v$) für das Ableiten der Gesamtamplituden $\left(\psi_n^{v',1},...,\psi_n^{v',Nl}\right)$ eines Satzes von Signalkomponentenabschätzungen $\left(\hat{\underline{S}}_n^{v',1,1},...,\hat{\underline{S}}_n^{v',Nl,N_m}\right)$, der durch strahlbündelnde Einrichtungen ($47U^{v',1,1},..., 47U^{v',Nl,Nm}$) von erzeugt wurde, wobei die strahlbündelnden Einrichtungen ($47U^{v',1,1},... 47Uv'.Nl.Nm$) verschiedene Sätze von Gewichtungskoeffizienten verwenden, um jedes Element des Observationsvektors ($\underline{Y}n$) zu wichten, um die Mehrzahl von Signalkomponentenabschätzungen

$\left( \hat{S}_n^{v',1,1} ,..., \hat{S}_n^{v',Nl,N_m} \right)$ entsprechend der jeweiligen der Reihe von Symbolen zu bilden, und die Symbolabschätzungseinrichtung ($29U^{v',1,1},...,29U^{v',Nl,N_m}$) aus der Mehrzahl von Signalkomponentenabschätzungen $\left( \hat{S}_n^{v',1,1} ,..., \hat{S}_n^{v',Nl,N_m} \right)$ eine entsprechende Mehrzahl von SymbolabSchätzungen $\left( \hat{b}_n^{v',1,1} ,..., \hat{b}_n^{v',Nl,N_m} \right)$ ableitet, wobei die observationsableitende Einrichtung eine Despreadingeinrichtung ($19^{v',\Sigma,1},...,19^{v',\Sigma,N_m}$) für das Despreading der Observationsmatrix ($Y_n$) unter Verwendung von ein oder mehreren der mehreren der Mehrzahl ($N_m$) von unterschiedlichen Spreadingcodes aufweist, wobei jeder dieser Codes ein Verbindungscode ist, der durch Mitteln der Codes aller anderer der Mehrzahl von eingreifenden Benutzern (NI) gebildet wird, um eine Mehrzahl von Observationsvektoren $\left( \underline{Z}_n^{v',\Sigma,1} ,..., \underline{Z}_n^{v',\Sigma,N_m} \right)$ zu bilden, wobei die Kanalidentifikationseinrichtung ($28U^{v'}$) aus der Mehrzahl von Observationsvektoren $\left( \underline{Z}_n^{v',\Sigma,1} ,..., \underline{Z}_n^{v',\Sigma,N_m} \right)$ die Signatkomponentenabschätzungen $\left( \hat{S}_n^{v',\Sigma,1} ,..., \hat{S}_n^{v',\Sigma,N_m} \right)$ und die Amplituden $\left( \psi_n^{v',1} ,..., \psi_n^{v',Nl} \right)$ einer entsprechenden Mehrzahl von Sätzen von Kanalvektorabschätzungen $\left( \underline{\hat{Y}}_{0,n}^{v',1,1} ,..., \underline{\hat{Y}}_{0,n}^{v',Nl,N_m} \right)$ ableitet und diese Sätze zu der strahlbündelnden Einrichtung ($47U^{v',1,1},...,47U^{v',Nl,N}$) liefert und die Koeffizienteneinstelleinrichtung der strahlbündelnden Einrichtung ($47U^{v',1,1},...,47^{Uv',Nl,N_m}$) die Sätze von Kanalvektorabschätzungen $\left( \underline{\hat{Y}}_{0,n}^{v',1,1} ,..., \underline{\hat{Y}}_{0,n}^{v',Nl,N_m} \right)$ verwendet, um die unterschiedlichen Sätze von Gewichtungsvektoren abzuleiten.

48. Empfänger nach Anspruch 1, **dadurch gekennzeichnet, daß** jedes Empfängermodul in einer Benutzer-/Mobilistation lokalisiert ist und das empfangene Signal eine Mehrzahl von Spreadusersignalen, die von einer Mehrzahl von Transmittermodulen bei einer Basisstation, die mit dem Empfänger über die Kanäle kommuniziert, übertragen wurde, aufweist.

49. Empfänger für ein CDMA-Kommunikationssystem, **gekennzeichnet durch** Vorverarbeitungseinrichtungen (18) für das Ableiten aus einem empfangenen Signal (X(t)) einer Abfolge von Beobachtungsmatrizen ($Y_n$), Einrichtungen (44) für das Umformen jeder Observationsmatrix, um einen Observationsvektor ($\underline{Y}_n$) zu bilden, eine strahlbündelnde Einrichtung ($27N^d$) für das Gewichten jedes Elementes des Observationsvektors unter Verwendung von Gewichtungskoeffizienten und Kombinieren der gewichteten Elemente, um eine Signalkomponentenabschätzung $\left( \hat{S}_n^d \right)$ zu bilden, wobei die strahlbündelnde Einrichtung eine Einstelleinrichtung aufweist für das Einstellen der Gewichtungskoeffizienten in Abhängigkeit von einer Kanalvektorabschätzung $\left( \underline{\hat{Y}}_{0,n}^d \right)$, einer Einrichtung ($29N^d$) für das Ableiten aus der Signalkomponentenabschätzung $\left( \hat{S}_n^d \right)$ einer entsprechenden Symbolabschätzung $\left( \hat{b}_n^d \right)$ für die Ausgabe von dem Empfängermodul, eine Einrichtung ($19^d$) für das Despreading der Observationsmatrix unter Verwendung des Spreadingcodes des entsprechenden Benutzers, um einen Postkorrelatiansobservationsvektor $\left( \underline{Z}_n^d \right)$ und Kanalidentifikationseinrichtungen ($28N^d$) zu bilden für das Ableiten der Kanalvektorabschätzung

$\left(\hat{\underline{Y}}_{0,n}^{d}\right)$ in Abhängigkeit von dem Postkorrelationsobservalionsvektor $\left(\underline{Z}_{n}^{d}\right)$ und der Signalkomponentenab-

schätzung $\left(\hat{\underline{S}}_{n}^{d}\right)$.

**50.** CDMA-Kommunikationssystem, **gekennzeichnet durch** zumindest eine Basisstation und eine Vielzahl (U) von Benutzerstationen ($10^1$,...,$10^U$) einschließlich einer Mehrzahl (U') von Benutzerstationen, die von zumindest einer Basisstation bedient wird, wobei die Basisstation in der Lage ist, eindeutige Raum-Zeit-codierte Signale zu übertragen, die jeweils von einer entsprechenden mobilen Benutzerstation reserviert sind, wobei jede Benutzerstation einen Transmitter und einen Receiver für die Kommunikation mit zumindest einer Basisstation über einen einer Mehrzahl von Kanälen ($14^1$,...,$14^U$) hat, wobei der Basisstationstransmitter aufweist:

eine Mehrzahl von Transmissionsantennen,
eine Einrichtung für das Bereitstellen benutzerbestimmter Signale, eine Verteilungseinheit für das Gruppieren der benutzerbestimmten Signale in $N_G$-Gruppen,
eine temporäre Kanalisierungscodeeinheit für das Verteilen bzw. Spreading jedes benutzerbestimmten Signals **durch** einen eindeutigen reservierten Code, der zu einem festen Satz von L-orthogonalen Codes gehört, und Summieren der vorteilten Signale in jeder Gruppe,
eine Einrichtung für das Addieren zu den summierten verteilten Signalen von jeder Gruppe eines einer Mehrzahl von Pilotsignalen, jedes spezifisch für eine der Gruppen und erzeugt **durch** einen PN-Code-Generator.
eine Einrichtung für das Verschlüsseln des summierten Signals von jeder der Gruppen unter Verwendung desselben langen Verschlüsselungscodes, der spezifsich für die Basisstaion ist,
jedes Pilotsignal wird einem festen Bruchteil der gesamten von dem Basisstationsübertrager übertragenen Leistung zugewiesen,
einen Einrichtung für das Abbilden der Signale von den Gruppen ($G_1(t)$,...,$G_{N_G}$ (t)) auf die Antennenverzweigungen ($A_1$(t),..., $A_{M_\tau}$ (l)) **durch** die Einrichtung einer Linearraumcodierung (M), so daß Signale, die unterschiedlichen Gruppen zugewiesen sind, bei der Übertragung im wesentlichen orthogonal sind,
zumindest eine der Benutzerstationen hat einen Empfänger für das Empfangen des entsprechenden Spreadusersignals, das von der Basisstation übertragen wurde, wobei die Mehrzahl (U') der Benutzer- bzw. Userstation jeweils einen eindeutigen Spreadingcode hat, der hierzu zugewiesen ist, für die Verwendung **durch** die Benutzerstation und das entsprechende der Basisstationstransmittermodule, um die Benutzersignale von diesem Benutzer für die Übertragung zu verteilen,
wobei die Spreadusersignale, die von dem Basisstationstransmittermodulen zu einer bestimmten der Mehrzahl (U') von Benutzerstationen übertragen wurde, sich über eine Mehrzahl von Kanälen ($14^1$,...,$14^U$) ausbreiten,
der Empfänger einer bestimmten der Mehrzahl (U') von Benutzerstationen, ein Signal (X(t)) empfängt, das Komponenten aufweist entsprechend der Spreadbenutzersignale für die bestimmte Benutzerstation und Spreadbenutzersignale, die von anderen Transmittermodulen der Mehrzahl (NB) von Basisstationen für andere Benutzer übertragen wurde, wobei jedes der spreadbenutzersignale eine Reihe von Symbolen aufweist, die unter Verwendung des Spreadingcodes, der mit der entsprechenden der Benutzerstationen verknüpft ist, verteilt wurde,
wobei der Benutzerstationsempfänger aufweist:

eine Mehrzahl (NB) von Empfängermodulen ($20^{v'}$), jedes für das Ableiten von Abschätzungen von Sätzen der Serien von Symbolen von einer entsprechenden der Basisstationen aus aufeinanderfolgenden Frames des empfangenen Signals (X(t)),
eine Vorverarbeitungseinrichtung (18) für das Ableiten aus dem empfangenen Signal (X(t)) einer Reihe von Observationsmatrizen ($Y_n$) jeweils für die Verwendung von jedem der Empfängermodule ($20^{v'}$) in dem Frame, um Abschätzungen von Sätzen der Symbole abzuleiten, und
eine Einrichtung (19, 44) für das Ableiten von jeder Observationsmatrix einer Mehrzahl von Sätzen von

Observationsvektoren $\left(\underline{Y}_{n}^{v',1,1},...,\underline{Y}_{n}^{v',NI,F_{NI}};\underline{Z}_{n}^{v',1,1},...,\underline{Z}_{n}^{v',NI,F_{NI}}\right)$ und Anwenden jedes der Sätze von Observationsvektoren an ein entsprechendes der Mehrzahl von Empfängermodulen ($20^{v'}$),

jedes Empfängermodul aufweist:

eine Kanalidentifikationseinrichtung (28T$^v$') für das Ableiten aus dem entsprechenden Satz der Sätze von Observationsvektoren eines Satzes von Spreadkanaivektorabschätzungen $\left( \hat{\underline{Y}}_{0,n}^{v',1,1} ,..., \hat{\underline{Y}}_{0,n}^{v',Nl,F_{Nl}} \right)$ ba-

sierend auf Parameterabschätzungen des Kanals zwischen der entsprechenden Basisstation und der Benutzerstation,

strahlbündelnde Einrichtungen (47$T^{v',1,1}$,...,47$T^{v',Nl,F_{Nl}}$) mit einer Koeffizienteneinstelleinrichtung für das Produzieren von Sätzen von gewichteten Koeffizienten in Abhängigkeit von den Sätzen von Kanalvektorabschätzungen und Kombinieren der Einrichtung für das Verwenden von jedem der Sätze von Gewichtungskoeffizienten, um die entsprechenden der Elemente eines entsprechenden der Observationsvekloren zu verwenden und die gewichteten Elemente zu Kombinieren, um einen entsprechenden Satz von Signal-

komponentenabschätzungen $\left( \hat{\underline{S}}_n^{v',1,1} ,..., \hat{\underline{S}}_n^{v',Nl,F_{Nl}} \right)$ bereitzustellen, und

Symbolabschätzungseinrichtungen (29$T^{v,1,1}$,...,29$T^{v',Nl,F_{Nl}}$) für das Ableiten aus dem Satz von Signalkomponentenabschätzungen eines Satzes von AbSchätzungen $\left( \hat{b}_n^{v',1,1} ,..., \hat{b}_n^{v',Nl,F_{Nl}} \right)$ von Symbolen, die

von dem entsprechenden
der Transmittermodule verteilt und von der Basisstation übertragen wurden,

wobei der Benutzerstationsempfänger weiterhin eine Einrichtung (42, 43) aufweist, die auf die Symbolabschätzun-

gen $\left( \hat{b}_n^{v',1,1} ,..., \hat{b}_n^{v',Nl,F_{Nl}} ; \underline{g}_n^1 , \underline{g}_n^2 , \underline{g}_n^3 \right)$ und die Kanalabschätzungen $\left( \mathcal{H}_n^{v'} \right)$ von jedem der Mehrzahl (NB) von Empfängermodulen reagiert, wobei die Kanalabschätzungen zumindest Kanalvektorabschätzungen $\left( \hat{\underline{H}}_n^{v'} \right)$

für Kanäle (14$^v$') zwischen dem Benutzerstationsempfänger und den Basisstationen aufweist für das Bereitstellen

zumindest einer Beschränkungsmatrix $\left( \hat{C}_n \right)$, die den Interferenzunterraum der Komponenten des empfangenen Signals entsprechend den Spreadsignalen repräsentiert, und wobei in jedem der Empfängermodule (20$^v$-) die Koeffizienteneinstelleinrichtung die Sätze von Gewichtungskoeffizienten in Abhängigkeit von sowohl der Beschrän-

kungsmatrix $\left( \hat{C}_n \right)$ als auch der Kanalvektorabschätzungen erzeugt, so daß das Empfängermodul (20$^v$) auf eine im wesentlichen Null-Antwort auf den Abschnitt des empfangenen Signals (X(t)), das dem Interferenzsubraum entspricht, eingestellt wird.

51. CQMA-System nach Anspruch 50, **dadurch gekennzeichnet, daß** der Transmitter weiterhin aufweist:

eine Verzögerungseinrichtung für das Verzögern der Signale von der Abbildungseinrichtung jeweils um eine zweigspezifische Verzögerung, was eine entsprechende Signalpulsmodulation des Signalpulses mit einem Trägerfrequenzsignal bildet, und Bereitstellen des modulierten Signals zu den Antennenelementen für die Übertragung durch diese.

52. CDMA-System nach Anspruch 50, **dadurch gekennzeichnet, daß** in dem Transmitter die Gruppierungseinrichtung angeordnet ist, um Datensignale, die für Benutzerstationen reserviert sind, in eine vorbestimmte Anzahl $N_G$ von Gruppen anzuordnen, und, wenn die Anzahl von Benutzern geringer oder gleich der Prozeßverstärkung ist, Zuweisen aller Benutzersignale zu derselben Gruppe, andernfalls Zuweisen der Benutzersignale pseudo-zufällig, so daß sie dazu tendieren, die Anzahl von Benutzer in jeder Gruppe auszugleichen.

53. CDMA-System nach Anspruch 50, **dadurch gekennzeichnet, daß** der Transmitter weiterhin für jede Gruppe eine Raum-Zeit-Codiereinrichtung aufweist:

eine Kanalcodiereinheit für das Verteilen von Benutzersignalen durch einen gruppenspezifischen Satz von orthogonalen Codes,

eine Verschlüsselungseinheit für das Verteilen jeder Gruppe von Benutzersignalen mit demselben basisstationsspezifschen Verschlüsselungscode, und

eine Raumcodiereinheit für das Abbilden der Gesamtgruppensignale ($G_1$ (t),...,$G_{N_G}$ (t)) auf die Antennenverzweigungssignale ($A_1$ (t),...,$A_{M_T}$ (t)) durch eine Lineartransformation (**M**).

54. CDMA-System nach Anspruch 53, **dadurch gekennzeichnet, daß** in dem Transmitter die Kanalcodiereinheit jedem Benutzer in der Gruppe mit dem Index g einen Chipcode zuweist, der aus einem festen Satz von $L_g \leq L$ orthogonalen gruppenspezifischen L-Chipcodes ($a_{i,1}(t), ...,a_{i,Lg}(t)$) ausgewählt ist, wobei die Codesätze über den Gruppen ausgewählt sind, so daß sie die Kreuzkorrelation minimieren, wobei jeder Code, der zu irgendeiner Gruppe gehört, orthogonal zu irgendeinem anderen Code innerhalb der Gruppe ist, während seine Kreuzkorrelation mit irgendeinem anderen Außer-Gruppen-Kanalisierungscode minimiert ist.

55. CDMA-Kommunikationssystem, **gekennzeichnet durch** zumindest eine Basisstation und eine Vielzahl (U) von Benutzerstationen ($10^1$,... $10^U$) einschließlich einer Mehrzahl (U') von Benutzerstationen, die von der zumindest einen Basisstation bedient wird, wobei jede Benutzerstation einen Transmitter und einen Receiver für die Kommunikation mit der zumindest einen Basisstation über einen entsprechenden einer Mehrzahl von Kanälen ($14^1$,...,$14^u$) hat, wobei zumindest eine Benutzerstation in der Lage ist, ein Benutzersignal zu übertragen, das eine Mehrzahl von eindeutigen Raum-Zeit-codierten Signalen aufweist, die jeweils unterschiedliche Daten von demselben Benutzer tragen,

wobei die zumindest eine Benutzerstation einen Transmitter hat, der aufweist:

eine Mehrzahl von Übertragungsantennen,

eine Einrichtung für das Bereitstellen der Benutzersignale,

eine Verteileinheit für das Gruppieren der Raum-Zeit-codierten Signale in $N_G$-Gruppen,

eine temporäre Kanalisierungscodeeinheit für das Spreading bzw. Verteilen jedes unterschiedlichen Datenstroms der Benutzersignale **durch** einen eindeutig reservierten Code, der zu einem festen Satz von L-orthogonalen Codes gehört, und für das Summieren der verteilten Signale in jeder Gruppe,

eine Einrichtung für das Hinzufügen zu den summierten verteilten Signalen von jeder Gruppe eines entsprechenden einer Mehrzahl von Pilotsignalen, die jeweils spezifisch für eine der Gruppen sind und von einem PN-Code-Generator erzeugt werden,

wobei jedes Pilotsignal einem festen Bruchteil der von dem Basisstationstransmitter übertragenen Gesamtleistung zugewiesen ist,

eine Einrichtung für das Verschlüsseln der summierten Signale von den Gruppen unter Verwendung desselben langen Verschlüsselungscodes, der für die Benutzerstation spezifisch ist,

eine Einrichtung für das Abbilden der Signale von den Gruppen ($G_l$ (t),...,$G_{N_G}$(t)) auf die Antennenzweige ($A_l$ (t),...,$A_{M_T}$ (t)) **durch** eine Linearraumcodierung (M), so daß Signale, die unterschiedlichen Gruppen zugewiesen sind, bei der Übertragung im wesentlichen orthogonal sind,

die Basisstation hat einen Empfänger für das Empfangen eines Signals (X(t)), das Komponenten aufweist, die verteilten Signalen entsprechen, die von den Transmittern der Mehrzahl von Benutzerstationen übertragen wurden, wobei jedes der verteilten Signale eine Reihe von Symbolen aufweist, die verteilt sind unter Verwendung eines Spreadingcodes, der eindeutig der entsprechenden Benutzerstation zugeordnet ist, wobei der Basisstationsempfänger aufweist:

eine Mehrzahl (U') von Empfängermodulen ($20^1$,...,$20^{NI}$,$20^d$,) jeweils für das Ableiten aus aufeinanderfolgenden Frames des empfangenen Signals (X(t)) von Abschätzungen der Reihen von Symbolen einer entsprechenden der Benutzerstationen,

Vorverarbeitungseinrichtung (18) für das Ableiten aus dem empfangenen Signal (X(t)) einer Reihe von Observationsmatrizen ($Y_n$) jeweils für die Verwendung von jedem der Empfängermodule (20) in dem Frame, um eine Abschätzung eines Symbols einer entsprechenden der Reihen von Symbolen abzuleiten, und

eine Einrichtung (19,44.;44/1,44/2) für das Ableiten von jeder Observationsmatrix einer Mehrzahl von Observationsvektoren $\left( \underline{Y}_n ; \underline{Y}_{n-1} ; \underline{Z}_n^\mathrm{I} \cdots \underline{Z}_n^{NI} ; \underline{Z}_n^d \right)$ und Anwenden jedes der Observationsvektoren an ein entsprechendes der Mehrzahl von Empfängermodulen ($20^1$,... ,$20^{NI}$,$20^d$), wobei jedes Empfängermodul aufweist:

eine Kanalidentifikationseinrichtung (28) für das Ableiten von einem der Observationsvektoren einer Kanalvektorabschätzung $\left( \hat{\underline{H}}_n^1 ,...,\hat{\underline{H}}_n^{NI} ; \hat{\underline{Y}}_{0.n}^d ; \hat{\underline{Y}}_{0.n-1}^I \right)$ basierend auf Parameterabschätzungen des Kanals zwischen dem Basisstationsempfänger und dem entsprechenden Benutzerstationstransmitter,

strahlbündelnde Einrichtung ($27^1$,...,$27^{NI}$,$27^d$;$47^d$) mit einer Koeffizienteneinstelleinrichtung (50) für das Erzeugen eines Satzes von Gewichtungskoeffizienten in Abhängigkeit von der Kanalvektorabschätzung, und Kombinationseinrichtungen (51,52) für die Verwendung der Gewichtungskoeffizienten, um entsprechende der Elemente von einem entsprechenden der Observationsvektoren zu gewichten und die gewichteten Elemente zu kombinieren, um eine Signalkomponentenabschätzung

$\left( \hat{s}_n^1 ,...,\hat{s}_n^U \right)$ bereitzustellen, und

Symbolabschätzeinrichtungen ($29^1$,...,$29^{NI}$,$30^1$,...,$30^U$) für da Ableiten aus der Signalkomponentenabschätzung einer Abschätzung $\left( \hat{b}_n^1 ,...,\hat{b}_n^U \right)$ eines Symbols $\left( b_n^1 ,...,b_n^U \right)$, das von einer entsprechenden der Benutzerstationen ($10^1$,...,$10^U$) übertragen wurde,

wobei der Empfänger weiterhin eine Einrichtung (42, 43) aufweist, die auf Symbolabschätzungen $\left( \hat{b}_n^1 ,...,\hat{b}_n^{NI} ; g^1 , g^2 , g^3 ; g^{l_{NI}} \right)$ und auf Kanalabschätzungen $\left( \mathcal{H}_n^v ...\mathcal{H}_n^{NI} ; \mathcal{H}_{n-1}^i \right)$, die zumindest die Kanalvektorabschätzunge $\left( \hat{\underline{H}}_n^1 ,...,\hat{\underline{H}}_n^{NI} \right)$ für die Kanäle ($14^1$,...,$14^{NI}$) einer ersten Gruppe (I) der Mehrzahl von Benutzerstationen ($10^1$,...,$10^{NI}$) reagiert, um zumindest eine Beschränkungsmatrix ($\hat{C}_n$) bereitzustellen, die den Interferenzunterraum der Komponenten des empfangenen Signals entsprechend der vorbestimmten Gruppe darstellt, und wobei in jedem von dem einen oder der mehreren Empfängermodule ($20A^d$) einer zweiten Gruppe (D) der Mehrzahl von Empfängermodulen die Koeffizienteneinstelleinrichtung ($50A^d$) den Satz von Gewichtungskoeffizienten in Abhängigkeit von der Beschränkungsmatrix ($\hat{C}_n$) und der Kanalvektorabschätzungen $\left( \hat{\underline{H}}_n^d \right)$ erzeugt, um so das eine oder die mehreren Empfängermodule ($20A^d$) einzustellen und zwar jeweils auf eine im wesentlichen Null-llntwort auf den Abschnitt des empfangenen Signals (X(t)), der dem Interferenzunterraum entspricht.

56. CDMA-System nach Anspruch 55, **dadurch gekennzeichnet, daß** der Transmitter weiterhin aufweist:

eine Verzögerungseinrichtung für das Verzögern der Signale von der Abbildungseinrichtung jeweils um eine zweigspezifische Verzögerung, Bilden eines entsprechenden Signalpulses, der den Signalpuls mit einem Trägerfretiuenzsignal moduliert und Bereitstellen des modulierten Signals zu den Antennenelementen für die Übertragung hierdurch.

57. CDMA-System nach Anspruch 55, **gekennzeichnet dadurch, daß** in dem Transmitter die Verteilungseinheit bzw. -einrichtung angeordnet ist, um die Datensignale, die für die Benutzerstation vorgesehen sind, in eine vorbestimmte Anzahl ($N_G$) von Gruppen zu gruppieren und, wenn die Anzahl von Benutzern geringer oder gleich der Verarbeitungsverstärkung ist, alle Benutzersignale derselben Gruppe zuzuweisen, und anderenfalls die Benutzersignale pseudo-zufällig zuzuweisen, so daß die Anzahl von Benutzern in jeder Gruppe ausgeglichen wird.

58. CDMA-System nach Anspruch 55, **dadurch gekennzeichnet, daß** der Transmitter weiterhin für jede Gruppe Raum-Zeit-Codiereinrichtungen aufweist, die aufweisen:

eine Kanalcodiereinheit für das Spreading oder Verteilen von Benutzersignalen durch einen gruppespezifischen Satz von orthogonalen Codes,

eine Verschlüsselungseinheit für das Spreading jeder Gruppe von Benutzersignalen mit demselben basisstationsspezifischen Verschlüsselungscode, und

eine Raumcodiereinheit für das Abbilden der Gesamtgruppensignale ($G_l$ (t),..., $G_{NE}$ (t)) auf die Antennenverzweigungssignale ($A_l$ (t),..., $A_{N_g}$ (t)) durch eine Lineartransformation (M).

59. CDMA-System nach Anspruch 58, **dadurch gekennzeichnet, daß** in dem Transmitter die Kanalcodiereinheit jedem Benutzer in der Gruppe mit dem Index g einen Chipcode zuweist, der aus einem festen Satz von $L_g \leq L$ orthogonalen gruppenspezifischen L-Chipcodes ($a_{i,1}(t),...,a_{i,L_F}(t)$) ausgewählt wird, wobei die Codesätze in den Gruppen ausgewählt werden, so daß sie die maximale Kreuzkorrelation minimieren, wobei jeder Code, der zu einer Gruppe gehört, orthogonal zu jedem anderen Code innerhalb der Gruppe ist, während seine Kreuzkorrelation mit irgendeinem Außer-Gruppen-Kanalisierungscode minimiert wird.

60. Empfänger nach Anspruch 1 für die Verwendung mit einem Transmitter, der pilotsymbolunterstützte Benutzersignale überträgt, die Pilotsymbole gemultiplext mit Datensymbolen aufweisen, wobei der Empfänger weiterhin **gekennzeichnet ist durch** Demultiplexeinrichtungen ($35V^d$) für das Demultiplexen der Signalkomponentenabschätzungen von dem ISR-Strahlbündler, um Pilotsignalkoniponentenabschätzungen und Datensignalkomponentenabschätzungen zu extrahieren und die Datensignalkornponentenabschätzungen zu der Entscheidungsregeleinheit ($29V^d$) und die Pilotsignalkomponentenabschätzungen zu einer Mehrdeutigkeitsabschätzungseinrichtung ($31V^d$) zu liefern, wobei die Mehrdeutigkeitsabschätzungseinrichtung ($31V^d$) jede Pilotsignalkomponentenabschätzung $\left(\hat{s}_n^{\pi,d}\right)$ glättet oder mittelt, um eine Mehrdeutigkeitsabschätzung $\left(\hat{a}_n^d\right)$ bereitzustellen, Konjugationseinrichtungen ($32V^d$) für das Ableiten aus der Mehrdeutigkeitsabschätzung $\left(\hat{a}_n^d\right)$, deren Konjugierte $\left(\left(\hat{a}_n^d\right)^\star\right)$ und Multipliziereinrichtungen ($15V^d$) für das Multiplizieren des Konjugierten mit der Symbolabschätzung $\left(\hat{b}_n^d\right)$ von der Entscheidungsregeleinrichtung ($29V^d$), um eine verbesserte Symbolabschätzung $\left(\underline{\hat{b}}_n^d\right)$ zu bilden.

61. Empfänger nach Anspruch 1, weiterhin **gekennzeichnet durch** einen zweiten ISR-Strahlbündler ($47V/2^d$) der parallel zu dem ersten ISR-Strahlbündler ($47V/1^d$) angeordnet ist und auf dieselben Kanalkoeffizienten und Beschränkungsmatrix wie der erste ISR-Strahlbündler reagiert, um aus dem Observationsvektor ($\underline{Y}_n$) eine Pilotsignalkomponentenabschätzung abzuleiten, Mehrdeutigkeitsabschätzungseinrichtung ($31V^d$) für das Glätten oder Mitteln der Pilotsignalkomponentenabschätzung $\left(\hat{s}_n^{\pi,d}\right)$, um eine Mehrdeutigkeitsabschätzung $\left(\hat{a}_n^d\right)$ bereitzustellen, Konjugationseinrichtung ($32V^d$) für das Ableiten aus der Mehrdeutigkeitsabschätzung $\left(\hat{a}_n^d\right)$ deren Konjugierte $\left(\left(\hat{a}_n^d\right)^\star\right)$ und **durch** Multipliziereinrichtungen ($15V^d$) für das Multiplizieren der Konjugierten mit der Symbolabschätzung $\left(\hat{b}_n^d\right)$ aus der Entscheidungsregeleinheit ($29V^d$), um eine verbesserte Symbolabschätzung $\left(\underline{\hat{b}}_n^d\right)$ zu bilden.

62. Empfänger nach Anspruch 60, **dadurch gekennzeichnet, daß** die Mehrdeutigkeitsabschätzungseinrichtung einen Puffer für das Puffern von Bitabschätzungen, eine Glättungseinrichtung für das Glätten oder Mitteln der gepufferten Abschätzungen und eine weitere Entscheidungsregeleineinheit ($29V/2^d$) für das Ableiten der entsprechenden Mehrdeutigkeitsabschätzungen $\left(\hat{a}_n^d\right)$ aus den geglätteten oder gemittelten Abschätzungen, aufweist.

63. Empfänger nach Anspruch 61, **dadurch gekennzeichnet, daß** die Mehrdeutigkeitsabschätzungseinrichtung einen Puffer für das Puffern von Bitabschätzungen, eine Glättungseinrichtung für das Glätten oder Mitteln der gepufferten Abschätzungen und eine weitere Entscheidungsregeleineinheit (29V/2$^d$) für das Ableiten der entsprechenden Mehrdeutigkeitsabschätzungen $\left(\hat{a}_n^{d}\right)$ aus den geglätteten oder gemittelten Abschätzungen, aufweist.

**64.** Empfänger nach Anspruch 39 für die Verwendung mit einem Transmitter, der pilotsymbolunterstützte Benutzersignale überträgt, die Pilotsymbole gemultiplext mit Datensymbolen aufweisen, wobei der Empfänger weiterhin **gekennzeichnet ist durch** Demultiplexeinrichtungen (35V$^d$) für das Demultiplexen der Signalkomponentenabschätzungen von dem ISR-Strahlbündler, um Pilotsignalkomponentenabschätzungen und Datensignalkomponentenabschätzungen zu extrahieren und die Datensignalkomponentenabschätzungen zu der Entscheidungsregeleinheit (29V$^d$) und die Pilotsignalkomponentenabschätzungen zu einer Mehrdeutigkeitsabschätzungseinrichtung (31V$^d$) zu liefern, wobei die Mehrdeutigkeitsabschätzungseinrichtung (31V$^d$) jede Pilotsignalkomponentenabschätzung $\left(\hat{s}_n^{\pi,d}\right)$ glättet oder mittelt, um eine Mehrdeutigkeitsabschätzung $\left(\hat{a}_n^{d}\right)$ bereitzustellen, Konjugationseinrichtungen (32V$^d$) für das Ableiten aus der Mehrdeutigkeitsabschätzung $\left(\hat{a}_n^{d}\right)$, deren Konjugierte $\left(\left(\hat{a}_n^{d}\right)^{\star}\right)$ und Multipliziereinrichtungen (15V$^d$) für das Multiplizieren des Konjugierten mit der Symbolabschätzung $\left(\hat{b}_n^{d}\right)$ von der Entscheidungsregeleinrichtung (29V$^d$), um eine verbesserte Symbolabschätzung $\left(\hat{\underline{b}}_n^{d}\right)$ zu bilden.

**65.** Empfänger nach Anspruch 39 weiterhin **gekennzeichnet durch** einen zweiten ISR-Strahlbündler (47V/2$^d$) der parallel zu dem ersten ISR-Strahlbündler (47V/1$^d$) angeordnet ist und auf dieselben Kanalkoeffizienten und Beschränkungsmatrix wie der erste ISR-Strahlbilder reagiert, um aus dem Observationsvektor ($\underline{Y}$n) eine Pilotsignalkomponentenabschätzung abzuleiten, Mehrdeutigkeitsabschätzungseinrichtung (31V$^d$) für das Glätten oder Mitteln der Pilotsignalkomponentenabschätzung $\left(\hat{s}_n^{\pi,d}\right)$, um eine Mehrdeutigkeitsabschätzung $\left(\hat{a}_n^{d}\right)$ bereitzustellen, Konjugationseinrichtung (32V$^d$) für das Ableiten aus der Mehrdeutigkeitsabschätzung $\left(\hat{a}_n^{d}\right)$ deren Konjugierte $\left(\left(\hat{a}_n^{d}\right)^{\star}\right)$ und **durch** Multipliziereinrichtungen (15V$^d$) für das Multiplizieren der Konjugierten mit der Symbolabschätzung $\left(\hat{b}_n^{d}\right)$ aus der Entscheidungsregeleinheit (29V$^d$), um eine verbesserte symbolabschätzung $\left(\hat{\underline{b}}_n^{d}\right)$ zu bilden,

**66.** Empfänger nach Anspruch 64, **dadurch gekennzeichnet, daß** die Mehrdeutigkeitsabschätzungseinrichtung einen Puffer für das Puffern von Bitabschätzungen, eine Glättungseinrichtung für das Glätten oder Mitteln der gepufferten Abschätzungen und eine weitere Entscheidungsregeleineinheit (29V/2$^d$) für das Ableiten der entsprechenden Mehrdeutigkeitsabschätzungen $\left(\hat{a}_n^{d}\right)$ aus den geglätteten oder gemittelten Abschätzungen, aufweist.

**67.** Empfänger nach Anspruch 65, **dadurch gekennzeichnet, daß** die Mehrdeutigkeitsabschätzungseinrichtung einen Puffer für das Puffern von Bitabschätzungen, eine Glättungseinrichtung für das Glätten oder Mitteln der gepufferten Abschätzungen und eine weitere Entscheidungsregeleineinheit (29V/2$^d$) für das Ableiten der entsprechenden Mehrdeutigkeitsabschätzungen $\left(\hat{a}_n^{d}\right)$ aus den geglätteten oder gemittelten Abschätzungen, aufweist.

**68.** Empfänger nach Anspruch 19, weiterhin **gekennzeichnet durch** ein Puffereinrichtung (90$^l$), eine Deinterleavingeinrichtung ($91^l$), eine Kanaldecodiereinrichtung ($92^l$), eine Recodiereinrichtung (93') und eine Reinterleavingeinrichtung ($94^l$) für das Puffern eines ersten Frames von Signalkomponentenabschätzungen $\left(\hat{s}_{n-1}^{l}(1)\right)$, das Deinterleaving, das Kanaldecodieren, das Recodieren und das Reinterleaving des Frames der Signalkomponentenabschätzungen, um ein Frame von verbesserten entschiedenen Symbolabschätzungen $\left(\hat{b}_{n}^{i}\right)$ bereitzustellen und selbige zu dem Beschränkungssatzerzeuger (42W) zu liefern, wobei der Beschränkungsmatrixerzeuger (43W) hieraus eine verbesserte Beschränkungsmatrix bildet, der ISR-Strahlbündler ($47W^l$), die verbesserte Beschränkungsmatrix verwendet, um eine verbesserte Signalkomponentenabschätzung $\left(\hat{s}_{n-1}^{i}(2)\right)$ für die Verwendung in einer nächsten Iteration bereitzustellen, wobei der Empfänger die Iterationen eine vorbestimmte Anzahl von Ausführungen wiederholt.

69. Empfänger nach Anspruch 39, weiterhin **gekennzeichnet durch** ein Puffereinrichtung ($90^l$), eine Deinterleavingeinrichtung ($91^l$), eine Kanaldecodiereinrichtung ($92^l$), eine Recodiereinrichtung ($93^l$) und eine Reinterleavingeinrichtung ($94^i$) für das Puffern eines ersten Frarnes von Signalkomponentenabschätzungen $\left(\hat{s}_{n-1}^{l}(1)\right)$, das Deinterleaving, das Kanaldecodieren, das Recodieren und das Reinterleaving des Frames der Signalkomponentenabschätzungen, um ein Frame von verbesserten entschiedenen Symbolabschätzungen $\left(\hat{b}_{n}^{i}\right)$ bereitzustellen und selbige zu dem Beschränkungssatzerzeuger (42W) zu liefern, wobei der Beschränkungsmatrixerzeuger (43W) hieraus eine verbesserte Beschränkungsmatrix bildet, der ISR-Strahlbündler ($47W^l$). die verbesserte Beschränkungsmatrix verwendet, um eine verbesserte Signalkomponentenabschätzung $\left(\hat{s}_{n-1}^{l}(2)\right)$ für die Verwendung in einer nächsten Iteration bereitzustellen, wobei der Empfänger die Iterationen eine vorbestimmte Anzahl von Ausführungen wiederholt.

70. Empfänger nach Anspruch 1, **dadurch gekennzeichnet, daß** die Koeffizienteneinstelleinrichtung ($50A^d$) den Satz von Gewichtungskoeffizienten in Abhängigkeit von sowohl der Beschränkungsmatrix ($\hat{C}_n$) als auch der Kanalvektorabschätzungen $\left(\underline{\hat{H}}_{n}^{d}\right)$ erzeugt, so daß das eine oder die mehreren Empfängermodule ($20A^d$) jeweils auf eine Antwort eingestellt werden, die in der Größe nahe, jedoch nicht gleich Null ist.

71. Empfänger nach Anspruch 39, **dadurch gekennzeichnet, daß** die Koeffizienteneinstelleinrichtung ($50A^d$) den Satz von Gewichtungskoeffizienten in Abhängigkeit von sowohl der Beschränkungsmatrix ($\hat{C}_n$) als auch der Kanalvektorabschätzungen $\left(\underline{\hat{H}}_{n}^{d}\right)$ erzeugt, so daß das eine oder die mehreren Empfängermodule ($20A^d$) jeweils auf eine Antwort eingestellt werden, die in der Größe nahe, jedoch nicht gleich Null ist.

### Revendications

1. Récepteur destiné à une station de base d'un système de communications CDMA comprenant au moins une station de base (11) ayant un émetteur et un récepteur considérés et plusieurs (U) stations d'utilisateur ($10^1$, ... , $10^U$) comprenant plusieurs (U') stations d'utilisateur desservies par la station de base au moins, chaque station d'utilisateur ayant un émetteur et un récepteur destinés à communiquer avec ladite station de base au moins par un canal correspondant parmi plusieurs canaux ($14^1$,..., $14^U$), le récepteur de la station de base étant destiné à recevoir un signal (X(t)) comprenant des composantes correspondant à des signaux répartis transmis par les émetteurs des stations d'utilisateur, chacun des signaux répartis comprenant une série de symboles répartis à l'aide d'un code de répartition propre à la station correspondante d'utilisateur, le récepteur de station de base étant **caractérisé par** :

plusieurs (U') modules récepteurs ($20^1$, ... , $20^{Nr}$, $20^d$) destinés chacun à dériver des trames successives du signal reçu (X(t)) des estimations de la série de symboles d'une station correspondante parmi les stations d'utilisateur,

un dispositif de traitement préalable (18) destiné à dériver du signal reçu (X(t)) une série de matrices d'observation ($Y_n$) destinées chacune à être utilisée par chacun des modules (20) du récepteur dans la trame pour la dérivation d'une estimation d'un symbole parmi une série respective parmi les séries de symbole, et

un dispositif (19, 44 ; 44/1, 44/2) destiné à dériver de chaque matrice d'observation plusieurs vecteurs d'observation ($\underline{Y}_n$ ; $\underline{Y}_{n-1}$ ; $\underline{Z}^1{}_n$ ... $\underline{Z}^{NI}{}_n$ ; $\underline{Z}^d{}_n$) et à appliquer chacun des vecteurs d'observation à un module respectif parmi les modules récepteurs ($20^1$, ..., $20^{NI}$, $20^d$), chaque module récepteur comprenant :

un dispositif (28) d'identification de canal destiné à dériver de l'un des vecteurs d'observation une estimation de vecteur de canal ($\underline{\hat{H}}^1{}_n$,... $\underline{\hat{H}}^{NI}{}_n$; $\underline{\hat{Y}}^d{}_{0,n}$; $\underline{\hat{Y}}_{0,n-1}$) d'après des estimations de paramètres du canal entre le récepteur de la station de base et l'émetteur de la station d'utilisateur correspondante,

un dispositif conformateur de faisceau ($27^1$, ... , $27^{NI}$, $27^d$ ; $47^d$) ayant un dispositif d'accord de coefficients (50) destiné à produire un ensemble de coefficients de pondération d'après l'estimation de vecteur de canal et un dispositif de combinaison (51, 52) destiné à utiliser des coefficients de pondération pour pondérer des éléments respectifs parmi les éléments d'un vecteur respectif des vecteurs d'observation et à combiner les éléments pondérés pour donner une estimation de composantes de signal ($\hat{S}^1{}_n$, ... , $\hat{S}^U{}_n$)et

un dispositif d'estimation de symboles ($29^1$, ..., $29^U$, $30^1$, ... , $30^U$) destiné à dériver de l'estimation de composantes de signal une estimation ($\hat{b}^1{}_n$,...$\hat{b}^U{}_n$) d'un symbole ($b^1{}_n$, ..., $b^U{}_n$) transmis par une station correspondante des stations d'utilisateur ($10^1$, ... , $10^U$),

dans lequel le récepteur comporte en outre un dispositif (42, 43) commandé par les estimations de symbole ($\hat{b}^1{}_n$, ... , $\hat{b}^{NI}{}_n$ ; $g^1$, $g^2$, $g^3$, $g^{1+1,n}$) et des estimations de canal $(\boldsymbol{\mathcal{H}^1_n} ... \boldsymbol{\mathcal{H}^{NI}_n} ; \boldsymbol{\mathcal{H}^\Lambda_{n-1}})$ comprenant au moins les estimations de vecteur de canal ($\underline{\hat{H}}^1{}_n$,... $\underline{\hat{H}}^{NI}{}_n$) pour les canaux ($14^1$,... $14^{NI}$) d'un premier groupe (I) parmi les stations d'utilisateur ($10^1$, ... , $10^{NI}$) pour la formation d'au moins une matrice de contraintes ($\underline{C}_n$) représentant un sous-espace d'interférence des composantes du signal reçu correspondant au groupe prédéterminé, et, dans chacun des modules récepteurs ($20A^d$), d'un second groupe (D) des modules récepteurs, le dispositif d'accord de coefficients ($50A^d$) produit l'ensemble des coefficients de pondération en fonction à la fois de la matrice de contraintes ($\underline{\hat{C}}_n$) et des estimations de vecteur de canal ($\underline{\hat{H}}^d{}_n$) afin qu'un ou plusieurs modules récepteurs ($20A^d$) soient accordés chacun vers une réponse pratiquement nulle à la partie du signal reçu (X(t)) correspondant au sous-espace d'interférence.

2. Récepteur selon la revendication 1, **caractérisé en ce que** le dispositif d'accord de coefficients ($50A^d$) accorde aussi le module ou les modules récepteurs ($20A^d$) respectivement chacun vers une réponse pratiquement unité pour la composante du signal reçu (X(t)) de l'émetteur de la station correspondante parmi les stations d'utilisateur.

3. Récepteur selon la revendication 1, **caractérisé en ce que** le dispositif de dérivation de vecteur d'observation (19 ; 44) comprend un premier dispositif (44) destiné à configurer à nouveau la matrice d'observation ($Y_n$) provenant du dispositif (18) de traitement préalable et à transmettre le vecteur d'observation résultant ($\underline{Y}_n$) au dispositif conformateur de faisceau ($47A^d$) de chacun du module ou des modules récepteurs ($20A^d$) , et dans lequel le dispositif (42, 43) destiné à donner la matrice de contraintes au moins comprend un dispositif (42A) générateur d'un ensemble de contraintes en fonction des estimations de canal $(\boldsymbol{\mathcal{H}^1_n} ... \boldsymbol{\mathcal{H}^{NI}_n} ; \boldsymbol{\mathcal{H}^\Lambda_{n-1}})$ et des estimations de symbole ($\hat{b}^1{}_n$,..., $\hat{b}^{NI}{}_n$ ; $g^1$, $g^2$, $g^3$, $g^{1+1,n}$) correspondant au premier groupe pour la création de plusieurs matrices d'ensemble de contraintes ($C^1{}_n$,..., $C^{Nc}{}_n$) caractérisant ensemble le sous-espace d'interférence qui peut être attribué au premier groupe de stations d'utilisateur, et le dispositif (43A) générateur de matrice de contraintes comprend une série d'organes de configuration à nouveau de vecteur ($48A^1$,..., $48A^{Nc}$) destiné à configurer à nouveau les matrices d'ensemble de contraintes ($C^1{}_n$,..., $C^{Nc}{}_n$) pour la formation de colonnes respectivement de la matrice de contraintes ($\underline{\hat{C}}_n$), le dispositif générateur de matrice de contraintes (43A) transmettant la matrice de contraintes à chacun des dispositifs d'accord de coefficients ($50A^d$) du module ou des modules récepteurs ($20^d$) du second groupe, et dans lequel, dans le module ou chacun des modules récepteurs ($20A^d$), le dispositif d'estimation de canal ($28A^d$) transmet des estimations de vecteurs de canal réparties ($\underline{\hat{Y}}^d{}_{0,n}$) au dispositif d'accord de coefficients ($50A^d$) afin qu'elles soient utilisées pour la remise à jour des coefficients de pondération.

4. Récepteur selon la revendication 3, **caractérisé en ce que** le dispositif générateur de matrice de contraintes (43A) comporte un dispositif de transformation (49A) destiné à former une matrice inverse ($Q_n$) en fonction de 1a matrice de contraintes ($\hat{\underline{C}}_n$) et à transmettre la matrice inverse au dispositif d'accord de coefficients ($50A^d$) du module ou des modules récepteurs ($20A^d$), et dans lequel le dispositif d'accord de coefficients ($50A^d$) calcule les coefficients de pondération en fonction de la matrice de contraintes, de la matrice inverse et de l'estimation de vecteurs de canal.

5. Récepteur selon la revendication 1, **caractérisé en ce que** le dispositif de dérivation de vecteurs d'observation comprend plusieurs organes dérépartiteurs ($19^1$,..., $19^{NI}$, $19^d$) destinés chacun à utiliser un code correspondant parmi les codes de répartition d'utilisateur pour dérépartir la matrice d'observation ($Y_n$) à l'aide d'un code respectif des codes de répartition pour la formation d'un vecteur de post-corrélation spécifique à l'utilisateur ($\underline{Z}^1_n$,..., $\underline{Z}^{NI}_n$, $\underline{Z}^d_n$) et à le transmettre à un dispositif respectif des dispositifs d'identification de canal ($28^1$,..., $28^{NI}$, $28^d$).

6. Récepteur selon la revendication 3, **caractérisé en outre par** un dispositif ($30^1$,..., $30^{NI}$) destiné à dériver des estimations d'amplitude ($\Psi^1_n$,..., $\Psi^{NI}_n$) des composantes des signaux du premier groupe de stations d'utilisateur et à transmettre les estimations d'amplitude au dispositif générateur d'ensemble de contraintes sous forme de parties d'estimation de canal, et dans lequel le dispositif générateur d'ensemble de contraintes (42C) comprend plusieurs dérépartiteurs ($57C^1$,..., $57C^{NI}$) destinés chacun à utiliser un code correspondant parmi les codes de répartition d'utilisateur pour dérépartir une estimation respective des estimations de symbole ($\hat{\underline{b}}^1_n$,..., $\hat{\underline{b}}^{NI}_n$) des modules récepteurs correspondant au premier groupe (I) de stations d'utilisateur, un dispositif de changement d'échelle ($58C^1$,..., $58C^{NI}$) destiné à changer l'échelle des estimations de symboles dérépartis par les amplitudes ($\Psi^1_n$,..., $\Psi^{NI}_n$) des composants de signal correspondant aux estimations de symboles ($\hat{\underline{b}}^1_n$,..., $\hat{\underline{b}}^{NI}_n$) respectivement, et plusieurs dispositifs de réplique de canal ($59C^1$,..., $59C^{NI}$) ayant des coefficients ajustables en fonction des estimations de vecteurs de canal ($\hat{\underline{H}}^1_n$,..., $\hat{\underline{H}}^{NI}_n$) respectivement pour le filtrage des estimations correspondantes de symboles réréparties et ayant subi le changement d'échelle pour la formation d'estimations de matrices d'observation spécifiques de l'utilisateur ($\hat{\underline{Y}}^1_{n-1}$,..., $\hat{\underline{Y}}^{NI}_{n-1}$) respectivement, et un dispositif (60) destiné à additionner les matrices d'observation spécifiques d'utilisateur pour former une estimation de matrices d'observation ($\hat{\underline{I}}_{n-1}$), et à transmettre cette estimation au dispositif générateur de matrices de contraintes (43C), le dispositif générateur de matrices de contraintes (43C) comprenant un dispositif de configuration à nouveau de vecteurs destiné à configurer à nouveau l'estimation de matrices d'observation ($\hat{\underline{I}}_{n-1}$) pour la formation d'une estimation de vecteurs d'observation ($\hat{\underline{I}}_{n-1}$) sous forme d'une matrice de contraintes à une seule colonne ($\hat{\underline{C}}_n$) destinée à être appliquée au dispositif d'accord de coefficients ($50A^d$) de chacun des modules récepteurs ($20^d$) du second groupe (D).

7. Récepteur selon la revendication 3, **caractérisé en ce que** le dispositif générateur d'ensembles de contraintes (42D) crée un nombre de contraintes ($N_c$) égal au nombre (NI) de stations d'utilisateur dans le premier groupe (I) et comprend plusieurs rerépartiteurs ($57D^1$, ...3, $57D^{NT}$) destinés chacun à utiliser un code correspondant des codes de répartition d'utilisateur pour repartir une estimation respective des estimations de symboles ($\hat{\underline{b}}^1_n$,..., $\hat{\underline{b}}^{NI}_n$) d'un groupe prédéterminé (I) des modules récepteurs correspondant aux composantes sélectionnées parmi les composantes des signaux reçus, et plusieurs dispositifs de réplique de canal ($59D^1$, ... , $59D^{NI}$) ayant des coefficients ajustables en fonction des estimations de vecteurs de canal ($\hat{\underline{H}}^1_n$, ... , $\hat{\underline{H}}^{NI}_n$) respectivement pour le filtrage des estimations correspondantes de symboles répartis pour l'obtention de plusieurs estimations de matrices d'observation spécifiques de l'utilisateur ($\hat{\underline{Y}}^1_{n-1}$..., $\hat{\underline{Y}}^{NI}_{n-1}$) respectivement, et dans lequel, dans le générateur de matrices de contraintes (43D), la série de configurateurs à nouveau de vecteurs ($48A^1$, ... , $48A^{Nc}$) configure à nouveau les estimations de matrices d'observation spécifiques d'utilisateur pour la formation de plusieurs estimations de vecteurs d'observation spécifiques de l'utilisateur ($\underline{\hat{Y}}^1_{n-1}$..., ($\underline{\hat{Y}}^{NI}_{n-1}$) respectivement sous forme de colonnes respectives de la matrice de contraintes ($\hat{\underline{C}}_n$) pour la transmission à chacun des dispositifs d'accord de coefficient ($50A^d$) de chacun des modules récepteurs ($20^d$) du second groupe (D).

8. Récepteur selon la revendication 3, **caractérisé en ce que** les dispositifs d'identification de canal ($28^1$,..., $28^{NI}$) du premier groupe de modules récepteurs ($20E^1$,..., $20E^{NI}$) donnent à la fois les estimations de vecteurs de canal ($\hat{\underline{H}}^1_n$, ... , $\hat{\underline{H}}^{NI}_n$) respectivement et plusieurs ensembles d'estimation de vecteurs de sous-canal ($\hat{\underline{H}}^{1,1}_n$,..., ($\hat{\underline{H}}^{1,Nf}_n$,..., $\hat{\underline{H}}^{NI,1}_n$,..., $\hat{H}^{NI,Nf}_n$) respectivement, chacune des estimations de canal $(\mathscr{H}^1_n, \ldots, \mathbf{H}^{NI}_n)$ comprenant un ensemble respectif des ensembles d'estimation de vecteurs de sous-canal, chacun des ensembles d'estimation de vecteurs de sous-canal représentant une estimation des paramètres de canal de $N_f$ sous-canaux du canal entre la station de base et l'émetteur d'une station correspondante parmi des NI stations d'utilisateur contenues dans le premier groupe, le dispositif générateur d'ensembles de contraintes (42E) comprend plusieurs configurateurs à nouveau ($57E^1$, ... , $57E^{NI}$) et plusieurs organes de réplication de canal ($59E^1$,..., $59E^{NI}$ couplés aux rerépartiteurs

(57E$^1$,..., 57E$^{NI}$) respectivement pour le filtrage des symboles rerépartis ($\hat{\underline{b}}^1_n$, ..., $\hat{\underline{b}}^{NI}_n$) respectivement à l'aide d'estimations respectives des estimations de vecteurs de sous-canal (($\hat{\underline{H}}^{1,1}_n$,..., $\hat{\underline{H}}^{1.Nf}_n$,..., $\hat{\underline{H}}^{NI,1}_n$,...$\hat{\underline{H}}^{NI,Nf}_n$) pour la formation de plusieurs (N$_o$) contraintes en nombre égal à N$_f$NI et la formation de plusieurs estimations de matrices d'observation de sous-canal spécifiques d'utilisateur ($\hat{\underline{Y}}^{1,1}_{n-1}$,...,$\hat{\underline{Y}}^{1,NI}_{n-1}$,...,$\hat{\underline{Y}}^{NI.1}_{n-1}$,..., $\hat{\underline{Y}}^{NI,NE}_{n-1}$)correspondant aux sous-canaux respectivement et, dans le générateur de matrices de contraintes (43E), la série de configurateurs à nouveau (48A$^1$ ,..., 48A$^{Nc}$) configure à nouveau les ensembles d'estimation de matrices d'observation spécifiques de l'utilisateur pour la formation d'un nombre correspondant d'ensembles d'estimation de vecteurs d'observation de sous-canal spécifiques de l'utilisateur ($\hat{\underline{Y}}^{1,1}_{n-1}$,..., $\hat{\underline{Y}}^{1,Nf}_{n-1}$,..., $\hat{\underline{Y}}^{NI,1}_{n-1}$,..., $\hat{\underline{X}}^{NI,Nf}_{n-1}$) sous forme de colonnes respectives de la matrice de contraintes ($\hat{\underline{C}}_n$) destinée à la transmission à chacun des dispositifs d'accord de coefficients (50A$^d$) de chacun des modules récepteurs (20$^d$) du second groupe (D).

**9.** Récepteur selon la revendication 3, **caractérisé en outre par** un dispositif générateur d'estimation de symboles hypothétiques (63F$^1$,..., 63F$^{NI}$) destiné à créer , pour chacune des composantes choisies parmi les composantes, une série d'estimations de symboles hypothétiques ($\underline{g}^1_n$, $\underline{g}^2_n$, $\underline{g}^3_n$), dans lequel le dispositif générateur d'ensembles de contraintes (42F) comprend plusieurs rerépartiteurs (57F$^1$,..., 57F$^{NI}$) destinés chacun à répartir à nouveau, avec un code correspondant des codes de répartition d'utilisateur, des ensembles sélectionnés des estimations de symboles hypothétiques, et plusieurs dispositifs de réplication de canal (59F$^1$,..., 59F$^{NI}$) respectivement pour le filtrage des ensembles d'estimation de symboles rerépartis, chacun destiné à former plusieurs (N$_c$) des contraintes en nombre égal à 3NI et à former plusieurs estimations de matrices d'observation spécifiques de l'utilisateur ($\hat{\underline{Y}}^1_{0,n}$, $\hat{\underline{Y}}^1_{-1,n}$, $\hat{\underline{Y}}^1_{+1,n}$,..., $\hat{\underline{Y}}^{NI}_{0,n}$, $\hat{\underline{Y}}^{NI}_{-1,n}$, $\hat{\underline{Y}}^{NI}_{+1,n}$), les dispositifs de réplication de canal (59F$^1$,..., 59F$^{NI}$) ayant des coefficients ajustables en fonction des estimations de vecteurs de canal ($\hat{\underline{H}}^1_n$,..., $\hat{\underline{H}}^{NI}_n$) respectivement et, dans le dispositif générateur de matrices de contraintes (43F), la série de configurateurs à nouveau (48A$^1$,..., 48A$^{Nc}$) configure à nouveau les ensembles d'estimation de matrices d'observation spécifiques d'utilisateur pour la formation de plusieurs estimations de vecteurs d'observation spécifiques de l'utilisateur ($\underline{Y}^1_{0,n}$, $\underline{Y}^1_{-i,n}$, $\underline{Y}^1_{+i,n}$,..., $\underline{Y}^{NI}_{0,n}$, $\underline{Y}^{NI}_{-1,n}$, $\underline{Y}^{NI}_{+1,n}$) respectivement sous forme de colonnes respectives de la matrice de contraintes ($\underline{C}_n$) pour la transmission à chacun des dispositifs d'accord de coefficients (50A$^d$) de chacun des modules récepteurs (20$^d$) du second groupe (D).

**10.** Récepteur selon la revendication 3, **caractérisé en outre par** un dispositif (63G$^1$,... 63G$^{NI}$) destiné à donner des estimations de symboles hypothétiques ($g^{1+1.n}_n$) et dans lequel le dispositif générateur d'un ensemble de contraintes utilise une combinaison des estimations de symboles ($\hat{\underline{b}}^1_n$, ... , $\hat{\underline{b}}^{NI}_n$) et des valeurs de symbole hypothétiques pour la production de l'ensemble des estimations de matrice d'observation spécifiques d'utilisateur.

**11.** Récepteur selon la revendication 10, **caractérisé en ce que** le dispositif générateur d'ensembles de contraintes (42G) comprend plusieurs rerépartiteurs (57G$^1$, ... , 57G$^{NI}$) destinés chacun à répartir à nouveau, avec un code correspondant parmi les codes de répartition d'utilisateur, une estimation respective des estimations de symboles ($\hat{\underline{b}}^1_n$,..., $\hat{\underline{b}}^{NI}_n$) et une estimation de symbole hypothétique ($\underline{g}^{1+1,n}_n$) pour donner plusieurs estimations de symboles rerépartis, et plusieurs dispositifs réplicateurs de canal (59G$^1$,..., 59G$^{NI}$) respectivement destinés à filtrer les estimations de symboles rerépartis pour former plusieurs (N$_c$) contraintes en nombre égal à 2NI et à former plusieurs estimations de matrices d'observation spécifiques d'utilisateur ($\hat{\underline{Y}}^1_{r,n}$, $\hat{\underline{Y}}^1_{+1,n}$,..., $\hat{\underline{Y}}^{NI}_{r,n}$, $\hat{\underline{Y}}^{NI}_{+1,n}$), les dispositifs de réplication de canal (59F$^1$,..., 59F$^{NI}$) ayant des coefficients ajustables en fonction des estimations de vecteurs de canal ($\hat{\underline{H}}^1_n$,..., $\hat{\underline{H}}^{NI}_n$) respectivement et, dans le dispositif générateur de matrices de contraintes (43G), la série de configurateurs à nouveau de vecteurs (48A$^1$,..., 48A$^{Nc}$) configure à nouveau les estimations de matrices d'observation spécifiques d'utilisateur pour former un nombre correspondant d'estimations de vecteurs d'observation spécifiques d'utilisateur ($\underline{Y}^1_{r,n}$, $\underline{Y}^1_{+1,n}$,..., $\underline{Y}^{NI}_{r,n}$, $\underline{Y}^{NI}_{+1,n}$) respectivement sous forme de colonnes respectives de la matrice de contraintes ($\underline{C}_n$)pour la transmission à chacun des dispositifs d'accord de coefficients (50A$^d$) de chacun des modules récepteurs (20$^d$) du second groupe (D).

**12.** Récepteur selon la revendication 1, **caractérisé en ce que** le dispositif de dérivation de vecteurs d'observation comprend plusieurs dérépartiteurs (19$^1$,..., 19$^{NI}$, 19$^d$) destinés chacun à dérépartir la matrice d'observations (Y$_n$) à l'aide d'un code correspondant des codes de répartition d'utilisateur pour la production d'un vecteur correspondant parmi les vecteurs d'observation de post-corrélation ($\underline{Z}^1_n$,..., $\underline{Z}^{NI}_n$, $\underline{Z}^d$n) et à transmettre les vecteurs d'observation de post-corrélation à la fois au dispositif d'identification de canal et au dispositif d'accord de coefficients du dispositif conformateur de faisceau du module ou de chacun des modules récepteurs, les éléments du vecteur d'observation pondéré par le dispositif de combinaison du module ou des modules récepteurs étant des éléments du vecteur correspondant d'observation de post-corrélation, et dans lequel le dispositif destiné à donner la matrice de contraintes (42B, 43B) comporte un dispositif (42B) commandé par les estimations de canal $(\mathcal{H}^1_n, \ldots, \mathcal{H}^{NI}_n ; \mathcal{H}^1_{n-1})$ et les estimations de symboles ($\hat{b}^1_n,..., \hat{b}^{NI}_n$ ; $g^1, g^2, g^3, g^{1+1,n}$) correspondant au premier groupe (I) de stations d'utilisateur pour donner plusieurs matrices d'ensembles de contraintes ($C_n$) caractérisant ensemble le sous-espace d'interférence qui peut être attribué aux signaux répartis du premier groupe de stations d'utilisateur, et un dispositif générateur de matrices de contraintes (43B) comprenant plusieurs générateurs de matrices de contraintes spécifiques d'utilisateur ($43B^d$) associés chacun au module ou à un module respectif parmi les modules récepteurs ($20^d$), chaque générateur de matrices spécifiques d'utilisateur ($43B^d$) ayant un dispositif de dérépartition ($55B^{d,1},...,55B^{d,NC}$) destiné à utiliser le code correspondant de répartition d'utilisateur de l'utilisateur spécifique pour dérépartir chacune des matrices d'ensembles de contraintes spécifiques d'utilisateur respectivement pour la formation d'une colonne respective d'une matrice correspondante parmi les matrices de contraintes de post-corrélation spécifiques d'utilisateur ($\hat{\underline{C}}^d_{PCM,n}$), les dispositifs générateurs de matrices de contraintes spécifiques d'utilisateur ($43B^d$) transmettant les matrices de contraintes de post-corrélation spécifiques d'utilisateur aux dispositifs d'accord de coefficients du module ou du module respectif des modules récepteurs ($20B^d$).

13. Récepteur selon la revendication 12, **caractérisé en outre par** un dispositif ($30^1,...30^{NI}$) destiné à dériver les estimations d'amplitude ($\Psi^1_n,..., \Psi^{NI}_n$) d'estimations de composantes de signal du premier groupe de stations d'utilisateur et à transmettre des estimations d'amplitude aux dispositifs générateurs d'ensembles de contraintes sous forme de parties d'estimation de canal, et dans lequel le dispositif générateur d'ensembles de contraintes (42C) comprend plusieurs rerépartiteurs ($57C^1,..., 57C^{NI}$) destinés chacun à utiliser un code correspondant parmi les codes de répartition d'utilisateur pour rerépartir une estimation respective des estimations de symboles provenant des modules récepteurs ($20^1,... 20^{NI}$) correspondant au premier groupe de stations d'utilisateur, un dispositif de changement d'échelle ($58C^1,..., 58C^{NI}$) destiné à changer l'échelle de chacune des estimations de symboles rerépartis à l'aide desdites amplitudes ($\psi^1_n,.... , \psi^{NI}_n$) respectivement, plusieurs dispositifs de réplication de canal ($59C^1,..., 59C^{NI}$) ayant des coefficients ajustables en fonction des estimations de vecteurs de canal ($\hat{\underline{H}}^1_n,....., \hat{\underline{H}}^{NI}_n$) respectivement destinés à filtrer les estimations correspondantes de symboles rerépartis et ayant subi le changement d'échelle pour donner des estimations de matrices d'observation spécifiques d'utilisateur ($\hat{\underline{Y}}^1_{n-1},..., \hat{\underline{Y}}^{NI}_{n-1}$) respectivement, et un dispositif (60) destiné à ajouter les estimations de matrices d'observation spécifiques d'utilisateur pour la formation d'une estimation de matrice d'observation ($\hat{I}_{n-1}$) et à les transmettre à chacun des générateurs de matrices de contraintes spécifiques d'utilisateur ($43H^d$) d'un ou plusieurs modules récepteurs du second groupe, chacun des générateurs de matrices de contraintes spécifiques d'utilisateur ($43H^d$) comprenant un dispositif de dérépartition ($55B^d$) destiné à dérépartir l'estimation de matrice d'observation ($\hat{I}_{n-1}$) à l'aide du code correspondant de répartition d'utilisateur pour la formation d'une estimation respective ($\hat{I}^d_{PCM,n-1}$) parmi plusieurs estimations de vecteurs d'observation spécifiques d'utilisateur de post-corrélation, chacune sous forme d'une matrice de contraintes respectives d'une seule colonne ($\hat{\underline{C}}^d_{PCM,n}$) destinée à être utilisée par le dispositif associé parmi les dispositifs d'accord de coefficients ($50B^d$) contenus dans le second groupe (D).

14. Récepteur selon la revendication 12, **caractérisé en ce que** le dispositif générateur d'ensembles de contraintes (42D) comprend plusieurs rerépartiteurs ($57D^1,..., 57D^{NI}$) destinés chacun à rerépartir une estimation respective parmi des estimations de symbole ($\hat{\underline{b}}^1_n,...\hat{\underline{b}}^{Nr}_n$) d'un groupe prédéterminé (I) des modules récepteurs correspondant aux composantes sélectionnées parmi les composantes des signaux reçus, et plusieurs dispositifs de réplication de canal ($59D^1,..., 59D^{NI}$) ayant des coefficients ajustables en fonction des estimations de vecteur de canal ($\hat{\underline{H}}^1_n,..., \hat{\underline{H}}^{NI}_n$) respectivement destinées à filtrer les estimations correspondantes de symboles rerépartis pour donner plusieurs estimations de matrices d'observation spécifiques d'utilisateur ($\hat{\underline{Y}}^1_{n-1},..., \hat{\underline{Y}}^{NI}_{n-1}$) et dans lequel, dans chacun des dispositifs générateurs de matrices de contraintes spécifiques d'utilisateur ($43I^d$), le dispositif de dérépartition ($55B^{d,1},..., 55B^{d,No}$) dérépartit les estimations de matrices d'observation spécifiques d'utilisateur pour former plusieurs estimations de vecteurs d'observation spécifiques d'utilisateur ($\hat{\underline{Y}}^1_{n-1},..., \hat{\underline{Y}}^{NI}_{n-1}$) respectivement sous forme de colonnes respectives d'une matrice de contraintes spécifiques d'utilisateur ($\hat{\underline{C}}_{PCM,n}$) pour la transmission à un dispositif associé des dispositifs d'accord de coefficients ($50B^d$) du module ou des modules récepteurs ($20^d$) du second groupe (D).

15. Récepteur selon la revendication 12, **caractérisé en ce que** les dispositifs d'identification de canal ($28^1,..., 28^{NI}$) du premier groupe (I) de modules récepteurs ($20E^1,..., 20E^{NI}$) crée à la fois les estimations de vecteur de canal ($\hat{\underline{H}}^1_n, ..., \hat{\underline{H}}^{NI}_n$) respectivement et plusieurs ensembles d'estimation de vecteurs de sous-canal ($\hat{\underline{H}}^{1,1}_n, \hat{\underline{H}}^{1,Nf}_n,..., \hat{\underline{H}}^{NI,1}_n, \hat{\underline{H}}^{NI,Nf}_n$) respectivement, chacune des estimations de vecteurs de canal ($\hat{\underline{H}}^1_n,..., \hat{\underline{H}}^{NI}_n$) comprenant un ensemble respectif des ensembles d'estimation de vecteurs de sous-canal, chacun des ensembles d'estimation de vecteurs de sous-canal représentant une estimation des paramètres de canal des sous-canaux du canal entre la station de base et l'émetteur de la station d'utilisateur correspondante, le dispositif générateur d'ensembles de contraintes (42E) comporte plusieurs rerépartiteurs ($57E^1$, ... , $57E^{NI}$) et plusieurs réplicateurs de canal ($59E^1$,...., $59E^{NI}$) couplés aux rerépartiteurs ($57E^1$, ... $57E^{NI}$) respectivement pour filtrer les symboles rerépartis ($\hat{\underline{b}}^1{}_n$,..., $\hat{\underline{b}}^{NI}{}_n$) respectivement du premier groupe à l'aide d'estimations respectives des estimations de vecteurs de sous-canal ($\hat{\underline{H}}^{1,1}{}_n$,..., $\hat{\underline{H}}^{1,NF}{}_n$,..., $\hat{\underline{H}}^{NI,1}{}_n$,..., $\hat{\underline{H}}^{NI,Nf}{}_n$) pour la formation de plusieurs ensembles d'estimations de matrices d'observation spécifiques d'utilisateur ($\underline{Y}^{1,1}{}_{n-1}$,..., $\underline{Y}^{I,Nf}{}_{n-1}$,..., $\underline{Y}^{NI,1}{}_{n-1}$,..., $\underline{Y}^{NI,NF}{}_{n-1}$), les ensembles correspondant aux sous-canaux respectivement et, dans chacun des générateurs de matrices de contraintes spécifiques d'utilisateur ($43K^d$) , des dispositifs de dérépartition ($55B^{d,1}$, ... ,$55B^{d,Nc}$) dérépartis des ensembles d'estimation de matrices d'observation spécifiques d'utilisateur pour former un nombre correspondant d'ensembles d'estimations de vecteurs d'observation spécifiques d'utilisateur ($\hat{\underline{I}}^{1,1}PCM,n-1$, ... ,$\hat{\underline{I}}^{d,NI,Nf}PCM,n-1$) , les ensembles formant des colonnes respectives d'une matrice respective de contraintes spécifiques d'utilisateur ($\underline{\hat{C}}^d{}_{PCM,n}$) pour la transmission au dispositif associé parmi les dispositifs d'accord de coefficients ($50B^d$) du module récepteur ou de plusieurs modules récepteurs ($20^d$) du second groupe (D) .

16. Récepteur selon la revendication 12, **caractérisé en outre par** un dispositif générateur d'estimations de symboles hypothétiques ($63L^1$,..., $63L^{NI}$) destiné à créer, pour chacune des composantes choisies parmi les composantes une série d'estimations de symboles hypothétiques ($g^1{}_n$, $g^2{}_n$, $g^3{}_n$) , dans lequel le dispositif générateur d'ensembles de contraintes (42L) comprend des dispositifs de rerépartition ($57L^1$,..., $57L^{NI}$) destinés à rerépartir, avec un code correspondant des codes de répartition d'utilisateur destinés au premier groupe, des ensembles sélectionnés d'estimations de symboles hypothétiques, et des dispositifs réplicateurs de canal ($59L^1$,..., $59L^{NI}$) respectivement destinés à filtrer les ensembles de valeurs hypothétiques rerépartis, chacun pour la formation de plusieurs ensembles d'estimations de matrices d'observation spécifiques d' utilisateur ($\underline{Y}^1{}_{0,n}$, $\underline{Y}^1{}_{-1,n}$, $\underline{Y}^1{}_{+1,n}$,..., $\underline{Y}^{NI}{}_{0,n}$, $\underline{Y}^{NI}{}_{-1,n}$, $\underline{Y}^{NI}{}_{+1,n}$), les dispositifs de réplication de canal ($59L^1$,..., $59L^{NI}$) ayant des coefficients ajustables en fonction des estimations de vecteurs de canal ($\hat{\underline{H}}^1{}_n$,..., $\hat{\underline{H}}^{NI}{}_n$) respectivement et, dans chacun des dispositifs générateurs de matrices de contraintes spécifiques d'utilisateur ($43L^d$) , le dispositif de dérépartition ($55B^{d,1}$ ,..., $55B^{d,No}$) dérépartit les ensembles d'estimation de matrices d'observation spécifiques d'utilisateur pour la formation d'un nombre correspondant d'ensembles d'estimations de vecteurs d'observations spécifiques d'utilisateur ($\hat{\underline{I}}^{d,1,1}{}_{PCM,n}$, $\underline{\hat{I}}^{a,1,2}{}_{PCM,n}$, $\underline{\hat{I}}^{d,1,3}{}_{PCM,n}$,..., $\hat{\underline{I}}^{d,NI,1}{}_{PCM,n}$, $\hat{\underline{I}}^{d,NI,2}{}_{PCM,n}$, $\hat{\underline{I}}^{d,NI,3}{}_{PCM,n}$ respectivement sous forme de colonnes respectives d'une matrice respective de contraintes spécifique d'utilisateur ($\underline{\hat{C}}^d{}_{PCM,n}$) pour la transmission aux dispositifs d'accord de coefficients ($50B^d$) d'un module associé qui est le module ou plusieurs modules récepteurs ($20^d$) du second groupe (D).

17. Récepteur selon la revendication 12, **caractérisé en outre par** un dispositif ($63M^1$,..., $63M^{NI}$) destiné à donner des estimations de symboles hypothétiques ($g^{1+1,n}{}_n$) et dans lequel le dispositif générateur d'ensembles de contraintes (42M) utilise une combinaison des estimations de symboles ($\underline{b}^1{}_n$,..., $\underline{b}^{NI}{}_n$) et des estimations de symboles hypothétiques pour la production des ensembles d'estimation de matrices d'observation spécifiques d'utilisateur.

18. Récepteur selon la revendication 17, **caractérisé en ce que** le dispositif générateur d'ensembles de contraintes (42M) comprend un dispositif de rerépartition ($57M^1$, .., $57M^{NI}$) destiné à rerépartir à l'aide des estimations de symboles ($\underline{b}^1{}_n$,..., $\underline{b}^{NI}{}_n$) et des estimations de symboles hypothétiques ($\underline{g}^{l+1,n}{}_n$) utilisant des codes respectifs parmi les codes de répartition d'utilisateur, afin qu'il donne plusieurs estimations de symboles rerépartis, et des dispositifs réplicateurs de canal ($59M^1$ ,.... , $59M^{NI}$) pour filtrer les estimations de symboles rerépartis pour la formation de plusieurs paires d'estimations de matrices d'observation spécifiques d'utilisateur ($\underline{\hat{Y}}^1{}_{r,p}$, $\underline{Y}^1{}_{+1,n}$ ,...., $\hat{\underline{Y}}^{NI}{}_{r,n}$, $\hat{\underline{Y}}^{NI}{}_{+1,n}$), chaque paire correspondant à une station du premier groupe de stations d'utilisateur, le dispositif de réplication de canal ($59M^1$,..., $59M^{NI}$) ayant des coefficients ajustables en fonction des estimations de vecteurs de canal ($\hat{\underline{H}}^1{}_n$ ,..., $\underline{H}^{NI}{}_n$)respectivement et, dans chacun des dispositifs générateurs de matrices de contraintes spécifiques d'utilisateur ($43M^d$), les dispositifs de dérépartition ($55B^{d,1}$,..., $55B^{d,Na}$) dérépartissent les estimations de matrices d'observation spécifiques d'utilisateur pour former un nombre correspondant d'estimations de vecteurs d'observation spécifiques d'utilisateur ($\hat{\underline{I}}^{d,1,k}{}_{PCM,n}$, $\hat{\underline{I}}^{d.1,K2}{}_{PCM,n}$,..., $\hat{\underline{I}}^{d,NI,k1}{}_{PCM,n}$, $\hat{\underline{I}}^{d,NI,k2}{}_{PCM,n}$) respectivement sous forme de colonnes respectives d'une matrice correspondante de contraintes spécifiques d'utilisateur ($\underline{\hat{C}}_{PCM,n}$) destinées à être transmises au dispositif d'accord de coefficients ($50B^d$) du module associé ou de l'un des modules récepteurs associés ($20^d$) du second groupe (D).

19. Récepteur selon la revendication 1, **caractérisé en ce que** :

le module ou l'un au moins ($20^i$) des modules récepteurs à la fois transmet des estimations de symboles au dispositif générateur de matrices de contraintes (42P, 43P) pour une utilisation dans la dérivation des matrices de contraintes et utilise les matrices de contraintes pour l'accord des coefficients de pondération dans son dispositif conformateur de faisceau (47P$^i$) ,

le module ou l'un au moins des modules récepteurs comprenant en outre un second dispositif conformateur de faisceau (27P$^1$) ayant un second dispositif de combinaison et un second dispositif d'accord de combinaison destiné à accorder les coefficients de pondération du second dispositif de combinaison,

le dispositif de dérivation de vecteurs d'observation (19, 44 ; 44/1, 44/2) comprenant en outre un second dispositif de configuration à nouveau (44/2) destiné à configurer à nouveau la matrice d'observation (Y$_n$) et à transmettre un second vecteur résultant d'observation ($\underline{Y}_n$) au second dispositif de combinaison (27P$^i$) et un dispositif à retard (45) destiné à retarder le premier vecteur d'observation ($\underline{Y}_{n-1}$) par rapport au second vecteur d'observation ($\underline{Y}_n$),

le second dispositif d'accord de coefficients étant aussi destiné à accorder les coefficients de pondération du second dispositif de combinaison en fonction de l'estimation de vecteurs de canal (($\underline{\hat{Y}}^i_{0,n-1}$) utilisés par le premier dispositif d'accord de coefficients dans le conformateur de faisceau (47P$^i$) , et dans lequel

le dispositif d'identification de canal (28P$^i$) du module ou de l'un au moins des modules récepteurs dérive l'estimation de vecteurs de canal ($\underline{\hat{Y}}^L_{o,n-1}$) du premier vecteur retardé d'observation (($\underline{Y}_{n-1}$) et transmet l'estimation du vecteur de canal au dispositif respectif d'accord de coefficients du premier dispositif de combinaison et du second dispositif de combinaison afin qu'elle soit utilisée pour la remise à jour de leurs coefficients de pondération et transmettent au dispositif générateur de matrices de contraintes (42P, 43P) les estimations de

canal $(\underline{\tilde{\mathcal{H}}}^i_{n-1})$ destinées à être utilisées pour la dérivation de la matrice de contraintes,

le premier dispositif de combinaison (47P$^i$ ; 51, 52) et le second dispositif de combinaison (27P$^i$ ; 51, 52) utilisent leurs coefficients respectifs de pondération pour pondérer les éléments respectifs parmi les éléments du premier vecteur retardé d'observation et du second vecteur d'observation respectivement et combinent les éléments pondérés des premier et second vecteurs respectifs d'observation pour donner la première estimation de composantes de signal ($\underline{\hat{s}}^i_{n-1}$) et la seconde estimation de composantes de signal ($\underline{\hat{s}}^i_{MRC,n}$) respectivement,

le module ou le module récepteur ou l'un au moins des modules récepteurs comprend en outre un second dispositif d'estimation de symboles (29P/2$^i$) pour la dérivation, à partir de la seconde estimation de composantes de signal ($\underline{\hat{s}}^i_{MRC,n}$), une estimation de symboles ($\underline{\hat{b}}^i_{MRC,n}$) et à transmettre l'estimation de symbole ($\underline{\hat{b}}^i_{MRC,n}$) au dispositif destiné à la matrice de contraintes (42P, 43P),

le dispositif de contraintes (42P, 43P) comprend un dispositif générateur d'ensembles de contraintes (42P) destiné à créer plusieurs matrices d'ensembles de contraintes (C$_{n-1}$) caractérisant ensemble le sous-espace d'interférence attribuable au premier groupe de signaux de stations d'utilisateur, et le dispositif générateur de matrices de contraintes (43P) comprend un dispositif de configuration à nouveau de vecteur (48A$^1$,...., 48A$^{No}$) destiné à configurer à nouveau les matrices d'ensembles de contraintes (C$^1_n$ ,..., C$^{Nc}_n$) pour la formation de colonnes respectivement de la matrice de contraintes ($\underline{C}_{n-1}$) , le dispositif générateur de matrices de contraintes (43P) transmettant la matrice de contraintes à chacun des dispositifs d'accord de coefficients (50P$^d$) du module ou d'au moins un module récepteur (20$^d$).

20. Récepteur selon la revendication 19, **caractérisé en ce que** le module ou au moins un des modules récepteurs comporte en outre un dispositif d'estimation d'amplitude (30P$^i$) destiné à donner des estimations d'amplitude ($\psi^1_{n-1}$) des composantes des signaux du premier groupe de stations d'utilisateur et à transmettre des estimations d'amplitude au dispositif générateur d'ensemble de contraintes (42P) comme parties des estimations de canal $(\underline{\mathcal{H}}^i_{n-1})$ .

21. Récepteur selon la revendication 19, **caractérisé en ce que** le module ou au moins l'un des modules récepteurs est disposé afin qu'il effectue, pour chaque trame, plusieurs itérations (#1 , #2,..., #N$_8$) pour la dérivation de chaque estimation de symbole, la disposition étant telle que :

dans chacune des itérations d'une trame particulière (n), le générateur d'ensembles de contraintes (42P) utilise les estimations de canal $(\underline{\mathcal{H}}^i_{n-1})$ , une première estimation de symbole ($\underline{\hat{b}}^i_{n-2}$) et une seconde estimation de symbole ($\underline{\hat{b}}^i_{MRC,n}$) provenant des premier et seconds dispositifs conformateurs de faisceau respectivement d'un ou plusieurs modules récepteurs,

dans une première itération, le dispositif destiné à donner la matrice de contraintes (42P, 43P) crée une matrice de contraintes de première itération ($\underline{C}_{n-1}$ (1)) en fonction aussi d'une estimation de symboles précédents ($\underline{\hat{b}}^i_{MRC,n-1}$) créée auparavant par chacun des seconds conformateurs de faisceau du module ou de plusieurs modules récepteurs et transmet la matrice de contraintes de première itération ($\underline{C}_{n-1}$ (1)) au dispositif d'accord de coefficients du premier dispositif consommateur de faisceau (47P$^1$) afin qu'elle soit utilisée, avec l'estimation de canal de répartition ($\hat{\underline{Y}}^i_{o,n-1}$) pour accorder les coefficients du premier dispositif conformateur de faisceau ($47P^1$) pour la pondération de chaque élément du premier vecteur retardé d'observation ($\underline{Y}_{n-1}$) pour la production d'une estimation de composantes de signal de première itération et l'unité à règle de décision ($29P/1^1$) traite l'estimation de composantes de signal de première itération pour produire une estimation de symboles de première itération ($\underline{\hat{b}}^i_{n-1}(1)$),

dans une seconde itération, le dispositif générateur de matrices de contraintes (43P) utilise l'estimation de symboles de première itération ($\underline{\hat{b}}^i_{n-1}(1)$) à la place de l'estimation de symboles précédents ($\underline{\hat{b}}^i_{MRC,n-1}$) pour accorder les coefficients de pondération et dérivés d'une matrice de contraintes de seconde itération ($\underline{\hat{C}}_{n-1}(2)$) destinée à être utilisée par le premier dispositif conformateur de faisceau et le premier dispositif à règle de décision pour la production d'une estimation de symboles de seconde itération ($\underline{\hat{b}}^i_{n-1}(2)$) et

dans une itération finale du total de $N_s$ itérations, le dispositif donnant la matrice de contraintes (42P, 43P) utilise une estimation de symboles de pénultième itération ($\underline{\hat{b}}^i_{n-1}(N_{s-1})$) produite par le premier dispositif à règle de décision ($29P/1^i$) dans la pénultième itération pour donner une matrice de contraintes d'itération finale ($\underline{\hat{C}}_{n-1}(N_s)$) destinée à être utilisée par le premier dispositif de combinaison et le premier dispositif à règle de décision pour donner une estimation de symboles d'itération finale ($\underline{\hat{b}}^1_{n-1}(N_o)$) comme estimation de symboles cibles de cette trame (u) destinée à être transmise comme estimation de symboles ($\underline{\hat{b}}^i_{n-1}$) et dans lequel le générateur d'ensemble de contraintes (42P) garde en tampon l'estimation de symboles ($\underline{\hat{b}}^1_{n-1}$) destinée à être utilisée dans chaque itération de la trame suivante (n+1) à la place de l'estimation de symboles ($\underline{\hat{b}}^i_{n-2}$), et le générateur d'ensemble de contraintes (42P) utilise une nouvelle estimation de symboles ($\underline{\hat{b}}^1_{MRC,n+1}$) provenant du second conformateur de faisceau ($27P^i$) pour toutes les itérations de la nouvelle trame, et utilise l'estimation de symboles précédents ($\underline{\hat{b}}^1_{MRC,n}$) provenant du second dispositif conformateur de faisceau ($27P^i$) uniquement dans la première itération de la nouvelle trame, l'estimation de symboles précédents étant gardée en tampon le cas échéant et d'autres variables progressant de manière appropriée.

22. Récepteur selon la revendication 1, **caractérisé en ce que** les modules récepteurs ($20^1$,..., $20^{NT}$, $20^d$) comprennent un premier ensemble (I) de modules récepteurs ($20^1$,..., $20^{NI}$) pour des signaux d'utilisateur relativement intenses et qui contribuent au moins à des ensembles respectifs d'estimation de canal pour le générateur d'ensemble de contraintes (42) utilisé pour la dérivation des matrices de contraintes, mais n'utilise pas les matrices de contraintes pour remettre à jour les coefficients de pondération des dispositifs conformateurs de faisceaux respectifs, et un second ensemble (D) de modules récepteurs ($20^d$) pour des signaux d'utilisateur relativement faibles et qui utilise les matrices de contraintes pour remettre à jour les coefficients de pondération des dispositifs conformateurs de faisceau respectifs mais qui ne contribue pas aux estimations de canal ou aux estimations de symboles dans le générateur d'ensemble de contraintes (42) destiné à être utilisé pour la dérivation des matrices de contraintes.

23. Récepteur selon la revendication 22, **caractérisé en ce que** les modules récepteurs comprennent en outre au moins un ensemble supplémentaire (M1) d'au moins un module récepteur ($20^i$) tel que défini dans la revendication 19 pour un signal d'utilisateur ayant une intensité de signal qui est intermédiaire entre les signaux d'utilisateur relativement intenses et relativement faibles et qui transmet à la fois au moins des estimations de canal au dispositif générateur de matrices de contraintes (42P, 43P) pour être utilisé par les modules récepteurs dans d'autres ensembles lors de la dérivation des matrices de contraintes et qui utilise les matrices de contraintes dérivées à partir des contraintes transmises par les modules récepteurs dans son propre ensemble pour l'accord des coefficients de pondération de son dispositif conformateur de faisceau ($47p^1$).

24. Récepteur selon la revendication 22, **caractérisé en ce que** le module récepteur comprend en outre au moins un ensemble supplémentaire (M2) d'au moins un module récepteur ($20^1$) tel que défini dans la revendication 19 pour un signal d'utilisateur ayant une intensité de signal qui est intermédiaire entre celle des signaux d'utilisateur relativement intenses et relativement faibles et qui transmet à la fois au moins des estimations de canal au dispositif générateur de matrices de contraintes (42P, 43P) pour être utilisé dans la dérivation des matrices de contraintes et pour l'accord des coefficients de pondération de son dispositif conformateur de faisceaux ($47P^i$), et utilise les matrices de contraintes dérivées des contraintes transmises par les modules récepteurs dans l'un au moins de son propre ensemble et les autres ensembles.

25. Récepteur selon la revendication 23, **caractérisé en ce que** les modules récepteurs sont disposés dans un ordre hiérarchique en fonction d'une puissance de signaux et chaque module récepteur de puissance inférieure utilise une matrice de contraintes formée à partir des ensembles de contraintes transmis par chacun des modules récepteurs de puissance plus élevée.

26. Récepteur selon la revendication 24, **caractérisé en ce que** les modules récepteurs sont disposés dans un ordre hiérarchique en fonction d'une puissance de signaux et chaque module récepteur de puissance inférieure utilise une matrice de contraintes formée à partir des ensembles de contraintes transmis par chacun des modules récepteurs de puissance plus élevée.

**27.** Récepteur selon la revendication 23, **caractérisé en ce que** chacun des modules récepteurs de l'un des ensembles est différent des modules récepteurs des autres ensembles.

**28.** Récepteur selon la revendication 23, **caractérisé en ce que** les modules récepteurs de l'un des seconds ensembles et ensembles suivants de modules récepteurs sont différents les uns des autres.

**29.** Récepteur selon la revendication 3, **caractérisé en ce que** le dispositif conformateur du faisceau du module ou de l'un au moins des modules récepteurs comprend un dispositif projecteur ($100^d$) destiné à multiplier une projection ($\Pi^d_n$) avec le vecteur observation ($\underline{Y}_n$ pour la formation d'un vecteur d'observation réduite d'interférences ($\underline{\hat{Y}}^{\pi,d}_n$) , et un conformateur de faisceaux résiduels ($27Q^d$) commandé par la projection ($\Pi^d_n$) et l'estimation de vecteurs de canal ($\underline{\hat{Y}}^d_{0,n}$) pour la production de l'estimation de composantes de signal ($\underline{\hat{s}}^d_n$) , et le dispositif d'identification de canal ($28Q^d$) dérive d'estimations de vecteurs de canal ($\underline{\hat{Y}}^d_{0,n}$) du vecteur d'observation à réduction d'interférence ($\underline{\hat{Y}}^{\pi,d}_n$)

**30.** Récepteur selon la revendication 29, **caractérisé en ce que** le module récepteur ou l'un au moins des modules récepteurs comporte en outre un dispositif de configuration à nouveau ($102Q^d$) destiné à configurer à nouveau le vecteur d'observation à réduction d'interférences ($\underline{\hat{Y}}^{\pi,d}_n$) pour former une matrice d'observation à interférences réduites ($\underline{\hat{Y}}^{\pi,d}_n$) et un dérépartiteur ($19^d$) destiné à dérépartir la matrice d'observation à interférences réduites ($\underline{\hat{Y}}^{\pi,d}_n$), avec le code correspondant de répartition d'utilisateur pour la formation d'un vecteur d'observation à interférences réduites de post-corrélation ($\underline{\hat{Z}}^{\pi,d}_n$) destiné à être utilisé par le dispositif d'identification de canal ($28Qd$) lors de la dérivation de l'estimation de vecteurs de canal.

**31.** Récepteur selon la revendication 3, destiné à une station de base dans un système CDMA dans lequel l'une au moins des stations d'utilisateur utilise plusieurs codes différents de répartition pour répartir des séries respectives parmi les séries de symboles destinées à une transmission simultanée, si bien que la composante du signal reçu ($X(t)$) correspondant à cette station d'utilisateur comprend un nombre correspondant de signaux répartis, et **caractérisé en ce que** , dans le module ou au moins l'un des modules récepteurs ($20^d$), le dispositif conformateur de faisceau ($47R^{d,1}$,..., $47R^{d,Nm}$) utilise différents ensembles de coefficients de pondération pour pondérer chaque élément du vecteur d'observation ($\underline{Y}_n$) pour la formation de plusieurs estimations de composantes de signal ($\underline{\hat{s}}^{d,1}_n$,..., $\underline{\hat{s}}^{d,Nm}_n$) correspondant à des séries respectives parmi les séries de symboles et le dispositif d'estimation de symboles dérive des estimations de composantes de signal ($\underline{\hat{s}}^{d,1}_n$,..., $\underline{\hat{s}}^{d,Nm}_n$) un nombre correspondant d'estimations de symboles ($\underline{\hat{b}}^{d,1}_n$,..., $\underline{\hat{b}}^{d,Nm}_n$), le dispositif de dérivation de vecteurs d'observation comporte un dispositif ($19^{d,1}$,..., $19^{d,Nm}$) pour la dérivation de la matrice d'observation de plusieurs vecteurs d'observation de post-corrélation ($\underline{Z}^{d,1}_n$,..., $\underline{Z}^{d,Nm}_n$) correspondant chacun à un code respectif parmi les différents codes de répartition, le dispositif d'identification de canal ($28R^d$) dérive à partir des vecteurs d'observation de post-corrélation ($\underline{Z}^{d,1}_n$,..., $\underline{Z}^{d,Nm}_n$) un nombre correspondant d'ensembles d'estimation de vecteurs de canal ($\underline{\hat{Y}}_{0,n}$,...,$\underline{\hat{Y}}^{d,Nm}_{0,n}$) et transmet les ensembles au dispositif conformateur de faisceau ($47R^{d,1}$,...,$47R^{d,Nm}$) et le dispositif d'accord de coefficients du dispositif conformateur ($47R^{d,1}$,..., $47R^{d,Nm}$) utilise les ensembles d'estimation de vecteurs de canal ($\underline{\hat{Y}}_{0,n}$ ,..., $\underline{\hat{Y}}^{d,Nm}_{0,n}$) pour dériver les ensembles différents de coefficients de pondération respectivement.

**32.** Récepteur selon la revendication 31, **caractérisé en ce que** le dispositif ($19^{d,1}$, ... , $19^{d,Nm}$) destiné à dériver les vecteurs d'observation comprend un dispositif de dérépartition destiné à dérépartir la matrice d'observations ($Y_n$) à l'aide d'un ou plusieurs des codes parmi les différents codes de répartition pour former plusieurs vecteurs d'observation de post-corrélation ($\underline{Z}^{d,1}_n$, ... , $\underline{Z}^{d,Nm}_n$) destinés à être utilisés par le dispositif d'identification de canal ($28R^d$) lors de la dérivation des estimations de vecteurs de canal réparties ($\underline{\hat{Y}}^{d,1}_{0,n}$, ... , $\underline{\hat{Y}}^{d,Nm}_{0,n}$).

**33.** Récepteur selon la revendication 32, **caractérisé en ce que** le dispositif de dérivation de vecteurs d'observation transmet aussi les vecteurs d'observation de post-corrélation ($\underline{Z}^{d,1}_n$,... , $\underline{Z}^{d,Nm}n$) au dispositif conformateur de faisceau ($47R^{d,1}$,..., $47R^{d,Nm}$) , et le dispositif d'accord de coefficients utilise à l'intérieur des ensembles de coefficients de pondération pour pondérer les éléments des vecteurs respectifs parmi les vecteurs d'observation de post-corrélation, et chacun des dispositifs générateurs de matrices de contraintes spécifiques d'utilisateur comprend un dispositif de dérépartition ($55B^{d,1}$, ... , $55B^{d,Nm}$) destiné à dérépartir les matrices d'ensembles de contraintes spécifiques d'utilisateur à l'aide d'un ou plusieurs des différents codes de répartition.

**34.** Récepteur selon la revendication 31, **caractérisé en ce que** dispositif destiné à dériver les vecteurs d'observation comprend un dispositif de dérépartition $(19^{d,\delta})$ pour la pondération de plusieurs codes différents de répartition par les estimations de symboles $(\underline{\hat{b}}^{d,1}{}_n,..., \underline{\hat{b}}^{d,Nm}{}_n)$ respectivement pour la formation d'un seul code de répartition et de dérépartition de la matrice d'observation $(Y_n)$ à l'aide du code unique de répartition pour la production d'un vecteur composite d'observation de post-corrélation $(\underline{\hat{Z}}^{d,\delta}{}_n)$ destiné à être utilisé par le dispositif d'identification de canal $(28R^d)$ pour la dérivation des ensembles de destination de vecteurs de canal $(\underline{\hat{Y}}_{0,n},...,\underline{\hat{Y}}^{d,Nm}{}_{0,n})$.

**35.** Récepteur selon la revendication 34, **caractérisé en ce que** le dispositif de dérivation de vecteurs d'observation transmet aussi les vecteurs d'observation de post-corrélation $(\underline{\hat{Z}}^{d,1}{}_n,..., \underline{\hat{Z}}^{d,Nm}{}_n)$ au dispositif conformateur de faisceau $(47R^{d,1},..., 47R^{d,Nm})$, et le dispositif d'accord de coefficients utilise à l'intérieur des ensembles de coefficients de pondération pour pondérer les éléments des vecteurs respectifs parmi les vecteurs d'observation de post-corrélation, et chacun des dispositifs générateurs de matrices de contraintes spécifiques d'utilisateur comprend un dispositif de dérépartition $(55B^{d,1}, ... ,55B^{d,Nm})$ destiné à dérépartir les matrices d'ensembles de contraintes spécifiques d'utilisateur à l'aide d'un ou plusieurs des différents codes de répartition.

**36.** Récepteur selon la revendication 3, **caractérisé en ce que** chacun des modules récepteurs $(20^1, ... , 20^{NI}, 20^d)$ fonctionne avec une durée de trame égale à des multiples entiers $(F_1,..., F_{NI}, F_d)$ de périodes de symboles des utilisateurs correspondants et utilise plusieurs $(F_1,..., F_{NT}, F_d)$ des segments différents du même long code de répartition égal au nombre périodes de symboles dans la trame, dans le module ou au moins un module récepteur $(20^d)$, le dispositif conformateur de faisceau $(47S^{d,1},..., 47S^{d,Fd})$ utilise différents ensembles de coefficients de pondération pour pondérer chaque élément du vecteur d'observation $(\underline{Y}_n)$ pour la formation de plusieurs $(F_d)$ estimations de composantes de signal $(\underline{\hat{s}}^{d,1}{}_n,..., \underline{\hat{s}}^{d,Fd}{}_n)$ respectivement et le dispositif d'estimation de symboles $(29S^{d,1},..., 29S^{d,Fd})$ dérive à partir des estimations de composantes de signal $(\underline{\hat{s}}^{d,I}{}_n,..., \underline{\hat{s}}^{d,Fd}{}_n)$ un nombre correspondant d'estimations de symboles $(\underline{\hat{b}}^{d,1}{}_n,..., \underline{\hat{b}}^{d,Fd}{}_n)$, le dispositif de dérivation de vecteurs d'observation dérive de la matrice d'observation un ou plusieurs vecteurs parmi les vecteurs d'observation de post-corrélation $(\underline{\hat{Z}}^{d,I}{}_n,..., \underline{\hat{Z}}^{d,Fd}{}_n)$ le dispositif d'identification de canal $(28S^d)$ dérive des vecteurs d'observation de post-corrélation $(\underline{\hat{Z}}^{d,I}{}_n,..., \underline{\hat{Z}}^{d,Fd}{}_n)$ un nombre correspondant d'estimations de vecteurs de canal réparties $(\underline{\hat{Y}}^{d,I}{}_{0,n},..., \underline{\hat{Y}}^{d,Fd}{}_{0,n})$ et transmet les estimations de vecteurs de canal réparties $(\underline{\hat{Y}}^{d,1}{}_{0,n}, ... , \underline{\hat{Y}}^{d,Fd}{}_{0,n})$ au dispositif conformateur de faisceau $(47S^{d,1},..., 47S^{d,Fd})$ , chaque estimation de vecteurs de canal répartie étant répartie par un segment respectif parmi les segments du long code de répartition, et le dispositif d'accord de coefficients du dispositif conformateur de faisceaux $(47S^{d,1},...., 47S^{d,Fd})$ utilise les estimations de vecteurs de canal $(\underline{\hat{Y}}^{d,1}{}_{0,n},....., \underline{\hat{Y}}^{d,Fd}{}_{0,n})$ pour dériver les ensembles différents de coefficients de pondération.

**37.** Récepteur selon la revendication 36, **caractérisé en ce que** le dispositif $(19S^{d,I},..., 19S^{d,Fd})$ de dérivation d'au moins l'un des vecteurs d'observation de post-corrélation comprend un dispositif de répartition destiné à dérépartir la matrice d'observation $(Y_n)$ à l'aide d'un ou plusieurs segments différents du même long code de répartition si bien que les vecteurs d'observation comprennent plusieurs vecteurs d'observation de post-corrélation $(\underline{\hat{Z}}^{d,1}{}_n, ..., \underline{\hat{Z}}^{d,rd}{}_n)$ dont un ou plusieurs sont destinés à être utilisés par le dispositif d'identification de canal $(28S^d)$.

**38.** Récepteur selon la revendication 37, **caractérisé en ce que** le dispositif de dérivation de vecteurs d'observation transmet aussi les vecteurs d'observation de post-corrélation $(\underline{\hat{Z}}^{d,1}{}_n,..., \underline{\hat{Z}}^{d,Fd}{}_n)$ au dispositif conformateur de faisceau $(47S^{d,1},..., 47S^{d,Fd})$ , et le dispositif d'accord de coefficients incorporé utilise les ensembles de coefficients de pondération pour pondérer les éléments des vecteurs respectifs parmi les vecteurs d'observation de post-corrélation, et chacun des dispositifs générateurs de matrices de contraintes spécifiques d'utilisateur comprend un dispositif de dérépartition $(55B^{d,I},..., 55B^{d,Fd})$ pour la dérépartition des matrices d'ensembles de contraintes spécifiques d'utilisateur à l'aide d'un segment correspondant parmi les $(F_d)$ segments différents de codes de répartition.

**39.** Récepteur de stations d'utilisateur destiné à un système de communications CDMA, comprenant plusieurs (NB) stations de base (11) et plusieurs (U) stations d'utilisateur $(10^1, ... , 10^u)$ , au moins plusieurs (U') des stations d'utilisateur se trouvant dans une cellule associée à l'une des stations de base et étant desservies par celle-ci, cette station de base ayant plusieurs modules émetteurs pour répartir des signaux d'utilisateur destinés à être transmis aux (U') stations d'utilisateur respectivement, et un récepteur destiné à recevoir les signaux d'utilisateur répartis transmis par les (U') stations d'utilisateur, les stations d'utilisateur ayant chacune un récepteur destiné à recevoir le signal réparti correspond d' utilisateur transmis par la station de base, les (U') stations d'utilisateur ayant chacune un code unique de répartition qui lui est affecté afin qu'il soit utilisé par la station d'utilisateur et le module correspondant parmi les modules émetteurs de stations de base pour la répartition des signaux d'utilisateur de cet utilisateur lors de la transmission,
les signaux d'utilisateur répartis transmis par les modules émetteurs de station de base à une station particulière parmi les (U') stations de l'utilisateur se propageant par l'intermédiaire de plusieurs canaux ($14^1$,..., $14^u$) respectivement,

le récepteur d'une station particulière parmi les (U') stations de l'utilisateur recevant un signal (X(t)) comprenant des composantes qui correspondent aux signaux répartis d'utilisateur pour la station particulière d'utilisateur et des signaux répartis d'utilisateur transmis par d'autres modules émetteurs des (NB) stations de base pour d'autres utilisateurs, chacun des signaux répartis d'utilisateur comprenant une série de symboles répartis à l'aide du code de répartition associé à la station correspondante parmi les stations d'utilisateur,

**caractérisé en ce que** le récepteur de stations d'utilisateur comprend :

plusieurs (NB) modules récepteurs ($20^v$) chacun destiné à dériver des trames successives du signal reçu (X(t)) des estimations d'ensembles des séries de symboles provenant d'une station correspondante parmi les stations de base,

un dispositif de traitement préalable (18) destiné à dériver du signal reçu (X(t)) une série de matrices d'observation ($Y_n$) destinée chacune à être utilisée à chacun des modules récepteurs ($20^v$) dans la trame pour dériver des estimations des ensembles des symboles, et

un dispositif (19, 44) destiné à, dériver de chaque matrice d'observations plusieurs ensembles de vecteurs d'observation ($\hat{\underline{Y}}^{v',1,1}{}_n$,..., $\hat{\underline{Y}}^{v',NI,FNI}{}_n$; $\hat{\underline{Z}}^{v',1,1}{}_n$,..., $\hat{\underline{Z}}^{v',NI,FNI}{}_n$) et à appliquer chacun des ensembles de vecteurs d'observation à un module respectif parmi les modules récepteurs ($20^v$),

chaque module récepteur comprenant :

un dispositif d'identification de canal ($28T^{v'}$) destiné à dériver d'un ensemble respectif des ensembles de vecteurs d'observation un ensemble d'estimation de vecteurs de canal répartis, en fonction d'estimations de paramètres de canal entre le station de base correspondante et la station d'utilisateur,

un dispositif conformateur de faisceau ($47T^{v',1,1}$,... , $47T^{v',NI,FNI}$) ayant un dispositif d'accord de coefficients destiné à produire un ensemble de coefficients de pondération d'après l'estimation de vecteur de canal et un dispositif de combinaison (51, 52) destiné à utiliser des coefficients de pondération pour pondérer des éléments respectifs parmi les éléments d'un vecteur respectif des vecteurs d'observation et à combiner les éléments pondérés pour donner une estimation de composantes de signal ($\hat{S}^{v',1,1}{}_n$,..., $\hat{S}^{v',NI,FNI}{}_n$), et

un dispositif d'estimations de symboles ($29T^{v',1,1}$,..., $29T^{v',NI,FNI}$) destiné à dériver de l'ensemble des estimations de composantes de signal un ensemble d'estimations ($\hat{\underline{b}}^{v',1,1}{}_n$,..., $\hat{\underline{b}}^{v',NI,FNI}{}_n$) de symboles répartis par un module correspondant des modules émetteurs et transmis par la station de base,

le récepteur de station d'utilisateur comprenant en outre un dispositif (42, 43) commandé par les estimations de symboles ($\hat{\underline{b}}^{v',1,1}{}_n$,..., $\hat{\underline{b}}^{v',NI,FNI}{}_n$ ; $\hat{\underline{g}}1{}_n$, $\hat{\underline{g}}2{}_n$, $\hat{\underline{g}}3{}_n$) et des estimations de canal $(\hat{\mathcal{H}}^{v'}{}_n)$ pour chacun des (NB) modules récepteurs, les estimations de canal comprenant au moins des estimations de vecteurs de canal ($^{v'}{}_n$) pour des canaux ($14^{v'}$) entre le récepteur de stations d'utilisateur et les stations de base afin qu'il donne au moins une matrice de contraintes ($\hat{\underline{C}}_n$) représentant un sous-espace d'interférence des composantes du signal reçu correspondant aux signaux répartis, et dans chacun des modules récepteurs ($20^v$) , le dispositif d'accord de coefficients produit les ensembles de coefficients de pondération suivant à la fois la matrice de contraintes ($\hat{\underline{C}}_n$) et les estimations de vecteurs de canal afin d'accorder le module récepteur ($20^v$) vers une réponse pratiquement nulle sur la partie du signal reçu (X(t)) correspondant au sous-espace d'interférences.

**40.** Récepteur de stations d'utilisateur selon la revendication 39, **caractérisé en ce que** le dispositif de dérivation de vecteurs d'observation comporte un dispositif ($19^{v',1,1}$,...,$19^{v', NI, FNI}$) pour la dérivation à partir de la matrice d'observation de plusieurs vecteurs d'observation de post-corrélation ($\hat{\underline{Z}}^{v',1,1}{}_n$ ,..., $\hat{\underline{Z}}^{v',NI,ENI}{}_n$ et la transmission des vecteurs d'observation de post-corrélation ($\underline{Z}^{v',1,1}{}_n$ ,..., $\underline{Z}^{v',NI,FNI}{}_n$) au dispositif d'identification de canal ($28T^{v'}$) destiné à être utilisé pour la production des ensembles d'estimation de vecteurs de canal ($\hat{\underline{Y}}^{v',1,1}{}_{0, n}$ ,..., $\hat{\underline{Y}}^{v',NI,FNI}{}_{0,n}$)

**41.** Récepteur de stations d'utilisateur selon la revendication 39, **caractérisé en ce que** les (NB) modules récepteurs ($20^v$) dérivent des symboles pour des signaux d'utilisateur autres que ceux qui sont destinés à l'utilisateur du récepteur de stations d'utilisateur, et le récepteur de stations d'utilisateur comprend un module récepteur supplémentaire ($20^d$) destiné à dériver des symboles du signal reçu destiné à l'utilisateur du récepteur de stations d'utilisateur et transmis par une station correspondante de service (v) parmi les stations de base, dans lequel chacun des modules récepteurs ($20^v$, $20^d$) fonctionne avec une durée de trame égale à un multiple entier de la période de symboles et utilise un nombre correspondant de segments ($F_1$,..., $F_{NI}$, $F_d$) d'un long code de répartition, chaque segment correspondant à un segment respectif de plusieurs segments différents ($F_1$, ... , $F_{NI}$, $F_d$) du même long code de répartition égal au nombre de périodes de symboles dans la trame, et dans lequel , dans le module récepteur supplémentaire ($20^d$), le dispositif conformateur de faisceaux ($47S^{d,1}$ ,..., $47S^{d,Fd}$) utilise différents ensembles de coefficients de pondération pour pondérer chaque élément du vecteur d'observation ($\underline{Y}_n$) pour la formation de plusieurs (Fd) estimations de composantes de signal ($\underline{\hat{s}}^{d,1}_n$, ..., $\underline{\hat{s}}^{d,Fd}_n$) respectivement, et le dispositif d'estimation de symboles ($29S^{d,1}$,..., $29S^{d,Fd}$) dérive des estimations des composantes de signal ($\underline{\hat{s}}^{d,1}_n$,..., $\underline{\hat{s}}^{d,Fd}_n$) un nombre correspondant d'estimations de symboles ($\underline{b}^{d,1}_n$, ... , $\underline{b}^{d,Fd}_n$), le dispositif de dérivation du vecteur d'observation dérivant de la matrice d'observation plusieurs vecteurs d'observation ($\underline{Y}^{d,1}_n$, ... , $\underline{Y}d^{,Fd}_n$), le dispositif d'identification de canal ($28S^d$) dérive des vecteurs d'observation ($\underline{Y}^{d,1}_n$,..., $\underline{Y}^{d,Fd}_n$) un nombre correspondant d'estimations de vecteurs de canal répartis ($\underline{\hat{Y}}^{d,1}_{0,n}$,..., $\underline{\hat{Y}}^{d,Fd}_{0,n}$) et les transmet au dispositif conformateur de faisceau ($47S^{d,1}$ ,..., $47S^{d,Fd}$), chaque estimation de vecteurs de canal répartis étant répartie par un segment respectif des segments du long code de répartition, et le dispositif d'accord de coefficients du dispositif conformateur de faisceau ($47S^{d,1}$,..., $47S^{d,Fd}$) utilise les estimations de vecteurs de canal ($\underline{\hat{Y}}^{d,1}_{0,n}$, ... , $\underline{\hat{Y}}^{d,Fd}_{0,n}$) pour dériver les ensembles différents de coefficients de pondération.

**42.** Récepteur de stations d'utilisateur selon la revendication 39, **caractérisé en ce que** les (NB) modules récepteurs ($20^{v'}$) dérivent des symboles pour des signaux d'utilisateur autres que ceux qui sont destinés à l'utilisateur du récepteur de stations d'utilisateur, et le récepteur de stations d'utilisateur comprend un module récepteur supplémentaire ($20^d$) destiné à dériver des symboles du signal reçu destiné à l'utilisateur du récepteur de stations d'utilisateur dans lesquelles certains des modules récepteurs ($20^{v'}$, $20^d$) fonctionnent avec une durée de trame égale à un multiple entier de la période de symbole et utilisent un nombre correspondant de segments d'un long code de répartition, chaque segment correspondant à un segment respectif de plusieurs ($F_i$, ... , $F_{NI}$, $F_d$) de segments différents du même long code de répartition en nombre égal au nombre de périodes de symbole dans la trame, et dans lequel, dans le module récepteur supplémentaire ($20^d$) , le dispositif conformateur de faisceau ($47T^{v,d,1}$, ... , $47T^{v,d,Fd}$) utilise des ensembles différents de coefficients de pondération pour pondérer chaque élément du vecteur observation ($\underline{Y}_n$) pour la formation de plusieurs ($F_d$) estimations de composantes de signal ($\underline{\hat{s}}^{v,d,l}n$,..., $\underline{\hat{s}}^{v,d,Fd}_n$) respectivement, et le dispositif d'estimation de symboles ($29T^{v,d,1}$, ... , $29T^{v,d,Fd}$) dérive des estimations de composantes de signal ($\underline{\hat{s}}^{v,d,i}_n$ ,... , $\underline{\hat{s}}^{v,d,Fd}_n$) un nombre correspondant d'estimations de symbole ($\underline{b}^{v,d,1}_n$,..., $\underline{b}^{v,d,Fd}_n$), et dans lequel le dispositif d' accord de coefficients du dispositif conformateur de faisceau ($47T^{v,d,l}$,..., $47T^{v,d,Fd}$) dérive les coefficients de pondération à l'aide de la matrice de contraintes reçue du dispositif générateur de matrices de contraintes ($43T$) et des estimations de vecteurs de canal répartis ($\underline{\hat{Y}}^{v,d,1}_{0,n}$,...., $\underline{\hat{Y}}^{v,d,Fd}_{0,n}$) produites par le dispositif d'identification de canal ($28T^v$) du module récepteur ($20^v$) correspondant à la station de base (v) desservant la station d' utilisateur .

**43.** Récepteur de stations d'utilisateur selon la revendication 42, **caractérisé en ce que** le dispositif de dérivation de vecteurs d'observation comprend un dispositif de dérépartition ($19^{v',1,l}$, ... ,$19^{v',NI,FNI}$) destiné à dérépartir la matrice d'observation pour la formation de plusieurs vecteurs d'observation de post-corrélation ($\underline{\hat{Z}}^{v',1,1}_n$,..., $\underline{\hat{Z}}^{v',NI,FNI}_n$) et à transmettre les vecteurs d'observation de post-corrélation ($\underline{\hat{Z}}^{v',1,1}_n$,..., $\underline{\hat{Z}}^{v',NI,FNI}_n$) au dispositif d'identification de canal ($28T^{v'}$) pour être utilisés à la production d'ensembles d'estimation de vecteurs de canal ($\underline{\hat{Y}}^{v',i,l}_{0,n}$,..., $\underline{\hat{Y}}^{v',NI,FNI}_{0,n}$).

**44.** Récepteur de stations d'utilisateur selon la revendication 39, **caractérisé en ce qu'**un module d'émetteur au moins de l'une des stations de base utilise plusieurs ($N_m$) codes différents de répartition pour répartir des séries respectives parmi les séries de symboles pour la transmission simultanée dans la même trame, afin que la composante du signal reçu ($X(t)$) correspondant à ce module d'émetteur de stations de base comprenne un nombre correspondant de signaux répartis, et l'un au moins ($20^{v'}$) des modules récepteurs ($20U$) comprend en outre un dispositif d'estimation d'amplitude ($30U^{v'}$) destiné à dériver l'amplitude totale d'un ensemble d'estimation de composantes de signal ($\underline{\hat{s}}^{v',1,1}_n$,..., $\underline{\hat{s}}^{v',NI,Nm}_n$) produites par son dispositif conformateur de faisceau ($47U^{v',1,1}$,..., $47U^{v',NI,Nm}$), et le dispositif conformateur de faisceau ($47U^{v',1,1}$,..., $47U^{v',NI,Nm}$) utilise différents ensembles de coefficients de pondération pour pondérer chaque élément du vecteur d'observation ($\underline{Y}_n$) pour la formation des estimations de composantes de signal ($\underline{\hat{s}}^{v',1,1}_n$,..., $\underline{\hat{s}}^{v',NI,Nm}_n$)correspondant aux séries respectives parmi les séries de symboles, et le dispositif d'estimation et de symboles ($29U^{v',1,1}$,..., $29U^{v',NI,Nm}$) dérive des estimations de composantes de signaux ($\underline{\hat{s}}^{v',1,1}_n$,..., $\underline{\hat{s}}^{v',NI,Nm}_n$) un nombre correspondant d'estimations de symboles ($\underline{b}^{v',1,1}_n$,..., $\underline{b}^{v',NI,Nm}_n$), le dispositif d'identification de canal ($28U^{v'}$) dérive un nombre correspondant d'ensembles d'estimation de vecteurs de canal répartis ($\underline{\hat{Y}}^{v',1,1}_{0,n}$, ..., $\underline{Y}^{v',NI,NI}_{0,n}$) qui sont répartis chacune avec un code respectif parmi les différents codes de répartition, et transmet les ensembles au dispositif conformateur de faisceau ($47U^{v',1,1}$, ..., $47U^{v',NI,Nm}$) et le dispositif d'accord de coefficients du dispositif conformateur de faisceau ($47U^{v',1,1}$,..., $47U^{v',NI,Nm}$) utilise les ensembles d'estimation de vecteurs de canal répartis ($\underline{\hat{Y}}^{v',1,1}_{0,n}$,..., $\underline{\hat{Y}}^{v',NI,FNI}_{0,n}$) pour dériver les ensembles différents de coefficients de pondération respectivement.

**45.** Récepteur de stations d'utilisateur selon la revendication 44, **caractérisé en ce que** les (NB) modules récepteurs ($20^{v'}$) dérivent des symboles de signaux d'utilisateurs autres que ceux qui sont destinés à l'utilisateur du récepteur de stations d'utilisateur, et le récepteur de stations d'utilisateur comprend un module récepteur supplémentaire ($20^d$) destiné à dériver des symboles du signal reçu destiné à l'utilisateur du récepteur de stations d'utilisateur, dans lequel chacun des modules récepteurs ($20^{v'}$, $20^d$) fonctionne avec une durée de trame égale à un nombre entier de périodes de symboles et utilise un nombre correspondant de segments d'un long code de répartition, chaque segment correspondant à un segment respectif parmi les ($N_m$, $F_d$) de segments différents du même long code de répartition en nombre égal au nombre de périodes de symboles de la trame, et dans lequel, dans le module récepteur supplémentaire ($20^d$), le dispositif conformateur de faisceau ($47T^{v,d,l}$,..., $47T^{v,d,Fd}$) utilise différents ensembles de coefficients de pondération pour pondérer chaque élément du vecteur d'observation ($\underline{Y}_n$) pour la formation de plusieurs ($F_d$) estimations de composantes de signaux ($\underline{\hat{s}}^{v,d,l}{}_n$,..., $\underline{\hat{s}}^{v,d,Fd}{}_n$) respectivement, et le dispositif d'estimation de symboles ($29T^{v,d,l}$,..., $29T^{v,d,Fd}$) dérive des estimations de composantes de signaux ($\underline{\hat{s}}^{v,d,l}{}_n$,..., $\underline{\hat{s}}^{v,d,Fd}{}_n$) un nombre correspondant d'estimations de symboles ($\underline{\hat{b}}^{v,d,l}{}_n$,..., $\underline{\hat{b}}^{v,d,Fd}{}_n$), et dans lequel le dispositif d'accord de coefficients du dispositif conformateur de faisceau ($47T^{v,d,1}$,..., $47T^{v,d,Fd}$) dérive les coefficients de pondération à l'aide de la matrice de contraintes reçues du dispositif générateur de matrices de contraintes ($43T$) et des estimations de vecteurs de canal répartis ($\underline{\hat{Y}}^{v,d,1}{}_{0,n}$,..., $\underline{\hat{Y}}^{v,d,Fd}{}_{0,n}$) produites par le dispositif d'identification de canal ($28T^v$) du module récepteur ($20^{v'}$) correspondant à la station de base (v) desservant la station d'utilisateur.

**46.** Récepteur selon la revendication 44, **caractérisé en ce que** le dispositif de dérivation de vecteurs d'observation comporte un dispositif de dérépartition ($19^{v',1,1}$,..., $19^{v',NI,Nm}$) destiné à la dérépartition de la matrice d'observation pour la formation de plusieurs vecteurs d'observation de post-corrélation ($\underline{\hat{Z}}^{v',1,1}{}_n$,..., $\underline{\hat{Z}}^{v',NI,Nm}{}_n$) et à transmettre les vecteurs d'observation de post-corrélation ($\underline{\hat{Z}}^{v',1,1}{}_n$,..., $\underline{\hat{Z}}^{v',NI,Nm}{}_n$) au dispositif d'identification de canal ($28U^{v'}$) destiné à être utilisé pour la production des ensembles d'estimation de vecteurs de canal ($\underline{\hat{Y}}^{v',1,1}{}_{0,n}$,..., $\underline{\hat{Y}}^{v',NI,Nm}{}_{0,n}$),

**47.** Récepteur de stations d'utilisateur selon la revendication 39, **caractérisé en ce que** l'un au moins des modules émetteurs de l'une des stations de base utilise plusieurs ($N_m$) des codes différents de répartition pour répartir les séries respectives parmi les séries de symboles pour la transmission simultanée dans la même trame, si bien que la composante du signal reçu ($X(t)$) correspondant à ce module émetteur de stations de base comprend un nombre correspondant de signaux répartis, et l'un au moins ($20U'$) des modules récepteurs comprend en outre un dispositif d'estimation d'amplitude ($30U^{v'}$) destiné à dériver des amplitudes totales ($\psi^{v',1}{}_n$,..., $\psi^{v',NI}{}_n$) d'un ensemble d'estimation de composantes de signal ($\underline{\hat{s}}^{v,1,1}{}_n$,...,$\underline{\hat{s}}^{v,NI,Nm}{}_n$) produites par le dispositif conformateur de faisceau correspondant ($47U^{v',1,1}$, ... , $47U^{v',NI,Nm}$), le dispositif conformateur de faisceau ($47U^{v',1,1}$, ... , $47U^{v',NI,Nm}$) utilise différents ensembles de coefficients de pondération pour pondérer chaque élément du vecteur observation ($\underline{Y}_n$) pour la formation des estimations de composantes de signaux ($\underline{S}^{v',1,1}{}_n$,..., $\underline{\hat{s}}^{v',NI,Nm}{}_n$) correspondant aux séries respectives parmi les séries de symboles, et le dispositif d'estimation de symboles ($29U^{v',1,1}$,..., $29U^{v',NI,Nm}$) dérive des estimations de composantes de signaux ($\underline{\hat{s}}^{v',1,1}{}_n$,..., $\underline{\hat{s}}^{v',NI,Nm}{}_n$) un nombre correspondant d'estimations de symboles ($\underline{\hat{b}}^{v',1,1}{}_n$,..., $\underline{\hat{b}}^{v',NI,Nm}{}_n$),le dispositif de dérivation de vecteurs d'observation comprend un dispositif de dérépartition ($19^{v'\Sigma,1}$,...,$19^{v',\Sigma,Nm}$) pour la dérépartition de la matrice d'observation ($Y_n$) à l'aide d'un ou plusieurs des ($N_m$) différents codes de répartition, chacun de ces codes étant un code composite formé par réalisation de la moyenne des codes de tous les autres des multiples utilisateurs qui interfèrent (NI) pour la formation de plusieurs vecteurs d'observation ($\underline{\hat{Z}}^{v',\Sigma,l}n$, ..., $\underline{\hat{Z}}^{v',\Sigma,Nm}n$), le dispositif d'identification de canal ($28U^{v'}$) dérive des vecteurs observation $\underline{\hat{Z}}^{v',\Sigma,1}{}_n$,..., $\underline{\hat{Z}}^{v'\Sigma,Nm}{}_n$) les estimations de composantes de signaux ($\underline{\hat{s}}^{v',\Sigma,1}{}_n$, ... , $\underline{\hat{s}}^{v',\Sigma,Nm}{}_n$) et des amplitudes ($\Psi^{v',1}{}_n$,..., $\Psi^{v',NI}{}_n$) un nombre correspondant d'ensembles d'estimation de vecteurs de canal ($\underline{\hat{Y}}^{v',1,1}0,n$,..., $\underline{\hat{Y}}^{v',NI Nm}{}_{0,n}$) et transmet les ensembles à un dispositif conformateur de faisceau ($47U^{v'1,1}$,..., $47U^{v',NI,Nm}$) et le dispositif d'accord de coefficients du dispositif conformateur de faisceau ($47U^{v',1,1}$,..., $47U^{v',NI,Nm}$) utilise les ensembles des estimations de vecteurs de canal ($\underline{\hat{Y}}^{v',1,1}{}_{0,n}$, ... , $\underline{\hat{Y}}^{v',NI,Nm}{}_{0,n}$) pour dériver les ensembles différents de coefficients de pondération respectivement.

**48.** Récepteur selon la revendication 1, **caractérisé en ce que** chaque module récepteur est disposé dans une station mobile-d'utilisateur, et le signal reçu comprend plusieurs signaux d'utilisateurs répartis transmis par plusieurs modules émetteurs à une station de base qui communique avec le récepteur par lesdits canaux.

**49.** Récepteur pour système de communications CDMA, **caractérisé par** un dispositif de traitement préalable (18) destiné à dériver d'un signal reçu ($X(t)$) une succession de matrices d'observation ($Y_n$), un dispositif (44) destiné à configurer à nouveau chaque matrice d'observation pour la formation d'un vecteur d'observation ($\underline{Y}_n$), un dispositif conformateur de faisceau ($27N^d$) destiné à pondérer chaque élément du vecteur d'observation à l'aide de coefficients de pondération et à combiner les éléments pondérés pour la formation d'une estimation de composantes de signal ($\underline{\hat{s}}^d{}_n$), le dispositif conformateur de faisceau comprenant un dispositif d'accord destiné à accorder les coefficients de pondération en fonction d'une estimation de vecteur de canal ($\hat{\underline{Y}}^d_{o,n}$) , un dispositif ($29N^d$) de dérivation, de l'estimation de composantes de signal ($\hat{\underline{s}}^d_n$), une estimation de symboles correspondants ($\hat{\underline{b}}^d_n$) destinés à être transmis par le module récepteur, un dispositif ($19^d$) de dérépartition de la matrice d'observation à l'aide du code de répartition de l'utilisateur correspondant pour la formation d'un vecteur d'observation de post-corrélation ($\underline{Z}^d_n$), et le dispositif d'identification de canal ($28N^d$) destiné à dériver l'estimation de vecteurs de canal ($\hat{\underline{Y}}^d_{0,n}$) suivant le vecteur d'observation de post-corrélation ($\underline{Z}^d_n$) et l'estimation de composantes de signal ($\hat{\underline{s}}^d_n$).

**50.** Système de communications CDMA, **caractérisé par** au moins une station de base et plusieurs (U) stations d'utilisateur ($10^1$,...,$10^U$) comprenant plusieurs (U') stations d'utilisateur desservies par la station de base au moins, la station de base étant capable de transmettre des signaux codés uniques dans l'espace-temps dédiés chacun à une station mobile d'utilisateur correspondante, chaque station d'utilisateur ayant un émetteur et un récepteur destinés à communiquer avec la station de base au moins par l'intermédiaire d' un canal correspondant parmi plusieurs canaux ($14^1$,...,$14^u$), l'émetteur de stations de base comprenant :

plusieurs antennes d'émission,
un dispositif destiné à transmettre des signaux destinés aux utilisateurs,
une unité de distribution destinée à regrouper les signaux destinés aux utilisateurs en $N_G$ groupes,
une unité à code de canalisation temporel destinée à répartir chaque signal destiné à un utilisateur par un code dédié unique appartenant à un ensemble fixe de L codes orthogonaux et à additionner les signaux répartis dans chaque groupe,
un dispositif destiné à ajouter, aux signaux additionnés répartis de chaque groupe, un signal respectif parmi plusieurs signaux pilotes spécifiques chacun de l'un des groupes et créé par un générateur de codes PN,
un dispositif de brouillage du signal additionné provenant de chacun des groupes à l'aide du même long code de brouillage spécifique à la station de base,
chaque signal pilote étant affecté à une fraction fixe de l'énergie totale transmise par l'émetteur de stations de base,
un dispositif de mappage des signaux provenant des groupes ($G_1$ (t),..., $G_{Ng}$(t)) sur des dérivations d'antenne ($A_1$(t),..., $A_{MT}$(t)) à l'aide d'un codage spatial linéaire (M) de manière que les signaux affectés à différents groupes soit pratiquement orthogonaux à la transmission,
une des stations d'utilisateur au moins ayant un récepteur destiné à recevoir le signal d'utilisateur réparti correspondant transmis par la station de base, les (U' ) stations d'utilisateur ayant chacune un code unique de répartition qui leur est affecté pour être utilisé par la station d'utilisateur et le module correspondant des modules émetteurs de stations de base pour la répartition des signaux d'utilisateur de cet utilisateur afin qu'il soit transmis, les signaux d'utilisateur répartis transmis par les modules émetteurs de stations de base à une station particulière parmi les (U') stations d'utilisateur, se propageant par l'intermédiaire de plusieurs canaux ($14^1$, ... , $14^{U'}$) respectivement, le récepteur d'une station particulière parmi les (U') stations d'utilisateur recevant un signal (X(t)) comprenant des composantes qui corxespondent aux signaux répartis d'utilisateur pour la station d'utilisation particulière et des signaux d'utilisateur répartis transmis par d'autres modules émetteurs des (NB) stations de base pour d'autres utilisateurs, chacun des signaux d'utilisateur répartis comprenant une série de symboles répartis à l'aide du code de répartition associé à une station correspondante parmi les stations d'utilisateur,
le récepteur de stations d'utilisateur comprenant :

plusieurs (NB) modules récepteurs ($20^{v'}$) destinés chacun à dériver des trames successives du signal reçu (X(t)) des estimations d'ensemble des séries de symboles provenant d'une station correspondante parmi les stations de base,
un dispositif de traitement préalable (18) destiné à dériver du signal reçu (X(t)) une série de matrices d'observation ($Y_n$) destinées à être utilisées chacune par chacun des modules récepteurs ($20^{v'}$) dans la trame pour dériver des estimations des ensembles de symboles, et
un dispositif (19, 44) destiné à dériver de chaque matrice d'observation plusieurs ensembles de vecteurs d'observation ($\underline{Y}^{v',l,l}_n$,...,$\underline{Y}^{v',NI,FNI}_n$;$\underline{Z}^{v',1,1}_n$,...,$\underline{Z}^{v',NI,PNI}_n$)et à appliquer chacun des ensembles de vecteurs d'observation à un module respectif parmi les modules récepteurs ($20^{v'}$)
chaque module récepteur comprenant :

un dispositif d'identification de canal ($28T^{v'}$) destiné à dériver un ensemble respectif parmi les ensembles de vecteurs d'observation un ensemble d'estimations de vecteurs de canal réparti ($\hat{\underline{Y}}^{v',1,1}_{0,n}$,..., $\hat{\underline{Y}}^{v',NI,FNI}_{0,n}$) d'après les estimations de paramètres du canal entre une station correspondante des stations de base et la station d'utilisateur,
un dispositif conformateur de faisceau ($47T^{v',1,1}$,..., $47T^{v',NI,FNI}$) ayant un dispositif d'accord de coefficient destiné à produire des ensembles de coefficients de pondération d'après les ensembles d'estimation de vecteurs de canal respectivement et un dispositif de combinaison destiné à utiliser chacun des ensembles de coefficients de pondération pour pondérer des éléments respectifs parmi les éléments d'un vecteur respectif parmi les vecteurs d'observation et à combiner les éléments pondérés pour donner un ensemble correspondant d'estimation de composantes de signal $(\hat{s}^{v',1,1}{}_n,..., \hat{s}^{v',NI,TNI}{}_n)$, et

un dispositif d'estimation de symboles ($29T^{v',1,1},..., 29T^{v',NI,FNI}$) destiné à dériver de l'ensemble d'estimation de composantes de signal un ensemble d'estimation $(\hat{b}^{v',1,1}{}_n,..., \hat{b}^{v',NI,FNI}{}_n)$ de symboles répartis par un module correspondant parmi les modules d'émetteur et transmis par la station de base,

le récepteur de stations d'utilisateur comprenant en outre un dispositif (42, 43) commandé par les estimations de symboles $(\hat{b}^{v',1,1}{}_n,..., \hat{b}^{v',NI,FNI}{}_n ; g^1{}_n, g^2{}_n, g^3{}_n)$ et des estimations de canal $(\hat{\mathcal{H}}^{v'}{}_n)$ de chacun des (NB) modules récepteurs, les estimations du canal comprenant au moins les estimations de vecteurs de canal $(\hat{H}^{v'}{}_n)$ pour les canaux ($14^v$) entre le récepteur de stations d'utilisateur et les stations de base pour la formation d'au moins une matrice de contraintes $(\hat{C}_n)$ représentant un sous-espace d'interférences des composantes du signal reçu correspondant aux signaux répartis, et, dans chacun des modules récepteurs ($20^v$), le dispositif d'accord de coefficients produit les ensembles de coefficients de pondération en fonction à la fois de la matrice de contraintes $(\hat{C}_n)$ et les estimations de vecteurs de canal pour l'accord du module récepteur ($20^v$) vers une réponse pratiquement nulle à la partie du signal reçu (X(t)) qui correspond au sous-espace d'interférence.

**51.** Système CDMA selon la revendication 50, **caractérisé en ce que** l'émetteur comporte en outre :

un dispositif à retard destiné à retarder les signaux provenant du dispositif de mappage, chacun d'un retard spécifique à la dérivation, à former une impulsion correspondante de signalisation modulant l'impulsion de signalisation avec un signal de fréquence porteuse, et à transmettre le signal modulé aux éléments d'antenne pour leur transmission par ceux-ci.

**52.** Système CDMA selon la revendication 50, **caractérisé en ce que**, dans l'émetteur, le dispositif de groupement est disposé afin qu'il regroupe les signaux de données dédiés à des stations d'utilisateur dans un nombre prédéterminé $N_G$ de groupes et, lorsque le nombre d'utilisateurs est inférieur ou égal au gain de traitement, l'affectation de tous les signaux d'utilisateur au même groupe, et dans le cas contraire, l'affectation des signaux d'utilisateur de manière pseudo-aléatoire afin que le nombre d'utilisateurs de chaque groupe ait tendance à s'équilibrer.

**53.** Système CDMA selon la revendication 50, **caractérisé en ce que** l'émetteur comporte en outre, pour chaque groupe, un dispositif de codage d'espace-temps comprenant :

une unité de codage de canal destinée à, répartir des signaux d'utilisateur par un ensemble spécifique du groupe de codes orthogonaux,
une unité de brouillage destinée à répartir chaque groupe de signaux d'utilisateur avec le même code de brouillage spécifique de la station de base, et
une unité de codage spatial destinée à mapper les signaux des groupes totaux ($G_1$ (t),... ,$G_{NG}$(t)) sur les signaux de dérivation d'antenne ($A_1$(t),......,$A_{NG}$(t)) par une transformation linéaire (M).

**54.** Système CDMA, selon la revendication 53, **caractérisé en ce que**, dans l'émetteur, l'unité de codage de canal affecte à chaque utilisateur dans le groupe indexé g un code de pastille choisi dans un ensemble fixe de $L_g \leq L$ codes de pastilles L spécifiques de groupe orthogonal ($a_{i,l}$(t),..., $a_{i,Lg}$(t)), les ensembles de codes dans les groupes étant choisis afin que l'auto-corrélation maximale soit réduite au minimum, tout code appartenant à un groupe quelconque étant orthogonal à tout autre code du groupe alors que son auto-corrélation avec un code de canalisation quelconque en dehors du groupe est réduite au minimum.

**55.** Système de communications CDMA **caractérisé par** au moins une station de base et plusieurs (U) stations d'utilisateur ($10^1,..., 10^U$) comprenant plusieurs (U') stations d'utilisateur desservies par la station de base au moins, chaque station d'utilisateur ayant un émetteur et un récepteur destinés à communiquer avec au moins la station de base par l'intermédiaire d'un canal correspondant parmi plusieurs canaux ($14^1,...14^U$), une station d'utilisateur au moins étant capable de transmettre un signal d'utilisateur comprenant un nombre de signaux codés d'espace temps unique transportant chacun des données différentes provenant du même utilisateur,

la station d'utilisateur au moins ayant un émetteur qui comprend :

plusieurs antennes d'émission,
un dispositif destiné à, donner les signaux d'utilisateur,
une unité de distribution destinée à regrouper les signaux codés d'espace temps en $N_G$ groupes,
une unité à code de canalisation temporel destinée à répartir chaque courant différent de données des signaux d'utilisateur par un code dédié unique appartenant à un ensemble fixe de L codes orthogonaux et à additionner les signaux répartis dans chaque groupe,
un dispositif destiné à ajouter aux signaux répartis additionnés de chaque groupe un signal respectif parmi plusieurs signaux pilotes spécifiques chacun de l'un des groupes et créés par un générateur de codes PN, chaque signal pilote étant affecté à une fraction fixe de la puissance totale émise par l'émetteur de la station de base,
un dispositif de brouillage des signaux additionnés provenant des groupes à l'aide du même long code de brouillage spécifique de la station d'utilisateur,
un dispositif de mappage des signaux provenant des groupes $(G_1 (t) ,..., G_{NG}(t))$ sur les dérivations d'antenne $(A_1 (t) ,..., A_{MT}(t))$ à l'aide d'un codage d'espace linéaire (M) tel que les signaux affectés à des groupes différents sont pratiquement orthogonaux lors de l'émission,
la station de base ayant un récepteur destiné à recevoir un signal (X(t)) comprenant des composantes correspondant aux signaux répartis transmis par les émetteurs des stations d'utilisateur, chacun des signaux répartis comprenant une série de symboles répartis à l'aide d'un code de répartition unique pour la station correspondante d'utilisateur, le récepteur de stations de base comprenant :

plusieurs (U' ) modules récepteurs $(20^1, ... , 20^{NI}, 20^d)$ destinés chacun à dériver des trames successives du signal reçu (X (t)) des estimations de la série de symboles d'une station correspondante parmi les stations d'utilisateur,
un dispositif de traitement préalable (18) destiné à dériver du signal reçu (X (t)) une série de matrices d'observations $(Y_n)$ destinées à chacune à être utilisée par chacun des modules récepteurs (20) dans la trame pour la dérivation d'une estimation d'un symbole d'une série respective des séries de symboles, et
un dispositif (19, 44 ; 44/1, 44/2) destiné à dériver de chaque matrice d'observation plusieurs vecteurs d'observation $(\underline{Y}_n, ; \underline{Y}_{n-1} ; \underline{Z}^1_n ... \underline{Z}^{NI}_n ; \underline{Z}^d_n)$ et à appliquer chacun des vecteurs d'observation à un module respectif parmi les modules récepteurs $(20^1, ... , 20^{NI}, 20^d)$, chaque module récepteur comprenant :

un dispositif d'identification de canal (28) destiné à dériver de l'un des vecteurs d'observation une estimation de vecteurs de canal $\hat{\underline{H}}^1_n, ..., \hat{\underline{H}}^{NI}_n ; \hat{\underline{Y}}^d_{0,n} ; \underline{Y}^1_{0,n-1})$ d'après les estimations de paramètres du canal entre le récepteur de stations de base et l'émetteur de stations d'utilisateur correspondant,
un dispositif conformateur de faisceau $(27^1,..., 27^{NI}, 27^d ; 47^d)$ ayant un dispositif d'accord de coefficients (50) destiné à produire un ensemble de coefficients de pondération d'après l'estimation de vecteurs de canal, et un dispositif de combinaison (51, 52) destiné à utiliser les coefficients de pondération pour pondérer les éléments respectifs parmi les éléments d'un vecteur respectif parmi les vecteurs d'observation et à combiner les éléments pondérés pour donner une estimation de composantes de signal $(\hat{\underline{s}}^1_n,..., \hat{\underline{s}}^U_n)$ ,et
un dispositif d'estimation de symboles $(29^1, ... , 29^u, 30^1;..., 30^u)$ destiné à dériver, de l'estimation de composantes de signal, une estimation $(\hat{\underline{b}}^1_n,..., \hat{\underline{b}}^U_n)$ d'un symbole $(\underline{b}^1_n,..., b^U_n)$ transmis par une station correspondante parmi les stations d'utilisateur $(10^1 , ... , 10^U)$,
dans lequel le récepteur comporte en outre un dispositif (42, 43) commandé par les estimations de symboles $(\hat{b}^1_n,..., \hat{b}^{NI}_n ; g^1_n, g^2_n, g^3_n ; g^{1+1,n})$ et des estimations de canal

$(\mathcal{H}^1_n, . . . , \mathcal{H}^{NI}_n ; \mathcal{H}^i_{n-1})$ comprenant au moins des estimations de vecteurs de canal $(\ddot{\underline{H}}^1_n,..., \ddot{\underline{H}}^{NI}_n)$ pour les canaux $(14^1, ... , 14^{NI})$ d'un premier groupe (I) des stations d'utilisateur $(10^1, ... , 10^{NI})$ pour donner au moins une matrice de contraintes $(\hat{C}_n)$ représentant un sous-espace d'interférences des composantes du signal reçu correspondant au groupe

prédéterminé et, dans chacun des modules récepteurs $(20A^d)$ d'un second groupe (D) des modules récepteurs, le dispositif d'accord de coefficients $(50A^d)$ produit l'ensemble de coefficients de pondération d'après à la fois la matrice de contraintes $(C_n)$ et les estimations de vecteurs de canal $(\hat{\underline{H}}^d_n)$ afin que l'un au moins des modules récepteurs $(20A^d)$ soit accordé chacun vers une réponse pratiquement nulle à la partie du signal reçu $(\underline{X}(t))$ correspondant au sous-espace d'interférences.

**56.** Système CDMA selon la revendication 55, **caractérisé en ce que** l'émetteur comporte en outre :

un dispositif à retard destiné à retarder les signaux provenant du dispositif de mappage, chacun d'un retard spécifique à la dérivation, à former une impulsion correspondante de signalisation modulant l'impulsion de signalisation avec un signal de fréquence porteuse, et à transmettre le signal modulé aux éléments d'antenne pour leur transmission par ceux-ci.

**57.** Système CDMA selon la revendication 55, **caractérisé en ce que**, dans l'émetteur, le dispositif à unité de distribution est destiné à regrouper les signaux de données dédiées aux stations d'utilisateur en un nombre prédéterminé $N_G$ de groupes et, lorsque le nombre d'utilisateurs est inférieur ou égal au gain de traitement, à affecter tous les signaux d'utilisateur au même groupe et, dans le cas contraire, à affecter les signaux d'utilisateur de manière pseudo-aléatoire afin que le nombre d'utilisateurs de chaque groupe ait tendance à être équilibré.

**58.** Système CDMA selon la revendication 55, **caractérisé en ce que** l'émetteur comporte en outre, pour chaque groupe, un dispositif de codage d'espace-temps comprenant :

une unité de codage de canal destinée à répartir des signaux d'utilisateur par un ensemble spécifique du groupe de codes orthogonaux,
une unité de brouillage destinée à répartir chaque groupe de signaux d'utilisateur avec le même code de brouillage spécifique de la station de base, et
une unité de codage spatial destinée à mapper les signaux des groupes totaux ($G_1$ (t) ,..., $G_{NG}$ (t)) sur les signaux de dérivation d'antenne ($A_1$ (t),...,$A_{NG}$ (t)) par une transformation linéaire (M).

**59.** Système CDMA selon la revendication 58, **caractérisé en ce que**, 1 dans l'émetteur, l'unité de codage de canal affecte à chaque utilisateur dans le groupe indexé g un code de pastille choisi dans un ensemble fixe de $L_g \leq L$ codes de pastilles L spécifiques de groupe orthogonal ($a_{1,l}$ (t), ..., $a_{i,Lg}$(t)), les ensembles de codes dans les groupes étant choisis afin que l'auto-corrélation maximale soit réduite au minimum, tout code appartenant à un groupe quelconque étant orthogonal à tout autre code du groupe alors que son auto-corrélation avec un code de canalisation quelconque en dehors du groupe est réduite au minimum.

**60.** Récepteur selon la revendication 1, destiné à être utilisé avec un émetteur qui transmet des signaux d'utilisateur assistés par des symboles pilotes comprenant des symboles pilotes multiplexés avec des symboles de données, le récepteur étant en outre **caractérisé par** un dispositif de démultiplexage ($35V^d$) destiné à démultiplexer les estimations de composantes de signaux provenant du conformateur de faisceaux ISR pour l'extraction d'estimations de composantes de signal pilote et d'estimations de composantes de signal de données et à transmettre les estimations de composantes de signal de données à l'unité à règle de décision ($29V^d$) et les estimations de composantes de signal pilote à un dispositif d'estimation d'ambiguïté ($31V^d$) , le dispositif d'estimation d' ambiguïté ($31V^d$) formant un lissage ou une moyenne de chaque estimation de composantes de signal pilote ($\hat{s}^{\pi,d}_n$) pour donner une estimation d'ambiguïté ($\hat{a}^d_n$) , un dispositif de conjugaison ($32V^d$) destiné à dériver de l'estimation d'ambiguïté ($\hat{a}^d_n$) sont conjugués (($\hat{a}^d_n$)*) et un dispositif multiplicateur ($15V^d$) destiné à multiplier le conjugué avec l'estimation de symboles ($\hat{b}^d_n$) provenant du dispositif à règle de décision ($29V^d$) pour la formation d'une estimation de symboles perfectionnés ($\underline{b}^d_n$).

**61.** Récepteur selon la revendication 1, **caractérisé en outre par** un second conformateur de faisceau ISR ($47V/2^d$) connecté en parallèle avec le premier conformateur de faisceau ISR ($47V/1^d$) et sensible aux mêmes coefficients de canaux et à la même matrice de contraintes que le premier conformateur de faisceau ISR pour la dérivation à partir du vecteur d'observation ($\underline{Y}_n$) d'une estimation de composantes de signal pilote, un dispositif d'estimation d'ambiguïté ($31V^d$) destiné à lisser ou former la moyenne de l'estimation de composantes de signal pilote ($\hat{s}^{\pi,d}_n$) pour la création d'une estimation d'ambiguïté ($\hat{a}^d_n$), un dispositif de conjugaison ($32V^d$) destiné à dériver de l'estimation d'ambiguïté ($\hat{a}^d_n$) son conjugué (($\hat{a}^d_n$)*) et un dispositif multiplicateur ($15V^d$) destiné à multiplier le conjugué avec l'estimation de symboles ($\hat{b}^d_n$) provenant de l'unité à règle de décision ($29V^d$) pour la formation d'une estimation de symboles améliorée ($\underline{b}^d_n$).

**62.** Récepteur selon la revendication 60, **caractérisé en ce que** le dispositif d'estimation d'ambiguïté comprend un dispositif tampon destiné à conserver les estimations de bits, un dispositif de lissage destiné à lisser ou former la moyenne des estimations du tampon et une unité supplémentaire à règle de décision ($29V/2^d$) destinée à dériver, des estimations lissées ou moyennées, les estimations correspondantes d'ambiguïté ($\hat{a}^d_n$) .

**63.** Récepteur selon la revendication 61, **caractérisé en ce que** le dispositif d'estimation d'ambiguïté comprend un dispositif tampon destiné à conserver les estimations de bits, un dispositif de lissage destiné à lisser ou former la moyenne des estimations du tampon et une unité supplémentaire à règle de décision (29v/2$^d$) destinée à dériver, des estimations lissées ou moyennées, les estimations correspondantes d'ambiguïté ($\hat{a}^d_n$).

**64.** Récepteur selon la revendication 39, destiné à être utilisé avec un émetteur qui transmet des signaux d'utilisateur assistés par des symboles pilotes comprenant des symboles pilotes multiplexés avec des symboles de données, le récepteur étant en outre **caractérisé par** un dispositif de démultiplexage (35V$^d$) destiné à démultiplexer les estimations de composantes de signaux provenant du conformateur de faisceaux ISR pour l'extraction d'estimations de composantes de signal pilote et d'estimations de composantes de signal de données et à transmettre les estimations de composantes de signal de données à l'unité à règle de décision (29V$^d$) et les estimations de composantes de signal pilote à un dispositif d'estimation d'ambiguïté (31V$^d$), le dispositif d'estimation d'ambiguïté (31V$^d$) formant un lissage ou une moyenne de chaque estimation de composantes de signal pilote ($\hat{\underline{s}}^{\pi,d}_n$) pour donner une estimation d'ambiguïté ($\hat{\underline{a}}^d_n$), un dispositif de conjugaison (32V$^d$) destiné à dériver de l'estimation d'ambiguïté ($\hat{\underline{a}}^d_n$) sont conjugués (($\hat{\underline{a}}^d_n$)*) et un dispositif multiplicateur (15V$^d$) destiné à multiplier le conjugué avec l'estimation de symboles ($\hat{\underline{b}}^d_n$) provenant du dispositif à règle de décision (29V$^d$) pour la formation d'une estimation de symboles perfectionnés ($\underline{b}^d_n$).

**65.** Récepteur selon la revendication 39, **caractérisé en outre par** un second conformateur de faisceau ISR (47V/2$^d$) connecté en parallèle avec le premier conformateur de faisceau ISR (47V/1$^d$) et sensible aux mêmes coefficients de canaux et à la même matrice de contraintes que le premier conformateur de faisceau ISR pour la dérivation à partir du vecteur d'observation ($\underline{Y}_n$) d'une estimation de composantes de signal pilote, un dispositif d'estimation d'ambiguïté (31V$^d$) destiné à lisser ou former la moyenne de l'estimation de composantes de signal pilote ($\hat{\underline{s}}^{\pi,d}_n$) pour la création d'une estimation d'ambiguïté ($\hat{a}^d_n$), un dispositif de conjugaison (32V$^d$) destiné à dériver de l'estimation d'ambiguïté ($\hat{a}^d_n$) son conjugué (($\hat{a}^d_n$)*) et un dispositif multiplicateur (15V$^d$) destiné à multiplier le conjugué avec l'estimation de symboles ($\hat{b}^d_n$) provenant de l'unité à règle de décision (29V$^d$) pour la formation d'une estimation de symboles améliorée ($\underline{b}^d_n$).

**66.** Récepteur selon la revendication 64, **caractérisé en ce que** le dispositif d'estimation d'ambiguïté comprend un dispositif tampon destiné à conserver les estimations de bits, un dispositif de lissage destiné à lisser ou former la moyenne des estimations du tampon et une unité supplémentaire à règle de décision (29V/2$^d$) destinée à dériver, des estimations lissées ou moyennées, les estimations correspondantes d'ambiguïté ($\hat{a}^d_n$).

**67.** Récepteur selon la revendication 65, **caractérisé en ce que** le dispositif d'estimation d'ambiguïté comprend un dispositif tampon destiné à conserver les estimations de bits, un dispositif de lissage destiné à lisser ou former la moyenne des estimations du tampon et une unité supplémentaire à règle de décision (29V/2$^d$) destinée à dériver, des estimations lissées ou moyennées, les estimations correspondantes d'ambiguïté ($\hat{a}^d_n$) .

**68.** Récepteur selon la revendication 19, **caractérisé en outre par** un dispositif tampon (90$^1$), un dispositif de désentrelacement (91$^i$), un dispositif de décodage de canal (92$^i$), un dispositif de recodage (93$^i$) et un dispositif de re-entrelacement (94$^i$) destiné à garder en tampon une première trame d'estimation de composantes de signal ($\hat{\underline{s}}^i_{n-1}$, (1)), à désentrelacer, à décoder le canal, à recoder et à re-entrelacer la trame d'estimation de composantes de signal pour donner une trame d'estimation perfectionnée de symboles décidés ($\underline{b}^1_n$) , et la transmettant au générateur d'ensemble de contraintes (42W), le générateur de matrices de contraintes (43W) formant à partir d'elle une matrice de contraintes perfectionnée, le répartiteur de faisceau ISR (47W$^1$) utilisant la matrice de contraintes perfectionnée pour donner une estimation de composantes de signal perfectionnée ($\hat{\underline{s}}^i_{n-1}$ (2)) destinée à être utilisée dans une itération suivante, le récepteur répétant les itérations un nombre prédéterminé de fois.

**69.** Récepteur selon la revendication 39, **caractérisé en outre par** un dispositif tampon (90$^i$), un dispositif de désentrelacement (91$^i$), un dispositif de décodage de canal (92$^i$), un dispositif de recodage (93$^i$) et un dispositif de re-entrelacement (94$^i$) destiné à garder en tampon une première trame d'estimation de composantes de signal ($\hat{\underline{s}}^i_{n-1}$ (1)) , à désentrelacer, à décoder le canal, à recoder et à re-entrelacer la trame d'estimation de composantes de signal pour donner une trame d'estimation perfectionnée de symboles décidés ($\underline{b}^1_n$) , et la transmettant au générateur d'ensemble de contraintes (42W) , le générateur de matrices de contraintes (43W) formant à partir d'elle une matrice de contraintes perfectionnée, le répartiteur de faisceau ISR (47W$^1$) utilisant la matrice de contraintes perfectionnée pour donner une estimation de composantes de signal perfectionnée ($\hat{\underline{s}}^i_{n-1}$(2)) destinée à être utilisée dans une itération suivante, le récepteur répétant les itérations un nombre prédéterminé de fois.

**70.** Récepteur selon la revendication 1, **caractérisé en ce que** le dispositif d'accord de coefficients (50A$^d$) produit l'ensemble de coefficients de pondération en fonction à la fois de la matrice de contraintes ($\hat{\underline{C}}_n$) et des estimations de vecteurs de canal ($\hat{\underline{H}}^d_n$) afin que le module ou les modules récepteurs (20A$^d$) soient accordés chacun vers une réponse qui est liée en amplitude afin qu'elle soit proche d'une valeur nulle mais non égale à celle-ci.

**71.** Récepteur selon la revendication 39, **caractérisé en ce que** le dispositif d'accord de coefficients (50A$^d$) produit l'ensemble de coefficients de pondération en fonction à la fois de la matrice de contraintes ($\hat{\underline{C}}_n$) et des estimations de vecteurs de canal ($\hat{\underline{H}}^d_n$) afin que le module ou les modules récepteurs (20A$^d$) soient accordés chacun vers une réponse qui est liée en amplitude afin qu'elle soit proche d'une valeur nulle mais non égale à celle-ci .

11 — Base station

$12^1$ antenna #1

$12^M$ antenna #M

$\psi_{ch}^u(t)\,G_p^u(t)\,\varepsilon_p^u(t)\,\delta(t-\tau_p^u(t))$

path #1
path #p
path #P

Channel $\psi_{ch}^u(t)\,H^u(t)$

$14^u$

path #1
path #p
path #P

$14^1$
$14^d$
$14^d$
$14^i$
$14^U$

$10^1$ Mobile station # 1
$10^d$ Mobile station # d
$10^u$ Mobile station # u
$10^i$ Mobile station # i
$10^U$ Mobile station # U

FIG. 1

FIG. 2

$13^u$

$b_n^u \longrightarrow \otimes \xleftarrow{c_l^u}$ | Chip pulse $\phi(t)$ | $\xrightarrow{} b^u(t)c^u(t)$

## FIG. 3

$13^u$ $\psi_{pc}^u(t)$ $14^u$

$11^u$

$b_n^u \longrightarrow$ | Spreader # $u$ | $\longrightarrow \otimes \longrightarrow$ | Channel $\psi_{ch}^u(t)H^u(t)$ | $\xrightarrow{} X^u(t)$ $M$

## FIG. 4(a)   $\equiv$

$13^u$   $\psi^u(t) = \psi_{pc}^u(t)\psi_{ch}^u(t)$   $14^u$

$b_n^u \longrightarrow$ | Spreader # $u$ | $\longrightarrow \otimes \longrightarrow$ | Channel $H^u(t)$ | $\xrightarrow{} X^u(t)$ $M$

$17^u$

## FIG. 4(b)

FIG. 5
PRIOR ART

FIG. 6

FIG. 7

FIG. 8

FIG. 9

FIG. 10

**FIG. 11**

FIG. 12

**FIG. 13**

to receivers for other desired users

to receivers for other desired users

153

EP 1 240 731 B1

FIG. 14

FIG. 15

EP 1 240 731 B1

**FIG. 16**

**FIG. 17**

**FIG. 18**

$$(l_{0,3}; l_{-1,3}; l_{+1,3}) = (3; 2; 1)$$

$$(l_{0,4}; l_{-1,4}; l_{+1,4}) = (1; 3; 2)$$

**FIG. 19**

FIG. 20

FIG. 21

EP 1 240 731 B1

FIG. 22

EP 1 240 731 B1

**FIG. 23**

FIG. 24

EP 1 240 731 B1

**FIG. 25**

FIG. 26

EP 1 240 731 B1

**FIG. 27**

**FIG. 28**

**FIG. 29**

**FIG. 30**

**FIG. 31**

Proc. frame starts

1. path begins

2. path begins

1. path ends

2. path ends

Proc. frame ends

Signal

$\tau_1$

$\tau_2$

$\tau_1 + LT_c$

$\tau_2 + LT_c$

frame size

## FIG. 32

Frame $n$

LR

$\underline{Y}^{1,1}_{n-1}$     $\underline{Y}^{1,1}_{n}$     $\underline{Y}^{1,1}_{n+1}$

HR

$\underline{Y}^{2,1}_{(n-2)r+1}$   $\underline{Y}^{2,1}_{(n-1)r}$   $\underline{Y}^{2,1}_{(n-1)r+1}$   $\underline{Y}^{2,1}_{nr}$   $\underline{Y}^{2,1}_{nr+1}$   $\underline{Y}^{2,1}_{(n+1)r}$   $\underline{Y}^{2,1}_{(n+1)r+1}$

## FIG. 33

**FIG. 34**

EP 1 240 731 B1

FIG. 35

FIG. 36

$$1 \quad 2 \qquad \cdots\cdots\cdots\cdots \qquad N_m \quad 1 \ldots N_r$$

$$T_r$$

$$T_r + \overline{\Delta\tau}$$

$$T$$

$$T + N_r T_r$$

**FIG. 37**

FIG. 38

FIG. 39

FIG. 40

FIG. 41

EP 1 240 731 B1

FIG. 42

**FIG. 43**

EP 1 240 731 B1

EP 1 240 731 B1

**FIG. 44**

**FIG. 45**

FIG. 46

**FIG. 47**

FIG. 48

FIG. 49